# EUROPÄISCHE PATENTSCHRIFT

(11) **EP 3 665 498 B1**
(45) Veröffentlichungstag und Bekanntmachung des Hinweises auf die Patenterteilung: **22.06.2022**
(21) Anmeldenummer: 18750176.2
(22) Anmeldetag: 02.08.2018
(51) Int. Cl.: G01S 7/52, G01S 15/93, G01S 7/524, G01S 7/526

(54) **SELBSTTESTFÄHIGES MESSSYSTEM UND VERFAHREN ZUM BETREIBEN EINES SELBSTTESTFÄHIGEN MESSSYSTEMS**
SELF-TESTING MEASURING SYSTEM AND METHOD FOR OPERATING A SELF-TESTING MEASURING SYSTEM
SYSTÈME DE MESURE À ESSAI AUTONOME ET PROCÉDÉ DE FONCTIONNEMENT D'UN SYSTÈME DE MESURE À ESSAI AUTONOME

(30) Priorität: 09.08.2017 DE 102017118096; 09.08.2017 DE 102017118097; 09.08.2017 DE 102017118098; 09.08.2017 DE 102017118099; 09.08.2017 DE 102017118100; 09.08.2017 DE 102017118102; 09.08.2017 DE 102017118103; 09.08.2017 DE 102017118104; 09.08.2017 DE 102017118105; 09.08.2017 DE 102017118106; 09.08.2017 DE 102017118107; 09.08.2017 DE 102017118101; 03.04.2018 DE 102018107826
(43) Veröffentlichungstag der Anmeldung: 17.06.2020
(73) Patentinhaber: Elmos Semiconductor SE, 44227 Dortmund (DE)
(72) Erfinder: SCHMIDT, André, 51674 Wiehl (DE); SCHLAUTMANN, Guido, 48341 Altenberge (DE); HEPPEKAUSEN, Stefanie, 45239 Essen (DE)
(74) Vertreter: dompatent von Kreisler Selting Werner - Partnerschaft von Patent- und Rechtsanwälten mbB
(86) Internationale Anmeldenummer: PCT/EP2018/071025
(87) Internationale Veröffentlichungsnummer: WO 2019/030113

(56) Entgegenhaltungen:
- EP-A1- 1 965 179
- EP-A2- 1 410 950
- EP-A2- 2 124 070
- WO-A1-2014/067777
- WO-A1-2017/002548
- DE-A1- 10 248 677
- DE-A1- 19 625 667
- DE-A1-102008 001 436
- DE-A1-102008 042 820
- DE-A1-102011 016 287
- DE-A1-102011 121 092
- DE-A1-102013 008 235
- DE-B3-102015 012 192
- JP-A- 2015 121 502
- US-A1- 2004 004 905
- US-A1- 2004 194 532
- US-A1- 2012 192 043
- Sleiman Bou Sleiman ET AL: "Built-in-Self-Test and Digital Self-Calibration for Radio Frequency Integrated Circuits", , 26. September 2011 (2011-09-26), XP055517369, Gefunden im Internet: URL:https://etd.ohiolink.edu/!etd.send_fil e?accession=osu1311685013&disposition=inli ne [gefunden am 2018-10-19]
- ERDEM SERKAN ERDOGAN ET AL: "Single-Measurement Diagnostic Test Method for Parametric Faults of I/Q Modulating RF Transceivers", VLSI TEST SYMPOSIUM, 2008. 26TH IEEE, IEEE, PISCATAWAY, NJ, USA, 27. April 2008 (2008-04-27), Seiten 209-214, XP031248853, ISBN: 978-0-7695-3123-6
- Thierry Oggier ET AL: "SwissRanger SR3000 and First Experiences based on Miniaturized 3D-TOF Cameras", Proc. of the First Range Imaging Research Day at ETH Zurich, 8. September 2005 (2005-09-08), Seiten 1-12, XP055546515, Switzerland Gefunden im Internet: URL:http://j-clavis.co.jp/pdf/h-4.pdf [gefunden am 2019-01-23]

## Beschreibung

Die Erfindung betrifft ein selbsttestfähiges Messsystem, insbesondere ein Ultraschallsensormesssystem für die Automotive-Anwendung und ein Verfahren zum Betreiben eines selbsttestfähigen Messsystems.

### Allgemeine Einleitung

Im Zuge der Einführung der funktionalen Sicherheit gemäß ISO-Norm 26262 im Automobilbereich müssen auch Ultraschallsensorsysteme solche funktionalen Sicherheitsanforderungen erfüllen. Diese Anforderungen sind besonders hoch, wenn es um solche autonomen Funktionen, wie beispielsweise das automatische Einparken geht. Um verdeckte Fehler besser erkennen zu können, ist eine Selbstdiagnosefähigkeit auch und besonders während des Betriebs notwendig. Ein Problem ist, dass die Messergebnisse solcher Ultraschallmesssysteme beispielsweise für das autonome Einparken von Kfz verwendet werden. Eine Erkennung verdeckter Fehler ist daher unverzichtbar.

### Stand der Technik

Aus DE-A-10 2013 021 328 ist eine Ultraschallsensoreinrichtung sowie ein entsprechendes Verfahren zur Messung mittels Ultraschallpulsen bekannt. Zur Diagnose werden bei dem bekannten Verfahren in einem ersten Testzustand Pulse im Sinne von Testzuständen durch einen Steuerbefehl gesendet, empfangen und im Empfänger ausgewertet. In dem zweiten Testzustand werden die vom Sender kommenden Pulse über die direkte Verbindung gesendet, empfangen und im Empfänger ausgewertet.

In DE-A-10 2008 042 820 ist eine Sensorvorrichtung mit einem Ultraschallsensor und einer Funktionsüberwachungsvorrichtung zur Ermittlung der Impedanz mittels eines Spannungspegels, welcher durch Verstärker, Filter und Mikrocontroller am Schallwandler ermittelt wird, beschrieben. Auch wird in dieser Schrift eine Auswertung des Spannungssignals an einem Komparator beschrieben, bei der ein Überwachungssignal bezüglich der Spannung bzw. Impedanz gebildet wird.

Aus US-A-2004/004905 ist ein Messsystem gemäß dem Oberbegriff des Anspruchs 1 bekannt.

Aufgabe der Erfindung ist es, ein selbsttestfähiges Messsystem und ein Verfahren zum Betreiben desselben anzugeben, mit denen sich eine verbesserte Selbsttestfunktionalität erzielen lässt.

### Lösung der Aufgabe

Zur Lösung der Aufgabe wird ein selbsttestfähiges Messsystem nach Anspruch 1 sowie ein Verfahren gemäß den Ansprüchen 22, 23, 24 und 25 vorgeschlagen. Einzelne Ausgestaltung der Erfindung sind Gegenstand der Unteransprüche. Anstelle der Erwähnung des Wortlauts der Anspruchsfassung wird also an dieser Stelle der Einfachheit halber auf die Anspruchsfassung verwiesen.

Während des initialen Selbsttests des vorgeschlagenen Messsystems (SS) oder im Rahmen kundenspezifischer Diagnosemaßnahmen können verschiedene Tests zur Systemdiagnose durchgeführt werden:
1. Überprüfung der Digitalsignal-Verarbeitung
   VORTEIL: Stimuli und Erwartungswerte der Systemantwort der Digitalsignal-Verarbeitung können exakt festgelegt werden.
2. Interne Signalpfad-Überprüfung
   (Anregen des Burstgenerators, Nutzen eines heruntergeteilten Treiberstroms, Einkopplung hinter der ersten Verstärkerstufe, Auswertung nach der Echoevaluierung). VORTEIL: Diese Methode ist schnell und umfassend.
3. Impedanz-Wert Überprüfungen der Impedanz der Messeinheit (TR), also z.B. eines Ultraschalltransducers (TR)
   (Durchführen eines Frequenz-Sweeps und Auswerten der Resonanzkurve) VORTEIL: Die Methode prüft den kompletten Signalpfad inklusive der externen Elemente. Die Auswertung der Resonanzkurve der Messeinheit (TR), also des Ultraschalltransducers (TR), die die Systemantwort der Messeinheit (TR) auf den Stimulus in Form des Frequenz-Sweeps ist, kann in der nach Methodik 1 bereits geprüften Digitalsignal-Verarbeitung erfolgen. Der Frequenz-Sweep selbst kann ebenfalls in der bereits nach obiger Ziffer 1 geprüften Digitalsignal-Verarbeitung erzeugt werden.
4. Komparatoren an der Sensoransteuerung zur Überwachung der externen Komponenten und der Treibertransistoren
   VORTEIL: Kontinuierliche Prüfung der Sensoranregung auch während des Betriebs.
5. Symmetrieprüfung durch Symmetrieprüfungsvorrichtungen auch während des Betriebs
   VORTEIL: Betriebsrelevante Störungen der Symmetrie der Messeinheit (z.B. des Ultraschallübertrager-Systems) können erkannt werden.
6. Oberwellenprüfung auch während des Betriebs
   VORTEIL: Betriebsrelevante, nicht symmetriebeeinträchtigende, aber das Schwingungsspektrum verändernde Störungen der Messeinheit (z.B. des Ultraschalltransducer / Übertrager Teilsystems) können erkannt werden.

### Überprüfung der Digitalsignal-Verarbeitung

Die Überprüfung der Digitalsignal-Verarbeitung erfolgt durch das Einspeisen mindestens eines Testsignals, das einem kritischen möglichen Signal der betreffenden Messeinheit, z.B. eines Ultraschallsensorsystems in Form z.B. eines Ultraschalltransducers entspricht. Dieses Einspeisen erfolgt im Signalpfad des Ultraschallsensorsystems in einem dritten Testzustand des Sensorsystems nach dem Analog-zu-Digital-Wandler (ADC) oder in einem zweiten Testzustand des Sensorsystems vor dem Analog-zu-Digital-Wandler (ADC). Es folgt dann eine Auswertung in der Form, wie sie im Normalbetrieb für ein reales Ultraschallechosignal bzw. Messsignal einer Messeinheit erfolgen würde. Da sowohl das Testsignal als auch dessen zu erwartendes Ergebnis vorbekannt sind, kann der Signalpfad sehr schnell auf Durchgängigkeit und Funktionalität im Betrieb geprüft werden. Dies kann im Betrieb ohne Performance Einbuße beispielsweise zu Nicht-Betriebszeiten oder beim Start oder Neustart des Systems oder beim Ausschalten erfolgen. Eine Einspeisung in den Signalpfad vor dem Analog-zu-Digitalwandler (ADC) erfolgt dabei analog über einen Analog-Multiplexer (AMX). Eine Einspeisung in den Signalpfad hinter dem Analog-zu-Digitalwandler (ADC) erfolgt dabei digital beispielsweise über einen digitalen Multiplexer (DMX). Bei digitaler Einspeisung muss die Antwort des Systems am Ende des Signalpfades exakt den Vorgaben entsprechen, während bei einer Einspeisung als Analogsignal ein Toleranzbereich vorgegeben werden muss oder sollte oder die Analogsignale mit einem solchen Vorhalt erzeugt werden, dass eine Falschbewertung bei Berücksichtigung der Prozessschwankungen und der Betriebsparameterschwankungen ausgeschlossen ist. Der Vorteil dieses erfindungsgemäßen Verfahrens ist, dass es besonders schnell und exakt ist.

Hierdurch kann im Normalbetrieb des Ultraschallsensorsystems eine recht hohe funktionale Testabdeckung aufrechterhalten werden. Diese Prinzipien lassen sich aber auf ähnliche Messsysteme, bei denen erfindungsgemäß andere Messeinheiten eingesetzt werden können, verallgemeinern.

### PRINZIP:

Das Prinzip des hier vorgeschlagenen Selbsttestverfahrens umfasst das Einspeisen eines Testsignals nach oder vor dem Analog-zu-Digital-Wandler (ADC) im analogen Eingangsschaltkreis (AS) und das Auswerten nach der Echo-Auswertung im nachfolgenden digitalen Eingangsschaltkreis (DSI). Dabei ist es möglich, verschiedene Pfade im analogen Eingangsschaltkreis (AS) und im nachfolgenden digitalen Eingangsschaltkreis (DSI) zu durchlaufen, um die Prüfungen möglichst genau an die jeweilige Anwendung des Messsystems (SS) anzupassen.

Die Anregung mit einem definierten Eingangssignal durch einen digitalen Eingangsschaltkreis (DSI) unter Umgehung der nicht-digitalen Signalpfadanteile führt zu einer festen, reproduzierbaren Echoinformation (z.B. hinsichtlich Zeitpunkt, Echohöhe, Korrelation mit einem erwarteten, exakt vorbekannten Signalverlauf etc.) am Ausgang der Signalkette im digitalen Eingangsschaltkreis (DSI).

Diese Vorhersagbarkeit soll bei der Erfindung für einen Selbsttest mit einem Betriebszustand und drei Testzuständen des Messsystems genutzt werden.

Es wird daher ein selbsttestfähiges Messsystem (SS) vorgeschlagen, das aufweist:
- eine Digitalsignal-Erzeugungseinheit (DSO) zur Erzeugung der Stimuli,
- eine Treiberstufe (DR) zur Leistungsverstärkung und analogen Signalformung der digital vorliegenden Stimuli,
- eine Messeinheit (TR) wie z.B. einen Ultraschalltransducer zur Umsetzung der leistungsverstärkten Stimuli in Messsignale im Messmedium (z.B. Luft bei Ultraschall) und zum Empfang der Kanalantwort aus dem Messkanal (CH) in Form eines empfangenen Signals,
- einen analogen Eingangsschaltkreis (AS) zur Verstärkung, Vorverarbeitung und Digitalisierung des empfangenen Signals und
- einen digitalen Eingangsschaltkreis (DSI) zur Verarbeitung des digitalisierten empfangenen Signals. Diese Komponenten eines Messsystems sind im Stand der Technik in typischen Ultraschallmesssystemen, beispielsweise für die Verwendung in automobilen Einparkhilfesystemen anzufinden.

Das zuvor beschriebene Messsystem, von dem bei der Erfindung ausgegangen wird, weist also verallgemeinert ausgedrückt eine Messeinheit auf, die in einen Messkanal oder eine Messstrecke ein Anregungs- bzw. Ausgangssignal als Messsignal sendet und als Reaktion darauf ein Antwortsignal empfängt. Die Messeinheit weist insoweit ganz allgemein formuliert mindestens einen Aktor und mindestens einen Sensor auf, die über den Messkanal oder die Messtrecke in Wirkverbindung stehen. Das Messsystem weist einen Anregungs(oder auch Hin-)signalpfad und eine Antwort (oder auch Rück-) Signalpfad auf. Beide Signalpfade sind zwecks digitaler Signalverarbeitung mit einem Digitalschaltungsteil und einem Analogschaltungsteil versehen. Das digitale Anregungssignal wird im Hin-Signalpfad in ein analoges Anregungssignal gewandelt, mit dem die Messeinheit angesteuert wird. Sie liefert auf dem Rück-Signalpfad ein analoges Antwortsignal, das in ein digitales Signal umgesetzt wird. Die Auswertung des digitalen Signals erfolgt in dem Messsystem oder kann auch außerhalb des Messsystems durchgeführt werden. Dabei wird geprüft, ob das digitale Anregungssignal zu dem erwarteten Antwortsignal geführt hat. Zwischen den Analog-Schaltungen im Hin- und Rück-Signalpfad und der Messeinheit ist eine analoge Kanalsimulationseinheit geschaltet, die an den Hin-Signalpfad angeschlossen ist (oder wahlweise mit diesem verbindbar ist), und zwar zwischen dem Analog-Schaltkreis und der Messeinheit, und über einen Multiplexer o.dgl. Umschalteinheit wahlweise ihr Ausgangssignal statt des von der Messeinheit kommenden Antwortsignals in die Analog-Schaltung des Rück-Signalpfads einspeist. Ebenso befindet sich zwischen den Digital-Schaltungen und den Analog-Schaltungen beider Signalpfade eine digitale Kanalsimulationseinheit, die an den Hin-Signalpfad angeschlossen ist (oder wahlweise mit diesem verbindbar ist), und zwar zwischen dessen Digital-Schaltung und Analog-Schaltung, und über einen weiteren Multiplexer o.dgl. Umschalteinheit wahlweise ihr Ausgangssignal statt des von der Analog-Schaltung des Rück-Signalpfads kommenden digitalen Antwortsignals in die Digital-Schaltung des Rück-Signalpfads einspeist. Die analoge Kanalsimulationseinheit emuliert bzw. simuliert die Messeinheit (gegebenenfalls mit Messkanal), während die digitale Kanalsimulationseinheit die Analog-Schaltungen beider Signalpfade und die Messeinheit simuliert. Sobald die analoge Kanalsimulationseinheit aktiviert ist, ist die digitale Kanalsimulationseinheit inaktiv (d.h. speist kein Signal in den Rück-Signalpfad ein). Wenn die digitale Kanalsimulationseinheit aktiviert ist, sollte die analoge Kanalsimulationseinheit deaktivier sein. Alternativ kann aber in diesem Fall die analoge Kanalsimulationseinheit ebenfalls aktiviert sein. Je nachdem sind unterschiedliche Tests auf Überprüfung der Komponenten des erfindungsgemäßen Systems durchführbar. Die analoge Kanalsimulationseinheit kann als Dämpfungsglied ausgebildet sein, das die vergleichsweise hohen Signalpegel zur Ansteuerung der Messeinheit (das Messsignal sollte insbesondere bei einer Ultraschall-Messeinheit energiereich sein, um einen entsprechend großen Erfassungsbereich abzudecken) an den Signalpegel der Antwort des Messsystems anpasst. Umgekehrt kann die analoge Kanalsimulationseinheit auch ein Verstärkungssignal aufweisen, wenn die Verhältnisse der Pegelgrößen der Ansteuer- und Antwortsignale der Messeinheit invers zum zuvor Gesagten sind. Die digitale Kanalsimulationseinheit emuliert zusätzlich zum Vorherigen auch noch die Funktionen der analogen Schaltungen beider Signalpfade, die z.B. im Hin-Signalpfad als Digital-Analog-Wandler, gegebenenfalls mit Signalverstärkung und im Rück-Signalpfad z.B. als Analog-Digital-Wandler ausgebildet sind.

Um nun einen effizienten Selbsttest des Messsystems (SS) zu ermöglichen, wird also vorgeschlagen, das selbsttestfähige Messsystem zusätzlich mit einer analogen Kanalsimulationseinheit (ACS) zu versehen. Diese analoge Kanalsimulationseinheit (ACS) soll in der Lage sein, signalmäßig die Kette aus Messeinheit (TR) (bzw. Ultraschalltransducer (TR)) und Messkanal (CN) zu emulieren. Um dies zu ermöglichen, muss der Rück-Signalpfad durch einen analogen Multiplexer (AMX) vor dem analogen Eingangsschaltkreis (AS) aufgetrennt werden, um wahlweise das Ausgangssignal der analogen Kanalsimulationseinheit (ACS) dort einzuspeisen und das Ausgangssignal der Messeinheit (TR) (bzw. des Ultraschalltransducers (TR)) abzukappen. Es ist natürlich auch denkbar, das Ausgangssignal der analogen Kanalsimulationseinheit (ACS) innerhalb des analogen Eingangsschaltkreises (AS) durch eine entsprechende Multiplexer-Struktur innerhalb des analogen Eingangsschaltkreises (AS) einzuspeisen oder Elemente der analogen Kanalsimulation innerhalb der Treiberstufe (DR) (d.h. die Analog-Schaltung des Hin-Signalpfads), die hier auch als Digital-zu-Analog-Wandler fungiert, zu implementieren. Beispielsweise ist es denkbar, dass die Treiberstufe (DR) in einer Testkonfiguration in ihrer Ausgangsamplitude reduziert wird und der analoge Eingangsschaltkreis (AS) direkt von dem Ausgang der Treiberstufe (TR) angesteuert wird. Die Kontrolle der Konfiguration der Treiberstufe (DR) erfolgt bevorzugt durch eine Steuereinrichtung (CTR). Die z.B. Dämpfung, realisiert durch die analoge Kanalsimulationseinheit, dient dann dazu, betriebsnahe Pegel am Eingang des analogen Eingangsschaltkreises (AS) zu erzeugen. Somit können kritische, erlaubte und fehlerhafte Prüf- und Testfälle simuliert werden. Die Antwort des Messsystems (SS) muss dabei in einem vorbestimmbaren Erwartungswertebereich liegen. Es können Fehlerfälle und erlaubte Betriebszustände als Prüffälle emuliert werden. Somit kann die Signalkette unter Ausschluss des Messkanals (CN) und der diesem Messkanal (CN) vorausgehenden und nachfolgenden Messeinheit (TR) (z.B. eines Ultraschalltransducers) auf Einhaltung vorgegebener Spezifikationsbereiche für wichtige Betriebsparameter und Betriebsfälle überprüft werden.

In entsprechender Weise kann eine digitale Kanalsimulationseinheit (DCS) mit einem digitalen Multiplexer (DMX) vorgesehen werden. Die digitale Kanalsimulationseinheit (DCS) emuliert bevorzugt in exakt reproduzierbarer Weise signalmäßig ein vorbestimmtes Verhalten der Signalkette aus Treiberstufe (DR), Messeinheit (TR), Messkanal (CN), und analogem Eingangsschaltkreis (AS). Somit können kritische erlaubte und fehlerhafte Betriebsfälle als Prüf- und Testfälle simuliert werden. Somit kann die Signalkette unter Ausschluss des Messkanals (CN) und der dem Messkanal (CN) vorausgehenden und nachfolgenden Messeinheit (TR) (z.B. eines Ultraschalltransducers) sowie der analogen Schaltungsteile auf exakte Einhaltung vorgegebener Spezifikationswerte für wichtige Betriebsparameter und Betriebsfälle überprüft werden.

Es können somit mehrere (bevorzugt vier) Zustände des vorgeschlagenen Sensorsystems (SS) unterschieden werden:
1. Zum Ersten weist das vorgeschlagene Messsystem (SS) einen im Folgenden als "Betriebszustand" bezeichneten Zustand auf, der dem messenden Normalbetrieb entspricht.
2. Zum Zweiten weist das Messsystem (SS) einen im Folgenden "erster Testzustand" genannten Zustand auf, in dem die Messeinheit (TR), beispielsweise ein Ultraschalltransducer, auf korrekte Funktion geprüft wird. Dies kann beispielsweise durch eine Impedanz-Messung des beispielhaften Ultraschalltransducers (TR) erfolgen.
3. Zum Dritten kann das Messsystem (SS) einen im Folgenden "zweiter Testzustand" genannten Zustand aufweisen, in dem die Messeinheit (TR) selbst nicht mehr Teil des Signalpfades ist. Vielmehr wird die Messeinheit (TR) und damit auch der Messkanal (CN) durch eine analoge Kanalsimulationseinheit (ACS) und einen analogen Multiplexer (AMX) überbrückt. Der Vorteil ist, dass somit das Verhalten des Signalpfades nicht mehr von den Bedingungen im Messkanal (CN) oder vom Zustand der Messeinheit (TR), also beispielsweise vom Zustand der Messeinheit (TR), z.B. eines Ultraschalltransducers (TR), abhängt und damit vorhersagbar ist. Entspricht die Antwort des Signalpfades in diesem zweiten Testzustand auf einen vorgegebenen Stimulus nicht einer erwarteten Antwort in gewissen Grenzen, so liegt ein Fehler vor. Hierbei muss die erwartete Antwort eine gewisse Toleranz ermöglichen, um Fertigungsschwankungen auszugleichen, die sich erfahrungsgemäß besonders in den analogen Schaltungsteilen und der Messeinheit (TR) auswirken.

Der Stimulus und die Simulation des Kanals können dabei so gewählt werden, dass sowohl Stimulus als auch Kanalantwort einem realen spezifikationsgemäß erlaubten Fall entsprechen. In dem Fall muss die Antwort des Systems also einer erwarteten Antwort im Rahmen gewisser vorausberechenbarer Grenzen entsprechen.

Die Simulationen des Kanals können dabei auch so gewählt werden, dass die Kanalantwort zwar einem realen spezifikationsgemäß erlaubten Fall entspricht, der Stimulus selbst aber zu einem Fehlerereignis in der Empfangskette führen soll. Wird dieses Fehlerereignis nicht durch die Empfangskette bestehend aus digitalem Eingangsschaltkreis (DSI) und analogem Eingangsschaltkreis (AS) erkannt, so ist die Empfangskette fehlerhaft, was signalisiert werden kann. In dem Fall muss die Antwort des Messsystems (SS) einer erwarteten Antwort im Rahmen gewisser vorausberechenbarer Grenzen entsprechen. Ist dies nicht der Fall, liegt ein Fehler vor.

Der Stimulus kann dabei auch so gewählt werden, dass er einem realen spezifikationsgemäß erlaubten Fall entspricht. Die Simulation des Kanals kann dabei dann so gewählt werden, dass die Kanalantwort einem spezifikationsgemäß nicht erlaubten Fall entspricht. Auch in diesem Fall muss der Fehler durch die nachfolgende Empfangskette erkannt werden.

Natürlich ist es denkbar, dass sowohl der Stimulus als auch die Simulation des Kanals zu einem Fehlerfall führen. Auch dieses muss durch die nachfolgende Empfangskette erkannt werden.

4. Zum Vierten weist das vorgeschlagene Messsystem (SS) einen im Folgenden "dritter Testzustand" genannten Zustand auf, in dem die Messeinheit (TR), insbesondere in Form eines Ultraschalltransducers, und die analogen Signalpfadanteile nicht mehr Teil des verbliebenen Signalpfads sind. Der verbleibende Signalpfad ist dann rein digital. Antworten des verbliebenen Signalpfads in diesem dritten Testzustand auf vordefinierte Stimuli müssen daher im Gegensatz zum zweiten Testzustand des Messsystems (SS) exakt mit vorgebbaren Erwartungswerten übereinstimmen.

Der Stimulus und die Simulation des Kanals können dabei so gewählt werden, dass sowohl Stimulus als auch Kanalantwort einem realen spezifikationsgemäß erlaubten Fall nun exakt entsprechen. In dem Fall muss die Antwort des Systems mit einer zugeordneten erwarteten Antwort exakt übereinstimmen. Ist dies nicht der Fall, liegt ein Fehler vor.

Die Simulation des Kanals kann dabei wieder auch so gewählt werden, dass die Kanalantwort zwar einem realen spezifikationsgemäß erlaubten Fall entspricht, der Stimulus selbst aber zu einem Fehlerereignis in der Empfangskette führen soll. Wird dieses Fehlerereignis nicht durch die digitale Empfangskette bestehend nur noch aus dem digitalem Eingangsschaltkreis (DSI) erkannt, so ist die digitale Empfangskette fehlerhaft, was signalisiert werden kann. In dem Fall muss die Antwort des Systems der erwarteten Antwort exakt entsprechen.

Der Stimulus kann dabei auch so gewählt werden, dass er einem realen spezifikationsgemäß erlaubten Fall entspricht. Die Simulation des Kanals kann dabei dann so gewählt werden, dass die Kanalantwort einem spezifikationsgemäß nicht erlaubten Fall entspricht. Auch in diesem Fall muss der Fehler durch die nachfolgende digitale Empfangskette erkannt werden.

Natürlich ist es denkbar, dass sowohl der Stimulus als auch die Simulation des Kanals zu einem Fehlerfall führen. Auch dieses muss durch die nachfolgende digitale Empfangskette im dritten Testzustand erkannt werden.

Im Folgenden wird zunächst auf die vier Zustände genauer eingegangen. Weitere Zustände können vorgesehen werden.

### Betriebszustand

Im Betriebszustand erzeugt die Digitalsignal-Erzeugungseinheit (DSO) ein erstes digitales Signal (S1), das die besagten Stimuli bildet oder aufweist. Die Treiberstufe (DR) setzt dieses erste digitale Signal (S1) der Digitalsignal-Erzeugungseinheit (DSO) in ein zweites analoges Signal (S2) um und führt dabei typischerweise eine Digital-zu-Analog-Wandlung sowie eine Leistungsverstärkung durch. Die Treiberstufe (DR) steuert mit diesem zweiten analogen Signal (S2) die Messeinheit (TR), also beispielsweise einen Ultraschalltransducer (TR), an und veranlasst diese somit mittels des zweiten analogen Signals (S2) zum Aussenden eines Ausgangssignals (MS) in einen Messkanal (CN) in einem Außenbereich (ASS) außerhalb des Messsystems (SS) hinein. Beispielsweise kann durch die Treiberstufe (DR) ein Ultraschalltransducer (TR) zur Aussenden eines Ausgangssignals (MS) in eine Luftstrecke als Messkanal (CN) veranlasst werden. Die Messeinheit (TR), also beispielsweise der besagte Ultraschalltransducer (TR), empfängt dann zu bestimmten Zeiten, die im Falle eines Ultraschalltransducers (TR) bevorzugt mit den Zeiten der Aussendung des Ultraschallmesssignals, d.h. den Sendephasen (SP), übereinstimmen, aus dem Messkanal (CN) ein Empfangssignal (ES) in Abhängigkeit von dem Ausgangssignal (MS). Im Falle eines Ultraschalltransducers (TR) handelt es sich bevorzugt um Echos des zuvor ausgestrahlten Ausgangssignals (MS), die den Ultraschalltransducer (TR) aus dem Messkanal (CN) erreichen. Die Messeinheit (TR) erzeugt in Abhängigkeit von dem empfangenen Empfangssignal (ES) ein drittes analoges Signal (S3), das von dem aus dem Messkanal (CN) empfangenen Empfangssignal (ES) abhängt. Beispielsweise erzeugt der beispielhafte Ultraschalltransducer (TR) das dritte analoge Signal (S3) in Abhängigkeit von dem Ultraschallempfangssignal (ES), das er aus dem Ultraschallmesskanal (CN) als Echo des zuvor von ihm abgestrahlten Ausgangssignals (MS) empfängt.

Der analoge Multiplexer (AMX) leitet dieses dritte analoge Signal (S3) als viertes analoges Signal (S4) weiter an den analogen Eingangsschaltkreis (AS).

Der analoge Eingangsschaltkreis (AS) wandelt das vierte analoge Signal (S4) in ein fünftes digitales Signal (S5) um. Er arbeitet also zum einen als Analog-zu-Digital-Wandler (ADC). Zum anderen kann der analoge Eingangsschaltkreis aber beispielsweise auch Filter und Verstärker und andere analoge Schaltkreise umfassen, die das empfangene Signal vorverarbeiten und aufbereiten. Der digitale Multiplexer (DMX) leitet im Betriebszustand das fünfte digitale Signal (S5) als sechstes digitales Signal (S6) weiter.

Der digitale Eingangsschaltkreis (DSI) empfängt das sechste digitale Signal (S6) und erzeugt ein siebtes Antwortsignal (S7). Beispielsweise kann der digitale Eingangsschaltkreis (DSI) digitale Filter und Signalprozessorsysteme aufweisen. Besonders bevorzugt ist die Verwendung von "matched Filtern" (auch Optimalfilter genannt), deren Filterfunktion erwarteten Signalformen aus der vorausgehenden Signalkette entspricht. Es ist beispielsweise denkbar, dass weitere erlaubte Betriebskonfigurationen zulässig sind, die sich nur durch den Signalpfad in dem digitalen Eingangsschaltkreis (DSI) und/oder durch den Signalpfad in dem analogen Eingangsschaltkreis (AS) und durch die zugehörige Stimulierzeugung in der Digitalsignal-Erzeugungseinheit (DSO) bzw. in der Konfiguration der Treiberstufe (DR) unterscheiden. Diese Konfigurationen werden bevorzugt durch die (System-)Steuereinrichtung (CTR) eingestellt und kontrolliert, deren Verbindungsleitungen zu übergeordneten Gesamtsystemkomponenten in den beigefügten Figuren nicht gezeigt sind. Zur Vereinfachung wird hier eine einzige Konfiguration des Messsystems (SS) angenommen, was aber in dieser Hinsicht nicht einschränkend wirken soll. Da der Betriebszustand der Normalzustand ist, wird das Ausgangssignal des digitalen Eingangsschaltkreises, das siebte Antwortsignal (S7), als Signal für das Messergebnis aufgefasst und als solches weiterverarbeitet und/oder an andere Systemkomponenten z.B. eine (System-)Steuereinrichtung (CTR) signalisiert. In den nachfolgenden Testzuständen wird hingegen das siebte Antwortsignal (S7) als Prüfergebnis des Messsystems (SS) interpretiert und verwendet. Dies geschieht im Betriebszustand nicht, wenn die Werte plausibel sind. Es ist denkbar, vor der Verwendung des siebten Antwortsignals (S7) als Messergebnis oder vor der Verwendung der Werte des siebten Antwortsignals (S7) als Messergebnis bzw. als Messergebnisse dieser Signale bzw. die durch sie repräsentierten Werte auf Plausibilität auch im Betriebszustand zu prüfen und so Fehler im laufenden Betrieb zu erkennen.

### Erster Testzustand (Testen des Messsystems als Ganzes)

Im ersten Testzustand erzeugt die Digitalsignal-Erzeugungseinheit (DSO) ein erstes digitales Signal (S1). Dieses umfasst vorbestimmte Stimuli, die zu vorhersagbaren Reaktionen der Signalkette führen sollen, was somit geprüft werden kann. Diese Stimuli können normale Betriebsfälle, Fehlerfälle und Stimuli für Messungen umfassen. Beispielsweise ist es denkbar, im Falle des bereits mehrfach erwähnten Ultraschalltransducers als Messeinheit (TR) den Ultraschalltransducer (TR) zu einer Schwingung bei einer ersten Schwingfrequenz anzuregen und dann die Schwingfrequenz in vorgebbarer Weise bis zu einer zweiten Schwingfrequenz vorzugsweise monoton steigend oder monoton fallend zu ändern. Ein solches Verfahren der Schwingfrequenzänderung wird im Rahmen der Erfindung als "Sweep" bezeichnet.

Wie im Betriebszustand setzt die Treiberstufe (DR) dieses erste digitale Signal (S1) der Digitalsignal-Erzeugungseinheit (DSO) in ein zweites analoges Signal (S2) um, das die Messeinheit (TR) ansteuert. Dieses zweite analoge Signal (S2) veranlasst dann die Messeinheit (TR), also beispielsweise den besagten Ultraschalltransducer (TR), zum Aussenden eines Ausgangssignals (MS), also beispielsweise eines Ultraschallmesssignals, in einen Messkanal (CN), also beispielsweise einen Ultraschallmesskanal, in einem Außenbereich (ASS) außerhalb des Messsystems (SS). Wie zuvor im Betriebszustand empfängt die Messeinheit (TR), also beispielsweise der Ultraschalltransducer (TR), aus dem Messkanal (CN) ein Empfangssignal (ES) in Abhängigkeit von dem zuvor ausgesandten Ausgangssignal (MS). Es kann sich bei dem empfangenen Empfangssignal (ES) z.B. um ein Ultraschallecho handeln. Die Messeinheit (TR), z.B. der Ultraschalltransducer (TR), erzeugt wie zuvor in Abhängigkeit von dem empfangenen Empfangssignal (ES) ein drittes analoges Signal (S3). Der analoge Multiplexer (AMX) leitet in diesem ersten Testzustand, wie zuvor in dem Betriebszustand, dieses dritte analoge Signal (S3) als viertes analoges Signal (S4) weiter. Der analoge Eingangsschaltkreis (AS) wandelt das vierte analoge Signal (S4) in ein fünftes digitales Signal (S5) um. Hierbei kann es sich aber nun im Gegensatz zum Betriebszustand auch um Messwerte handeln. Beispielsweise ist es denkbar, die Impedanz eines Ultraschalltransducers (TR), der als Messeinheit (TR) dient, zu ermitteln. Diese Impedanz-Ermittlung geschieht bevorzugt in dem analogen Eingangsschaltkreis (AS) und gegebenenfalls im Zusammenwirken mit dem nachfolgenden digitalen Eingangsschaltkreis (DSI). Hier können spezielle Schaltungsteile des analogen Eingangsschaltkreises (AS) und des digitalen Eingangsschaltkreises (DSI) benutzt werden, die nur im ersten Testzustand zur Anwendung kommen. Damit dies geschehen kann, leitet der digitale Multiplexer (DMX) das fünfte digitale Signal (S5) als sechstes digitales Signal (S6) weiter. Der digitale Eingangsschaltkreis (DSI) empfängt das sechste digitale Signal (S6) und erzeugt ein siebtes Antwortsignal (S7). Nun wird jedoch das siebte Antwortsignal (S7) als Prüfergebnis des Messsystems und nicht als Messergebnis verwendet. Die Prüfung auf angeregte Oberwellen und auf Symmetrie der Ansteuerung und Systemantwort kann ebenfalls in diesem ersten Testzustand erfolgen und wird später näher erläutert.

### Zweiter Testzustand (Testen mit durch die analoge Kanalsimulationseinheit erfolgender Simulation/Emulation der Messeinheit)

Im zweiten Testzustand erzeugt die Digitalsignal-Erzeugungseinheit (DSO) wieder ein erstes digitales Signal (S1) als Stimulus der nachfolgenden Signalkette. Die Treiberstufe (DR) setzt wieder dieses erste digitale Signal (S1) der Digitalsignal-Erzeugungseinheit (DSO) in ein zweites analoges Signal (S2) wie zuvor beschrieben um. Die analoge Kanalsimulationseinheit (ACS) modifiziert nun dieses zweite analoge Signal (S2) in ein drittes analoges Testsignal (S3t). Dabei werden bevorzugt vorgegebene Zustände des Messkanals (CN) und der Messeinheit (TR) simuliert. Der analoge Multiplexer (AMX) leitet dieses dritte analoge Testsignal (S3t) als viertes analoges Signal (S4) anstelle des dritten analogen Signals (S3) weiter. Die Messeinheit (TR), also beispielsweise der Ultraschalltransducer (TR), und der Messkanal (CN) werden somit definiert und in vorbestimmter Weise überbrückt. Da dies im Analogteil des Messsystems (SS) geschieht, erfolgt diese Überbrückung nicht in einer exakt vorherbestimmbaren Weise, da Fertigungsschwankungen und sonstige nicht vollständig beeinflussbare Betriebsparameter, wie z.B. die Schaltkreistemperatur, zu Verhaltensschwankungen der Signalkette innerhalb des Messsystems (SS) trotz dieser Überbrückung durch die analoge Kanalsimulationseinheit (ACS) und den analogen Multiplexer (AMX) führen. Der analoge Multiplexer (AMX) kann auch so ausgeführt sein, dass der analoge Eingangsschaltkreis (AS) über zwei Eingänge verfügt, zwischen denen umgeschaltet wird. In dem Fall ist der analogen Multiplexer (AMX) also in den analogen Eingangsschaltkreis (AS) integriert. Die Erfindung umfasst auch diesen Fall. Das Verhalten der Signalkette auf vorgegebene Stimuli, die durch die Digitalsignal-Erzeugungseinheit (DSO) erzeugt werden, lässt sich aber bereits in vorgebbaren Grenzen überprüfen. Wie im Betriebszustand wandelt wieder der analoge Eingangsschaltkreis (AS) das vierte analoge Signal (S4) in ein fünftes digitales Signal (S5). Der digitale Multiplexer (DMX) leitet das fünfte digitale Signal (S5) als sechstes digitales Signal (S6) an den digitalen Eingangsschaltkreis (DSI) weiter. Der digitale Eingangsschaltkreis (DSI) empfängt das sechste digitale Signal (S6) und erzeugt ein siebtes Antwortsignal (S7). Der digitale Multiplexer (DMX) kann auch in der Form realisiert sein, dass der digitale Eingangsschaltkreis (DSI) über zwei Eingänge verfügt, zwischen denen umgeschaltet wird. Der digitale Multiplexer (DMX) ist dann Teil des digitalen Eingangsschaltkreises (DSI). Der digitale Eingangsschaltkreis (DSI) empfängt das sechste digitale Signal (S6) und erzeugt ein siebtes Antwortsignal (S7). Nun wird wieder wie im ersten Testzustand das siebte Antwortsignal (S7) als Prüfergebnis des Messsystems und nicht als Messergebnis verwendet.

### Dritter Testzustand (Testen mit durch die digitale Kanalsimulationseinheit (DCS) erfolgender Simulation/Emulation der analogen Komponenten des Messsystems)

Im dritten Testzustand erzeugt wieder die Digitalsignal-Erzeugungseinheit (DSO) ein erstes digitales Signal (S1) als vordefinierten Stimulus zur Überprüfung der nachfolgenden Signalkette. Nun jedoch werden sowohl die Analogteile der Signalkette als auch die Messeinheit (TR) und der Messkanal überbrückt. Diese Überbrückung geschieht digital. Daher sind Stimuli und die Antworten der Signalkette auf diese Stimuli exakt und vorhersagbar. Die digitale Kanalsimulationseinheit (DCS) emuliert die überbrückten Teile des Signalpfades durch bevorzugt mehrere Emulationszustände innerhalb dieses dritten Testzustands. Hierzu verfügt die digitale Kanalkanalsimulationseinheit (DCS) bevorzugt über mehrere Konfigurationen, die durch die Steuereinrichtung (CTR) eingestellt und konfiguriert werden. Die digitale Kanalsimulationseinheit (DCS) wandelt das erste digitale Signal (S1) in ein fünftes digitales Testsignal (S5t). Der digitale Multiplexer (DMX) leitet das fünfte digitale Testsignal (S5t) an Stelle des fünften digitalen Signals (S5) in diesem dritten Testzustand des Messsystems (SS) als sechstes digitales Signal (S6) weiter. Der digitale Eingangsschaltkreis (DSI) empfängt das sechste digitale Signal (S6) und erzeugt ein dem Stimulus entsprechendes siebtes Antwortsignal (S7). Nun wird wieder wie im ersten und zweiten Testzustand das siebte Antwortsignal (S7) als Prüfergebnis des Messsystems und nicht als Messergebnis verwendet. Im Unterschied zum ersten und zweiten Testzustand muss nun jedoch das siebte Antwortsignal (S7) vorbestimmbaren Antworten exakt genügen, da alle Schaltungsteile im aktiven Signalpfad in diesem dritten Testzustand des Messsystems (SS) digital sind und alle anderen Teile überbrückt sind.

### Variante 1

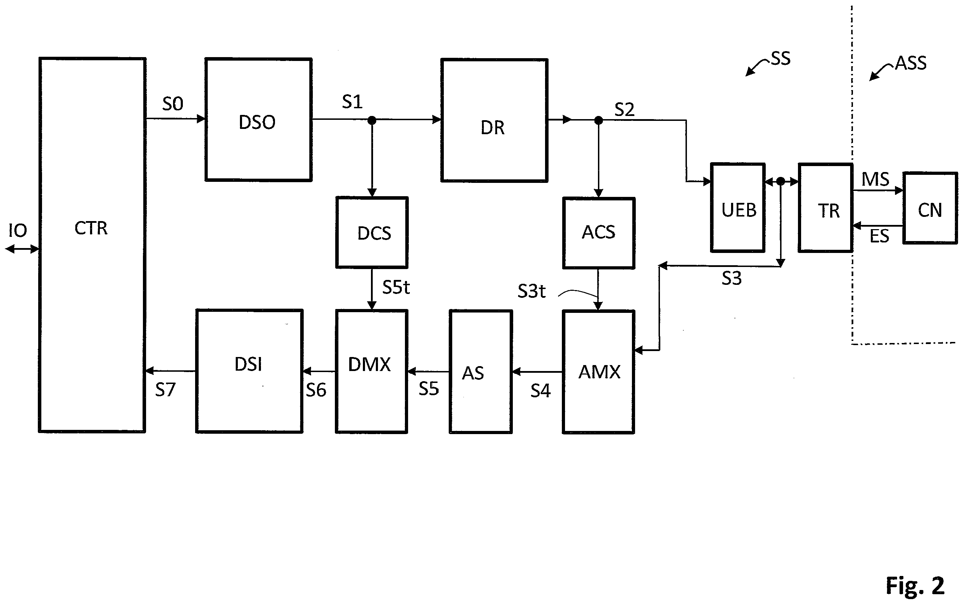

In einer weiteren Ausprägung des Vorschlags, die bevorzugt ein Ultraschallmesssystem betrifft, ist zwischen der Messeinheit (TR), also dem Ultraschalltransducer (TR), und der Treiberstufe (DR) ein Übertrager (UEB) eingefügt. In dem Beispiel der Fig. 2 ist der Übertrager (UEB) durch das dritte analoge Signal (S3) mit der Messeinheit (TR), also hier beispielhaft dem Ultraschalltransducer, verbunden. Somit hängt in dem Beispiel der Fig. 2 das dritte analoge Signal (S3) sowohl von dem Ausgangssignal des Übertragers (UEB) als auch von dem Eingangsverhalten der Messeinheit (TR) und damit im Falle eines Ultraschalltransducers vom Empfangssignal (ES) ab. Im Betriebszustand und im ersten Testzustand wird somit die Messeinheit (TR) nicht direkt, sondern über einen Übertrager (UEB) mittels des zweiten analogen Signals (S2) zum Aussenden eines Ausgangssignals (MS) in einen Messkanal (CN) in den Außenraum (ASS) außerhalb des Messsystems (SS) veranlasst. Die Messeinheit (TR) erzeugt somit in Abhängigkeit von dem empfangenen Empfangssignal (ES) und im Zusammenwirken mit dem Übertrager (UEB) das dritte analoge Signal (S3), wobei das dritte analoge Signal (S3) von dem zweiten analogen Signal (S2) und dem durch die Messeinheit (TR) empfangenen Empfangssignal (ES) abhängt.

### Variante 2

Die Variante 2 betrifft ein vorgeschlagenes Messsystem (SS) entsprechend Variante 1, wobei im Betriebszustand mindestens eine Vergleichsvorrichtung, insbesondere ein Komparator (C2, C3), einen Parameterwert des dritten analogen Signals (S3a, S3b) mit zumindest einem Referenzwert (Ref2, Ref3) vergleicht und in Abhängigkeit vom Vergleichsergebnis zumindest ein Vergleichsergebnissignal (v2, v3) erzeugt. Bei diesem Parameterwert kann es sich beispielsweise um einen Spannungs- oder Strompegel handeln.

### Variante 3

Die Variante 3 betrifft ein vorgeschlagenes Messsystem (SS) entsprechend Variante 1, wobei im Betriebszustand mindestens eine Vergleichsvorrichtung, insbesondere ein Differenzverstärker (D1), zwei Parameterwerte des dritten analogen Signals (S3a, S3b) miteinander, insbesondere durch Differenzbildung, vergleicht und ein Unterschiedssignal (d1) erzeugt und durch Vergleich des Unterschiedssignals (d1) mit zumindest einem Referenzwert (Ref1) ein Vergleichsergebnissignal (v1), insbesondere mittels eines von der Vergleichsvorrichtung separaten Komparators (C1), erzeugt. Bei diesen Parameterwerten kann es sich beispielsweise um Spannungs- oder Strompegel handeln.

### Variante 4

Die Variante 4 betrifft ein vorgeschlagenes Messsystem (SS) entsprechend Variante 1, wobei im Betriebszustand mindestens eine Vergleichsvorrichtung, insbesondere ein Komparator (C4, C5, C6), einen Parameterwert des zweiten analogen Signals (S2a, S2b, S2c) mit einem Referenzwert (Ref4, Ref5, Ref6) vergleicht und in Abhängigkeit vom Vergleichsergebnis ein Vergleichsergebnissignal (v4, v5, v6) erzeugt. Bei diesem Parameterwert kann es sich beispielsweise um einen Spannungs- oder Strompegel handeln.

### Variante 5

Die Variante 5 betrifft ein vorgeschlagenes Messsystem (SS) entsprechend Variante 1, wobei im Betriebszustand mindestens eine Vergleichsvorrichtung, insbesondere ein Differenzverstärker (D7, D6, D8), zwei Parameterwerte des zweiten analogen Signals (S2a, S2b, S2c) miteinander, insbesondere durch Differenzbildung, vergleicht und ein Unterschiedssignal (d6, d7, d8) erzeugt und durch Vergleich des Unterschiedssignals (d6, d7, d8) mit einem Referenzwert (Ref6, Ref7, Ref8) ein Vergleichsergebnissignal (v10, v11, v12), insbesondere mittels eines von der Vergleichsvorrichtung separaten Komparators (C10, C11, C12), erzeugt. Variante 6

Die Variante 6 betrifft ein vorgeschlagenes Messsystem entsprechend den Varianten 2, 3, 4, oder 5 oder den nachfolgenden Varianten, die ebenfalls Vergleichsergebnissignale oder Vergleichsergebnisse aus einem Soll-Ist-Vergleich erzeugen, wobei das Messsystem (SS) dazu ausgelegt ist, im Betriebszustand eine Fehlermeldung in Abhängigkeit von mindestens einem Vergleichsergebnissignal (v1, v2, v3, v4, v5, v6, v10, v11, v12, v13, v14, v15, v16, v17, v18, v19) zu erzeugen oder nicht zu erzeugen.

### Variante 7

Die Variante 7 betrifft ein vorgeschlagenes Messsystem (SS) entsprechend Variante 6, wobei es eine Steuereinrichtung (CTR) aufweist, die das Vergleichsergebnissignal (v1, v2, v3, v4, v5, v6, v10, v11, v12, v13, v14, v15, v16, v17, v18, v19) auswertet und die Fehlermeldung erzeugt.

### Variante 8

In der Variante 8 handelt es sich bei der Messeinheit (TR) um einen Ultraschalltransducer (TR), der als Ausgangssignal (MS) ein Ultraschallmesssignal in einen Ultraschallmesskanal als Messkanal (CN) aussendet und als Empfangssignal (ES) das an einem Objekt in dem Ultraschallmesskanal (CN) reflektierte Ultraschallempfangssignal empfängt. Alternativ kann die Messeinheit (TR) mindestens ein aktives Element zur Erzeugung eines akustischen, optischen, elektrischen, induktiven, kapazitiven, elektromagnetischen IR- oder UV-Ausgangssignals (MS) als Messsignal und mindestens ein Sensorelement zum Erfassen eines Signals als Empfangssignal in Reaktion auf das Ausgangssignal des aktiven Elements aufweisen. Vorzugsweise ist vorgesehen, dass die Messeinheit (TR) einen Ultraschalltransducer, ein Paar aus mindestens einem Ultraschallsender und einem Ultraschallempfänger, eine Kamera, insbesondere eine TOF-Kamera, ein Paar aus Heizelement und Temperatursensor, ein Paar aus optischem Sender und optischem Empfänger, oder mindestens ein anderes Paar aus Aktor und Sensor, die in Wirkverbindung miteinander stehen, ein Anemometer, einen Durchflussmesser, eine Messbrücke, einen auf Basis einer Materialverformung arbeitenden Druck- und/oder Beschleunigungssensor mit einem aktiven Element zur Verformung des Materials zu Testzwecken, ein MEMS (Micro-Electrical-Mechanical-System), MEOS (Micro-Electrical-Optical-System), MEMOS (Micro-Electrical-Mechanical-Optical-System) o.dgl. aufweist.

### Variante 9

In der Variante 9 weist das vorgeschlagene Messsystem (SS) eine Steuereinrichtung (CTR) auf, die im ersten oder zweiten oder dritten Testzustand das siebte Antwortsignal (S7) des digitalen Eingangsschaltkreises (DSI) mit einer vorgegebenen Antwort vergleicht und ein Vergleichsergebnis ermittelt.

### Variante 10

In der Variante 10 weist das vorgeschlagene Messsystem (SS) eine Steuereinrichtung (CTR) auf, die im ersten oder zweiten oder dritten Testzustand die Digitalsignal-Erzeugungseinheit (DSO) mittels eines Ansteuersignals (S0) steuert und die im ersten oder zweiten oder dritten Testzustand das siebte Antwortsignal (S7) des digitalen Eingangsschaltkreises (DSI) mit einer vorgegebenen Antwort vergleicht und ein Vergleichsergebnis ermittelt. Dabei hängen diese vorgegebenen Antworten und das Ansteuersignal (S0) der Steuereinrichtung (CTR) voneinander ab.

### Variante 11

In der Variante 11 weist das vorgeschlagene Messsystem (SS) eine Steuereinrichtung (CTR) auf, die im zweiten Testzustand die analoge Kanalsimulationseinheit (ACS) steuert, so dass von dieser Steuerung der analogen Kanalsimulationseinheit (ACS) abhängt, wie die analoge Kanalsimulationseinheit (ACS) das zweite analoge Signal (S2) in das dritte analoge Testsignal (S3t) umsetzt und wobei die Steuereinrichtung (CTR) im zweiten Testzustand das siebte Antwortsignal (S7) des digitalen Eingangsschaltkreises (DSI) mit einer vorgegeben Antwort vergleicht und ein Vergleichsergebnis ermittelt. Dabei hängen diese vorgegebenen Antworten und die Steuerung der analogen Kanalsimulationseinheit (ACS) voneinander ab.

### Variante 12

In der Variante 12 weist das vorgeschlagene Messsystem (SS) eine Steuereinrichtung (CTR) auf, die im dritten Testzustand die digitale Kanalsimulationseinheit (DCS) steuert, so dass von dieser Steuerung der digitalen Kanalsimulationseinheit (DCS) abhängt, wie die digitale Kanalsimulationseinheit (DCS) das erste digitale Signal (S1) in das fünfte digitale Testsignal (S5t) umsetzt und wobei die Steuereinrichtung (CTR) im dritten Testzustand das siebte Antwortsignal (S7) des digitalen Eingangsschaltkreises (DSI) mit einer vorgegeben Antwort vergleicht und ein Vergleichsergebnis ermittelt. Dabei hängen diese vorgegebenen Antworten und die Steuerung der digitalen Kanalsimulationseinheit (DCS) voneinander ab.

### Variante 13

In der dreizehnten Variante des vorgeschlagenen Messsystems (SS) verfügt der digitale Eingangsschaltkreis (DSI) über eine Vorrichtung zur Messung der Schwingfrequenz des sechsten digitalen Signals (S6) in der Sendephase (SP). Diese Messung der Schwingfrequenz ermöglicht die Detektion von Schäden verschiedener Art am Schwingkreis eines Ultraschalltransducers (TR), wenn dieser als Messeinheit (TR) verwendet wird.

### Variante 14

In der vierzehnten Variante des vorgeschlagenen Messsystems (SS) verfügt der digitale Eingangsschaltkreis (DSI) über eine Vorrichtung zur Messung der Ausschwingzeit des sechsten digitalen Signals (S6) in der Ausschwingphase (AP). Diese Messung der Ausschwingzeit ermöglicht die Detektion von Schäden verschiedener Art am Schwingkreis eines Ultraschalltransducers (TR), wenn dieser als Messeinheit (TR) verwendet wird. Für die Messung der Ausschwingzeit wird in dem analogen Eingangsschaltkreis (AS) oder dem digitalen Eingangsschaltkreis bevorzugt ein Hüllkurvensignal aus dem Signalpegelverlauf des dritten analogen Signals (S3) bzw. dem Werteverlauf des sechsten digitalen Signals (S6) gebildet. Unterschreitet dieses in der Ausschwingphase (AP) einen Referenzwert für den Wert dieses Hüllkurvensignals, so kann das Ausschwingen der Messeinheit (TR) bzw. des Ultraschalltransducers (TR) für beendet erklärt werden. Typischerweise endet dann auch die Ausschwingphase (AP). Die Zeit zwischen dem Ende der Sendephase (SP) und dem so definierten Ende des Ausschwingens ist dann die Ausschwingzeit.

### Variante 15

In der fünfzehnten Variante des vorgeschlagenen Messsystems (SS), die auf der dreizehnten und vierzehnten Variante aufbaut, vergleicht der digitale Eingangsschaltkreis (DSI) oder eine Steuereinrichtung (CTR) die gemessene Schwingfrequenz mit einem Sollwert oder einem Sollwertbereich für diese Schwingfrequenz sowie die gemessene Ausschwingzeit mit einem Sollwert oder einem Sollwertbereich für die Ausschwingzeit. Die betreffende Teilvorrichtung schließt dann gegebenenfalls auf einen Kurzschluss der Messeinheit (TR), insbesondere eines "inneren" Ultraschalltransducers (TRi) oder einen nicht vorhandenen Teil der Messeinheit (TR), insbesondere einen nicht angeschlossenen "inneren" Ultraschalltransducer (TRi), oder einen sekundärseitig nicht an ein erstes Teilsignal (S3a) des dritten analogen Signals (S3) angeschlossenen Übertrager (UEB) oder einen anderen allgemeinen Fehler. Dies geschieht, wenn die ermittelte Schwingfrequenz höher als der Sollwert der Schwingfrequenz oder wertemäßig oberhalb des Sollwertbereichs der Schwingfrequenz liegt und wenn die ermittelte Ausschwingzeit kürzer als der Sollwert der Ausschwingzeit oder wertemäßig unterhalb des Sollwertbereichs der Ausschwingzeit liegt. Der digitale Eingangsschaltkreis (DSI) bzw. die Steuereinrichtung (CTR) erzeugen dann eine Fehlermeldung.

### Variante 16

In der sechzehnten Variante des vorgeschlagenen Messsystems (SS), die auf der dreizehnten und vierzehnten Variante aufbaut, vergleicht der digitale Eingangsschaltkreis (DSI) oder die Steuereinrichtung (CTR) die gemessene Ausschwingzeit mit einem Sollwert oder einem Sollwertbereich für diese Ausschwingzeit und schließt gegebenenfalls auf einen nicht vorhandenen Teil der Messeinheit (TR), insbesondere einen nicht angeschlossenen "inneren" Ultraschalltransducer (TRi), oder einen Fehler schließt. Dies geschieht, wenn die ermittelte Ausschwingzeit kürzer als der Sollwert der Ausschwingzeit oder wertemäßig unterhalb des Sollwertbereichs der Ausschwingzeit liegt. In dem Fall erzeugt der digitale Eingangsschaltkreis (DSI) oder eine Steuereinrichtung (CTR) eine Fehlermeldung.

### Variante 17

In der siebzehnten Variante des vorgeschlagenen Messsystems (SS) kann das Messsystem (SS) so konfiguriert werden, dass im Betriebszustand der Werteverlauf und/oder die Werte des siebten Antwortsignals (S7), insbesondere in Form von Messergebnissen und Messwerten, auf Plausibilität, insbesondere durch den Vergleich mit Sollwerten und Sollwertbereichen, durch den digitalen Empfangsschaltkreis (DSI) und/oder die Steuereinrichtung (CTR) geprüft werden. Beispielsweise kann während der Konstruktion des vorgeschlagenen Messsystems (SS) berücksichtigt werden, dass bestimmte Messwerte unter bestimmten Bedingungen physikalisch nicht möglich sind. Das Auftreten solcher Messwerte unter diesen Bedingungen kann daher als Anzeichen für einen Fehler interpretiert werden. Es kann daher vorgesehen werden, dass der digitale Empfangsschaltkreis (DSI) und/oder die Steuereinrichtung (CTR) in diesem Fall eine Fehlermeldung erzeugen oder bereitstellen.

### Variante 18

In der achtzehnten Variante des vorgeschlagenen Messsystems (SS) erfolgt eine Weitergabe des Werteverlaufs und/oder der Werte des siebten Antwortsignals (S7), die insbesondere in Form von Messergebnissen und Messwerten vorliegen können, im Betriebszustand durch die Steuereinrichtung (CTR) und/oder den digitalen Eingangsschaltkreis (DSI) nur dann, wenn die Plausibilitätsprüfung des Werteverlaufs und/oder der Werte des siebten Antwortsignals (S7) erfolgreich war. Wenn die Plausibilitätsprüfung des Werteverlaufs und/oder der Werte des siebten Antwortsignals (S7) nicht erfolgreich war, kann beispielsweise eine Fehlermeldung durch die Steuereinrichtung (CTR) und/oder den digitalen Eingangsschaltkreis (DSI) erzeugt oder bereitgestellt werden.

### Variante 19

In der neunzehnten Variante des vorgeschlagenen Messsystems (SS) sind der digitale Empfangsschaltkreis (DSI) und/oder der analoge Empfangsschaltkreis (AS) dazu vorgesehen und eingerichtet den Gleichanteil und/oder die Amplitude und/oder die Phase und/oder andere Signalparameter des dritten analogen Signals (S3) bei verschiedenen Signalfrequenzen des durch die Digitalsignal-Erzeugungseinheit (DSO) erzeugten ersten digitalen Signals (S1) oder bei verschiedenen zeitlichen Signalverlaufsmustern des durch die Digitalsignal-Erzeugungseinheit (DSO) erzeugten ersten digitalen Signals (S1) zu erfassen. Es versteht sich, dass in diesem Fall die Digitalsignal-Erzeugungseinheit (DSO) in der Lage ist, verschiedene Signalfrequenzen des ersten digitalen Signals (S1) und/oder verschiedene zeitliche Signalverlaufsmuster des ersten digitalen Signals (S1) zu erzeugen. Besonders geeignet sind Frequenz-Sweeps, Phasensprungsignale und phasenmodulierte Signale, die durch die Digitalsignal-Erzeugungseinheit (DSO) erzeugt werden können.

### Verfahren zum Betrieb

Es wird vorgeschlagen die zuvor beschriebene Vorrichtung und gegebenenfalls ihre Varianten wie folgt zu betreiben:
Als erstes erfolgt das Einnehmen des dritten Testzustands durch das Messsystem (SS) und die Simulation mindestens eines Testfalls durch die Erzeugung eines diesem Testfall entsprechenden Ansteuersignals (S0) durch die Steuereinrichtung (CTR) und die Erfassung des siebten Antwortsignals (S7) durch die Steuereinrichtung (CTR) sowie ein Vergleich des siebten Antwortsignals (S7) mit einem vorgegebenen Muster des siebten Antwortsignals (S7). Dabei werden vorgegeben Muster des siebten Antwortsignals (S7) zugrunde gelegt, die dem erzeugten Ansteuersignal (S0) der Steuereinrichtung (CTR) entsprechen. Hierbei sei darauf hingewiesen, dass die Digitalsignal-Erzeugungseinheit (DSO), die digitale Kanalsimulationseinheit (DCS) und der digitale Eingangsschaltkreis (DSI) gegebenenfalls unterschiedlich konfiguriert werden können. Diese Konfigurationen werden vorzugsweise auch durch die Steuereinrichtung (CTR) vorgenommen. Deren Ansteuersignal (S0) hängt dann von diesen verwendeten Konfigurationen, die bevorzugt durch die Steuereinrichtung (CTR) mittels entsprechender, in den Figuren nicht eingezeichneter Steuerleitungen eingestellt werden, und dem jeweiligen Prüfungszweck ab. Dementsprechend hängt dann auch das vorgegeben Muster des siebten Antwortsignals (S7) von dem verwendeten Ansteuersignal (S0), diesen Konfigurationen, die bevorzugt durch die Steuereinrichtung (CTR) kontrolliert werden, und dem Prüfungszweck ab. Es erfolgt das Feststellen eines Fehlers, wenn das siebte Antwortsignal (S7) nicht exakt dem vorgegebenen Muster des siebten Antwortsignals (S7) entspricht. Diese Feststellung wird bevorzugt durch die Steuereinrichtung (CTR) getroffen und an eine vorgegebene Stelle in vorgegebener Weise signalisiert. Beispielsweise kann ein Flag bei einem solchen Fehler durch die Steuereinrichtung (CTR) gesetzt werden. Die Steuereinrichtung (CTR) vergleicht für diese Überprüfung das siebte Antwortsignal (S7) mit dem vorgegebenen Muster für das siebte Antwortsignal (S7). Dies geschieht bevorzugt durch bit-weise Überprüfung. Sofern keine weiteren Messungen erforderlich sind, kann der dritte Testzustand dann verlassen werden und ein anderer Testzustand oder, im fehlerfreien Fall, der Betriebszustand eingenommen werden. Besonders bevorzugt folgt im fehlerfreien Fall auf das Abprüfen aller Prüffälle im dritten Testzustand das Abprüfen aller Prüffälle (Testfälle) im zweiten Testzustand, da dann die digitale Logik des digitalen Teils der Signalkette als ordnungsgemäß arbeitend bewertet ist.

Bevorzugt folgen somit auf die Prüfungen im dritten Testzustand die Prüfungen im zweiten Testzustand. Der zweite Testzustand kann aber auch direkt aus dem Betriebszustand oder den anderen Testzuständen eingenommen werden.

Hierzu erfolgen das Einnehmen des zweiten Testzustands durch das Messsystem (SS) und die Simulation mindestens eines Testfalls durch Erzeugung eines diesem Testfall entsprechenden Ansteuersignals (S0) durch die Steuereinrichtung (CTR) als Stimulus für die nachfolgende Signalkette und die Erfassung des siebten Antwortsignals (S7) durch die Steuereinrichtung (CTR) sowie der Vergleich des siebten Antwortsignals (S7) mit einem vorgegebenen Musterkorridor des siebten Antwortsignals (S7). Im Gegensatz zum dritten Testzustand kann die Reaktion der Signalkette, die nunmehr auch analoge Schaltungsteile (DR, AS) umfasst, nicht mehr exakt vorhergesagt werden. Daher muss ein Signalkorridor (Musterkorridor) für den erlaubten Verlauf der erlaubten Werte des siebten Antwortsignals (S7) vorgegeben werden. Bei dem siebten Antwortsignal (S7) kann es sich um ein eindimensionales, aber auch um ein mehrdimensionales Signal handeln. In dem mehrdimensionalen Zustandsraum müssen daher für jeden Zeitschritt bzw. jeden zu prüfenden Parameter des siebten Antwortsignals (S7) Bereiche angegeben werden, innerhalb dessen sich das siebte Antwortsignal (S7) wertemäßig bewegen darf. Besonders bevorzugt sind einfache Toleranzintervalle für jeden Parameter, die nicht verlassen werden dürfen. Der Musterkorridor sollte bevorzugt ein einfacher linearer "Schlauch" sein. Es sind aber auch erheblich komplexere Topologien für die erlaubten Wert-/Parameterkombinationen des siebten Antwortsignals (S7) denkbar. Sofern eine Wert-/Parameterkombination des siebten Antwortsignals (S7) den erlaubten Musterkorridor verlässt, kann die Steuereinrichtung (CTR) einen Fehler feststellen und signalisieren. Dies erfolgt, wenn das siebte Antwortsignal (S7) nicht innerhalb des vorgegeben Musterkorridors des siebten Antwortsignals (S7) liegt. Sobald alle Prüffälle (Testfälle) abgearbeitet sind, erfolgt bevorzugt das Verlassen des zweiten Testzustands.

Besonders bevorzugt folgt im fehlerfreien Fall auf das Abprüfen aller Prüffälle im dritten und zweiten Testzustand das Abprüfen aller Prüffälle (Testfälle) im ersten Testzustand, da dann die digitale Logik des digitalen Teils der Signalkette und die analogen Schaltungsteile der Signalkette als ordnungsgemäß arbeitend bewertet sind.

Bevorzugt folgen somit auf die Prüfungen im zweiten Testzustand die Prüfungen im ersten Testzustand. Der erste Testzustand kann aber auch direkt aus dem Betriebszustand oder den anderen Testzuständen eingenommen werden.

Hierzu erfolgen das Einnehmen des ersten Testzustands durch das Messsystem (SS) und die Simulation mindestens eines Testfalls durch Erzeugung eines diesem Testfall entsprechenden Ansteuersignals (S0) durch die Steuereinrichtung (CTR) und die Erfassung des siebten Antwortsignals (S7) durch die Steuereinrichtung (CTR) und der Vergleich des siebten Antwortsignals (S7) mit einem vorgegebenen Musterkorridor des siebten Antwortsignals (S7). In diesem Testfall ist es von besonderer Bedeutung, dass hier bevorzugt weitere Parameter der Messeinheit (TR) vermessen werden. Insofern betrifft die Erzeugung des Ansteuersignals (S0) bevorzugt die Erzeugung geeigneter Stimuli für die Vermessung der Messeinheit (TR), also des Ultraschalltransducers (TR), und die Übergabe der ermittelten Messwerte für die Parameter der Messeinheit (TR), also des Ultraschalltransducers (TR), in Form eines siebten Antwortsignals (S7) an die Steuereinrichtung (CTR). Die Steuereinrichtung (CTR) stellt bevorzugt einen Fehler fest, wenn das siebte Antwortsignal (S7) nicht innerhalb eines vorgegeben Musterkorridors des siebten Antwortsignals (S7) liegt. Beispielsweise, wenn die Impedanz des beispielhaften Ultraschalltransducers nicht innerhalb eines vorgegebenen Wertebereiches liegt oder wenn eine Asymmetrie bei erwarteter Symmetrie vorliegt. Hierzu werten die Steuereinrichtung (CTR) und/oder der digitale Eingangsschaltkreis (DSI) typischerweise auch Vergleichsergebnissignale von Vergleichseinrichtungen aus. Besonders bevorzugt folgt im fehlerfreien Fall auf das Abprüfen aller Prüffälle des dritten, zweiten und ersten Testzustands die Rückkehr in den Betriebszustand, da dann die digitale Logik des digitalen Teils der Signalkette sowie die analogen Schaltungsteile der Signalkette und die Messeinheit, also z.B. der Ultraschalltransducer (TR), als ordnungsgemäß arbeitend bewertet sind. Somit kann dann das Messsystem als solches auch als ordnungsgemäß arbeitend bewertet werden. Auch dies kann durch die Steuereinrichtung (CTR) festgestellt und gegebenenfalls Weitersignalisiert werden. Bevorzugt folgt somit auf die Prüfungen im dritten Testzustand die Einnahme des Betriebszustands. Der Betriebszustand kann aber auch direkt aus allen Testzuständen heraus eingenommen werden.

Auch im Betriebszustand kann die Überwachung von Amplitudenpegeln, Differenzen solcher Amplitudenpegel mit und ohne Phasenverschiebungen und die Überwachung, ob eine Asymmetrie bei erwarteter Symmetrie vorliegt, erfolgen. Hierzu werten die Steuereinrichtung (CTR) und/oder der digitale Eingangsschaltkreis (DSI) typischerweise auch Vergleichsergebnissignale von entsprechenden Vergleichseinrichtungen auch während des normalen Betriebs im Betriebszustand aus.

### Vorteil der Erfindung

Ein solches Ultraschallsensormesssystem ermöglicht den effizienten und effektiven Test des Systems im Normalbetrieb. Die Vorteile sind hierauf aber nicht beschränkt.

### Kurzbeschreibung der Figuren

Die Erfindung wird nachfolgend anhand diverser Ausführungsbeispiele und unter Bezugnahme auf die Zeichnung näher erläutert:
- Fig. 1: zeigt schematisch vereinfacht die Grundstruktur des vorgeschlagenen selbsttestfähigen Messsystems (SS).
- Fig. 2: entspricht der Fig. 1, wobei ein Übertrager (UEB) zwischen Messeinheit (TR) und Treiberstufe (DR) eingefügt ist.
- Fig. 3: entspricht der Fig. 2 mit dem fett markierten aktiven Signalpfad im Betriebszustand und im ersten Testzustand.
- Fig. 4: entspricht der Fig. 2 mit dem fett markierten aktiven Signalpfad im zweiten Testzustand.
- Fig. 5: entspricht der Fig. 2 mit dem fett markierten aktiven Signalpfad im dritten Testzustand.
- Fig. 6: entspricht der Fig. 2 mit dem Unterschied, dass das zweite analoge Signal (S2) mittels einer Vergleichseinheit in Form eines zweiten Komparators (C2) und das dritte analoge Signal (S3) mittels einer Vergleichseinheit in Form eines dritten Komparators (C3) im Betrieb überwacht wird.
- Fig. 7: zeigt schematisch eine mögliche Realisierung des Übertragers (UEB) mit einer dreiphasigen Primärseite mit drei Primäranschlüssen (S2a, S2b, S2c) und zwei Sekundäranschlüssen (S3a, S3b) auf der Sekundärseite und einem angeschlossenen Ultraschalltransducer (TR) auf der Sekundärseite.
- Fig. 8: entspricht der Fig. 2 mit dem Unterschied, dass das zweite analoge Signal (S2) dreiphasig ausgeführt ist und das dritte analoge Signal (S3) zweiphasig ausgeführt ist, wobei das das dritte analoge Signal (S3) mittels Vergleichseinheiten im Betrieb überwacht wird.
- Fig. 9: entspricht der Fig. 2 mit dem Unterschied, dass das zweite analoge Signal (S2) dreiphasig ausgeführt ist und mittels Vergleichseinheiten in Sternkonfiguration im Betrieb überwacht wird und das dritte analoge Signal (S3) zweiphasig ausgeführt ist.
- Fig. 10: entspricht der Fig. 2 mit dem Unterschied, dass das zweite analoge Signal (S2) dreiphasig ausgeführt ist und mittels Vergleichseinheiten in Dreieckskonfiguration im Betrieb überwacht wird und das dritte analoge Signal (S3) zweiphasig ausgeführt ist.
- Fig. 11: zeigt wichtige Signale (d1, S2c, S2a, S2b, S5) bei Aussendung eines Ultraschall-Bursts im Betriebszustand.
- Fig. 12: entspricht einer zeitlichen Vergrößerung der Fig. 11 in der Sendephase (SP).
- Fig. 13: zeigt wichtige Signale (S2c, S2a, S2b, S5) bei Aussendung eines Ultraschall-Bursts im Betriebszustand, wobei nun ein Kurzschluss an dem inneren Ultraschalltransducer (TRi) zwischen dem ersten Teilsignal (S3a) des dritten analogen Signals (S3) und dem zweiten Teilsignal (S3b) des dritten analogen Signals (S3) vorliegt.
- Fig. 14: entspricht einer zeitlichen Vergrößerung der Fig. 13 in der Sendephase (SP).
- Fig. 15: zeigt wichtige Signale (S2c, S2a, S2b, S5) bei Aussendung eines Ultraschall-Bursts im Betriebszustand wobei nun der innere Ultraschalltransducer (Tri) nicht angeschlossen ist, also das erste Teilsignal (S3a) des dritten analogen Signals (S3) oder das zweite Teilsignal (S3b) des dritten analogen Signals (S3) nicht mit Ultraschalltransducer (TR) verbunden ist.
- Fig. 16: entspricht einer zeitlichen Vergrößerung der Fig. 15 in der Sendephase (SP).
- Fig. 17: zeigt wichtige Signale (d1, S2c, S2a, S2b, S5) bei Aussendung eines Ultraschall-Bursts im Betriebszustand wobei nun der Übertrager (UEB) mit einem Anschluss sekundärseitig nicht an das erste Teilsignal (S3a) des dritten analogen Signals (S3) angeschlossen ist.
- Fig. 18: entspricht einer zeitlichen Vergrößerung der Fig. 17 in der Sendephase (SP).
- Fig. 19: zeigt wichtige Signale (d1, S2c, S2a, S2b, S5) bei Aussendung eines Ultraschall-Bursts im Betriebszustand, wobei nun der Übertrager (UEB) mit einem Anschluss sekundärseitig nicht an das zweite Teilsignal (S3b) des dritten analogen Signals (S3) angeschlossen ist.
- Fig. 20: entspricht einer zeitlichen Vergrößerung der Fig. 19 in der Sendephase (SP).
- Fig. 21: zeigt wichtige Signale (d1, S2c, S2a, S2b, S5) bei Aussendung eines Ultraschall-Bursts im Betriebszustand, wobei der Übertrager (UEB) mit einem Anschluss primärseitig nicht an das erste Teilsignal (S2a) des zweiten analogen Signals (S2) angeschlossen ist.
- Fig. 22: entspricht einer zeitlichen Vergrößerung der Fig. 21 in der Sendephase (SP).
- Fig. 23: zeigt wichtige Signale (d1, S2c, S2a, S2b, S5) bei Aussendung eines Ultraschall-Bursts im Betriebszustand, wobei der Übertrager (UEB) mit einem Anschluss primärseitig nicht an das zweite Teilsignal (S2b) des zweiten analogen Signals (S2) angeschlossen ist.
- Fig. 24: entspricht einer zeitlichen Vergrößerung der Fig. 23 in der Sendephase (SP).
- Fig. 25: zeigt wichtige Signale (d1, S2c, S2a, S2b, S5) bei Aussendung eines Ultraschall-Bursts im Betriebszustand, wobei der Übertrager (UEB) mit seinem Mittenanschluss primärseitig nicht an das dritte Teilsignal (S2c) des zweiten analogen Signals (S2) angeschlossen ist.
- Fig. 26: entspricht einer zeitlichen Vergrößerung der Fig. 25 in der Sendephase (SP).
- Fig. 27: zeigt wichtige Signale (d1, S2c, S2b, S5) bei Aussendung eines Ultraschall-Bursts im Betriebszustand, wobei primärseitig zwei Anschlüsse des Übertragers (UEB) und zwar das dritte Teilsignal (S2c) des zweiten analogen Signals (S2) und erste Teilsignal (S2a) des zweiten analogen Signals (S2) kurzgeschlossen sind.
- Fig. 28: entspricht einer zeitlichen Vergrößerung der Fig. 27 in der Sendephase (SP).
- Fig. 29: zeigt wichtige Signale (d1, S2c, S2a, S5) bei Aussendung eines Ultraschall-Bursts im Betriebszustand, wobei primärseitig zwei Anschlüsse des Übertragers (UEB) und zwar das dritte Teilsignal (S2c) des zweiten analogen Signals (S2) und zweite Teilsignal (S2b) des zweiten analogen Signals (S2) kurzgeschlossen sind.
- Fig. 30: entspricht einer zeitlichen Vergrößerung der Fig. 29 in der Sendephase (SP).
- Fig. 31: zeigt wichtige Signale (d1, S2c, S2a, S2b, S5) bei Aussendung eines Ultraschall-Bursts im Betriebszustand, wobei sekundärseitig der Transducer-Widerstand (R_{TR}) nicht angeschlossen ist, also entweder an das erste Teilsignal (S3a) des dritten analogen Signals (S3) oder an das zweite Teilsignal (S3b) des dritten analogen Signals (S3) nicht an den Transducer-Widerstand (R_{TR}) angeschlossen ist.
- Fig. 32: entspricht einer zeitlichen Vergrößerung der Fig. 31 in der Sendephase (SP).
- Fig. 33: zeigt wichtige Signale (d1, S2c, S2a, S2b, S5) bei Aussendung eines Ultraschall-Bursts im Betriebszustand wobei sekundärseitig die Transducer-Kapazität (C_{TR}) nicht angeschlossen ist, also entweder an das erste Teilsignal (S3a) des dritten analogen Signals (S3) oder an das zweite Teilsignal (S3b) des dritten analogen Signals (S3) nicht an die Transducer-Kapazität (C_{TR}) angeschlossen ist.
- Fig. 34: entspricht einer zeitlichen Vergrößerung der Fig. 33 in der Sendephase (SP).
- Fig. 35: zeigt wichtige Signale (d1, S2c, S2a, S2b, S5) bei Aussendung eines Ultraschall-Bursts im Betriebszustand, wobei primärseitig keine Ansteuerung des Treibers für das erste Teilsignal (S2a) des zweiten analogen Signals (S2) in der Treiberstufe (DR) vorliegt.
- Fig. 36: entspricht einer zeitlichen Vergrößerung der Fig. 35 in der Sendephase (SP).
- Fig. 37: zeigt wichtige Signale (d1, S2c, S2a, S2b, S5) bei Aussendung eines Ultraschall-Bursts im Betriebszustand, wobei primärseitig der Treiber für das erste Teilsignal (S2a) des zweiten analogen Signals (S2) in der Treiberstufe (DR) gegen Masse kurzgeschlossen ist.
- Fig. 38: entspricht einer zeitlichen Vergrößerung der Fig. 37 in der Sendephase (SP).
- Fig. 39: zeigt wichtige Signale (d1, S2c, S2a, S2b, S5) bei Aussendung eines Ultraschall-Bursts im Betriebszustand, wobei primärseitig keine Ansteuerung des Treibers für das zweite Teilsignal (S2b) des zweiten analogen Signals (S2) in der Treiberstufe (DR) vorliegt.
- Fig. 40: entspricht einer zeitlichen Vergrößerung der Fig. 39 in der Sendephase (SP).
- Fig. 41: zeigt wichtige Signale (d1, S2c, S2a, S2b, S5) bei Aussendung eines Ultraschall-Bursts im Betriebszustand, wobei primärseitig der Treiber für das zweite Teilsignal (S2b) des zweiten analogen Signals (S2) in der Treiberstufe (DR) gegen Masse kurzgeschlossen ist.
- Fig. 42: entspricht einer zeitlichen Vergrößerung der Fig. 41 in der Sendephase (SP).
- Fig. 43: zeigt wichtige Signale (d1, S2c, S2a, S2b, S5) bei Aussendung eines Ultraschall-Bursts im Betriebszustand, wobei primärseitig keine Ansteuerung des Treibers für das dritte Teilsignal (S2c) des zweiten analogen Signals (S2) in der Treiberstufe (DR) vorliegt.
- Fig. 44: entspricht einer zeitlichen Vergrößerung der Fig. 43 in der Sendephase (SP).
- Fig. 45: zeigt wichtige Signale (d1, S2a, S2b, S5) bei Aussendung eines Ultraschall-Bursts im Betriebszustand, wobei primärseitig der Treiber für das dritte Teilsignal (S2c) des zweiten analogen Signals (S2) in der Treiberstufe (DR) gegen Masse kurzgeschlossen ist.
- Fig. 46: entspricht einer zeitlichen Vergrößerung der Fig. 45 in der Sendephase (SP).
- Fig. 47: zeigt den bevorzugten Testablauf.
- Fig. 48: zeigt die Vorrichtung unter Nutzung einer Symmetrieprüfung.
- Fig. 49: zeigt die Vorrichtung entsprechend Fig. 48 mit konkreter Ausführung einer Symmetrieprüfung für die Sekundärseite des Übertragers (UEB).
- Fig. 50: zeigt die Vorrichtung entsprechend Fig. 48 mit konkreter Ausführung einer Symmetrieprüfung für die Primärseite des Übertragers (UEB).
- Fig. 51: vergleicht beispielhaft das ungestörte dritte Teilsignal (S2c) des zweiten analogen Signals (S2) (siehe auch Fig. 11) mit dem gestörten dritten Teilsignal (S2c) des zweiten analogen Signals (S2) bei einem Kondensatorabriss des Transducer-Kondensators (C_{TR}) (siehe Fig. 34) und zweigt beispielhafte Analysesignale.
- Fig. 52: zeigt beispielhaft eine mögliche innere Struktur einer analogen Koeffizientenüberwachungsteilvorrichtung (KUE).
- Fig. 53: entspricht der Fig. 8, wobei die Pegelüberwachungen nicht eingezeichnet sind. Stattdessen sind mögliche Koeffizientenüberwachungsteilvorrichtungen eingezeichnet.
- Fig. 54: entspricht der Fig. 52, wobei nun zwei Komparatoren zur zusätzlichen Überwachung der beiden internen Koeffizientensignale vorgesehen sind.
- Fig. 55: entspricht der Fig. 54, wobei nun das Verhältnis der beiden internen Koeffizientensignale nicht überwacht wird.
- Fig. 56: entspricht der Fig. 55, wobei nun nur ein internes Koeffizientensignal überwacht wird.
- Fig. 57: entspricht der Fig. 2 mit dem Unterschied, dass das dritte analoge Signal (S3) vor dem analogen Multiplexer (AMX) durch ein analoges Filter oder einen analogen Verstärker (AV) in das dritte analoge Signal (S3) und das verstärkte dritte analoge Signal (S3') aufgespalten ist.

### Beschreibung der Figuren

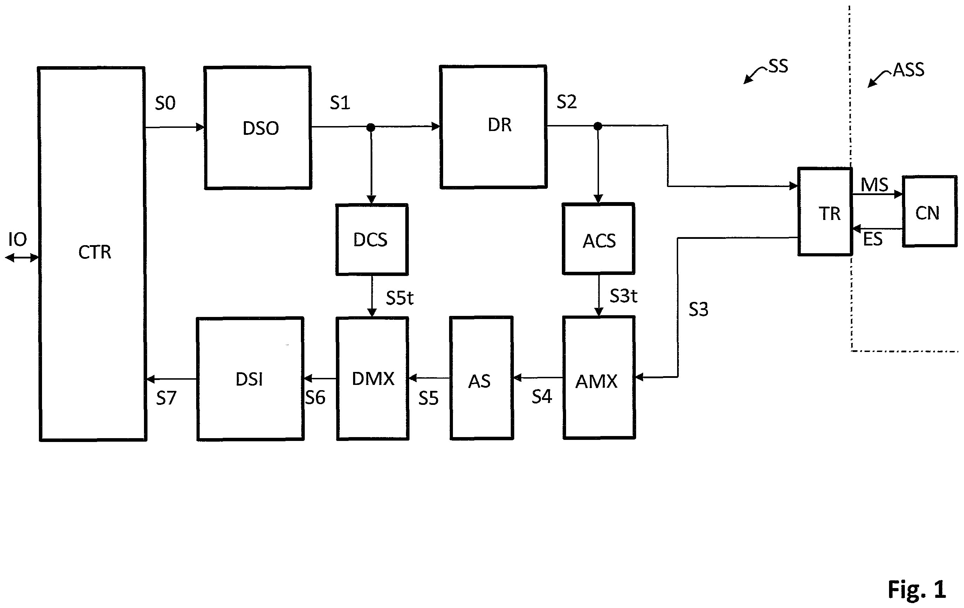

Fig. 1 zeigt schematisch vereinfacht eine beispielhafte Grundstruktur des vorgeschlagenen selbsttestfähigen Messsystems (SS) anhand eines beispielhaften Ultraschallsensorsystems. Die Steuereinrichtung (CTR) empfängt über eine Datenschnittstelle (IO) Daten und/ Programme und/oder Befehle von anderen, typischerweise höherrangigen Rechnern. Bei diesen höherrangigen Rechnern kann es sich beispielsweise um ein Steuergerät eines Kfz handeln, das das vorgeschlagene Messsystem (SS) steuert und kontrolliert. Die Steuereinrichtung (CTR) sendet an diesen höherrangigen Rechner ermittelte Messwerte, Fehlermeldungen und Prüfergebisse aus dem Selbsttest des Messsystems (SS). Die Steuereinrichtung (CTR) steuert über ein Ansteuersignal (S0) die Digitalsignal-Erzeugungseinheit (DSO). Darüber hinaus konfiguriert die Steuereinrichtung (CTR) bevorzugt aus allen anderen konfigurierbaren Teilvorrichtungen des Messsystems (SS). Die entsprechenden Steuerleitungen und Signale sind zur besseren Übersicht in der Fig. 1 und den entsprechenden folgenden Figuren nicht eingezeichnet.

Das Ansteuersignal (S0) ist bevorzugt ein Datenbus aus mehreren digitalen Signalen.

In Abhängigkeit von der Vorgeschichte und dem Ansteuersignal (S0) erzeugt die Digitalsignal-Erzeugungseinheit (DSO) Stimuli sowie Nutz-, Mess- und Prüfsignale für die nachfolgende Signalpfadkette aus den im Signalpfad nachfolgenden Teilvorrichtungen des Messsystems (SS). Es wird also vorgeschlagen, die Digitalsignal-Erzeugungseinheit (DSO) so zu gestalten, dass sie sowohl als Messsignalgenerator, als auch als Prüfsignalgenerator als auch als Test-Muster-Generator dienen kann. Die Digitalsignal-Erzeugungseinheit (DSO) erzeugt die Stimuli, Nutz-, Mess- und Prüfsignale für die nachfolgende Signalpfadkette als erstes digitales Signal (S1). Das erste digitale Signal (S1) ist bevorzugt ein digitaler Datenbus. Es kann sein, dass in einigen Zuständen der erlaubten Zustände des Messsystems (SS) einige Leitungen des ersten digitalen Signals (S1) keine Aktivität zeigen, die jedoch in anderen erlaubten Zuständen des Messsystems (SS) aktiv sind.

Die Treiberstufe (DR) erzeugt in Abhängigkeit von dem ersten digitalen Signal (S1) das zweite analoge Signal (S2). Die Treiberstufe (DR) führt also eine Wandlung des ersten digitalen Signals (S1) in ein analoges zweites Signal (S2) um. Das zweite analoge Signal (S2) kann aus mehreren zweiten analogen Teilsignalen (S2a, S2b, S2c) bestehen. Auch hier sind nicht notwendigerweise alle Teilsignale des zweiten analogen Signals (S2) in allen Zuständen des Messsystems (SS) aktiv. In dem hier offenbarten Beispiel ist das erste Teilsignal (S2a) des zweiten analogen Signals (S2) um 180° gegenüber dem zweiten Teilsignal (S2b) des zweiten Analogen Signals (S2) zeitlich phasenverschoben. Es handelt sich hier jedoch nicht um eine Inversion. Das dritte Teilsignal (S2c) des zweiten analogen Signals (S2) ist die Summe aus dem ersten Teilsignal (S2a) und dem zweiten Teilsignal (S2b) des zweiten Analogen Signals (S2) in dem besagten Beispiel.

Dabei muss es sich nicht unbedingt nur um eine Digital-zu-Analogwandlung eines digitalen Wertes handeln, der mittels des ersten digitalen Signals (S1) an die Treiberstufe (DR) übermittelt wurde. Vielmehr kann die Treiberstufe auch komplexere, gegebenenfalls rückgekoppelte Schaltungen umfassen, die ihre aktive Topologie in Abhängigkeit vom Zustand des Messsystems (SS) und gegebenenfalls von dem aktuellen Zeitpunkt innerhalb einer Sende/Empfangssequenz ändert. Beispielsweise ist es möglich eine solche Sende-/Empfangssequenz für ein Ultraschallsensorsystem als beispielhaftes Messsystem (SS), in drei Phasen einzuteilen. In der ersten Phase der beispielhaften Sendesequenz (Ultraschallsequenz), im Folgenden Sendephase (SP) genannt, wird der beispielhafte Ultraschalltransducer (TR) zum mechanischen Schwingen und damit zum Aussenden eines Ultraschallpulses als Ausgangssignal (MS) in den beispielhaften Ultraschallmesskanal (CN) angeregt. In dieser ersten Phase, der Sendephase, beaufschlagt die Treiberstufe (DR) den Ultraschalltransducer (TR) mit einem Messstimulus entsprechend der Ultraschallsendefrequenz. Die Treiberstufe (DR) transportiert dann Energie in den Ultraschalltransducer (TR).

In einer zweiten, zeitlich nachfolgenden Phase, der Ausschwingphase (AP), beaufschlagt die Treiberstufe (DR) den Ultraschalltransducer (TR) mit einem Messstimulus, der der Schwingfrequenz des noch schwingenden Ultraschalltransducers entgegengerichtet ist. Hierdurch wird die Schwingung des Ultraschalltransducers (TR) bedämpft. Die Treiberstufe (DR) entnimmt dann Energie aus dem Ultraschalltransducer (TR). In dieser Phase emittiert der Ultraschalltransducer (TR) ein Ausgangssignal (MS) in den Ultraschallmesskanal (CN) in den Außenbereich (ASS) außerhalb des Messsystems (SS) bei sinkender Abstrahlamplitude hinein. Im Ultraschallkanal (CN) im Außenbereich (ASS) außerhalb des Messsystems (SS) befinden sich typischerweise ein oder mehrere Objekte, die typischerweise ein stark bedämpftes, verzögertes und verzerrtes Echo des Ultraschallmesssignals erzeugten Dieses wird im Folgenden mit Ultraschallempfangssignal (ES) bezeichnet.

In der dritten Phase, der Empfangsphase (EP), wird der Ultraschalltransducer (TR) durch die Treiberstufe (DR) nicht angetrieben. Die Treiberstufe (DR) entnimmt keine Energie aus dem Ultraschalltransducer (TR), transportiert aber auch keine Energie in den Ultraschalltransducer (TR) hinein. In dieser Phase, der Empfangsphase (EP), kann der Ultraschalltransducer (TR) sehr gut ein Ultraschallecho als Empfangssignal (Ultraschallempfangssignal) (ES) empfangen. Der Ultraschalltransducer (TR) wird durch das Ultraschallempfangssignal (ES) in Schwingungen versetzt und erzeugt aufgrund seiner piezoelektrischen Eigenschaften das dritte analoge Signal (S3). Das dritte analoge Signal (S3) kann aus mehreren analogen Teilsignalen (S3a, S3b) bestehen.

Ein analoger Multiplexer (AMX) schaltet das dritte analoge Signal (S3) als viertes analoges Signal (S4) in einem vorgegebenen Zustand des Messsystems (SS) durch. Welches Signal durch den analogen Multiplexer (AMX) durchgeschaltet wird, hängt vom Zustand des Messsystems (SS) ab. Typischerweise wird der analoge Multiplexer (AMX) durch die Steuereinrichtung (CTR) gesteuert, die bevorzugt den Zustand und die Konfiguration des Messsystems (SS) steuert und kontrolliert. Auch hier sind nicht notwendigerweise alle Teilsignale des vierten analogen Signals (S4) in allen Zuständen des Messsystems (SS) aktiv.

Der analoge Eingangsschaltkreis (AS) empfängt das vierte analoge Signal (S4). Dieser Empfang kann von dem Ansteuersignal (S0) und dem Zustand des Messsystems (SS) sowie weiteren Faktoren abhängen. Wie der Empfang durch den analogen Eingangsschaltkreis (AS) exakt erfolgt, wird bevorzugt durch die Steuereinrichtung (CTR) mittels entsprechender, nicht eingezeichneter Steuersignale vorgegeben. Bevorzugt korreliert die Empfangsmethodik im analogen Eingangsschaltkreis (AS) mit dem verwendeten Stimulus oder Mess- oder Prüfsignal, das durch die Digitalsignal-Erzeugungseinheit (DSO) und die Treiberstufe (DR) erzeugt wurde, sowie mit der Konfiguration des Messsystems (SS), die bevorzugt durch die Steuereinrichtung (CTR) eingestellt wird. Beispielsweise ist es denkbar, analoge Filter, Pegel, Verstärkungen etc. an die vorgegebenen Stimuli, Nutz-, Mess- und Prüfsignale fallspezifisch anzupassen. Diese Anpassung wird bevorzugt durch die Steuereinrichtung (CTR) kontrolliert. Der analoge Eingangsschaltkreis (AS) erzeugt in Abhängigkeit von dem vierten analogen Signal (S4) das fünfte digitale Signal (S5). Der analoge Eingangsschaltkreis (AS) hat somit bevorzugt auch die Funktion eines Analog-zu-Digital-Wandlers (ADC). Das fünfte digitale Signal (S5) kann mehrere digitale Teilsignale umfassen. Auch hier sind nicht notwendigerweise alle Teilsignale des fünften digitalen Signals (S5) in allen Zuständen des Messsystems aktiv.

Ein digitaler Multiplexer (DMX) leitet das fünfte digitale Signal (S5) als sechstes digitales Signal (S6) in einem vorgegebenen Zustand des Messsystems (SS) durch. Welches Signal durch den digitalen Multiplexer (DMX) als sechstes Signal (S6) durchgeschaltet wird, hängt wieder vom Zustand des Messsystems (SS) ab. Typischerweise wird der digitale Multiplexer (DMX) durch die Steuereinrichtung (CTR) gesteuert, die bevorzugt den Zustand des Messsystems (SS) und dessen Konfiguration steuert und kontrolliert. Auch hier sind nicht notwendigerweise alle Teilsignale des sechsten digitalen Signals (S6) in allen Zuständen des Messsystems (SS) aktiv.

Der digitale Eingangsschaltkreis (DSI) empfängt das sechste digitale Signal (S6) und verarbeitet das sechste digitale Signal (S6) in Abhängigkeit von dem Zustand des Messsystems (SS). Wie der Empfang durch den digitalen Eingangsschaltkreis (DSI) exakt erfolgt, wird bevorzugt durch die Steuereinrichtung (CTR) mittels entsprechender, nicht eingezeichneter Steuersignale vorgegeben. Bevorzugt korreliert die Empfangsmethodik im digitalen Eingangsschaltkreis (DSI) mit dem verwendeten Stimulus oder Mess- oder Prüfsignal, das durch die Digitalsignal-Erzeugungseinheit (DSO) und die Treiberstufe (DR) erzeugt wurde und mit der gewählten Empfangsmethodik im analogen Eingangsschaltkreis (AS) und der Konfiguration des Messsystems (SS). Beispielsweise ist es denkbar, digitale Filter - insbesondere Matched-Filter, digitale Signalverarbeitungsmethoden an die vorgegebenen Stimuli, Nutz-, Mess- und Prüfsignale und die gewählte Empfangsmethodik im analogen Eingangsschaltkreis (AS) fallspezifisch anzupassen. Diese Anpassung wird bevorzugt durch die Steuereinrichtung (CTR) kontrolliert. Der digitale Eingangsschaltkreis (DSI) erzeugt in Abhängigkeit von dem sechsten digitalen Signal (S6) somit das siebte digitale Signal (S7), dass bereits das Mess- Prüf- oder sonstiges Ergebnis umfassen sollte. Ein sonstiges Ergebnis kann beispielsweise auch eine Fehlermeldung an die Steuereinrichtung (CTR) sein. Die Steuereinrichtung (CTR) kann aber auch Mess- und Prüfergebnisse mit Sollwerten oder Toleranzintervallen für diese Sollwerte vergleichen und gegebenenfalls Fehlermeldungen erzeugen. Der digitale Eingangsschaltkreis (DSI) hat somit in vorbestimmten Zuständen des Messsystems nicht nur die Funktion einer Signalaufbereitung, sondern kann auch die Funktion einer Prüfvorrichtung für die dahingehende Überprüfung darstellen, dass die Signalverarbeitungskette des Messsystems (SS) eine Antwort auf Stimuli der Digitalsignal-Erzeugungseinheit (DSO) liefert, die einem vorgegeben Wert oder einer vorgegebenen Signalfolge bei der bekannten Systemkonfiguration entspricht oder von einer solchen nicht mehr als vorgegeben abweicht. Auch hier sind nicht notwendigerweise alle Teilsignale des siebten digitalen Signals (S7) in allen Zuständen des Messsystems aktiv.

Um nun das Messsystem (SS) testen zu können, verfügt das vorgeschlagene Messsystem (SS) über zwei Bypass-Pfade im Signalpfad.

Der erste Bypass-Signalpfad schließt die Messeinheit (TR), also den Ultraschalltransducer (TR), vom Signalpfad aus. Damit kann die Elektronik sich selbst testen. Für diesen zweiten Testzustand des Messsystems (SS) (Der erste Testzustand schließt ja die Messeinheit (TR), also den Ultraschalltransducer (TR), mit ein.) wird das zweite analoge Signal (S2) bevorzugt unmittelbar vor der Messeinheit (TR), also dem Ultraschalltransducer (TR), abgegriffen und mittels des analogen Multiplexers (AMX) anstelle des dritten analogen Signals (S3) in den analogen Eingangsschaltkreis (AS) eingephast. Dies geschieht allerdings nicht direkt. Es käme in der Regel zu einer Übersteuerung des Eingangs des analogen Eingangsschaltkreises (AS). Daher wird das zweite analoge Signal (S2) vor der Einspeisung in den analogen Eingangsschaltkreis (AS) als viertes analoges Signal (S4) durch den analogen Multiplexer (AMX) in einer zusätzlich vorgeschlagenen analogen Kanalsimulationseinheit (ACS) zumindest bedämpft. Das Ausgangssignal der analogen Kanalsimulationseinheit (ACS) ist das dritte analoge Testsignal (S3t). Im zweiten Testzustand des Messsystems (SS) wird das dritte analoge Testsignal (S3t) anstelle des dritten analogen Signals (S3) durch den analogen Multiplexer (AMX) als viertes analoges Signal (S4) dem analogen Eingangsschaltkreis (AS) zugeführt. Bevorzugt wird als analoge Kanalsimulationseinheit (ACS) ein konfigurierbares Signalmodell als elektronische analoge Schaltung implementiert, die wichtige Konfigurationsfälle der Signalstrecke über den Ultraschalltransducer (TR) und den Ultraschallkanal (CN) simulieren kann. Dies hat den Vorteil, dass auf dieser Basis der nachfolgende Signalpfad, der naturgegeben nicht genau definiert ist, simuliert werden kann und die Funktion der digitalen und analogen Schaltungsteile durch eine simulierte Messeinheit (TR) bzw. durch einen simulierten Ultraschalltransducer (TR) und einen simulierten Ultraschallmesskanal (CN) für wichtige, vorgegebene Fälle simuliert werden kann. Die verschiedenen zu simulierenden Fälle werden dabei u.a. durch verschiedene Konfigurationen der analogen Kanalsimulationseinheit (ACS) erzeugt. Beispielsweise ist es denkbar, verschiedene Dämpfungen in der analogen Kanalsimulationseinheit (ACS) zu ermöglichen, um verschiedene Dämpfungen im Messkanal (CN), dem Ultraschallübertragungskanal (CN), vorzusehen. Unterschiedliche Abstände zu Objekten im Ultraschallübertragungskanal (CN) können beispielsweise durch entsprechend verzögerte Signale mittels der Digitalsignal-Erzeugungseinheit (DSO) simuliert werden. Weitere Simulationsziele sind natürlich denkbar. Die exakte Konfiguration der analogen Kanalsimulationseinheit (ACS) wird in Abhängigkeit vom Zustand des Messsystems (SS) und des vorgesehenen Prüfzwecks bevorzugt durch die Steuereinrichtung (CTR) mittels nicht eingezeichneter Signale vorgegeben. Bei den Messungen zu Prüfungen im zweiten Testzustand des Messsystems (SS) sind die Messergebnisse mit einer gewissen Unschärfe behaftet, da die analogen Schaltungsteile zum einen mit Fertigungsschwankungen in ihren Parametern versehen sind und zum Zweiten schwankenden Umweltparametern wie beispielsweise einer unvorhersehbaren Betriebstemperatur ausgesetzt sind, was zu Schwankungen in den Messergebnissen führt. Im zweiten Testzustand wird daher ein Soll- /Ist-Vergleich bei der Bewertung der Signalantwort des Messsystems (SS) vorzugsweise immer gegen ein Toleranzintervall für charakteristische Werte der Signalantwort erfolgen und nicht gegen einen präzisen Einzelwert.

Der zweite Bypass schließt die analogen Teile des Messsystems (SS) von der Signalkette aus. Damit kann die digitale Elektronik sich selbst testen. Für diesen dritten Testzustand des Messsystems (SS) wird das erste digitale Signal (S1) unmittelbar vor der Treiberstufe (DR), also dem Digital-zu-Analog-Wandler, abgegriffen und mittels des digitalen Multiplexers (DMX) anstelle des fünften digitalen Signals (S5) in den digitalen Eingangsschaltkreis (DSI) eingephast. Dies geschieht allerdings auch hier typischerweise nicht direkt. Ähnlich wie im zweiten Testzustand wird nun das erste digitale Signal (S1) vor der Einspeisung in den digitalen Eingangsschaltkreis (DSI) als sechstes digitales Signal (S6) durch den digitalen Multiplexer (DMX) in einer zusätzlich vorgeschlagenen digitalen Kanalsimulationseinheit (DCS) geeignet modifiziert. Das Ausgangssignal der digitalen Kanalsimulationseinheit (DCS) ist das fünfte digitale Testsignal (S5t). Im dritten Testzustand des Messsystems (SS) wird das fünfte digitale Testsignal (S5t) anstelle des fünften digitalen Signals (S5) durch den digitalen Multiplexer (DMX) als sechstes digitales Signal (S6) dem digitalen Eingangsschaltkreis (DSI) zugeführt. Es ist hier aber ausdrücklich denkbar, in vorbestimmten Konfigurationen des Messsystems (SS) im dritten Testzustand das erste digitale Signal (S1) durch Durchschleifen des ersten digitalen Signals (S1) durch die digitale Kanalsimulationseinheit (DCS) hindurch als fünftes digitales Testsignal (S5t) zum sechsten digitalen Signal (S6) hin zu kopieren. Insofern kann die digitale Kanalsimulationseinheit (DSI) auch nur aus Drahtbrücken - also einer direkten Verbindung zwischen ersten digitalem Signal (S1) und fünften digitalem Testsignal (S5t) bestehen. Bevorzugt wird als digitale Kanalsimulationseinheit (DCS) wieder ein konfigurierbares Signalmodell als elektronische digitale Schaltung implementiert, das wichtige Konfigurationsfälle der Signalstrecke, die über die Treiberstufe (DR), den Ultraschalltransducer (TR), den Ultraschallkanal (CH) und den analogen Eingangsschaltkreis (AS) und die sonstigen Hilfsschaltungen verläuft, simulieren kann. Die exakte Konfiguration der digitalen Kanalsimulationseinheit (DCS) wird in Abhängigkeit vom Zustand des Messsystems (SS) und des vorgesehenen Prüfzwecks bevorzugt durch die Steuereinrichtung (CTR) mittels nicht eingezeichneter Signale vorgegeben. Diese Simulationsfähigkeit hat den Vorteil, dass auf dieser Basis der nachfolgende Signalpfad, der naturgegeben nicht genau definiert ist, wieder simuliert werden kann und die Funktion der digitalen Schaltungsteile durch einen simulierten Ultraschalltransducer (TR) und einen simulierten Ultraschallmesskanal (CH) und simulierte Analogteile für wichtige, vorgegebene Fälle EXAKT simuliert werden kann. Die verschiedenen zu simulierenden Fälle werden dabei durch verschiedene Konfigurationen der digitalen Kanalsimulationseinheit (DCS) erzeugt. Beispielsweise ist es denkbar, verschiedene fehlerhafte und nicht fehlerhafte Signalantworten des nachfolgenden Signalpfades zu simulieren und die richtige Reaktion des digitalen Eingangsschaltkreises zu überprüfen. Weitere Simulationsziele sind natürlich denkbar. Bei den Messungen zu Prüfungen im dritten Testzustand des Messsystems sind die Messergebnisse mit keiner Unschärfe behaftet und daher exakt. Die digitalen Schaltungsteile sind relativ immun gegen die besagten Fertigungsschwankungen und die besagten Schwankungen von Umweltparametern. Im dritten Testzustand wird daher ein Soll- /Ist-Vergleich bei der Bewertung der Signalantwort des Messsystems vorzugsweise immer gegen präzise Werte vorgenommen.

Der digitale Eingangsschaltkreis (DSI) signalisiert mittels des siebten digitalen Signals (S7), das mehrere digitale Teilsignale umfassen kann, die Mess- und Prüfergebnisse sowie die gegebenenfalls erzeugten Fehlermeldungen an die Steuereinrichtung (CTR).

Fig. 2 entspricht der Fig. 1, wobei ein Übertrager (UEB) zwischen Messeinheit (TR), also dem Ultraschallmesssystem, und der Treiberstufe (DR) eingefügt ist. Das dritte analoge Signal (S3) wird in diesem Beispiel auf der Sekundärseite des Übertragers (UEB) abgenommen, während das zweite analoge Signal (S2) in diesem Beispiel auf der Primärseite des Übertragers (UEB) angeschlossen ist. Im Betriebszustand und im ersten Testzustand kann mittels des analogen Eingangsschaltkreises (AS) und des digitalen Eingangsschaltkrieses (DSI) das Zusammenwirken von Übertrager (UEB) und Ultraschalltransducer (TR) beobachtet und bewertet werden.

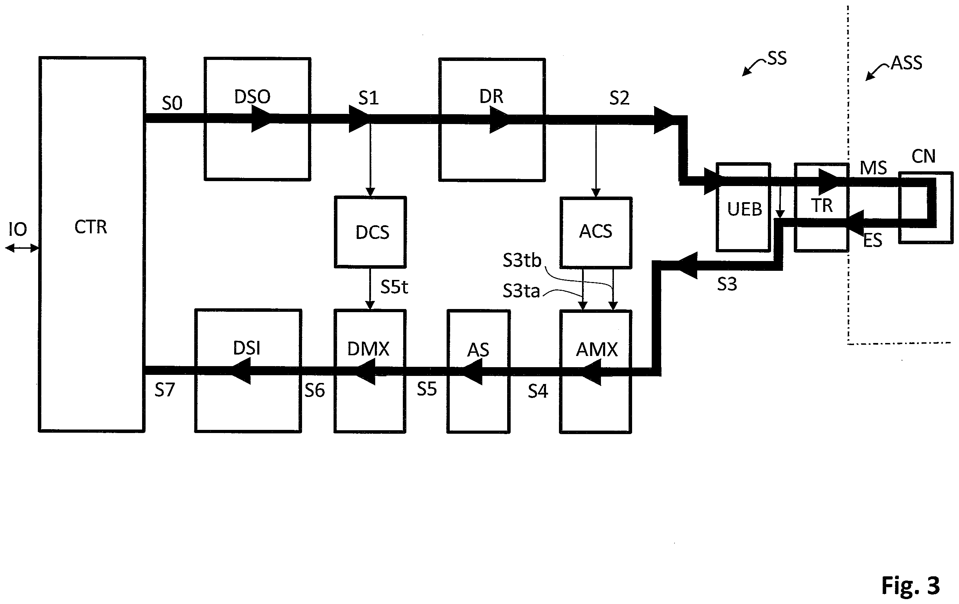

Fig. 3 entspricht der Fig. 2 mit dem fett markierten aktiven Signalpfad im Betriebszustand und im ersten Testzustand. Im Betriebszustand werden auf diesem Wege entsprechend dem Stand der Technik die Messwerte des Ultraschallsensorsystems gewonnen. Es zeigt also den Signalpfad, wenn das Messsystem (SS) sich nicht selbst testet. Dieser Signalpfad wird auch im ersten Testzustand gewählt. In diesem ersten Testzustand wird der Ultraschalltransducer (TR) geeignet stimuliert und die Reaktion des Ultraschalltransducers (TR) vermessen. Hierzu können beispielsweise Gleichanteil, Amplitude und Phase des dritten analogen Signals (S3) bei verschiedenen Stimulationsfrequenzen und Stimulationsmustern ausgewertet werden. Beispielsweise kann die Reaktion auf einen Phasensprung erfasst werden. Besonders vorteilhaft ist die Erfassung der Impedanz des Ultraschalltransducers (TR), da diese auch von den Eigenschaften des Ultraschallmesskanals abhängt. Ist beispielsweise der Ultraschalltransducer (TR) vereist, so ändert sich seine akustische Impedanz und damit auch seine elektrische Impedanz.

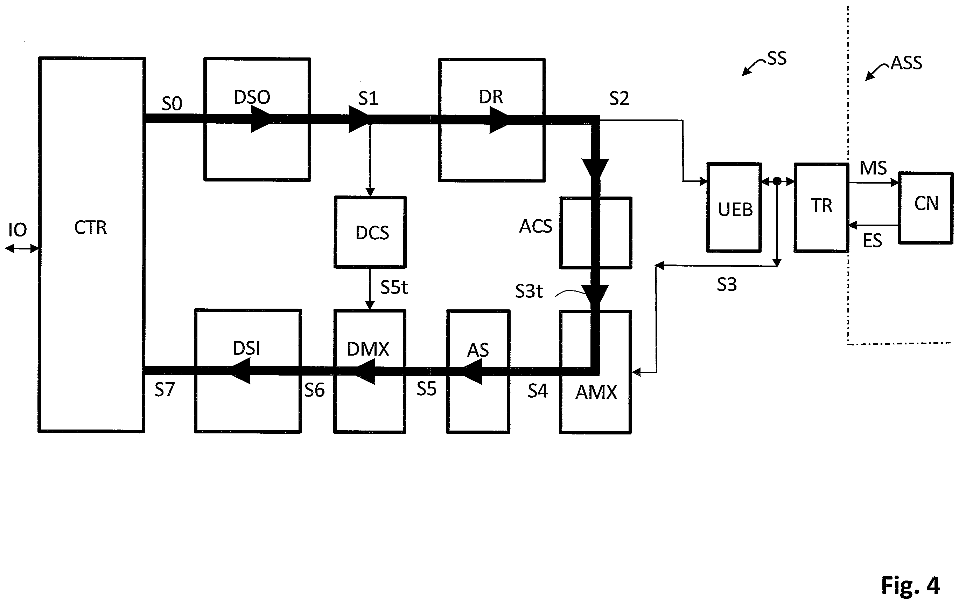

Fig. 4 entspricht der Fig. 2 mit dem fett markierten aktiven Signalpfad im zweiten Testzustand.

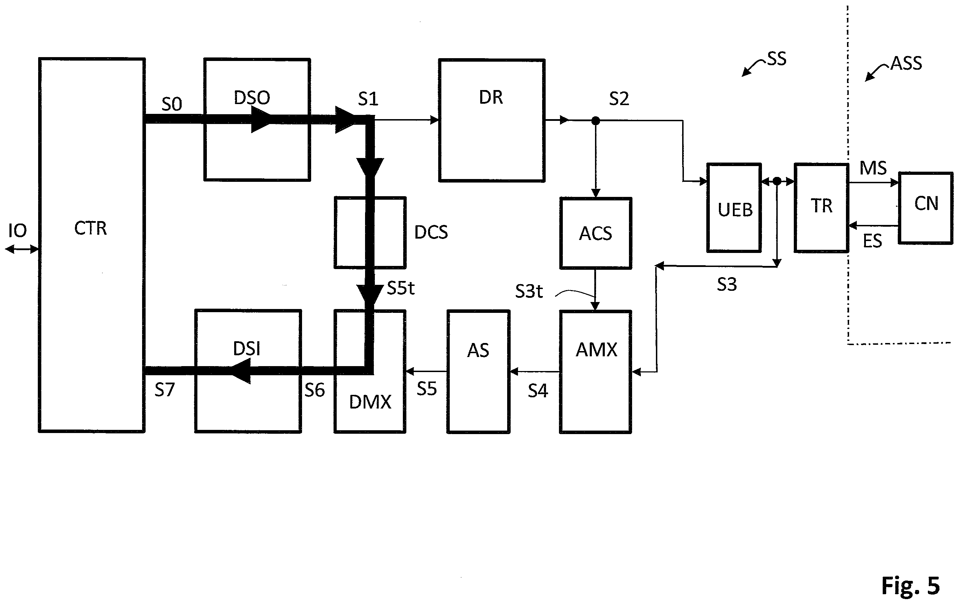

Fig. 5 entspricht der Fig. 2 mit dem fett markierten aktiven Signalpfad im dritten Testzustand.

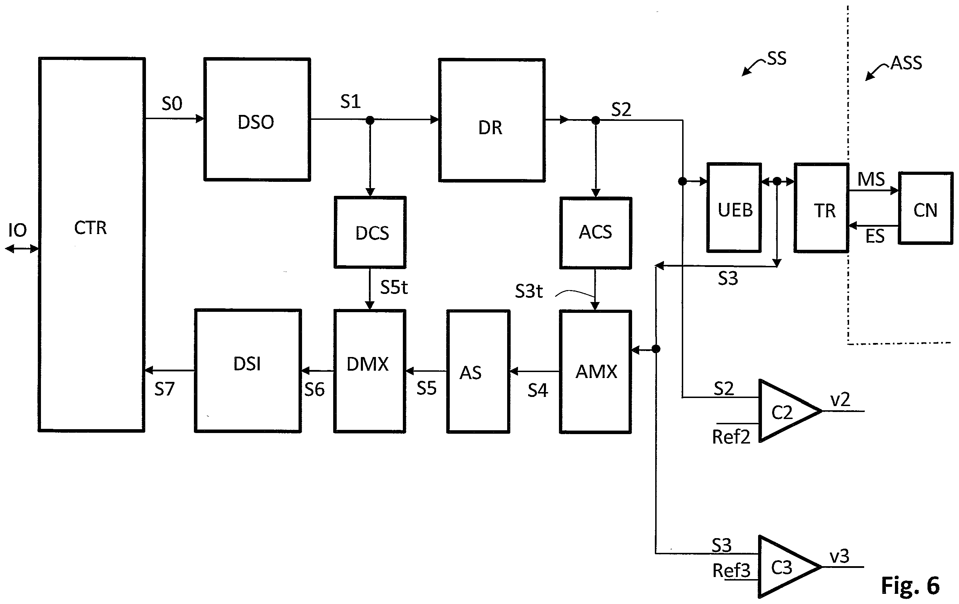

Fig. 6 entspricht der Fig. 2 mit dem Unterschied, dass das zweite analoge Signal (S2) mittels einer Vergleichseinheit in Form eines zweiten Komparators (C2) und das dritte analoge Signal (S3) mittels einer Vergleichseinheit in Form eines dritten Komparators (C3) im Betrieb überwacht wird. Diese Überwachung kann dabei so aussehen, dass die Komparatoren (C2, C3) Maximalwerte oder Minimalwerte oder Beträge mit ihrem jeweiligen Referenzwert (Ref2, Ref3) vergleichen. Besonders bevorzugt ist dabei der Vergleich des Werts des jeweiligen analogen Signals (S2, S3) mit dem entsprechenden Referenzwert (Ref2, Ref3). Wird dieser Referenzwert (Ref2, Ref3) überschritten, so wird das entsprechende Vergleichsergebnissignal (v2, v3) erzeugt. Dieses Vergleichsergebnissignal (v2, v3) kann beispielsweise direkt an eine übergeordnete Einheit oder an die Steuereinrichtung (CTR) oder an den digitalen Empfangsschaltkreis (DSI) geleitet werden. Bevorzugt ist jedoch die Auswertung des betreffenden Vergleichsergebnissignals (v2, v3) durch die Steuereinrichtung (CTR). Diese wertet bevorzugt die Vergleichsergebnissignale (v2, v3) aus und erzeugt gegebenenfalls geeignete Statusmeldungen bzw. Fehlermeldungen, die sie über die Datenschnittstelle (IO) an die übergeordnete Einheit (z.B. ein Steuergerät in einem Kfz) weiterleitet. In dem Beispiel der Fig. 6 vergleicht ein zweiter Komparator (C2) den Wert des Pegels des zweiten analogen Signals (S2) mit einem zweiten Referenzwert (Ref2) und erzeugt in Abhängigkeit von diesem Vergleich ein zweites Vergleichsergebnissignal (v2). Die Polarität des Vergleichsergebnissignals, das bevorzugt ein digitales Signal ist, ist dabei irrelevant, da es hier nur auf die logische Bedeutung ankommt. Beispielsweise ist es sinnvoll in der ersten Phase der Sendesequenz, in der der Ultraschalltransducer (TR) Energie von der Treiberstufe (DR) erhält, eine Mindestamplitude des zweiten analogen Signals (S2) zu prüfen.

Der Momentanwert des zweiten analogen Signals (S2) muss also den zweiten Referenzwert (Ref2) überschreiten. Da das zweite analoge Signal (S2) jedoch in der Regel ein gepulstes Signal ist, ist diese Überschreitung nur während der Pulse zu erwarten und daher auch nur dann zu prüfen. Insofern ist eine geeignete Synchronisation der Messwerte vorzusehen. Umgekehrt muss zu den Zeiten, zu denen kein Puls auf dem zweiten analogen Signal (S2) vorliegt ein Referenzwert unterschritten werden. Es kann daher sinnvoll sein, statt eines einzigen zweiten Referenzwerts (Ref2) mehrere zweite Referenzwerte vorzusehen, um die korrekte Ansteuerung des Ultraschalltransducers (TR) bzw. des Übertragers (UEB) durch die Treiberstufe (TR) überprüfen zu können. Die Zeitsteuerung dieser Überprüfung kann entweder von einer separaten Prüfvorrichtung oder beispielsweise von der Digitalsignal-Erzeugungseinheit (DSO) oder der Steuereinrichtung (CTR) vorgenommen werden.

Der Momentanwert des dritten analogen Signals (S3) muss also den dritten Referenzwert (Ref3) überschreiten. Da das dritte analoge Signal (S3) jedoch in der Regel eine Sinusschwingung ist, ist diese Überschreitung nur während der Maxima der Wellenberge zu erwarten und daher auch nur dann zu prüfen. Das dritte analoge Signal (S3) kann jedoch einen Gleichwert aufweisen. Daher ist es auch hier sinnvoll, nicht nur die Maxima der Wellenberge zu überprüfen, sondern auch die Minima der Wellentäler. Der Momentanwert des dritten analogen Signals (S3) muss dann also einen anderen dritten Referenzwert (Ref3) unterschreiten. Insofern kann es sinnvoll sein, zwei dritte Komparatoren (C3) mit zwei unterschiedlichen dritten Referenzwerten (Ref3) vorzusehen, um die korrekte Funktion des Ultraschalltransducers (TR) im Zusammenwirken mit dem Übertrager (UEB) zu vorbestimmten Zeitpunkten phasenlagenrichtig überprüfen zu können. Die Zeitsteuerung dieser Überprüfung kann wieder entweder von einer separaten Prüfvorrichtung oder beispielsweise von der Digitalsignal-Erzeugungseinheit (DSO) oder der Steuereinrichtung (CTR) vorgenommen werden.

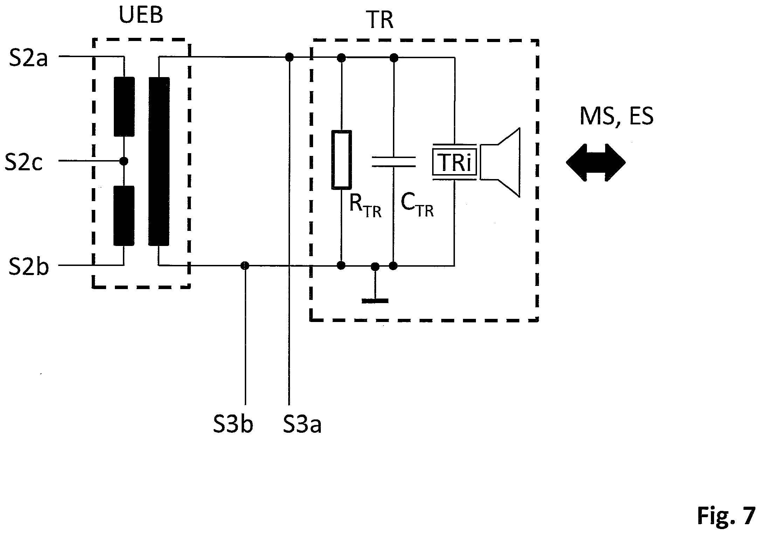

Fig. 7 zeigt schematisch eine mögliche Realisierung des Übertragers (UEB) mit einer dreiphasigen Primärseite mit drei Primäranschlüssen (S2a, S2b, S2c) und zwei Sekundäranschlüssen (S3a, S3b) auf der zweiphasigen Sekundärseite und einem angeschlossenen Ultraschalltransducer (TR) auf der Sekundärseite. Der Ultraschalltransducer (TR) umfasst als Unterkomponenten einen Transducer-Widerstand (R_{TR}), eine Transducer-Kapazität (CTR) und den inneren Ultraschalltransducer (TRi), der das piezoelektrische Schwingelement umfasst und das Ausgangssignal (MS) abstrahlt und das Ultraschallempfangssignal (ES) empfängt. In dem Beispiel weist der Übertrager (UEB) primärseitig eine symmetrische Mittenanzapfung auf, die mit dem dritten Teilsignal (S2c) des zweiten analogen Signals (S2) verbunden wird. Einer der anderen primärseitigen Anschlüsse des Übertragers (UEB) wird mit dem ersten Teilsignal (S2a) des zweiten analogen Signals (S2) verbunden. Der dritte primärseitige Anschluss des Übertragers (UEB) wird mit dem zweiten Teilsignal (S2b) des zweiten analogen Signals (S2) verbunden. Sekundärseitig sind alle Komponenten (UEB, R_{TR}, C_{TR}, TRi) zwischen dem ersten Teilsignal (S3a) des dritten analogen Signals (S3) und dem zweiten Teilsignal (S3b) des dritten analogen Signals (S3) parallelgeschaltet. Es ergibt sich ein Schwingkreis, dessen Eigenschwingfrequenz und Güte von den sekundärseitigen Elementen sowie der primärseitigen Ansteuerung abhängt. Die Schwingungseigenschaften dieses Schwingkreises ändern sich bei Kurzschlüssen und Leitungsbrüchen und können erfasst werden.

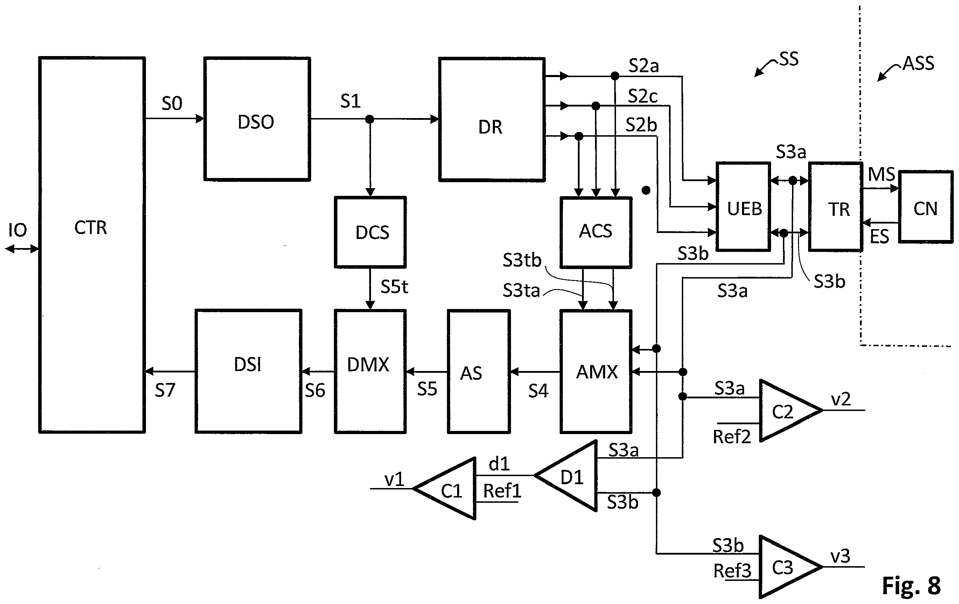

Fig. 8 entspricht der Fig. 2 mit dem Unterschied, dass das zweite analoge Signal (S2) dreiphasig ausgeführt ist und das dritte analoge Signal (S3) zweiphasig mit einem ersten Teilsignal (S3a) und einem zweiten Teilsignal (S3b) ausgeführt ist, wobei das das dritte analoge Signal (S3) mittels Vergleichseinheiten im Betrieb überwacht wird. In diesem Beispiel ist das dritte analoge Testsignal (S3t) daher ebenfalls zweiphasig mit einem ersten Teilsignal (S3ta) und einem zweiten Teilsignal (S3tb) ausgeführt. Die analoge Kanalsimulationseinheit (ACS) erzeugt dann aus dem ersten Teilsignal (S2a) des zweiten analogen Signals (S2) und dem zweiten Teilsignal (S2b) des zweiten analogen Signals (S2) und dem dritten Teilsignal (S2c) des zweiten analogen Signals (S2) das erste Teilsignal (S3ta) des dritten analogen Testsignals (S3t) und das zweite Teilsignal (S3tb) des dritten analogen Testsignals (S3t), wenn das Messsystem (SS) sich im zweiten Testzustand befindet. Übertrager (UEB) und Ultraschalltransducer (TR) sollen hier der Fig. 7 entsprechen und entsprechend angeschlossen sein.

Ein erster Differenzverstärker (D1) bildet beispielsweise durch Differenzbildung aus einem Parameterwert des ersten Teilsignals (S3a) des dritten analogen Signals (S3) und aus einem Parameterwert des zweiten Teilsignals (S3b) des dritten analogen Signals (S3) das erste Unterschiedssignal (d1). Beispielsweise kann es sich dabei um eine einfache Differenzbildung zwischen den Momentanwerten des elektrischen Potenzials des ersten Teilsignals (S3a) des dritten analogen Signals (S3) und des zweiten Teilsignals (S3b) des dritten analogen Signals (S3) gegenüber einem Bezugspotenzial handeln. In dem Falle stellt das erste Unterschiedssignal (d1) den Wert der Spannungsdifferenz zwischen den Momentanwerten des elektrischen Bezugspotenzials des ersten Teilsignals (S3a) des dritten analogen Signals (S3) und des zweiten Teilsignals (S3b) des dritten analogen Signals (S3) gegenüber einem Bezugspotenzial dar. Statt elektrischen Potenzialwerten gegenüber einem vorzugsweise gemeinsamen Bezugspotenzial können in anderen Anwendungen auch Stromwerte verglichen werden.

Ein erster Komparator (C1) vergleicht den Momentanwert des ersten Unterschiedssignals (d1) mit einem ersten Referenzwert (Ref1) und bildet das erste Vergleichsergebnissignal (v1). Wie zuvor kann es sinnvoll sein, zu bestimmten Zeiten Überschreitungen zu detektieren und zu anderen Zeiten innerhalb einer Ultraschallsendesequenz Unterschreitungen zu detektieren. Daher kann es sinnvoll sein mehrere erste Referenzwerte (Ref1) für diese unterschiedlichen Zeiten und Zeitpunkte vorzusehen, die vorzugsweise unterschiedlich sein sollten. Gegebenenfalls kann für jeden dieser ersten Referenzwerte (Ref1) ein eigener erster Komparator (C1) vorgesehen werden, der jeweils ein zugehöriges erstes Vergleichsergebnissignal (v1) erzeugt. Die ersten Vergleichsergebnissignale (v1) werden bevorzugt durch die Steuereinrichtung (CTR) oder den digitalen Eingangsschaltkreis (DSI) ausgewertet. Die Zeitpunkte, wann welches erste Vergleichsergebnissignal (v1) gültig ist und ausgewertet werden soll, wird bevorzugt durch die Digitalsignal-Erzeugungseinheit (DSO) oder die Steuereinrichtung (CTR) festgelegt.

Ein zweiter Komparator (C2) vergleicht den Momentanwert des ersten Teilsignals (S3a) des dritten analogen Signals (S3) mit einem zweiten Referenzwert (Ref2) und bildet das zweite Vergleichsergebnissignal (v2). Wie zuvor kann es sinnvollsein, zu bestimmten Zeiten Überschreitungen zu detektieren und zu anderen Zeiten innerhalb einer Ultraschallsendesequenz Unterschreitungen zu detektieren. Daher kann es sinnvoll sein mehrere zweite Referenzwerte (Ref2) für diese unterschiedlichen Zeiten und Zeitpunkte vorzusehen, die vorzugsweise unterschiedlich sein sollten. Gegebenenfalls kann für jeden dieser zweiten Referenzwerte (Ref2) ein eigner zweiter Komparator (C2) vorgesehen werden, der jeweils ein zugehöriges zweites Vergleichsergebnissignal (v2) erzeugt. Die zweiten Vergleichsergebnissignale (v2) werden bevorzugt durch die Steuereinrichtung (CTR) oder den digitalen Eingangsschaltkreis (DSI) ausgewertet. Die Zeitpunkte, wann welches zweite Vergleichsergebnissignal (v2) gültig ist und ausgewertet werden soll, wird bevorzugt durch die Digitalsignal-Erzeugungseinheit (DSO) oder die Steuereinrichtung (CTR) festgelegt.

Ein dritter Komparator (C3) vergleicht den Momentanwert des zweiten Teilsignals (S3b) des dritten analogen Signals (S3) mit einem dritten Referenzwert (Ref3) und bildet das dritte Vergleichsergebnissignal (v3). Wie zuvor kann es sinnvollsein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein mehrere dritte Referenzwerte (Ref3) für diese unterschiedlichen Zeiten und Zeitpunkte vorzusehen, die vorzugsweise unterschiedlich sein sollten. Gegebenenfalls kann für jeden dieser dritten Referenzwerte (Ref3) ein eigner dritter Komparator (C3) vorgesehen werden, der jeweils ein zugehöriges drittes Vergleichsergebnissignal (v3) erzeugt. Die dritten Vergleichsergebnissignale (v3) werden bevorzugt durch die Steuereinrichtung (CTR) oder den digitalen Eingangsschaltkreis (DSI) ausgewertet. Die Zeitpunkte, wann welches dritte Vergleichsergebnissignal (v3) gültig ist und ausgewertet werden soll, wird bevorzugt durch die Digitalsignal-Erzeugungseinheit (DSO) oder die Steuereinrichtung (CTR) festgelegt.

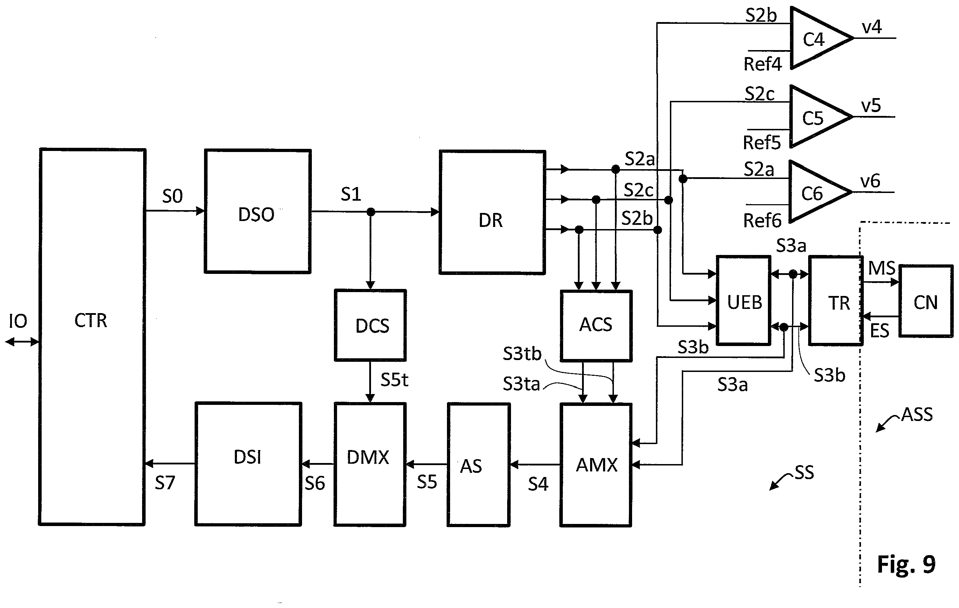

Fig. 9 entspricht der Fig. 2 mit dem Unterschied, dass das zweite analoge Signal (S2) dreiphasig ausgeführt ist und mittels Vergleichseinheiten in Sternkonfiguration im Betrieb überwacht wird und das dritte analoge Signal (S3) zweiphasig ausgeführt ist.

Ein vierter Komparator (C4) vergleicht den Momentanwert des zweiten Teilsignals (S2b) des zweiten analogen Signals (S2) mit einem vierten Referenzwert (Ref4) und bildet das vierte Vergleichsergebnissignal (v4). Wie zuvor kann es sinnvollsein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere vierte Referenzwerte (Ref4) für diese unterschiedlichen Zeiten und Zeitpunkte vorzusehen, die vorzugsweise unterschiedlich sein sollten. Gegebenenfalls kann für jeden dieser vierten Referenzwerte (Ref4) ein eigner vierter Komparator (C4) vorgesehen werden, der jeweils ein zugehöriges viertes Vergleichsergebnissignal (v4) erzeugt. Die vierten Vergleichsergebnissignale (v4) werden bevorzugt durch die Steuereinrichtung (CTR) oder den digitalen Eingangsschaltkreis (DSI) ausgewertet. Die Zeitpunkte, wann welches vierte Vergleichsergebnissignal (v4) gültig ist und ausgewertet werden soll, wird bevorzugt durch die Digitalsignal-Erzeugungseinheit (DSO) oder die Steuereinrichtung (CTR) festgelegt.

Ein fünfter Komparator (C5) vergleicht den Momentanwert des dritten Teilsignals (S2c) des zweiten analogen Signals (S2) mit einem fünften Referenzwert (Ref5) und bildet das fünfte Vergleichsergebnissignal (v5). Wie zuvor kann es sinnvollsein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere fünfte Referenzwerte (Ref5) für diese unterschiedlichen Zeiten und Zeitpunkte vorzusehen, die vorzugsweise unterschiedlich sein sollten. Gegebenenfalls kann für jeden dieser fünften Referenzwerte (Ref5) ein eigner fünfter Komparator (C5) vorgesehen werden, der jeweils ein zugehöriges fünftes Vergleichsergebnissignal (v5) erzeugt. Die fünften Vergleichsergebnissignale (v5) werden bevorzugt durch die Steuereinrichtung (CTR) oder den digitalen Eingangsschaltkreis (DSI) ausgewertet. Die Zeitpunkte, wann welches fünfte Vergleichsergebnissignal (v5) gültig ist und ausgewertet werden soll, wird bevorzugt durch die Digitalsignal-Erzeugungseinheit (DSO) oder die Steuereinrichtung (CTR) festgelegt.

Ein sechster Komparator (C6) vergleicht den Momentanwert des ersten Teilsignals (S2a) des zweiten analogen Signals (S2) mit einem sechsten Referenzwert (Ref6) und bildet das sechste Vergleichsergebnissignal (v6). Wie zuvor kann es sinnvoll sein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere sechste Referenzwerte (Ref6) für diese unterschiedlichen Zeiten und Zeitpunkte vorzusehen, die vorzugsweise unterschiedlich sein sollten. Gegebenenfalls kann für jeden dieser sechsten Referenzwerte (Ref6) ein eigner sechster Komparator (C6) vorgesehen werden, der jeweils ein zugehöriges sechstes Vergleichsergebnissignal (v6) erzeugt. Die sechsten Vergleichsergebnissignale (v6) werden bevorzugt durch die Steuereinrichtung (CTR) oder den digitalen Eingangsschaltkreis (DSI) ausgewertet. Die Zeitpunkte, wann welches sechste Vergleichsergebnissignal (v6) gültig ist und ausgewertet werden soll, wird bevorzugt durch die Digitalsignal-Erzeugungseinheit (DSO) oder die Steuereinrichtung (CTR) festgelegt.

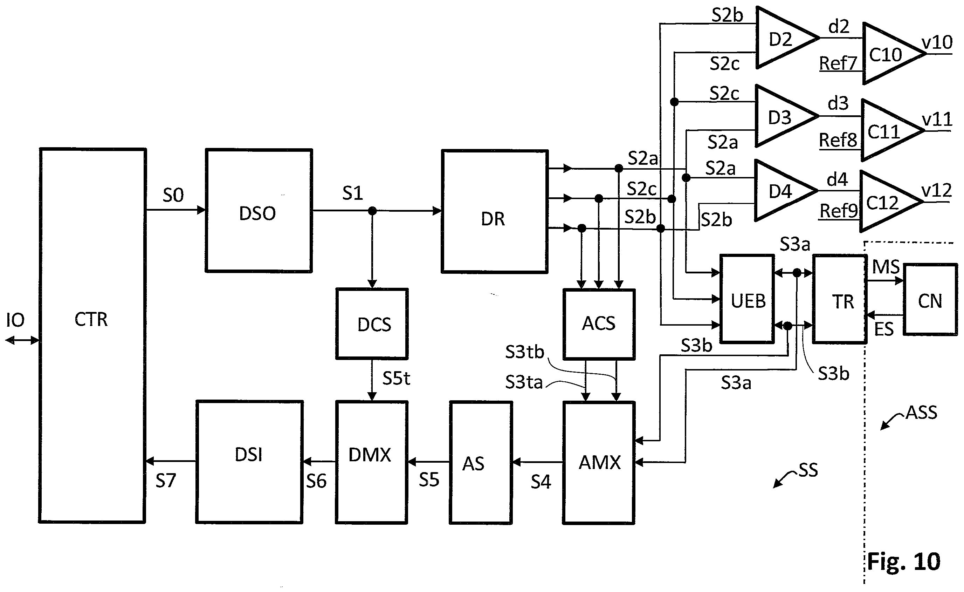

Fig. 10 entspricht der Fig. 6 mit dem Unterschied, dass das zweite analoge Signal (S2) dreiphasig ausgeführt ist und mittels Vergleichseinheiten in Dreieckskonfiguration im Betrieb überwacht wird und das dritte analoge Signal (S3) zweiphasig ausgeführt ist.

Ein zweiter Differenzverstärker (D2) bildet beispielsweise durch Differenzbildung aus einem Parameterwert des zweiten Teilsignals (S2b) des zweiten analogen Signals (S2) und aus einem Parameterwert des dritten Teilsignals (S2c) des zweiten analogen Signals (S2) das zweite Unterschiedssignal (d2). Beispielsweise kann es sich dabei um eine einfache Differenzbildung zwischen den Momentanwerten des elektrischen Potenzials des zweiten Teilsignals (S2b) des zweiten analogen Signals (S2) und des dritten Teilsignals (S2c) des zweiten analogen Signals (S2) gegenüber einem Bezugspotenzial handeln. In dem Falle stellt das zweite Unterschiedssignal (d2) den Wert der Spannungsdifferenz zwischen den Momentanwerten des elektrischen Potenzials des zweiten Teilsignals (S2b) des zweiten analogen Signals (S2) und des dritten Teilsignals (S2c) des zweiten analogen Signals (S2) gegenüber einem Bezugspotenzial dar. Statt elektrischen Potenzialwerten gegenüber einem vorzugsweise gemeinsamen Bezugspotenzial können in anderen Anwendungen auch Stromwerte verglichen werden.

Ein zehnter Komparator (C10) vergleicht den Momentanwert des zweiten Unterschiedssignals (d2) mit einem siebten Referenzwert (Ref7) und bildet das zehnte Vergleichsergebnissignal (v10). Wie zuvor kann es sinnvollsein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere siebte Referenzwerte (Ref7) für diese unterschiedlichen Zeiten und Zeitpunkte vorzusehen, die vorzugsweise unterschiedlich sein sollten. Gegebenenfalls kann für jeden dieser siebten Referenzwerte (Ref7) ein eigner zehnter Komparator (C10) vorgesehen werden, der jeweils ein zugehöriges zehntes Vergleichsergebnissignal (v10) erzeugt. Die zehnten Vergleichsergebnissignale (v10) werden bevorzugt durch die Steuereinrichtung (CTR) oder den digitalen Eingangsschaltkreis (DSI) ausgewertet. Die Zeitpunkte, wann welches zehnte Vergleichsergebnissignal (v10) gültig ist und ausgewertet werden soll, wird bevorzugt durch die Digitalsignal-Erzeugungseinheit (DSO) oder die Steuereinrichtung (CTR) festgelegt.

Ein dritter Differenzverstärker (D3) bildet beispielsweise durch Differenzbildung aus einem Parameterwert des dritten Teilsignals (S2c) des zweiten analogen Signals (S2) und aus einem Parameterwert des ersten Teilsignals (S2a) des zweiten analogen Signals (S2) das dritte Unterschiedssignal (d3). Beispielsweise kann es sich dabei um eine einfache Differenzbildung zwischen den Momentanwerten des elektrischen Potenzials des dritten Teilsignals (S2c) des zweiten analogen Signals (S2) und des ersten Teilsignals (S2a) des zweiten analogen Signals (S2) gegenüber einem Bezugspotenzial handeln. In dem Falle stellt das dritte Unterschiedssignal (d3) den Wert der Spannungsdifferenz zwischen den Momentanwerten des elektrischen Potenzials des dritten Teilsignals (S2c) des zweiten analogen Signals (S2) und des ersten Teilsignals (S2a) des zweiten analogen Signals (S2) gegenüber einem Bezugspotenzial dar. Statt elektrischen Potenzialwerten gegenüber einem vorzugsweise gemeinsamen Bezugspotenzial können in anderen Anwendungen auch Stromwerte verglichen werden.

Ein elfter Komparator (C11) vergleicht den Momentanwert des dritten Unterschiedssignals (d3) mit einem achten Referenzwert (Ref8) und bildet das elfte Vergleichsergebnissignal (v1e). Wie zuvor kann es sinnvoll sein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere achte Referenzwerte (Ref8) für diese unterschiedlichen Zeiten und Zeitpunkte vorzusehen, die vorzugsweise unterschiedlich sein sollten. Gegebenenfalls kann für jeden dieser achten Referenzwerte (Ref8) ein eigner elfter Komparator (C11) vorgesehen werden, der jeweils ein zugehöriges elftes Vergleichsergebnissignal (v11) erzeugt. Die elften Vergleichsergebnissignale (v11) werden bevorzugt durch die Steuereinrichtung (CTR) oder den digitalen Eingangsschaltkreis (DSI) ausgewertet. Die Zeitpunkte, wann welches elfte Vergleichsergebnissignal (v11) gültig ist und ausgewertet werden soll, wird bevorzugt durch die Digitalsignal-Erzeugungseinheit (DSO) oder die Steuereinrichtung (CTR) festgelegt.

Ein vierter Differenzverstärker (D4) bildet beispielsweise durch Differenzbildung aus einem Parameterwert des ersten Teilsignals (S2a) des zweiten analogen Signals (S2) und aus einem Parameterwert des zweiten Teilsignals (S2b) des zweiten analogen Signals (S2) das vierte Unterschiedssignal (d4). Beispielsweise kann es sich dabei um eine einfache Differenzbildung zwischen den Momentanwerten des elektrischen Potenzials des ersten Teilsignals (S2a) des zweiten analogen Signals (S2) und des zweiten Teilsignals (S2b) des zweiten analogen Signals (S2) gegenüber einem Bezugspotenzial handeln. In dem Falle stellt das vierte Unterschiedssignal (d4) den Wert der Spannungsdifferenz zwischen den Momentanwerten des elektrischen Potenzials des ersten Teilsignals (S2a) des zweiten analogen Signals (S2) und des zweiten Teilsignals (S2b) des zweiten analogen Signals (S2) gegenüber einem Bezugspotenzial dar. Statt Potenzialwerten bezogen auf ein vorzugsweise gemeinsames Bezugspotenzial können in anderen Anwendungen auch Stromwerte verglichen werden.

Ein zwölfter Komparator (C12) vergleicht den Momentanwert des vierten Unterschiedssignals (d4) mit einem neunten Referenzwert (Ref9) und bildet das zwölfte Vergleichsergebnissignal (v12). Wie zuvor kann es sinnvoll sein, zu bestimmten Zeiten Überschreitungen zu detektieren und zu anderen Zeiten, beispielsweise innerhalb einer Ultraschallsendesequenz, Unterschreitungen zu detektieren. Daher kann es sinnvoll sein, mehrere neunte Referenzwerte (Ref9) für diese unterschiedlichen Zeiten und Zeitpunkte vorzusehen, die vorzugsweise unterschiedlich sein sollten. Gegebenenfalls kann für jeden dieser neunten Referenzwerte (Ref9) ein eigner zwölfter Komparator (C12) vorgesehen werden, der jeweils ein zugehöriges zwölftes Vergleichsergebnissignal (v12) erzeugt. Die zwölften Vergleichsergebnissignale (v12) werden bevorzugt durch die Steuereinrichtung (CTR) oder den digitalen Eingangsschaltkreis (DSI) ausgewertet. Die Zeitpunkte, wann welches zwölfte Vergleichsergebnissignal (v12) gültig ist und ausgewertet werden soll, wird bevorzugt durch die Digitalsignal-Erzeugungseinheit (DSO) oder die Steuereinrichtung (CTR) festgelegt.

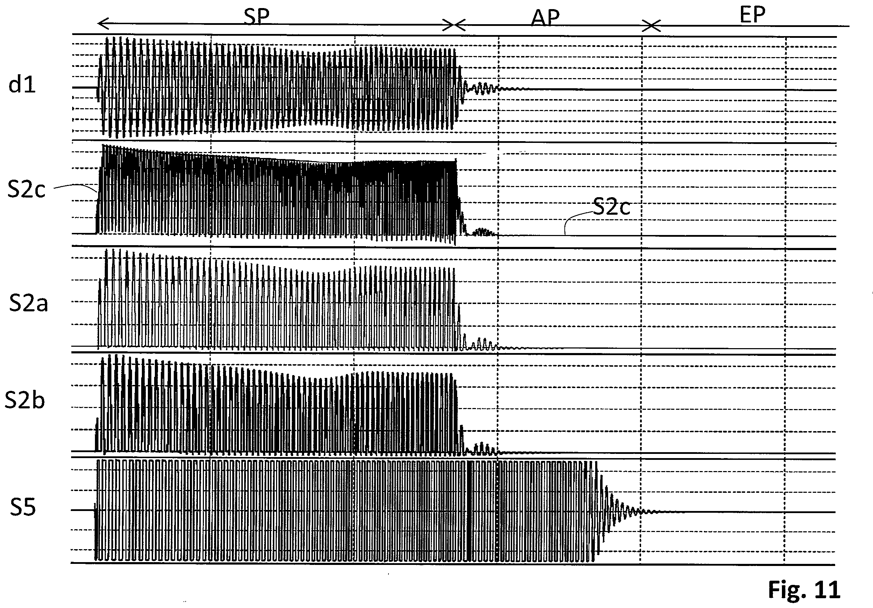

Fig. 11 zeigt den zeitlichen Ablauf wichtiger Signale (d1, S2c, S2a, S2b, S5) bei Aussendung eines Ultraschall-Bursts im Betriebszustand. Deutlich zu erkennen sind:
1. die erste Phase der Sendefrequenz, die Sendephase (SP), in der die Treiberstufe den Ultraschalltransducer (TR) antreibt und ein Ausgangssignal (MS) durch den Ultraschalltransducer ausgesendet wird; und
2. die zweite Phase der Sendesequenz, die Ausschwingphase, in der die Treiberstufe dem Ultraschalltransducer (TR) Energie entzieht und dessen mechanische Schwingung dämpft, und
3. die Empfangsphase (EP) in der der Ultraschalltransducer (TR) ein Echo eines Ausgangssignals (MS) empfangen kann.

Des Weiteren sind dargestellt:
1. das erste Unterschiedssignal (d1), das die differentielle Amplitude der elektrischen Potenzialdifferenz zwischen dem ersten Teilsignal (S3a) des dritten analogen Signals (S3) und dem zweiten Teilsignal (S3b) des dritten analogen Signals (S3), und
2. das dritte Teilsignal (S2c) des zweiten analogen Signals (S2), das den Pegel des elektrischen Potenzials an der Mittenanzapfung des Übertragers (UEB) wiedergibt und
3. das erste Teilsignal (S2a) des zweiten analogen Signals (S2), das den Pegel des elektrischen Potenzials an einem ersten Anschluss des Übertragers (UEB) wiedergibt und
4. das zweite Teilsignal (S2c) des zweiten analogen Signals (S2), das den Pegel des elektrischen Potenzials an einem zweiten Anschluss des Übertragers (UEB) wiedergibt und
5. der digitalisierte Wert des fünften digitalen Signals (S5), das den analog verstärkten, gefilterten und digitalisierten Wert widergibt.

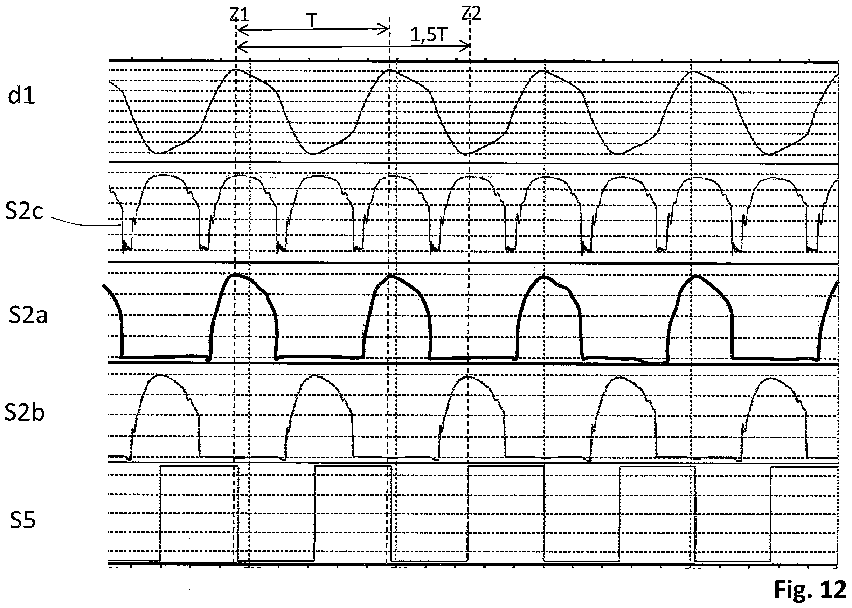

Fig. 12 entspricht einer zeitlichen Vergrößerung der Fig. 11, wobei der Ausschnitt in der Sendephase (SP) zeitlich lokalisiert ist.

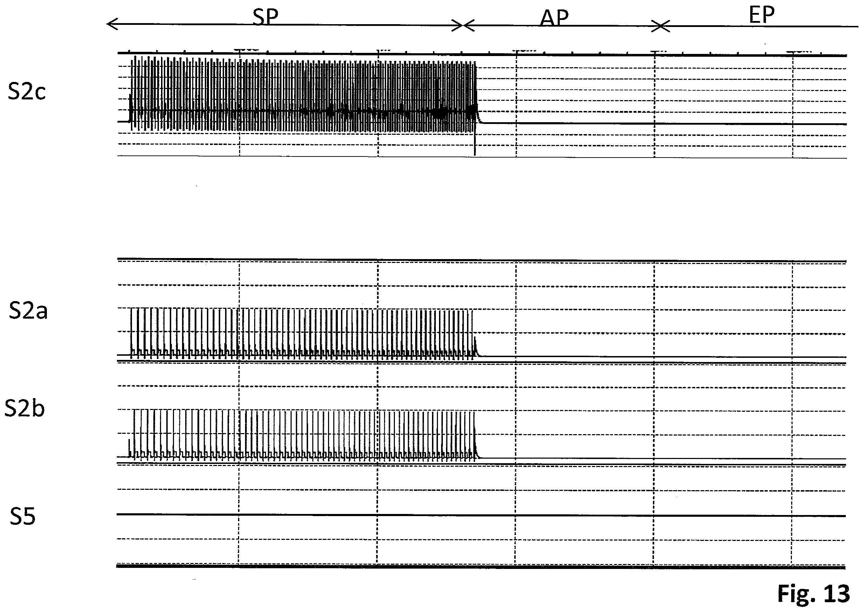

Fig. 13 zeigt wichtige Signale (S2c, S2a, S2b, S5) bei Aussendung eines Ultraschall-Bursts im Betriebszustand, wobei nun ein Kurzschluss an dem inneren Ultraschalltransducer (TRi) zwischen dem ersten Teilsignal (S3a) des dritten analogen Signals (S3) und dem zweiten Teilsignal (S3b) des dritten analogen Signals (S3) vorliegt.

### Symptome

Der Ultraschalltransducer schwingt nicht korrekt. Daher kann eine Frequenzmessung und eine Messung der Ausschwingzeit durch den digitalen Eingangsschaltkreis (DSI) erfolgen. Mit der vorgeschlagenen Vorrichtung kann somit der Fall eines kurzgeschlossenen Ultraschalltransducers (TR), bei dem das zweite Teilsignal (S3b) des dritten analogen Signals (S3) mit dem ersten Teilsignal (S3a) des dritten analogen Signals (S3) verbunden ist, erkannt werden.

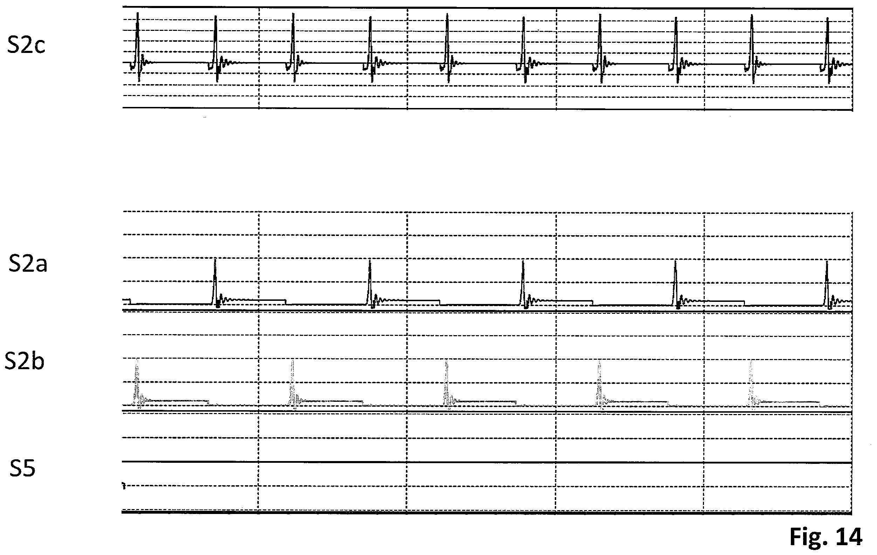

Fig. 14 entspricht einer zeitlichen Vergrößerung der Fig. 13.

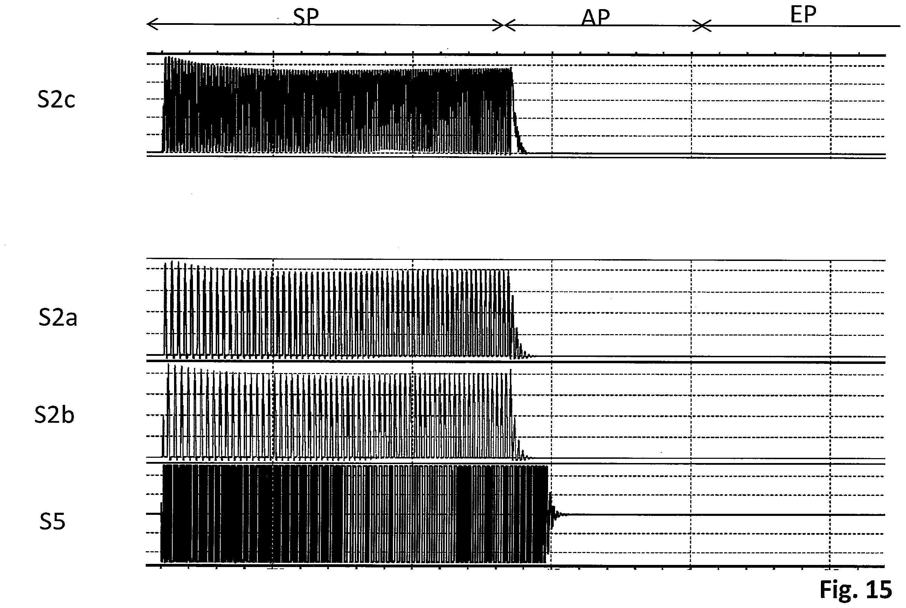

Fig. 15 zeigt wichtige Signale (S2c, S2a, S2b, S5) bei Aussendung eines Ultraschall-Bursts im Betriebszustand, wobei nun der innere Ultraschalltransducer (TRi) nicht angeschlossen ist, also das erste Teilsignal (S3a) des dritten analogen Signals (S3) oder das zweite Teilsignal (S3b) des dritten analogen Signals (S3) nicht mit dem Ultraschalltransducer (TR) verbunden ist.

### Symptome

Der Ultraschalltransducer schwingt nicht korrekt. Daher kann eine Messung der Ausschwingzeit durch den digitalen Eingangsschaltkreis (DSI) erfolgen. Mit der vorgeschlagenen Vorrichtung kann somit der Fall eines nicht angeschlossenen inneren Ultraschalltransducers (TRi) erkannt werden.

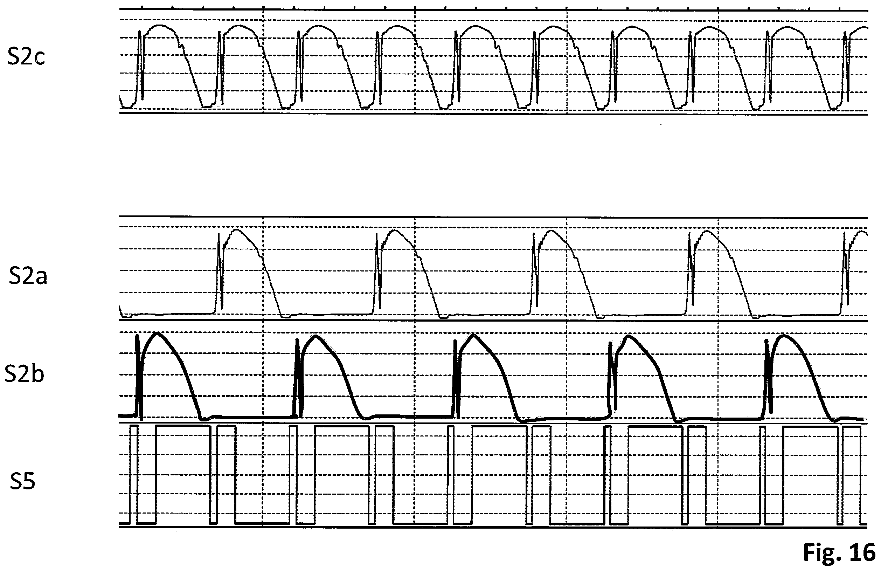

Fig. 16 entspricht einer zeitlichen Vergrößerung der Fig. 15.

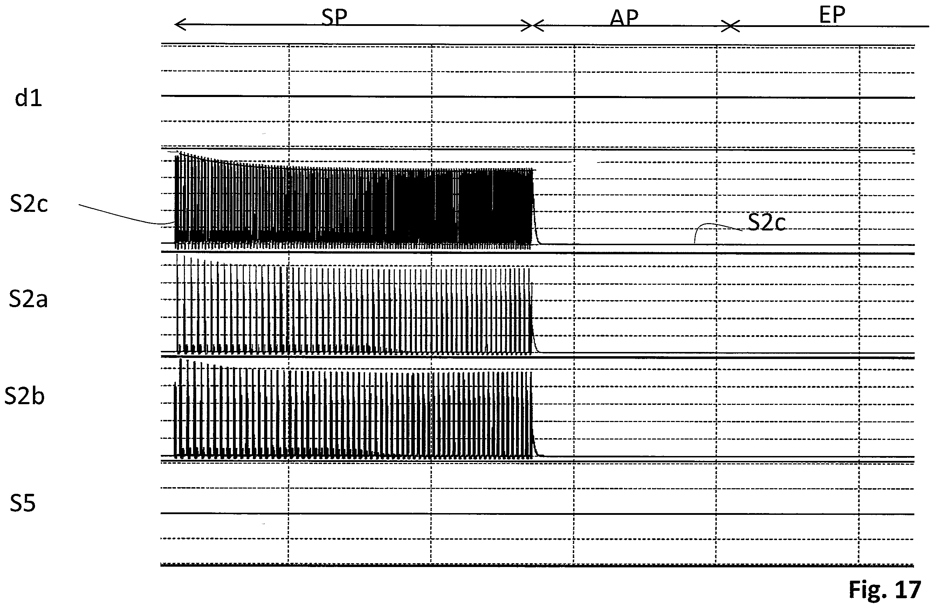

Fig. 17 zeigt wichtige Signale (d1, S2c, S2a, S2b, S5) bei Aussendung eines Ultraschall-Bursts im Betriebszustand, wobei nun der Übertrager (UEB) mit einem Anschluss sekundärseitig nicht an das erste Teilsignal (S3a) des dritten analogen Signals (S3) angeschlossen ist.

### Symptome

Das nicht angeschlossene erste Teilsignal (S3a) des dritten analogen Signals (S3) hat zur Folge, dass der innere Ultraschalltransducer (TRi) nicht ausreichend mit Energie versorgt wird. Dieser Fehler ist daher mit einer Auswertung der Ausschwingzeit und der Schwingfrequenz erfassbar.

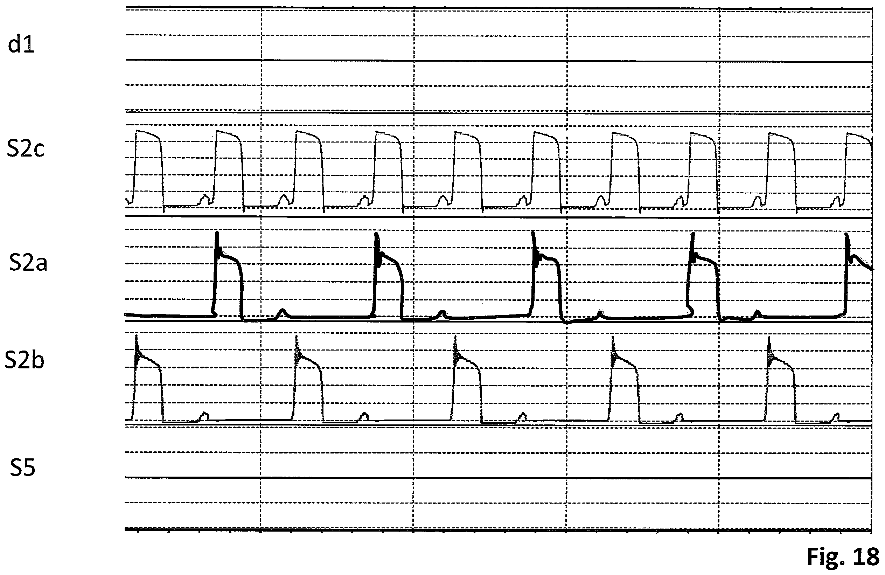

Fig. 18 entspricht einer zeitlichen Vergrößerung der Fig. 17.

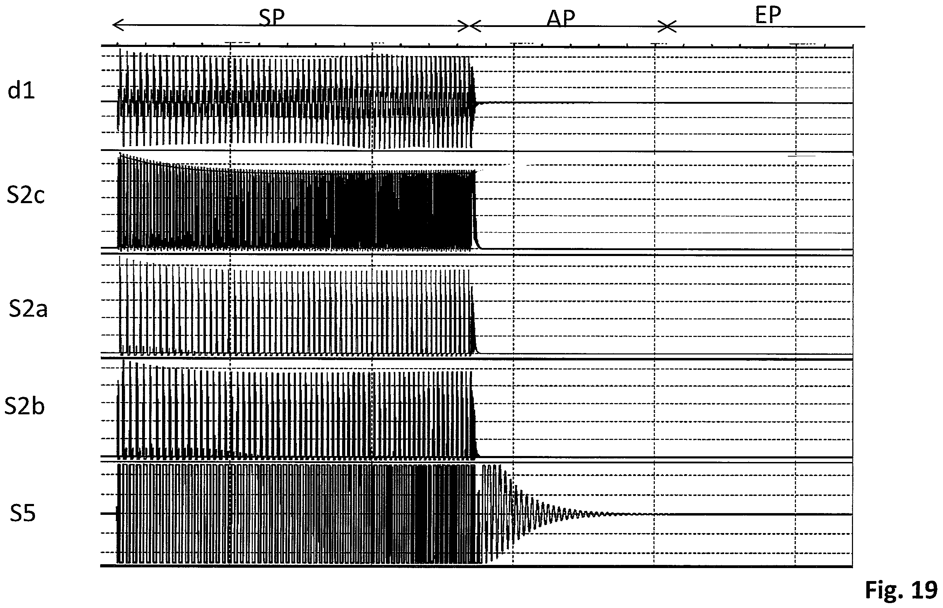

Fig. 19 zeigt wichtige Signale (d1, S2c, S2a, S2b, S5) bei Aussendung eines Ultraschall-Bursts im Betriebszustand wobei nun der Übertrager (UEB) mit einem Anschluss sekundärseitig nicht an das zweite Teilsignal (S3b) des dritten analogen Signals (S3) angeschlossen ist.

### Symptome

Das nicht angeschlossene zweite Teilsignal (S3b) des dritten analogen Signals (S3) hat zur Folge, dass der innere Ultraschalltransducer (TRi) nicht ausreichend mit Energie versorgt wird. Dieser Fehler ist daher wieder mit einer Auswertung der Ausschwingzeit und der Schwingfrequenz erfassbar.

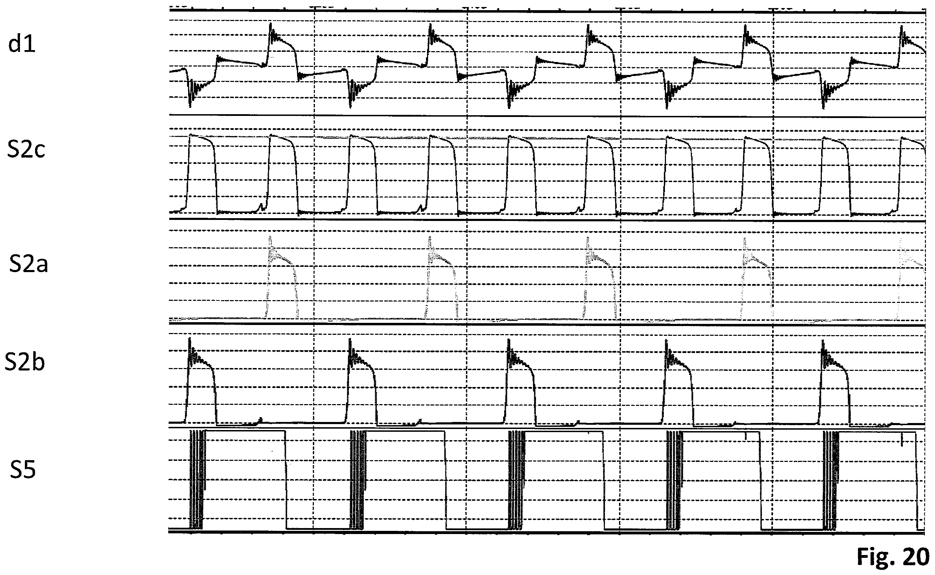

Fig. 20 entspricht einer zeitlichen Vergrößerung der Fig. 19.

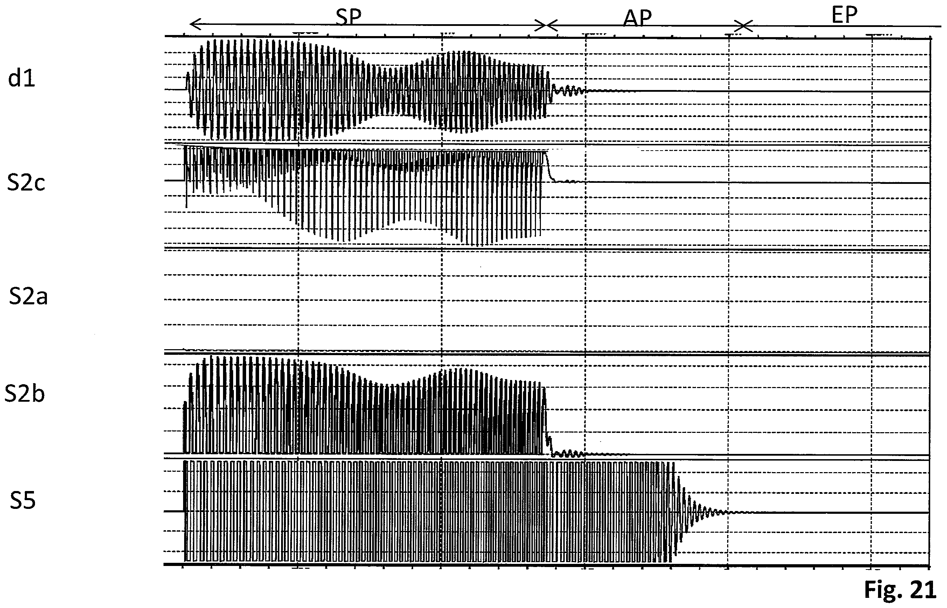

Fig. 21 zeigt wichtige Signale (d1, S2c, S2a, S2b, S5) bei Aussendung eines Ultraschall-Bursts im Betriebszustand, wobei der Übertrager (UEB) mit einem Anschluss primärseitig nicht an das erste Teilsignal (S2a) des zweiten analogen Signals (S2) angeschlossen ist.

### Symptome

Das nicht angeschlossene erste Teilsignal (S2a) des zweiten analogen Signals (S2) hat zur Folge, dass der Ultraschalltransducer (TR) nicht ausreichend mit Energie versorgt wird. Dieser Fehler ist jedoch nicht mit einer Auswertung der Ausschwingzeit und der Schwingfrequenz erfassbar.

Ein sechster Komparator (C6) am ersten Teilsignal (S2a) des zweiten anlogen Signals (S2) (siehe auch Fig. 9) kann durch Vergleich mit einer sechsten Referenz (Rref6) die dauerhafte Unterschreitung dieses sechsten Referenzwertes (Ref6) in der Sendephase (SP) und/oder in der Empfangsphase (EP) detektieren und so darauf schließen, dass der Übertrager (UEB) mit einem Anschluss sekundärseitig nicht an das erste Teilsignal (S2a) des zweiten analogen Signals (S2) angeschlossen ist. Das Setzen des entsprechenden sechsten Vergleichssignals (v6) kann von der (System-)Steuereinrichtung (CTR) oder der dem digitalen Eingangsschaltkreis (DSI) erkannt werden. Diese setzen dann ein entsprechendes Fehlersignal oder eine entsprechende Fehlermeldung ab.

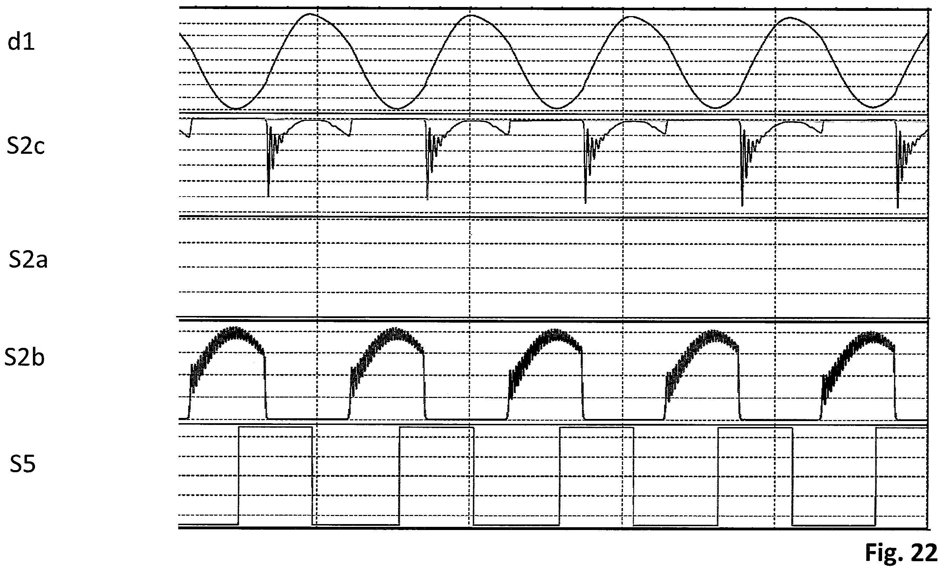

Fig. 22 entspricht einer zeitlichen Vergrößerung der Fig. 21.

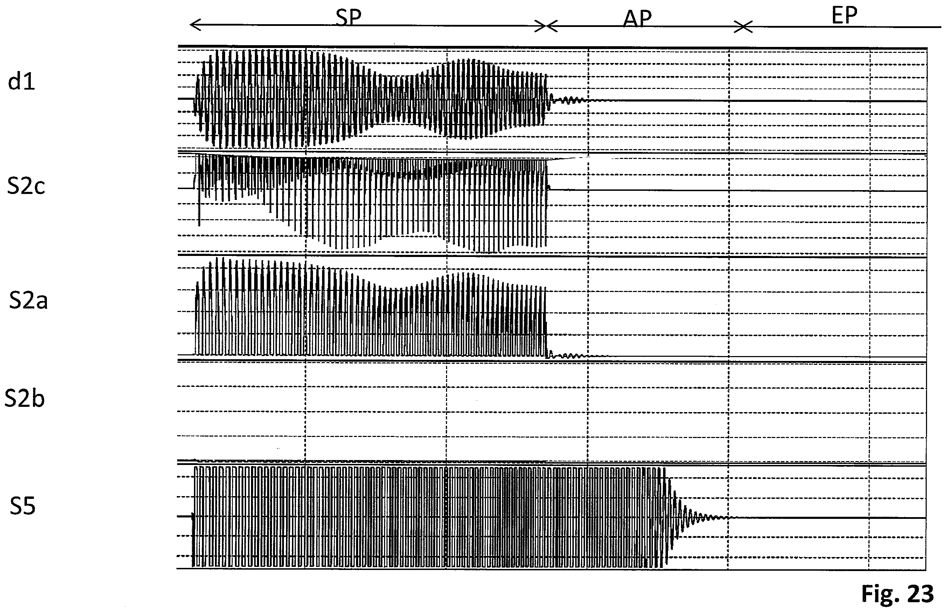

Fig. 23 zeigt wichtige Signale (d1, S2c, S2a, S2b, S5) bei Aussendung eines Ultraschall-Bursts im Betriebszustand, wobei der Übertrager (UEB) mit einem Anschluss primärseitig nicht an das zweite Teilsignal (S2b) des zweiten analogen Signals (S2) angeschlossen ist.

### Symptome

Das nicht angeschlossene zweite Teilsignal (S2b) des zweiten analogen Signals (S2) hat zur Folge, dass der Ultraschalltransducer (TR) nicht ausreichend mit Energie versorgt wird. Dieser Fehler ist jedoch nicht mit einer Auswertung der Ausschwingzeit und der Schwingfrequenz erfassbar.

Ein vierter Komparator (C4) am zweiten Teilsignal (S2b) des zweiten anlogen Signals (S2) (siehe auch Fig. 9) kann durch Vergleich mit einer vierten Referenz (Rref4) die dauerhafte Unterschreitung dieses vierten Referenzwertes (Ref4) in der Sendephase (SP) und/oder in der Empfangsphase (EP) detektieren uns so darauf schließen, dass der Übertrager (UEB) mit einem Anschluss sekundärseitig nicht an das zweite Teilsignal (S2b) des zweiten analogen Signals (S2) angeschlossen ist. Das Setzen des entsprechenden vierten Vergleichssignals (v4) kann von der (System-) Steuereinrichtung (CTR) oder der dem digitalen Eingangsschaltkreis (DSI) erkannt werden. Diese setzen dann bevorzugt ein entsprechendes Fehlersignal oder setzen bevorzugt eine entsprechende Fehlermeldung ab.

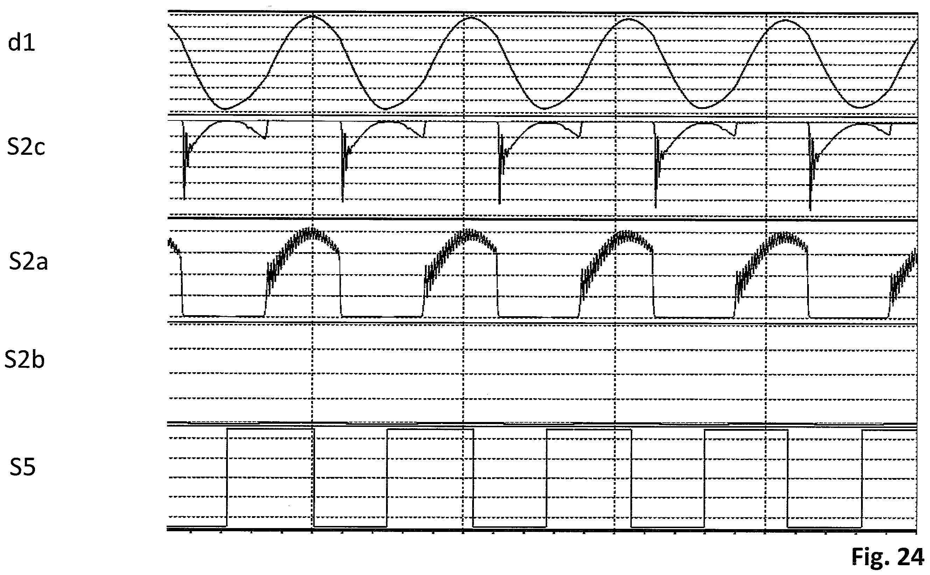

Fig. 24 entspricht einer zeitlichen Vergrößerung der Fig. 23.

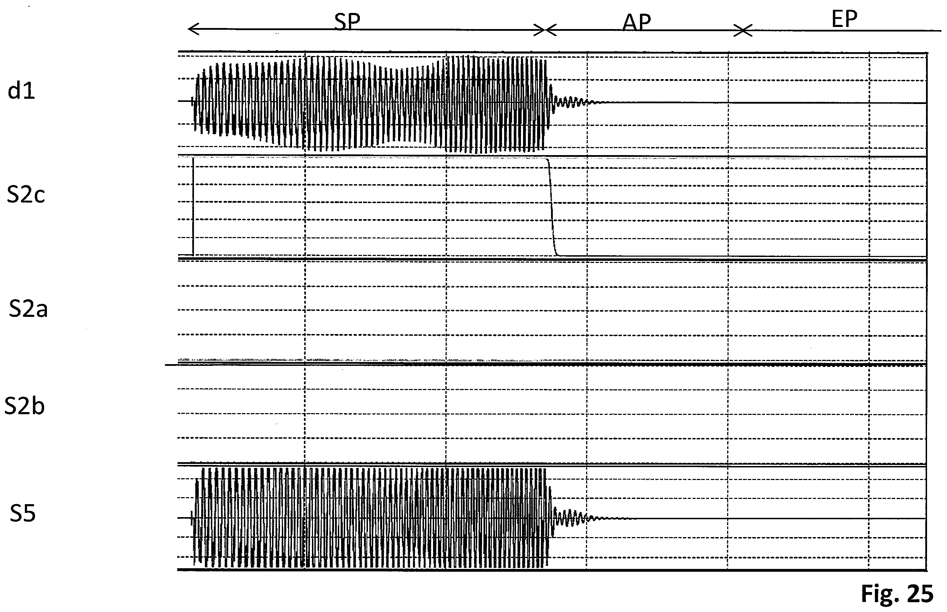

Fig. 25 zeigt wichtige Signale (d1, S2c, S2a, S2b, S5) bei Aussendung eines Ultraschall-Bursts im Betriebszustand, wobei der Übertrager (UEB) mit seinem Mittenanschluss primärseitig nicht an das dritte Teilsignal (S2c) des zweiten analogen Signals (S2) angeschlossen ist.

### Symptome

Das nicht angeschlossene dritte Teilsignal (S2c) des zweiten analogen Signals (S2) hat zur Folge, dass der Ultraschalltransducer (TR) nicht ausreichend mit Energie versorgt wird. Dieser Fehler ist mit einer Auswertung der Ausschwingzeit und der Schwingfrequenz erfassbar.

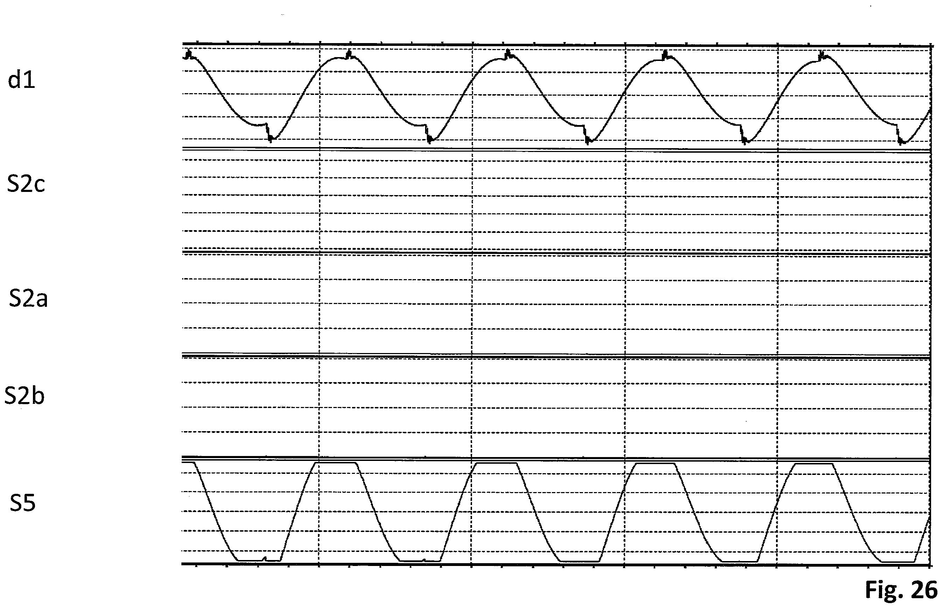

Fig. 26 entspricht einer zeitlichen Vergrößerung der Fig. 25.

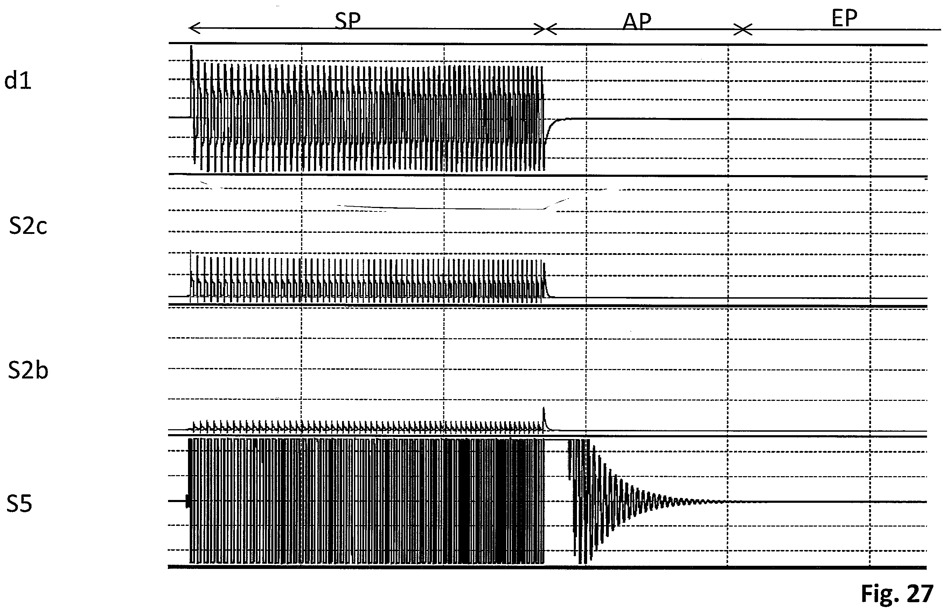

Fig. 27 zeigt wichtige Signale (d1, S2c, S2b, S5) bei Aussendung eines Ultraschall-Bursts im Betriebszustand, wobei primärseitig zwei Anschlüsse des Übertragers (UEB) und zwar das dritte Teilsignal (S2c) des zweiten analogen Signals (S2) und das erste Teilsignal (S2a) des zweiten analogen Signals (S2) kurzgeschlossen sind.

### Symptome

Der Umstand, dass das das dritte Teilsignal (S2c) des zweiten analogen Signals (S2) mit dem ersten Teilsignal (S2a) des zweiten analogen Signals (S2) kurzgeschlossen ist, hat zur Folge, dass der Ultraschalltransducer (TR) nicht ausreichend mit Energie versorgt wird. Dieser Fehler ist mit einer Auswertung der Ausschwingzeit und der Schwingfrequenz erfassbar.

Die Amplitude am zweiten Teilsignal (S2b) des zweiten Signals (S2) wird durch diesen Kurzschluss ebenfalls reduziert und kann daher durch einen vierten Komparator (C4) mittels Vergleich mit einer vierten Referenz (Ref4) erkannt werden.

Ein vierter Komparator (C4) am zweiten Teilsignal (S2b) des zweiten anlogen Signals (S2) (siehe auch Fig. 9) kann durch Vergleich mit einer vierten Referenz (Rref4) die dauerhafte Unterschreitung dieses vierten Referenzwertes (Ref4) in der Sendephase (SP) und/oder in der Empfangsphase (EP) detektieren und so darauf schließen, dass möglicherweise das dritte Teilsignal (S2c) des zweiten analogen Signals (S2) und das erste Teilsignal (S2a) des zweiten analogen Signals (S2) kurzgeschlossen sind. Das Setzen des entsprechenden vierten Vergleichssignals (v4) kann von der (System)Steuereinrichtung (CTR) oder dem digitalen Eingangsschaltkreis (DSI) erkannt werden. Diese setzen dann ein entsprechendes Fehlersignal oder setzen eine entsprechende Fehlermeldung ab. Hier sei darauf hingewiesen, dass durch mehrere unterschiedliche vierte Referenzwerte (Ref4) und gegebenenfalls weitere vierte Komparatoren (C4) die verschiedenen Fehlerfälle besser getrennt werden können.

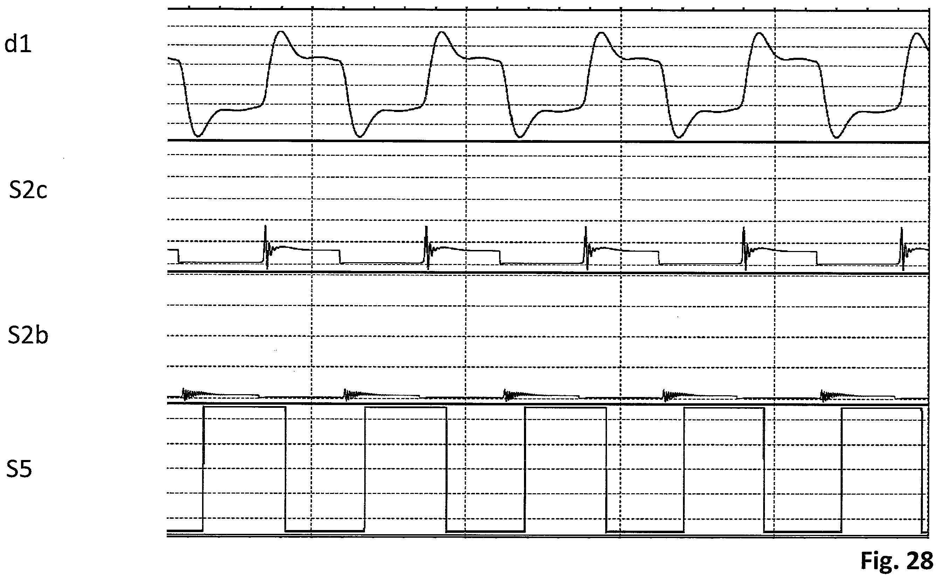

Fig. 28 entspricht einer zeitlichen Vergrößerung der Fig. 27.

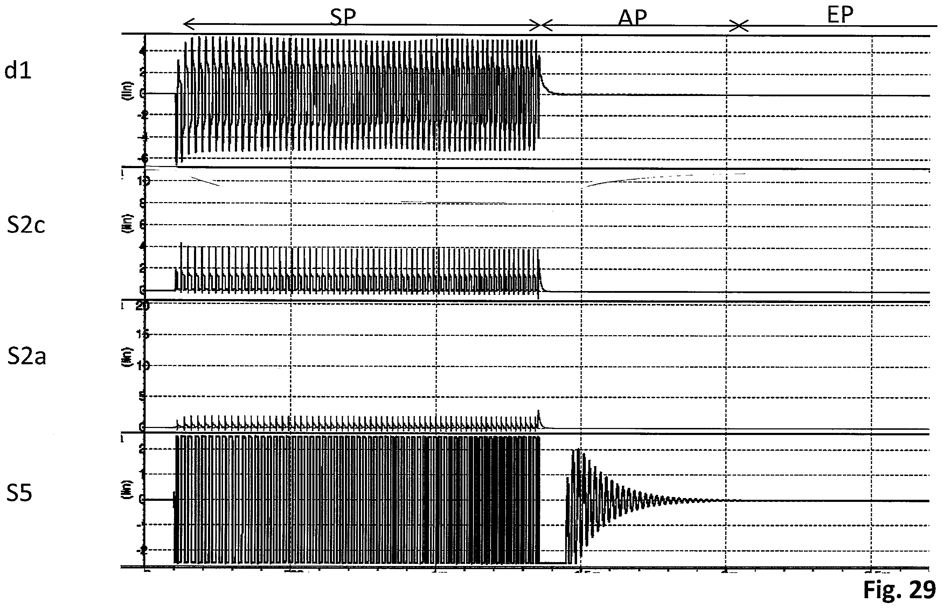

Fig. 29 zeigt wichtige Signale (d1, S2c, S2a, S5) bei Aussendung eines Ultraschall-Bursts im Betriebszustand, wobei primärseitig zwei Anschlüsse des Übertragers (UEB) und zwar das dritte Teilsignal (S2c) des zweiten analogen Signals (S2) und zweite Teilsignal (S2b) des zweiten analogen Signals (S2) kurzgeschlossen sind.

### Symptome

Dass das das dritte Teilsignal (S2c) des zweiten analogen Signals (S2) und das zweite Teilsignal (S2b) des zweiten analogen Signals (S2) miteinander kurzgeschlossen sind, hat zur Folge, dass der Ultraschalltransducer (TR) nicht ausreichend mit Energie versorgt wird. Dieser Fehler ist mit einer Auswertung der Ausschwingzeit und der Schwingfrequenz erfassbar.

Die Amplitude am ersten Teilsignal (S2a) des zweiten Signals (S2) wird durch diesen Kurzschluss ebenfalls reduziert und kann daher durch einen sechsten Komparator (C6) mittels Vergleich mit einer sechsten Referenz (Ref6) erkannt werden.

Ein sechster Komparator (C6) am ersten Teilsignal (S2a) des zweiten anlogen Signals (S2) (siehe auch Fig. 9) kann durch Vergleich mit einer sechsten Referenz (Rref6) die dauerhafte Unterschreitung dieses sechsten Referenzwertes (Ref6) in der Sendephase (SP) und/oder in der Empfangsphase (EP) detektieren uns so darauf schließen, dass möglicherweise das dritte Teilsignal (S2c) des zweiten analogen Signals (S2) und das zweite Teilsignal (S2b) des zweiten analogen Signals (S2) kurzgeschlossen sind. Das Setzen des entsprechenden sechsten Vergleichssignals (v6) kann von der (System-) Steuereinrichtung (CTR) oder der dem digitalen Eingangsschaltkreis (DSI) erkannt werden. Diese setzen dann ein entsprechendes Fehlersignal oder setzen eine entsprechende Fehlermeldung ab. Hier sei darauf hingewiesen, dass durch mehrere unterschiedliche sechste Referenzwerte (Ref6) und gegebenenfalls weitere sechste Komparatoren (C6) die verschiedenen Fehlerfälle besser getrennt werden können.

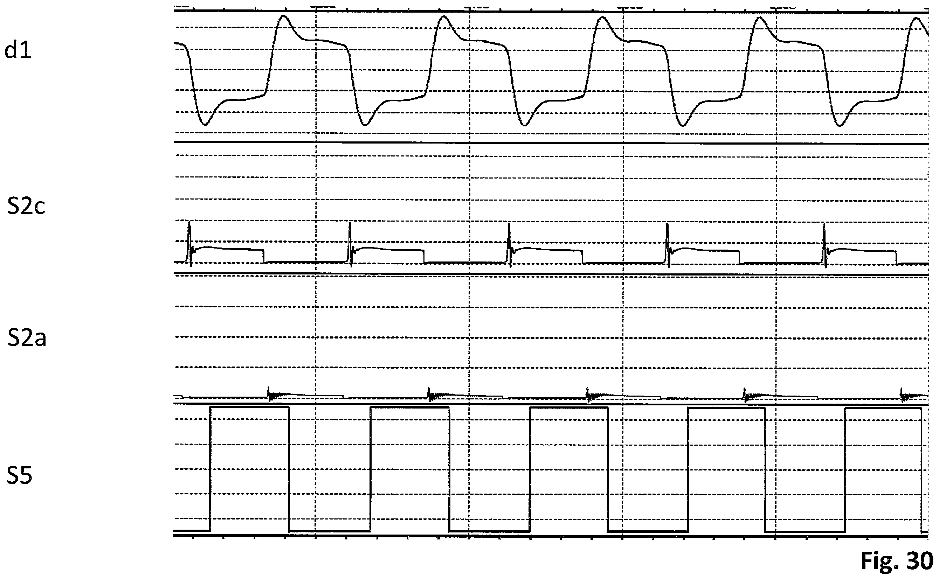

Fig. 30 entspricht einer zeitlichen Vergrößerung der Fig. 29.

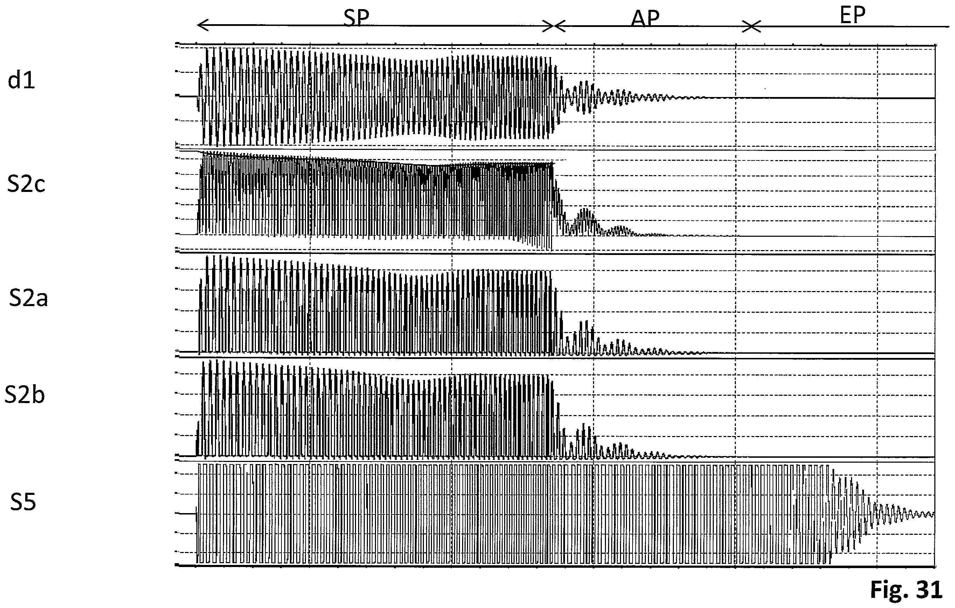

Fig. 31 zeigt wichtige Signale (d1, S2c, S2a, S2b, S5) bei Aussendung eines Ultraschall-Bursts im Betriebszustand, wobei sekundärseitig der Transducer-Widerstand (R_{TR}) nicht angeschlossen ist, also entweder an das erste Teilsignal (S3a) des dritten analogen Signals (S3) oder an das zweite Teilsignal (S3b) des dritten analogen Signals (S3) nicht an dem Transducer-Widerstand (R_{TR}) angeschlossen ist.

Der nicht angeschlossene Transducer-Widerstand (R_{TR}) hat zur Folge, dass der Ultraschalltransducer (TR) seine in ihm gespeicherte Schwingungsenergie mit dem Beginn der Ausschwingphase (AP) nicht so schnell wie vorgesehen abbauen kann. Dieser Fehler ist daher mit einer Auswertung der Ausschwingzeit leicht erfassbar.

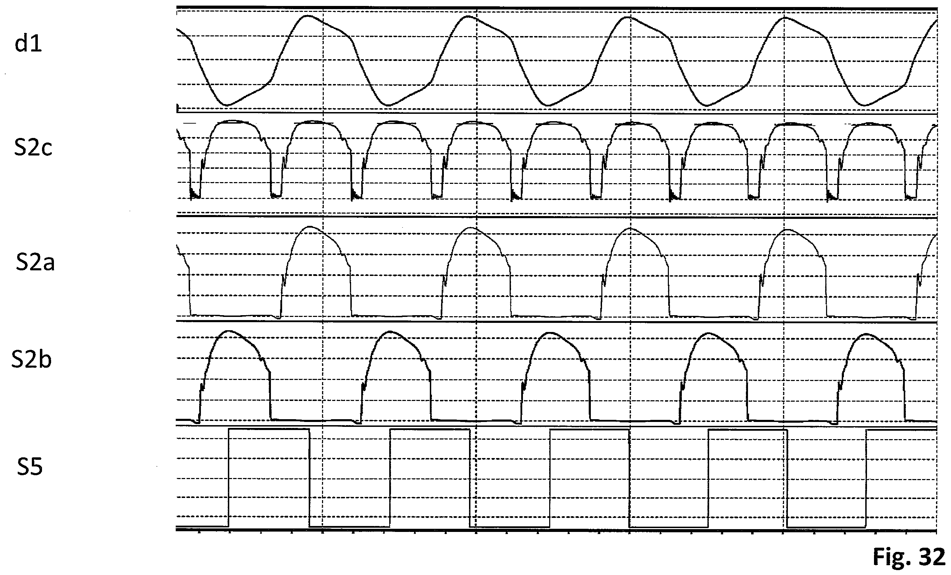

Fig. 32 entspricht einer zeitlichen Vergrößerung der Fig. 31.

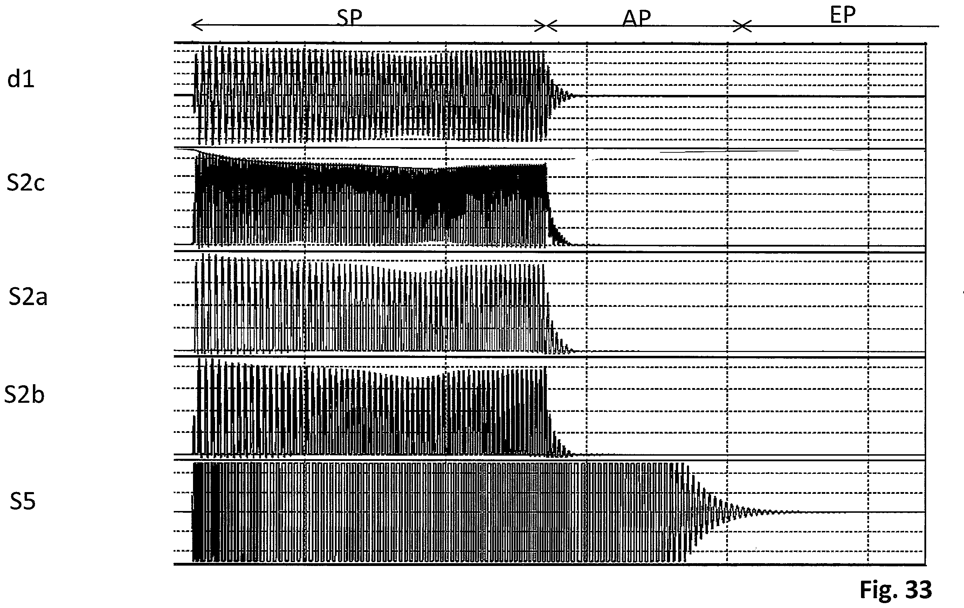

Fig. 33 zeigt wichtige Signale (d1, S2c, S2a, S2b, S5) bei Aussendung eines Ultraschall-Bursts im Betriebszustand, wobei sekundärseitig die Transducer-Kapazität (C_{TR}) nicht angeschlossen ist. Dieses "Nichtangeschlossensein" kann den Anschluss der Transducer-Kapazität (C_{TR}) an das erste Teilsignal (S3a) des dritten analogen Signals (S3) oder den Anschluss der Transducer-Kapazität (C_{TR}) an das zweite Teilsignal (S3b) des dritten analogen Signals (S3) betreffen.

Die nicht angeschlossene Transducer-Kapazität (C_{TR}) hat nur schwer detektierbare Signaländerungen zur Folge. Die Schwingfrequenz ist leicht erniedrigt. Diese Änderungen sind aber nur so minimal, dass dieser Fehler daher mit einer Auswertung der Ausschwingzeit oder der Schwingfrequenz typischerweise nicht sicher erfassbar ist.

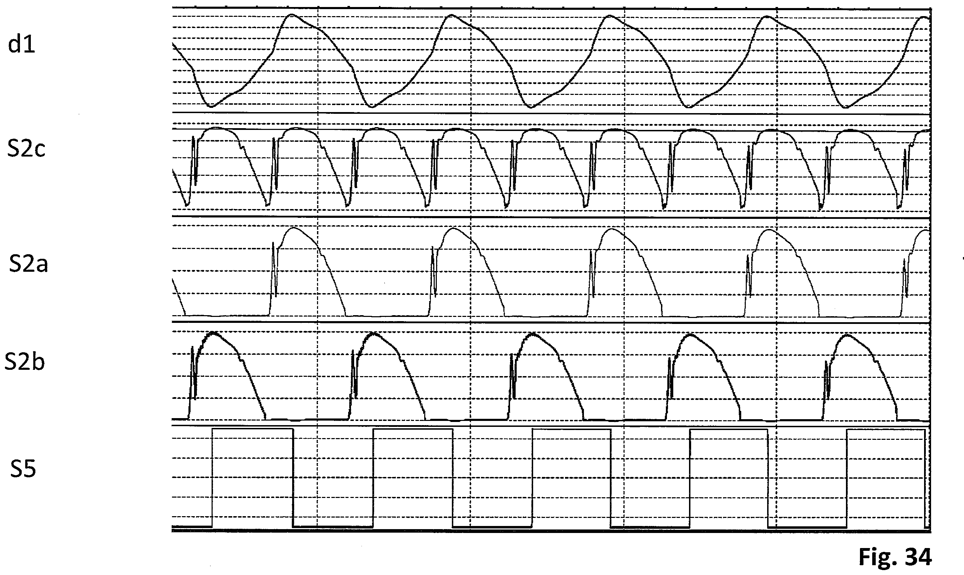

Eine Erfassbarkeit kann aber auf anderem Wege erzielt werden. Hierfür ist die Detailbetrachtung der Fig. 34 notwendig.

Fig. 34 entspricht einer zeitlichen Vergrößerung der Fig. 33.

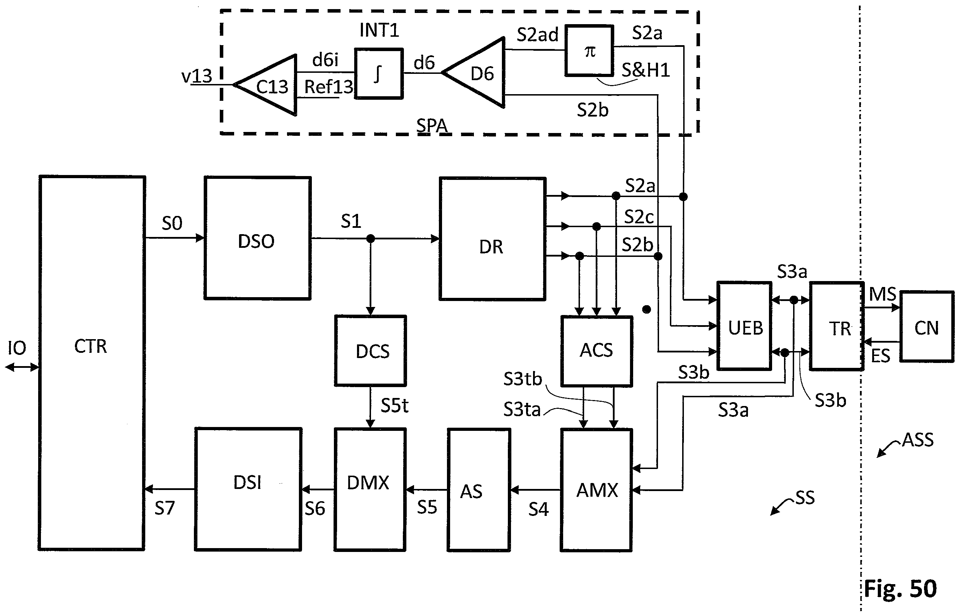

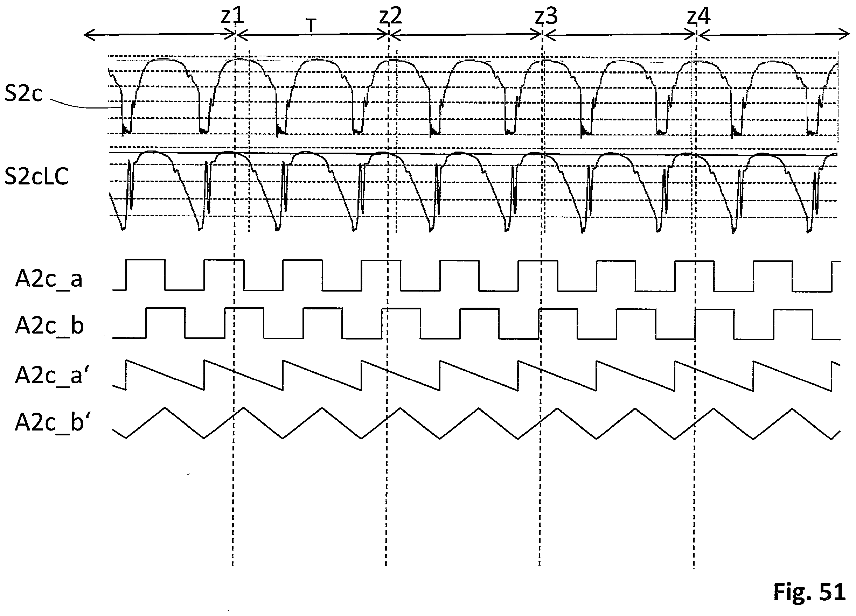

Der größte Unterschied zwischen dem Normalfall der Fig. 12 und dem Bild der Fig. 34 ist, dass das Signal am Mittenabgriff des Übertrages (UEB), also dem dritten Teilsignal (S2c) des zweiten analogen Signals (S2) im Gegensatz zum Normalfall (siehe Fig. 11) nicht mehr symmetrisch dreiecksähnlich ist, sondern einen mehr sägezahnförmigen Verlauf hat. Zur Detektion dieses Fehlers ist daher beispielsweise eine Transformation in einen anderen Signalbereich sinnvoll. Eine solche Transformation kann beispielsweise eine Fourier-Transformation, eine diskrete Fourier-Transformation, eine Laplace-Transformation oder eine Wavelet-Transformation etc. sein. Beispielsweise ist es auch denkbar, mittels einer PLL ein Sägezahn-Referenzsignal und ein Dreieckssignal gleicher Frequenz zu generieren und das dritte Teilsignal (S2c) des zweiten Signals (S2) mit diesen beiden Signalen während der Sendephase zu multiplizieren und dann Tiefpass zu filtern, mithin also ein Skalarprodukt aus diesen beiden zu bilden (siehe auch Fign. 50 bis 53). Die Multiplikation mit dem Sägezahnsignal sollte bei richtiger Phasenlage des erzeugten Sägezahnsignals null ergeben, während die Multiplikation mit dem Dreieckssignal bei richtiger Phasenlage des erzeugten Sägezahnsignals einen von Null verschiedenen Wert ergeben sollte. (Nur der Vollständigkeit halber: Unter einem Dreieckssignal ist ein Signal mit einem zeitlichen Amplitudenverlauf zu verstehen, bei dem dieser zeitliche Amplitudenverlauf durch eine unmittelbare Aufeinanderfolge von dreiecksförmigen Spannungsverläufen des betreffenden Signals gekennzeichnet ist und wobei diese Dreiecke näherungsweise gleichschenklig sein sollten (siehe auch Signal A2c_b der Fig. 51). Unter einem Sägezahnsignal ist ein Signal mit einem zeitlichen Amplitudenverlauf zu verstehen, bei dem dieser zeitliche Amplitudenverlauf durch eine unmittelbare Aufeinanderfolge von dreiecksförmigen Spannungsverläufen des betreffenden Signals gekennzeichnet ist und wobei der eines Schenke eines solchen Dreiecks wesentlich steiler als der andere Schenkel ist (siehe auch Signal A2c_a der Fig. 51). Vorzugsweise ist dieser steilere Schenkel gegenüber der Zeitachse fast vertikal. Diese Berechnung kann leicht im analogen Eingangsschaltkreis (AS) als analoger Mischer oder im digitalen Eingangsschaltkreis (DSI) realisiert werden.

Auf diese Weise kann ein erster Wert für den ungeraden Signalanteil in dem dritten Teilsignal (S2c) des zweiten Signals (S2) und ein zweiter Wert für den geraden Signalanteil in dem dritten Teilsignal (S2c) des zweiten Signals (S2) ermittelt werden.

Eine entsprechende Vergleichsvorrichtung kann den ersten Wert mit einem zugeordneten Referenzwert für den ungeraden Signalanteil vergleichen und die Ausgabe eines Fehlersignals veranlassen, wenn dieser erste Wert über dem zugeordneten Referenzwert für den ungeraden Signalanteil liegt.

Eine weitere entsprechende Vergleichsvorrichtung kann den zweiten Wert mit einem zugeordneten Referenzwert für den geraden Signalanteil vergleichen und die Ausgabe eines Fehlersignals veranlassen, wenn dieser zweite Wert unter dem zugeordneten Referenzwert für den geraden Signalanteil liegt. Dieses Konzept wird in den Beschreibungen der Fign. 50 bis 53 vertieft werden.

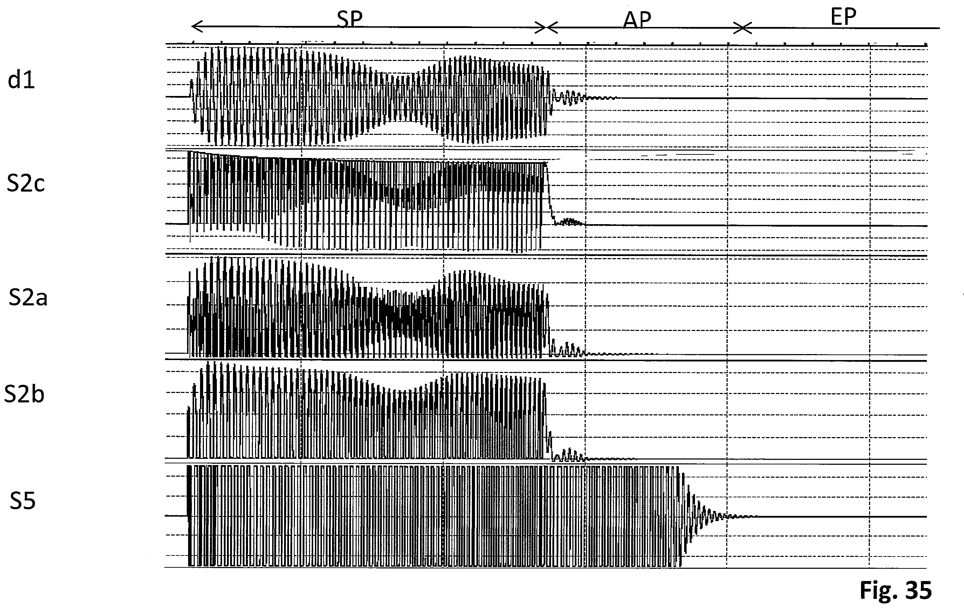

Fig. 35 zeigt wichtige Signale (d1, S2c, S2a, S2b, S5) bei Aussendung eines Ultraschall-Bursts im Betriebszustand, wobei primärseitig keine Ansteuerung des Treibers für das erste Teilsignal (S2a) des zweiten analogen Signals (S2) in der Treiberstufe (DR) vorliegt.

Dieser Fehler kann beispielsweise dann auftreten, wenn der Treibertransistor für das erste Teilsignal (S2a) des zweiten Signals (S2) in der Treibereinheit (DR) nicht funktioniert. Dieser Transistor ist dann nicht in der Lage, das erste Teilsignal (S2a) des zweiten analogen Signals (S2) nach Masse zu ziehen.

Eine Möglichkeit, diesen Fehler festzustellen, ist, wenige µs nach dem Einschalten dieses Transistors mit Hilfe des sechsten Komparators (C6) dieses "Auf Masse-Ziehen" des betreffenden Transistors zu überprüfen. Hierzu vergleicht der sechste Komparator (C6) (siehe Fig. 9) den Spannungspegel am ersten Teilsignal (S2a) des zweiten Signals (S2) mit einem sechsten Referenzwert (Ref6). Wird dieser zu diesem Zeitpunkt kurz nach dem Einschalten des Transistors nicht unterschritten, so liegt ein Fehler vor.

Eine andere Möglichkeit liegt wieder in der Analyse des geraden und ungeraden Signalanteils wie in der Beschreibung der Fig. 34 dargestellt, nun aber des ersten Teilsignals (S2a) des zweiten analogen Signals (S2).

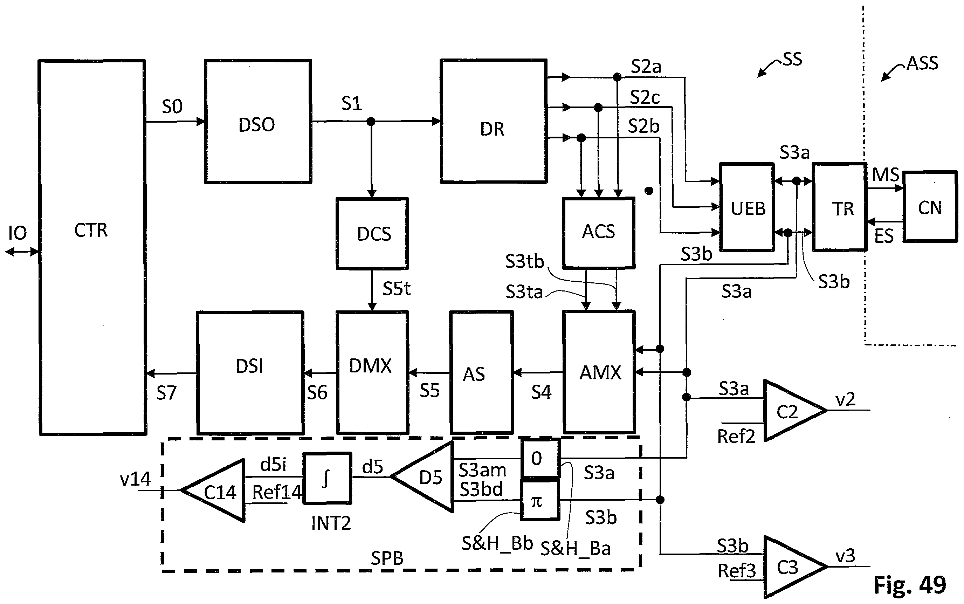

Eine weitere Möglichkeit liegt darin, dass aufgrund der Symmetrie der Vorrichtung der Signalverlauf des ersten Teilsignals (S2a) des zweiten Signals (S2) und der Signalverlauf des zweiten Teilsignals (S2b) des zweiten Signals (S2) einander bis auf eine Phasenverschiebung von 180° gleich sein müssen (Vorausgesetzt wird ein Übertrager (UEB) gemäß Fig. 7). Es ist daher denkbar, in einer oder mehreren Perioden einen oder mehrere Werte des Signalverlaufs des ersten Teilsignals (S2a) des zweiten Signals (S2) zu bestimmten Zeitpunkten zu erfassen und um 180° dazu phasenverschoben zu den entsprechenden Zeitpunkten einen oder mehrere Werte des Signalverlaufs des zweiten Teilsignals (S2b) des zweiten Signals (S2) zu bestimmten Zeitpunkten zu erfassen und dann die Differenzen der korrespondieren Paare aus je einem Wert des Signalverlaufs des ersten Teilsignals (S2a) des zweiten Signals (S2) und einem Wert des Signalverlaufs des zweiten Teilsignals (S2b) des zweiten Signals (S2) zu den korrespondierenden Zeitpunkten zu berechnen und aufzusummieren. Überschreitet die Differenz oder der Betrag der Differenz einen vorbestimmten Wert, so ist die Symmetrie der Vorrichtung gestört und es kann ein Fehlersignal ausgelöst werden. Bevorzugt wird diese Berechnung im digitalen Eingangsschaltkreis (DSI) oder in der Steuereinrichtung (CTR) durchgeführt. Eine solche Vorrichtung ist dann dazu geeignet, die Symmetrie von zwei Teilsignalen (S2a, S2b) des zweiten analogen Signals (S2) zu erfassen. Dieses Konzept wird im Zusammenhang mit der Fig. 49 vertieft erläutert werden.

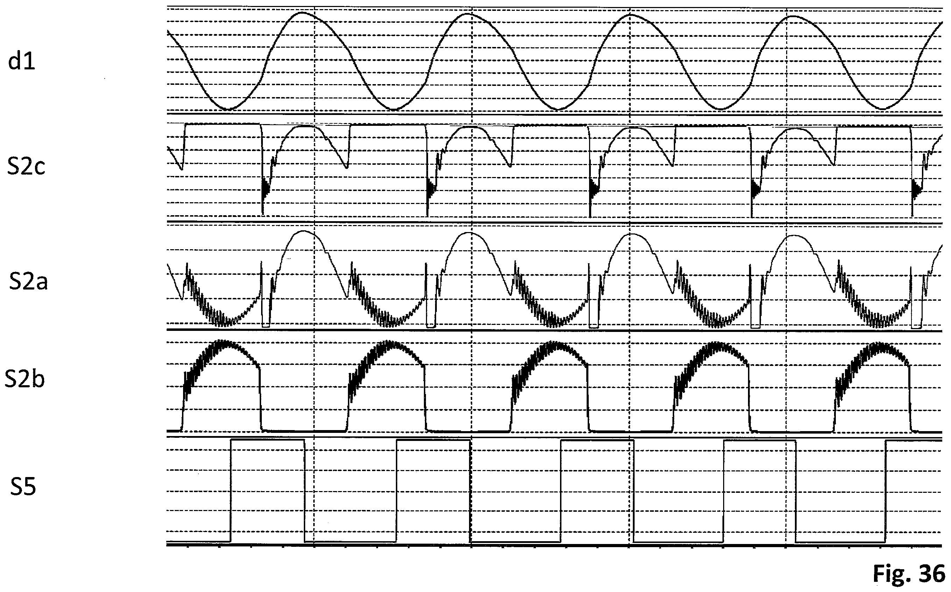

Fig. 36 entspricht einer zeitlichen Vergrößerung der Fig. 35.

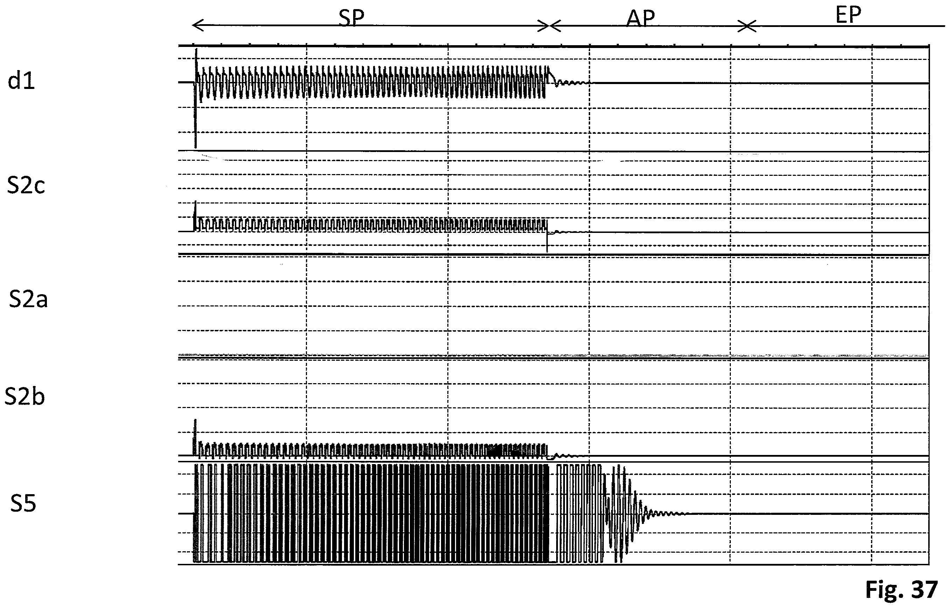

Fig. 37 zeigt wichtige Signale (d1, S2c, S2a, S2b, S5) bei Aussendung eines Ultraschall-Bursts im Betriebszustand, wobei primärseitig der Treiber für das erste Teilsignal (S2a) des zweiten analogen Signals (S2) in der Treiberstufe (DR) gegen Masse kurzgeschlossen ist.

### Symptome

Der primärseitig gegen Masse kurzgeschlossene Treiber für das erste Teilsignal (S2a) des zweiten analogen Signals (S2) in der Treiberstufe (DR) hat zur Folge, dass der Ultraschalltransducer (TR) nicht ausreichend mit Energie versorgt wird. Dieser Fehler ist mit einer Auswertung der Ausschwingzeit und der Schwingfrequenz erfassbar.

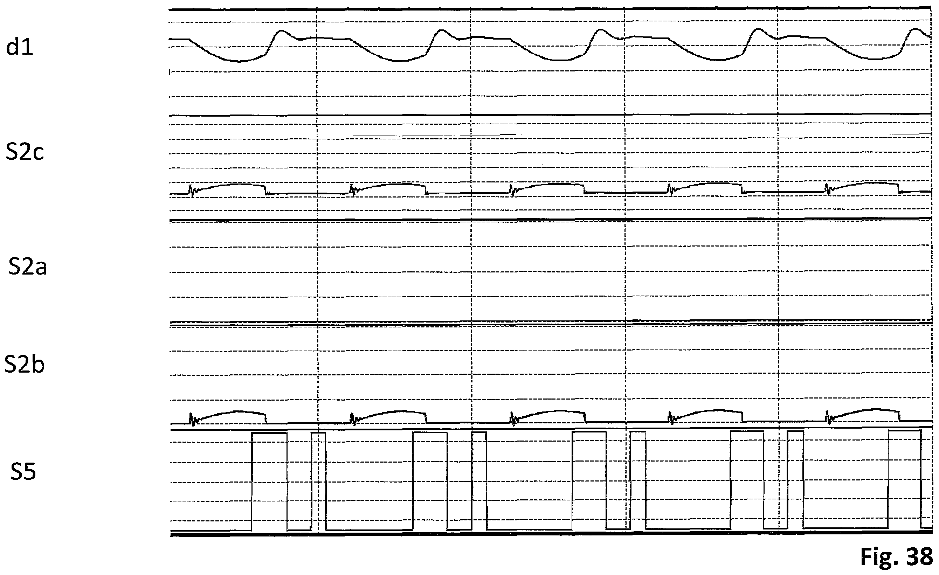

Fig. 38 entspricht einer zeitlichen Vergrößerung der Fig. 37.

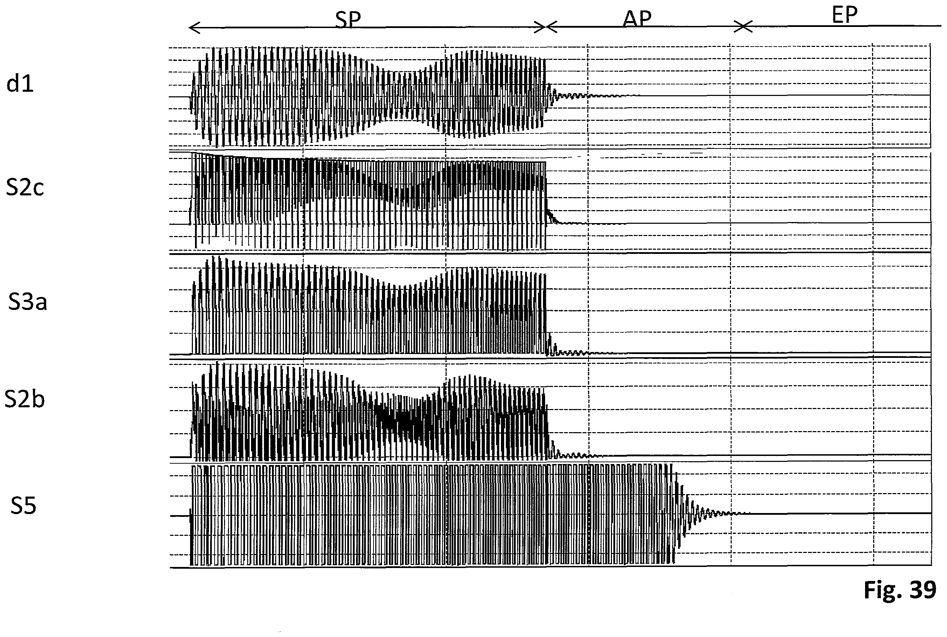

Fig. 39 zeigt wichtige Signale (d1, S2c, S2a, S2b, S5) bei Aussendung eines Ultraschall-Bursts im Betriebszustand, wobei primärseitig keine Ansteuerung des Treibers für das zweite Teilsignal (S2b) des zweiten analogen Signals (S2) in der Treiberstufe (DR) vorliegt.

Dieser Fehler kann beispielsweise dann auftreten, wenn der Treibertransistor für das zweite Teilsignal (S2b) des zweiten Signals (S2) in der Treibereinheit (DR) nicht funktioniert. Dieser Transistor ist dann nicht in der Lage, das zweite Teilsignal (S2b) des zweiten analogen Signals (S2) nach Masse zu ziehen.

Eine Möglichkeit diesen Fehler festzustellen ist, wenige µs nach dem Einschalten dieses Transistors mit Hilfe des vierten Komparators (C4) dieses "Auf Masse-Zeihen" des betreffenden Transistors zu überprüfen. Hierzu vergleicht der vierte Komparator (C4) (siehe Fig. 9) den Spannungspegel am zweiten Teilsignal (S2b) des zweiten Signals (S2) mit einem vierten Referenzwert (Ref4). Wird dieser zu diesem Zeitpunkt kurz nach dem Einschalten des Transistors nicht unterschritten, so liegt ein Fehler vor.

Eine andere Möglichkeit liegt wieder in der Analyse des geraden und ungeraden Signalanteils wie in der Beschreibung der Fig. 34 dargestellt, nun aber des zweiten Teilsignals (S2b) des zweiten analogen Signals (S2).

Eine weitere Möglichkeit liegt darin, dass aufgrund der Symmetrie der Vorrichtung der Signalverlauf des ersten Teilsignals (S2a) des zweiten Signals (S2) und der Signalverlauf des zweiten Teilsignals (S2b) des zweiten Signals (S2) einander bis auf eine Phasenverschiebung von 180° gleich sein müssen (Vorausgesetzt wird ein Übertrager (UEB) gemäß Fig. 7.) Es ist daher denkbar, in einer oder mehreren Perioden einen oder mehrere Werte des Signalverlaufs des ersten Teilsignals (S2a) des zweiten Signals (S2) zu bestimmten Zeitpunkten zu erfassen und um 180° dazu phasenverschoben zu den entsprechenden Zeitpunkten einen oder mehrere Werte des Signalverlaufs des zweiten Teilsignals (S2b) des zweiten Signals (S2) zu bestimmten Zeitpunkten zu erfassen und dann die Differenzen der korrespondieren Paare aus je einem Wert des Signalverlaufs des ersten Teilsignals (S2a) des zweiten Signals (S2) und einem Wert des Signalverlaufs des zweiten Teilsignals (S2b) des zweiten Signals (S2) zu den korrespondierenden Zeitpunkten zu berechnen und aufzusummieren. Überschreitet die Differenz oder der Betrag der Differenz einen vorbestimmten Wert, so ist die Symmetrie der Vorrichtung gestört und es kann ein Fehlersignal ausgelöst werden. Bevorzugt wird diese Berechnung im digitalen Eingangsschaltkreis (DSI) oder in der Steuereinrichtung (CTR) durchgeführt. Eine solche Vorrichtung ist dann dazu geeignet, die Symmetrie von zwei Teilsignalen (S2a, S2b) des zweiten analogen Signals (S2) zu erfassen. Dieses Konzept wird im Zusammenhang mit der Fig. 49 vertieft erläutert werden.

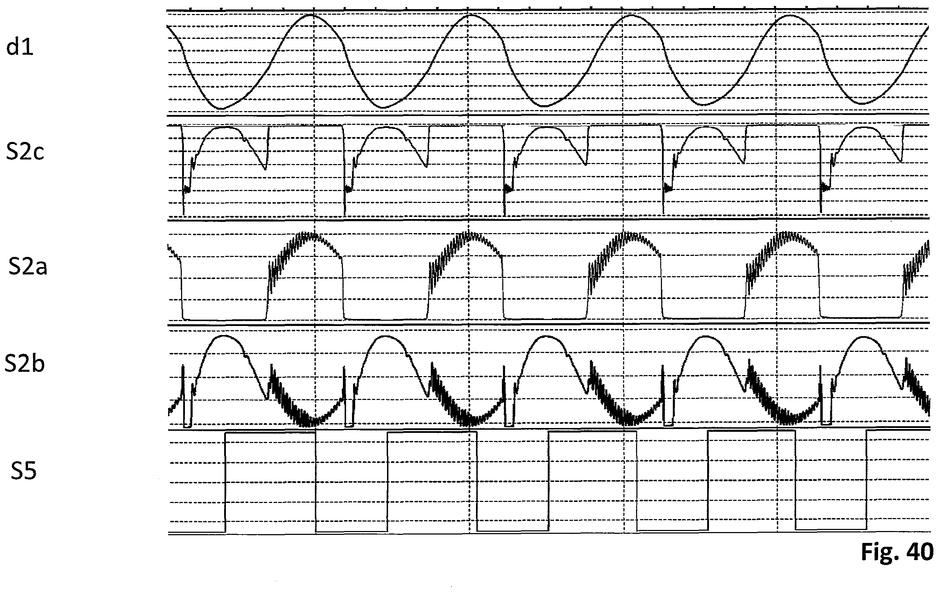

Fig. 40 entspricht einer zeitlichen Vergrößerung der Fig. 39.

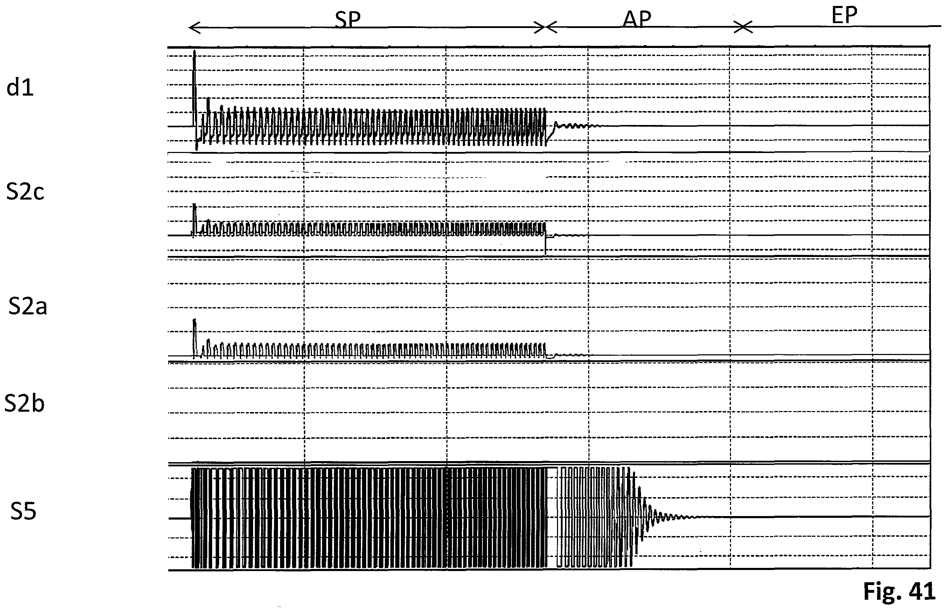

Fig. 41 zeigt wichtige Signale (d1, S2c, S2a, S2b, S5) bei Aussendung eines Ultraschall-Bursts im Betriebszustand wobei primärseitig der Treiber für das zweite Teilsignal (S2b) des zweiten analogen Signals (S2) in der Treiberstufe (DR) gegen Masse kurzgeschlossen ist.

### Symptome

Der primärseitig gegen Masse kurzgeschlossene Treiber für das zweite Teilsignal (S2b) des zweiten analogen Signals (S2) in der Treiberstufe (DR) hat zur Folge, dass der Ultraschalltransducer (TR) nicht ausreichend mit Energie versorgt wird. Dieser Fehler ist mit einer Auswertung der Ausschwingzeit und der Schwingfrequenz erfassbar.

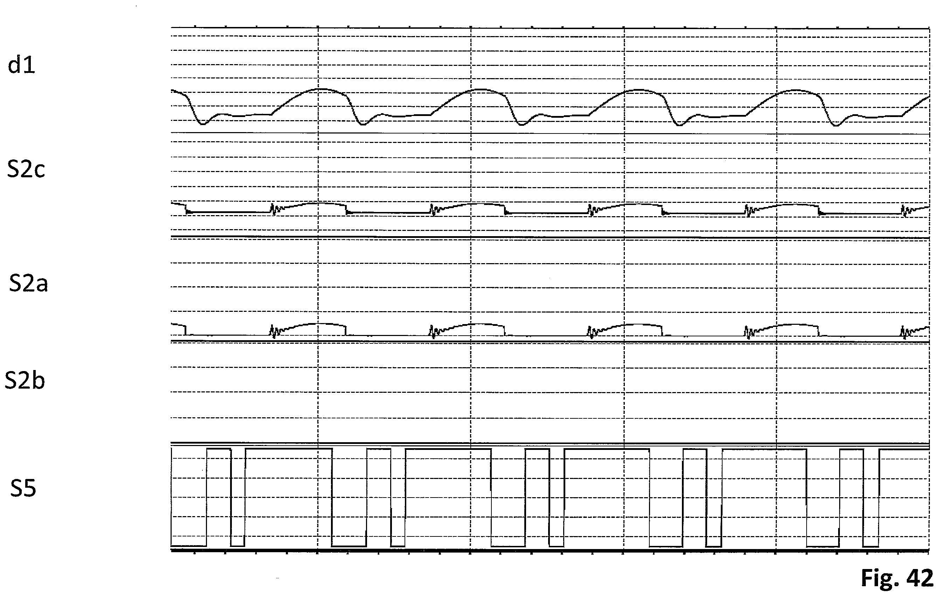

Fig. 42 entspricht einer zeitlichen Vergrößerung der Fig. 41.

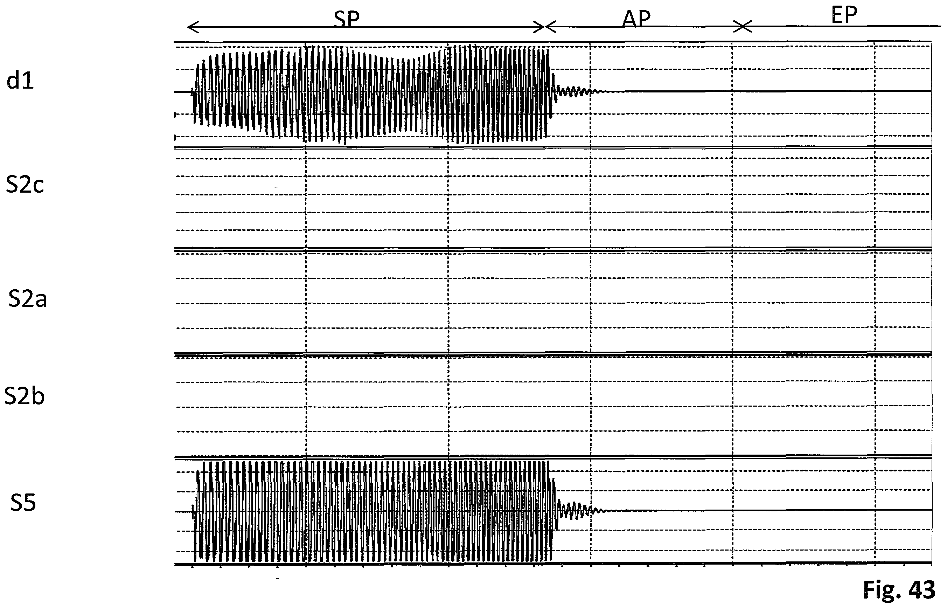

Fig. 43 zeigt wichtige Signale (d1, S2c, S2a, S2b, S5) bei Aussendung eines Ultraschall-Bursts im Betriebszustand, wobei primärseitig keine Ansteuerung des Treibers für das dritte Teilsignal (S2c) des zweiten analogen Signals (S2) in der Treiberstufe (DR) vorliegt.

Das entstehende Fehlerbild kann sowohl durch eine Auswertung der Ausschwingzeit als auch durch eine Vermessung mit Hilfe eines sechsten Komparators (C6) am ersten Teilsignal (S2a) des zweiten analogen Signals (S2) erfasst werden.

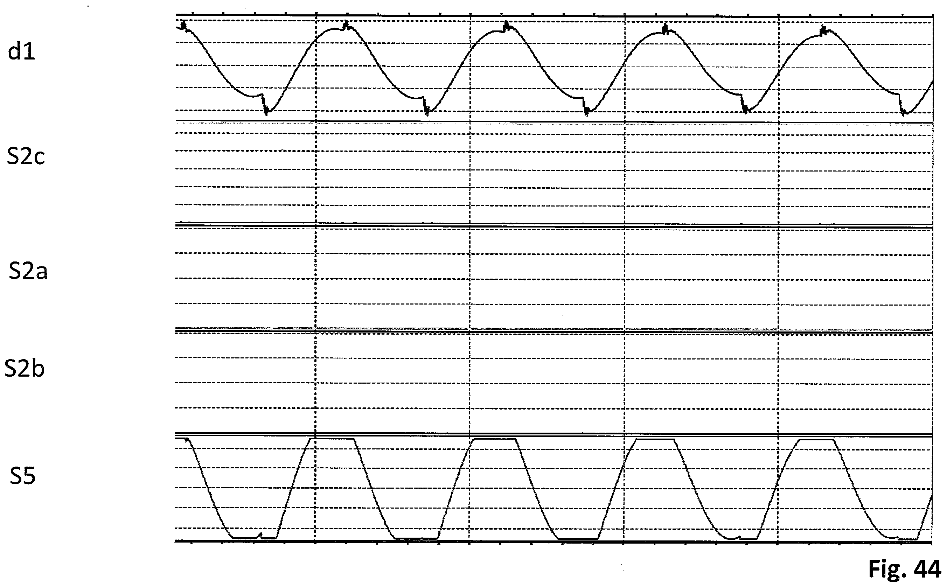

Fig. 44 entspricht einer zeitlichen Vergrößerung der Fig. 43.

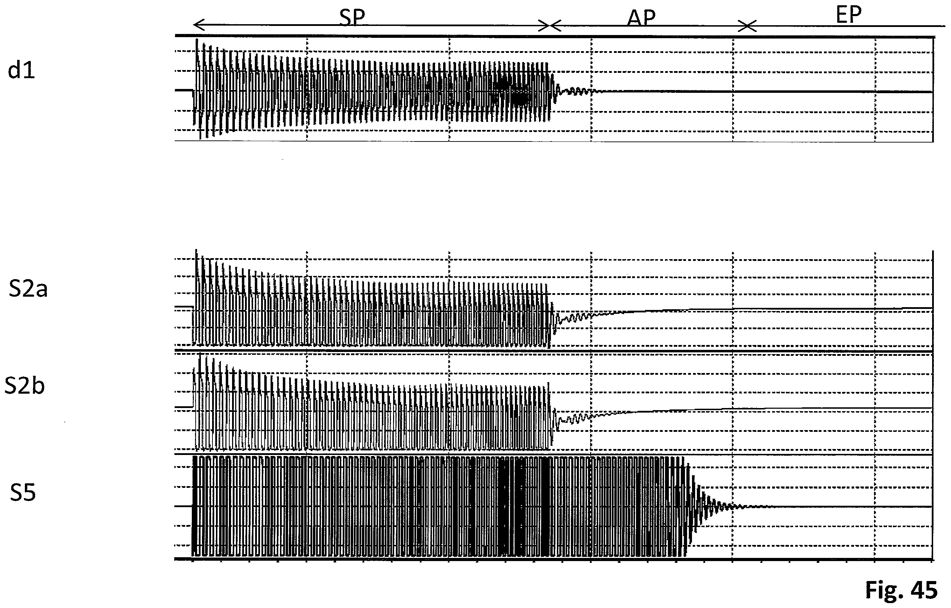

Fig. 45 zeigt wichtige Signale (d1, S2a, S2b, S5) bei Aussendung eines Ultraschall-Bursts im Betriebszustand, wobei primärseitig der Treiber für das dritte Teilsignal (S2c) des zweiten analogen Signals (S2) in der Treiberstufe (DR) gegen Masse kurzgeschlossen ist oder nicht angesteuert wird.

Bei einem niederohmigen Kurzschluss des Treibertransistors ist der Sendestrom deutlich erhöht. Dies kann anhand der Ausschwingzeit detektiert werden.

Besonders vorteilhaft ist aber die Detektion durch einen sechsten Komparator (C6) durch Vergleich des ersten Teilsignals (S2a) des zweiten Signals (S2) mit einem sechsten Referenzwert (Ref6) in der Empfangsphase (EP). Im Normalfall ist dort der Pegel null. In diesem Fehlerfall ist der Pegel dort angehoben. Dies kann durch Auswertung des beim Vergleich erzeugten sechsten Vergleichssignals (v6) detektiert werden uns als auslösendes Ereignis für die Erzeugung eines Fehlersignals durch den digitalen Eingangsschaltkreis (DSI) oder die (System-)Steuereinrichtung (CTR) verwendet werden.

Ebenso vorteilhaft ist die Detektion durch einen vierten Komparator (C4) durch Vergleich des zweiten Teilsignals (S2b) des zweiten Signals (S2) mit einem vierten Referenzwert (Ref4) in der Empfangsphase (EP). Im Normalfall ist dort der Pegel null. In diesem Fehlerfall ist der Pegel dort angehoben. Dies kann durch Auswertung des beim Vergleich erzeugten vierten Vergleichssignals (v4) detektiert werden uns als auslösendes Ereignis für die Erzeugung eines Fehlersignals durch den digitalen Eingangsschaltkreis (DSI) oder die (System-)Steuereinrichtung (CTR) verwendet werden.

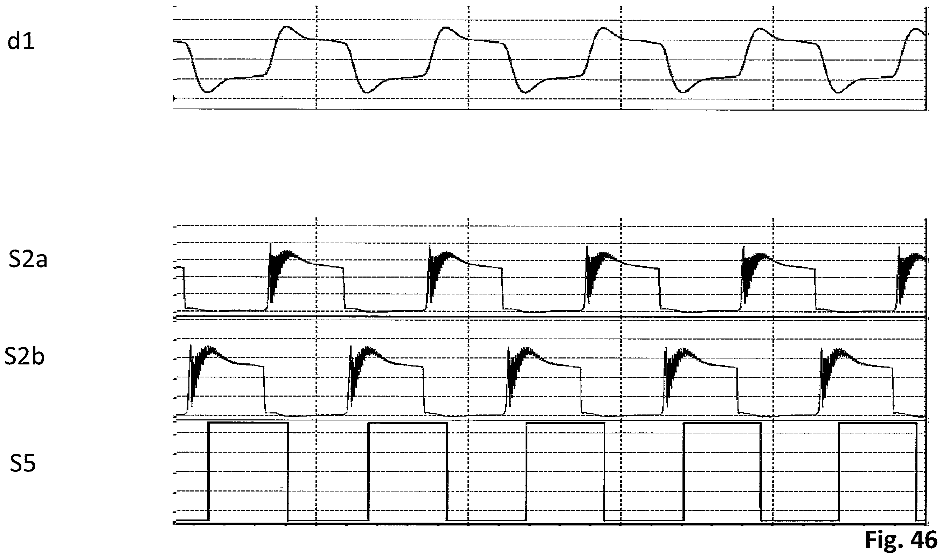

Fig. 46 entspricht einer zeitlichen Vergrößerung der Fig. 45.

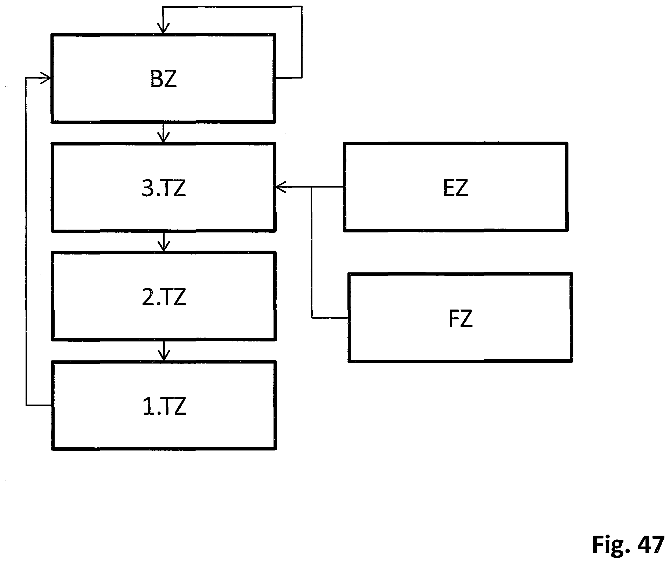

Fig. 47 zeigt den bevorzugten Ablauf eines Selbsttests des vorgeschlagenen Messsystems (SS). Nach dem Einschalten oder Zurücksetzen des vorgeschlagenen Messsystems (SS) befindet sich das vorgeschlagene Messsystem (SS) in einem Einschaltzustand (EZ). In diesem Einschaltzustand (EZ) gibt das vorgeschlagene Messsystem (SS) bevorzugt keine Messwerte, sondern nur Statusmeldungen über den Fortschritt des Einschaltvorgangs über die Datenschnittstelle (IO) aus.

Das vorgeschlagene Messsystem (SS) wechselt dann in den dritten Testzustand (3.TZ). In diesem prüft das vorgeschlagene Messsystem (SS) die korrekte Funktion der Digitalsignal-Erzeugungseinheit (DSO) und des digitalen Eingangsschaltkreises (DSI). Der Signallauf entspricht dabei der Fig. 5. Die Digitalsignal-Erzeugungseinheit (DSO) erzeugt vorbestimmte Testmuster und Testsequenzen. Insbesondere können kritische sicherheitsrelevante Fehlerfälle simuliert werden. In dem Zusammenhang kann dann überprüft werden, ob der digitale Eingangsschaltkreis (DSI) in sicherheitsrelevanter Weise richtig reagiert und die vorgespielten sicherheitsrelevanten Fehler richtig detektiert. Umgekehrt kann die Signalerzeugung durch die Digitalsignal-Erzeugungseinheit (DSO) überprüft werden. Digitalsignal-Erzeugungseinheit (DSO) und digitaler Eingangsschaltkreis (DSI) überprüfen auf diese Weise bevorzugt nach Vorgabe durch die Steuereinrichtung (CTR) alle Prüffälle für den digitalen Signalpfad. Tritt ein Fehler auf, so wechselt das vorgeschlagene Messsystem (SS) bevorzugt in einen Fehlerzustand (FZ), der nicht ohne Weiteres verlassen werden kann und in dem typischerweise keine Messwerte und Messergebnisse an übergeordnete Einheiten ohne besondere Markierung weitergegeben werden.

Insofern ist der Einschaltzustand (EZ) übrigens ein besonderer Fehlerzustand (FZ). Es können also auch mehrere Fehlerzustände vorgesehen werden, die ja nach dem festgestellten Fehler eingenommen werden. Der rein digitale Test hat den Vorteil, dass hier die Gatter präzise geprüft werden können und somit der Ausfall einzelner Gatter erkennbar wird. Die Prüfabdeckung des Selbsttests dieser Schaltungsteile wird erhöht.

Sind jedoch alle Prüfungen im dritten Testzustand (3.TZ) erfolgreich verlaufen, so wechselt das vorgeschlagene Messsystem in den zweiten Testzustand (2.TZ). Hierdurch wird der interne Signalpfad des vorgeschlagenen Messsystems (SS) nun so modifiziert, dass er der Fig. 4 entspricht. Hierdurch umfasst der interne Signalpfad des vorgeschlagenen Messsystems (SS) nun auch die analogen Schaltungsteile. Tritt nun ein Fehler auf, so lässt sich dieser auf die analogen Schaltungsteile zurückführen, da die digitalen Schaltungsteile zuvor bereits als "fehlerfrei" bewertet wurden. Wie zuvor überprüfen wieder die Digitalsignal-Erzeugungseinheit (DSO) und der digitale Eingangsschaltkreis (DSI) auf diese Weise bevorzugt nach Vorgabe durch die Steuereinrichtung (CTR) alle Prüffälle für den nunmehr kombinierten analogen und digitalen Signalpfad. Tritt ein Fehler auf, so wechselt das vorgeschlagene Messsystem (SS) bevorzugt wieder in einen Fehlerzustand (FZ), der nicht ohne Weiteres verlassen werden kann und in dem typischerweise keine Messwerte und Messergebnisse an übergeordnete Einheiten ohne besondere Markierung weitergegeben werden. Die Digitalsignal-Erzeugungseinheit (DSO) erzeugt wieder vorbestimmte Testmuster und Testsequenzen, die auf diesen kombinierten analogen/digitalen Signalpfad im zweiten Testzustand zugeschnitten sind. Insbesondere können wieder kritische sicherheitsrelevante Fehlerfälle simuliert werden. In dem Zusammenhang kann dann überprüft werden, ob der digitale Eingangsschaltkreis (DSI) in Kombination mit dem analogen Eingangsschaltkreis (AS) in sicherheitsrelevanter Weise richtig reagiert und die vorgespielten sicherheitsrelevanten Fehler richtig detektiert. Umgekehrt kann die Signalerzeugung prüfen, ob die Digitalsignal-Erzeugungseinheit (DSO) und die Treiberstufe (DR) richtig funktionieren. Des Weiteren können verschiedene sicherheitsrelevante Konfigurationen eines möglichen nachfolgenden Übertragungskanals simuliert werden und die Simulationsergebnisse bewertet werden.

Sind jedoch alle Prüfungen im zweiten Testzustand (2.TZ) erfolgreich verlaufen, so wechselt das vorgeschlagene Messsystem (SS) in den ersten Testzustand (1.TZ). Hierdurch wird der interne Signalpfad des vorgeschlagenen Messsystems (SS) nun so modifiziert, dass er der Fig. 3 entspricht. Der Signalpfad umfass somit nun auch die Messeinheit (TR), also typischerweise den Ultraschalltransducer (TR), und den Messkanal (CN).

Die Digitalsignal-Erzeugungseinheit (DSO) erzeugt nun Prüfsignale und Prüfmuster, die nach Durchlaufen des Signalpfades bis zur Messeinheit (TR), also dem Ultraschalltransducer (TR), mit dieser wechselwirken. Das Antwortsignal der Messeinheit (TR), also des Ultraschalltransducers (TR), wird in den rücklaufenden Signalpfad eingespeist und nach dem Durchlaufen dieses Signalpfades durch den digitalen Eingangsschaltkreis (DSI) bewertet.

Darüber hinaus, ist es sinnvoll, gerade in diesem ersten Testzustand (1.TZ), die Signale der Messeinheit (TR), also des Ultraschalltransducers (TR), beispielsweise durch Komparatoren oder andere Vorrichtungen zu überwachen. Auch hier kann die Digitalsignal-Erzeugungseinheit (DSO) besonders kritische Prüfsignale und Prüfmuster für besonders sicherheitsrelevante Fälle erzeugen. Tritt hierbei ein Fehler auf, so wechselt das vorgeschlagene Messsystem wieder in einen Fehlerzustand (FZ). Die Prüfungen können beispielsweise Amplituden, Amplitudendifferenzen (mit und ohne Phasenverschiebung) und Signalanteile wie z.B. Oberwellenanteile umfassen.

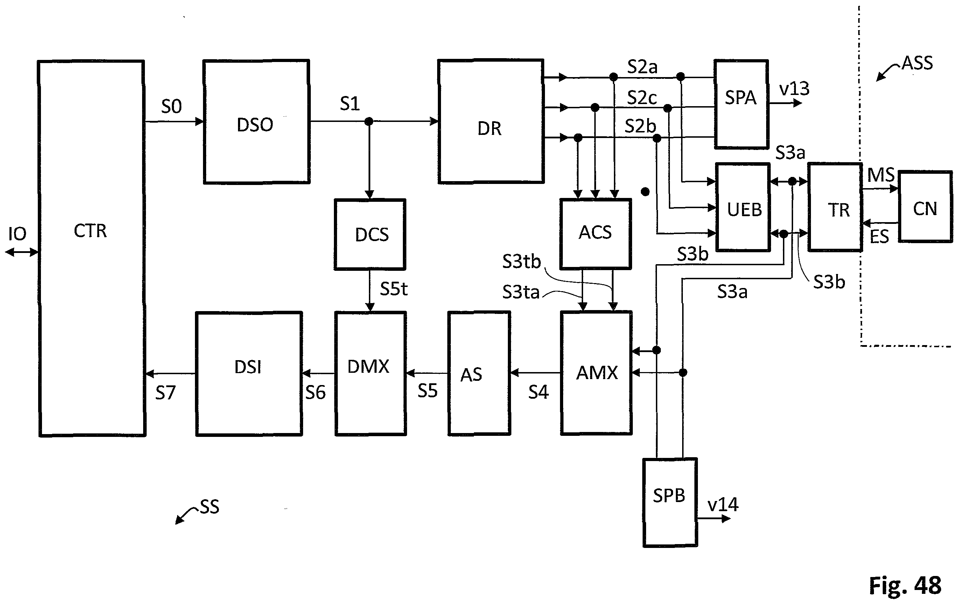

Fig. 48 entspricht weitestgehend der Fig. 8 mit dem Unterschied, dass Fig. 48 nicht die Komparatoren (C1, C2, C3) und den Differenzverstärker (D1) aufweist. Diese könne aber mit der Fig. 48 kombiniert werden. In der Fig. 48 wird ausgenutzt, dass in der Regel die Messeinheit (TR) also der Ultraschalltransducer (TR), und der Übertrager (UEB) symmetrisch ausgeführt werden. Diese Symmetrie wird in der Realität nicht perfekt erreicht, weshalb der Symmetrievergleich mit einem Schwellwert versehen werden muss.

In der Fig. 48 ist daher eine erste Symmetrieprüfvorrichtung (SPA) vorgesehen, die die Symmetrie von zwei oder mehreren Teilsignalen (S2a, S2b, S2c) des zweiten analogen Signals (S2) überprüft und ein entsprechendes dreizehntes Vergleichsergebnissignal (v13) in Abhängigkeit von dem Ergebnis dieses Vergleichs erzeugt. Bevorzugt führt die erste Symmetrieprüfvorrichtung (SPA) hierbei interne Phasenverschiebungen in der Art durch, dass die sich ergebenden verschobenen Teilsignale übereinstimmen sollten. Des Weiteren ist in der Fig. 48 eine zweite Symmetrieprüfvorrichtung (SPB) vorgesehen, die die Symmetrie von zwei (oder gegebenenfalls hier nicht behandelten mehreren) Teilsignalen (S3a, S3b) des dritten analogen Signals (S3) überprüft und ein entsprechendes vierzehntes Vergleichsergebnissignal (v14) in Abhängigkeit von dem Ergebnis dieses Vergleichs erzeugt. Bevorzugt führt die zweite Symmetrieprüfvorrichtung (SPB) hierbei ebenfalls gegebenenfalls interne Phasenverschiebungen in der Art durch, dass die sich ergebenden verschobenen Teilsignale übereinstimmen sollten. Bevorzugt findet diese Prüfung nur in der Sendephase (SP) statt. Eine Phasenverschiebung von 180° entspricht dabei einer Inversion z.B. durch einen invertierenden Verstärker mit Verstärkung -1. Insofern ist ein solcher invertierender Verstärker auch ein Phasenschieber im Sinne dieser Offenlegung, wenn eine Phasenverschiebung von 180° benötigt wird.

Fig. 49 zeigt die Vorrichtung entsprechend Fig. 48 mit konkreter beispielhafter Ausführung einer Symmetrieprüfung für die Sekundärseite des Übertragers (UEB). Die zweite Symmetrieprüfvorrichtung (SPB) ist mit dem ersten Teilsignal (S3a) des dritten analogen Signals (S3) und dem zweiten Teilsignal (S3b) des dritten analogen Signals (S3) verbunden. Voraussetzung für den Einsatz dieser zweiten Symmetrieprüfvorrichtung (SPB) ist, dass zum Ersten der Signalpfadteil aus Übertrager (UEB), Ultraschall-Transducer (TR) und Ultraschallkanal (CN) absolut symmetrisch aufgebaut ist und zum Zweiten symmetrisch durch den analogen Multiplexer (AMX) und den analogen Eingangsschaltkreis (AS) belastet wird und zum Dritten durch die Treiberstufe (DR) und das erste Teilsignal (S2a) des zweiten analogen Signals (S2), das zweite Teilsignal (S2b) des zweiten analogen Signals (S2) und das dritte Teilsignal (S2c) des zweiten analogen Signals (S2) symmetrisch angesteuert wird. Eine bevorzugte beispielhafte symmetrische Ansteuerung durch diese Teilsignale des zweiten analogen Signals (S2) kann der Fig. 12 entnommen werden. Die zweite Symmetrieprüfvorrichtung (SPB) ist mit einem gestrichelten Kasten in der Fig. 49 markiert. Sie umfasst einen ersten Phasenschieber (S&H_Ba), der bevorzugt als Halteschaltung ausgeführt ist, und zu einem ersten Zeitpunkt (Z1) den Momentanwert des ersten Teilsignals (S3a) des dritten analogen Signals (S3) zwischenspeichert und als erstes Teilsignal (S3am) des dritten zwischengespeicherten Signals (S3m) ausgibt. Sie umfasst einen zweiten Phasenschieber (S&H_Bb), der ebenfalls bevorzugt als Halteschaltung ausgeführt ist, und zu einem zweiten Zeitpunkt (Z2) den Momentanwert des zweiten Teilsignals (S3b) des dritten analogen Signals (S3) zwischenspeichert und als zweites Teilsignal (S3bm) des dritten zwischengespeicherten Signals (S3m) ausgibt. Es wird nun vorausgesetzt, dass das erste Teilsignal (S3a) des dritten analogen Signals (S3) und das zweite Teilsignal (S3b) des dritten analogen Signals (S3) periodisch sind und eine Schwingungsperiode (T) aufweisen, wobei das erste Teilsignal (S3a) des dritten analogen Signals (S3) gegenüber dem zweiten Teilsignal (S3b) des dritten analogen Signals (S3) um 180° (=π) phasenverschoben ist, also dessen Inversion ist. Der zeitliche Abstand zwischen dem ersten Zeitpunkt (Z1) und dem zweiten Zeitpunkt (Z2) so gewählt wird, dass er dem Wert (n+0,5)^{∗}T entspricht, wobei n eine ganze positive Zahl oder Null ist. Ein fünfter Differenzverstärker (D5) bildet aus dem ersten Teilsignal (S3am) des dritten zwischengespeicherten Signals (S3m) und dem zweiten Teilsignal (S3bm) des dritten zwischengespeicherten Signals (S3m) das fünfte Unterschiedssignal (d5). Ein zweiter Integrator (INT2), der auch ein Tiefpassfilter sein kann, integriert das fünfte Unterschiedssignal (d5) zu einem integrierten fünften Unterschiedssignal (d5i). Bevorzugt wird der zweite Integrator (INT2) nach m Taktperioden (T) wieder gelöscht, wobei m eine ganze positive Zahl ist. Bevorzugt ist das fünfte Unterschiedssignal (d5) gleichgerichtet, sodass nur die Amplitude des fünften Unterschiedssignals (d5) integriert wird. Das integrierte fünfte Unterschiedssignal (d5i) ist dann ein Maß für die Asymmetrie innerhalb der m Taktperioden (T). Ein vierzehnter Komparator (C14) vergleicht das integrierte fünfte Unterschiedssignal (d5i) mit einem vierzehnten Referenzwert (Ref14) und erzeugt das vierzehnte Vergleichsergebnissignal (v14). Dieses wird typischerweise von dem digitalen Eingangsschaltkreis (DSI) und/oder der Steuereinrichtung (CTR) ausgewertet, die gegebenenfalls eine Fehlermeldung erzeugen. Bevorzugt findet diese Prüfung nur in der Sendephase (SP) statt.

Sofern das integrierte fünfte Unterschiedssignal (d5i) ein Mindestmaß für die Symmetrie darstellen soll, muss das fünfte Unterschiedssignal (d5i) mit -1 multipliziert durch den fünften Differenzverstärker (D5) ausgegeben werden und der zweite Integrator (INT2) nach m Taktperioden (T) nicht wieder gelöscht, sondern auf einen positiven Vorladewert vorgeladen werden. Unterschreitet das integrierte fünfte Unterschiedssignal (d5i) den vierzehnten Referenzwert (Ref14), so erzeugt der vierzehnte Komparator (C14) das vierzehnte Vergleichsergebnissignal (v14), um eine nicht ausreichende Symmetrie zu signalisieren.

Fig. 50 zeigt die Vorrichtung entsprechend Fig. 48 mit konkreter Ausführung einer Symmetrieprüfung für die Primärseite des Übertragers (UEB). Die erste Symmetrieprüfvorrichtung (SPA) ist mit dem ersten Teilsignal (S2a) des zweiten analogen Signals (S2) und dem zweiten Teilsignal (S2b) des zweiten analogen Signals (S2) verbunden. Voraussetzung für den Einsatz dieser ersten Symmetrieprüfvorrichtung (SPA) ist, dass zum Ersten der Signalpfadteil aus Übertrager (UEB), Ultraschall-Transducer (TR) und Ultraschallkanal (CN) absolut symmetrisch aufgebaut ist und zum Zweiten symmetrisch durch den analogen Multiplexer (AMX) und den analogen Eingangsschaltkreis (AS) belastet wird und zum Dritten durch die Treiberstufe (DR) und das erste Teilsignal (S2a) des zweiten analogen Signals (S2), das zweite Teilsignal (S2b) des zweiten analogen Signals (S2) und das dritte Teilsignal (S2c) des zweiten analogen Signals (S2) im Normalfall symmetrisch angesteuert wird. Eine bevorzugte beispielhafte symmetrische Ansteuerung durch diese Teilsignale des zweiten analogen Signals (S2) kann der Fig. 12 entnommen werden. Die erste Symmetrieprüfvorrichtung (SPA) ist mit einem gestrichelten Kasten in der Fig. 50 markiert. Sie umfasst einen ersten Phasenschieber (S&H_Aa), der bevorzugt als Halteschaltung ausgeführt ist, und zu einem ersten Zeitpunkt (Z1) den Momentanwert des ersten Teilsignals (S2a) des zweiten analogen Signals (S2) zwischenspeichert und als erstes Teilsignal (S2am) des zweiten zwischengespeicherten Signals (S2m) ausgibt. Sie umfasst einen zweiten Phasenschieber (S&H_Ab), der ebenfalls bevorzugt als Halteschaltung ausgeführt ist, und zu einem zweiten Zeitpunkt (Z2) den Momentanwert des zweiten Teilsignals (S2b) des zweiten analogen Signals (S2) zwischenspeichert und als zweites Teilsignal (S2bm) des zweiten zwischengespeicherten Signals (S2m) ausgibt. Es wird nun vorausgesetzt, dass das erste Teilsignal (S2a) des zweiten analogen Signals (S2) und das zweite Teilsignal (S2b) des zweiten analogen Signals (S2) periodisch sind und eine Schwingungsperiode (T) aufweisen, wobei das erste Teilsignal (S2a) des zweiten analogen Signals (S2) gegenüber dem zweiten Teilsignal (S2b) des zweiten analogen Signals (S2) um 180° (=π) phasenverschoben ist, also dessen Inversion ist. Der zeitliche Abstand zwischen dem ersten Zeitpunkt (Z1) und dem zweiten Zeitpunkt (Z2) so gewählt wird, dass er dem Wert (n+0,5)^{∗}T entspricht, wobei n eine ganze positive Zahl oder Null ist. Ein sechster Differenzverstärker (D6) bildet aus dem ersten Teilsignal (S2am) des zweiten zwischengespeicherten Signals (S2m) und dem zweiten Teilsignal (S2bm) des zweiten zwischengespeicherten Signals (S2m) das sechste Unterschiedssignal (d6). Ein erster Integrator (INT1), der auch ein Tiefpassfilter sein kann, integriert das sechste Unterschiedssignal (d6) zu einem integrierten sechsten Unterschiedssignal (d6i). Bevorzugt wird der erste Integrator (INT1) nach m Taktperioden (T) wieder gelöscht, wobei m eine ganze positive Zahl ist. Bevorzugt ist das sechste Unterschiedssignal (d6) gleichgerichtet, sodass nur die Amplitude des sechsten Unterschiedssignals (d6) integriert wird. Das integrierte sechste Unterschiedssignal (d6i) ist dann ein Maß für die Asymmetrie innerhalb der m Taktperioden (T). Ein dreizehnter Komparator (C13) vergleicht das integrierte sechste Unterschiedssignal (d6i) mit einem dreizehnten Referenzwert (Ref13) und erzeugt das dreizehnte Vergleichsergebnissignal (v13). Dieses wird typischerweise von dem digitalen Eingangsschaltkreis (DSI) und/oder der Steuereinrichtung (CTR) ausgewertet, die gegebenenfalls eine Fehlermeldung erzeugen. Bevorzugt findet diese Prüfung nur in der Sendephase (SP) statt.

Sofern das integrierte sechste Unterschiedssignal (d6i) ein Mindestmaß für die Symmetrie darstellen soll, muss das sechste Unterschiedssignal (d6i) mit -1 multipliziert durch den sechsten Differenzverstärker (D6) ausgegeben werden und der erste Integrator (INT1) nach m Taktperioden (T) nicht wieder gelöscht, sondern auf einen positiven Vorladewert vorgeladen werden. Unterschreitet das integrierte sechste Unterschiedssignal (d6i) den dreizehnten Referenzwert (Ref13), so erzeugt der dreizehnte Komparator (C13) das dreizehnte Vergleichsergebnissignal (v13), um eine nicht ausreichende Symmetrie zu signalisieren.

Fig. 51 vergleicht beispielhaft das ungestörte dritte Teilsignal (S2c) des zweiten analogen Signals (S2) (siehe auch Fig. 11) mit dem gestörten dritten Teilsignal (S2cLC) des zweiten analogen Signals (S2) (siehe Fig. 34, dort mit Bezugszeichen S2c) bei einem Kondensatorabriss des Transducer-Kondensators (C_{TR}) und zeigt zwei beispielhafte Paare von Analysesignalen.

Es ist zu erkennen, dass die symmetrische Form des ungestörten dritten Teilsignals (S2c) des zweiten analogen Signals (S2) sich in eine mehr sägezahnförmige Form in Form des gestörten dritten Teilsignals (S2cLC) des zweiten analogen Signals (S2) durch den Abriss des Transducer-Kondensators (C_{TR}) wandelt. Offensichtlich besitzt das gestörte dritte Teilsignal (S2cLC) des zweiten analogen Signals (S2) eine Oberwelle. Die Grundidee zur Detektion dieses Fehlers ist daher, zwei Koeffizienten durch zeitabschnittsweise Bildung eines ersten Skalarprodukts zwischen einem geeigneten ersten internen Analysesignal (A_a) und dem zu analysierenden Signal (ZA) einerseits und durch zeitabschnittsweise Bildung eines zweiten Skalarprodukts zwischen einem geeigneten zweiten internen Analysesignal (A_a) und dem zu analysierenden Signal (ZA) andererseits ein erstes internes Koeffizientensignal (s3a) und ein zweites internes Koeffizientensignal (s3b) zu erzeugen und diese miteinander zu vergleichen und bei Abweichungen vom Erwartungswert ein internes Vergleichssignal (v_X) zu erzeugen, das dann zur Fehlermeldungserzeugung durch die Steuereinrichtung (CTR) und/oder den digitalen Empfangsschaltkreis (DSI) ausgewertet werden kann. Im konkreten Fall dieser Fig. 51 werden zwei mögliche Analysesignale zur Analyse des zweiten Teilsignals (S2c) des zweiten analogen Signals (S2) beispielhaft vorgeschlagen. Das erste Analysesignalpaar besteht aus zwei digitalen Signalen, die bevorzugt und besonders einfach in der Digitalsignal-Erzeugungseinheit (DSO) erzeugt werden können. Es handelt sich um ein erstes beispielhaftes Analysesignal (A2c_a) für die Koeffizientenüberwachung in der Koeffizientenüberwachungsteilvorrichtung (KUE2c) für das dritte Teilsignal (S2c) des zweiten analogen Signals (S2) und ein zweites beispielhaftes Analysesignal (A2c_b) für die Koeffizientenüberwachung in der Koeffizientenüberwachungsteilvorrichtung (KUE2c) für das dritte Teilsignal (S2c) des zweiten analogen Signals (S2). Das erste beispielhafte Analysesignal (A2c_a) ähnelt in diesem Beispiel mehr dem gestörten dritten Teilsignal (S2cLC) des zweiten analogen Signals (S2). Das zweite beispielhafte Analysesignal (A2c_b) ähnelt in diesem Beispiel mehr dem ungestörten dritten Teilsignal (S2c) des zweiten analogen Signals (S2). In diesem Beispiel ist das erste beispielhafte Analysesignal (A2c_a) gegenüber dem zweiten beispielhaften Analysesignal (A2c_b) um -90° phasenvershoben. Es handelt sich in diesem Beispiel also um sinus- und cosinus-ähnliche Signale. Bei der Ausarbeitung des Vorschlags wurde erkannt, dass ein Abriss des Transducer-Kondensators (C_{TR}) die Konfiguration der Eigenschwingungsfrequenzen des an sich immer noch symmetrischen Systems aus Übertrager (UEB), Transducer-Widerstand (RTR), "Transducer-Kondensators (C_{TR})" und innerem Transducer (TRi) so ändert, dass nicht mehr nur die Grundschwingung vorliegt, sondern dass dann auch andere Schwingungsmodi angeregt werden. Würden sinus- und cosinus förmige Signale angewendet, so würde das erste interne Koeffizientensignal (s3a) und das zweite interne Koeffizientensignal (s3b) den Fourier-Koeffizienten entsprechen.

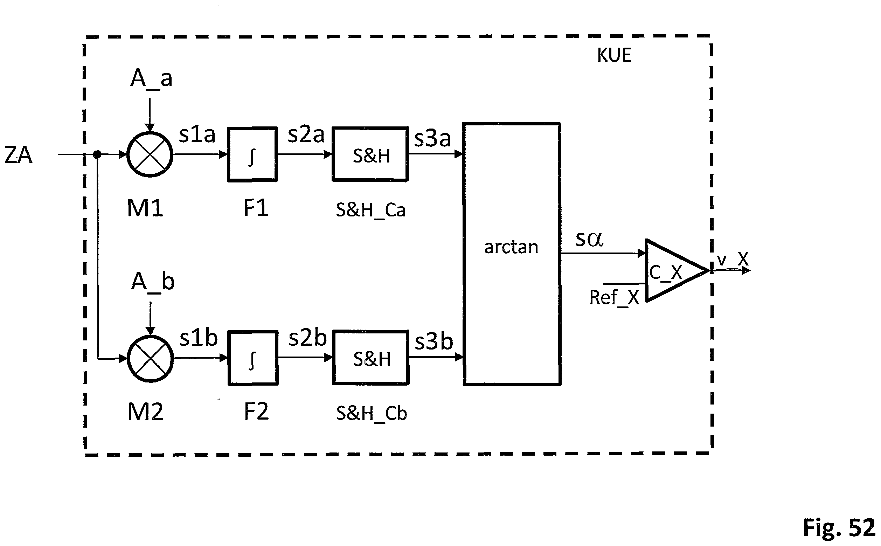

Des Weiteren zeigt die Fig. 52 ein alternatives Paar aus möglichen Analysesignalen. Es handelt sich um ein alternatives erstes beispielhaftes Analysesignal (A2c_a') für die Koeffizientenüberwachung in der Koeffizientenüberwachungsteilvorrichtung (KUE2c) für das dritte Teilsignal (S2c) des zweiten analogen Signals (S2) und ein alternatives zweites beispielhaftes Analysesignal (A2c_b') für die Koeffizientenüberwachung in der Koeffizientenüberwachungsteilvorrichtung (KUE2c) für das dritte Teilsignal (S2c) des zweiten analogen Signals (S2). Das alternative erste beispielhafte Analysesignal (A2c_a') ist in diesem Beispiel ein Sägezahnsignal und ähnelt damit mehr dem gestörten dritten Teilsignal (S2cLC) des zweiten analogen Signals (S2). Das alternative zweite beispielhafte Analysesignal (A2c_b') ist in diesem Beispiel ein Dreieckssignal und ähnelt damit in diesem Beispiel mehr dem ungestörten dritten Teilsignal (S2c) des zweiten analogen Signals (S2). Im Gegensatz zum vorhergehenden Beispiel ist nun jedoch bezüglich der in Fig. 52 vorgeschlagenen Implementierung der Skalarprodukte das alternative erste beispielhafte Analysesignal (A2c_a') für die Koeffizientenüberwachung in der Koeffizientenüberwachungsteilvorrichtung (KUE2c) für das dritte Teilsignal (S2c) des zweiten analogen Signals (S2) und das alternative zweite beispielhafte Analysesignal (A2c_b') für die Koeffizientenüberwachung in der Koeffizientenüberwachungsteilvorrichtung (KUE2c) für das dritte Teilsignal (S2c) des zweiten analogen Signals (S2) nicht mehr orthogonal zueinander. Vielmehr enthalten sie bezüglich dieses Skalarprodukts Anteile voneinander. Die Analysesignale können auch als Aneinanderreihung analysesignalspezifischer Wavelets verstanden werden.

Das alternative erste beispielhafte Analysesignal (A2c_a') für die Koeffizientenüberwachung in der Koeffizientenüberwachungsteilvorrichtung (KUE2c) für das dritte Teilsignal (S2c) des zweiten analogen Signals (S2) besteht dann aus einer zeitlichen Aneinanderreihung einzelner sägezahnförmiger Wavelets, wobei ein Wavelet einen Zahn umfassen würde.

Das alternative zweite beispielhafte Analysesignal (A2c_b') für die Koeffizientenüberwachung in der Koeffizientenüberwachungsteilvorrichtung (KUE2c) für das dritte Teilsignal (S2c) des zweiten analogen Signals (S2) besteht dann aus einer zeitlichen Aneinanderreihung einzelner dreiecksförmiger Wavelets, wobei ein Wavelet ein gleichschenkeliges Dreieck umfassen würde.

Je nach Analysezweck können auch andere Wavelets gewählt werden. Da Fehler an dem Übertrager (UEB), dem Transducer-Widerstand (R_{TR}), der Transducer-Kapazität (C_{TR}) und dem inneren Transducer (TRi) nicht immer die Symmetrie zerstören, kann auf diese Weise aber die Veränderung der spektralen Eigenschaften der Zusammenstellung dieser Komponenten überwacht werden.

Somit ist es u.a. möglich, weitestgehend symmetrische Übertragerkurzschlüsse des Übertragers (UEB), Abweichungen des effektiven Widerstands des Transducer-Widerstands (R_{TR}), Änderungen der effektiven Kapazität der Transducer-Kapazität (C_{TR}) und Änderungen der Impedanz des inneren Ultraschalltransducers (TRi) sicher zu detektieren, wenn sie sich auf relevante spektrale Eigenschaften der Zusammenstellung dieser Komponenten auswirken.

Fig. 52 zeigt beispielhaft eine mögliche innere Struktur einer analogen Koeffizientenüberwachungsteilvorrichtung (KUE). Andere Implementationen sind möglich. Das zu analysierende Signal (ZA) wird in diesem Beispiel durch den ersten Multiplizierer (M1) mit dem ersten internen Analysesignal (A_a) um ersten Filtereingangssignal (s1a) und im zweiten Multiplizierer (M2) zum zweiten Filtereingangssignal (s1b) multipliziert. Das erste Analysesignal (A_a) kann beispielsweise dem normalen Betriebsfall nahekommen, während das zweite Analysesignal (A_b) beispielsweise einem fehlerhaften Betriebsfall nahekommen kann. Das erste Filtereingangssignal (s1a) wird durch den ersten Filter (F1) zum ersten Filterausgangssignal (s2a) gefiltert. Der erste Filter (F1) ist bevorzugt ein Integrator oder Tiefpassfilter. Das zweite Filtereingangssignal (s1b) wird durch den zweiten Filter (F2) zum zweiten Filterausgangssignal (s2b) gefiltert. Der erste Filter (F1) ist bevorzugt ein Integrator oder Tiefpassfilter. Die erste interne Sample-and-Hold-Einheit (S&H_Ca) tastet am zeitlichen Ende (Fig. 51: beispielsweise Zeitpunkte z1, z2, z3, z4) einer oder mehrerer vollständiger Perioden T des zu analysierenden Signals (ZA) (siehe Fig. 51) das erste interne Filterausgangssignal (S2a) ab und bildet so das erste interne Koeffizientensignal (S3a). Die zweite interne Sample-and-Hold-Einheit (S&H_Cb) tastet am zeitlichen Ende (Fig. 51: beispielsweise Zeitpunkte z1, z2, z3, z4) einer oder mehrerer vollständiger Perioden T des zu analysierenden Signals (ZA) (siehe Fig. 51) das zweite interne Filterausgangssignal (S2b) ab und bildet so das zweite interne Koeffizientensignal (S3b).

Diese Abtastungen erfolgen bevorzugt nur in der Sendephase (SP) oder zu ausgewählten Zeiträumen innerhalb der Sendephase (SP). Die Steuerung der ersten internen Sample-and-Hold-Einheit (S&H_Ca) und der zweiten internen Sample-and-Hold-Einheit (S&H_Cb) erfolgt bevorzugt durch die Digitalsignal-Erzeugungseinheit (DSO).

Die Winkelberechnungseinheit (arctan) erzeugt aus dem ersten internen Koeffizientensignal (s3a) und dem zweiten internen Koeffizientensignal (s3b) das Winkelsignal (sα). Bevorzugt stellt das Winkelsignal (sα) den arctan oder den arccot des Verhältnisses der Pegel des ersten internen Koeffizientensignals (s3a) und des zweiten internen Koeffizientensignals (s3b) dar. Näherungen und andere Auswertungen (z.B. einfache Division etc.) sind denkbar.

Der interne Komparator (C_X) vergleicht den Pegel des Winkelsignals (sα) mit dem internen Referenzwert (Ref_X). In Abhängigkeit von dem Ergebnis dieses Vergleiches erzeugt der interne Komparator (C_X) ein internes Vergleichsergebnissignal (v_X).

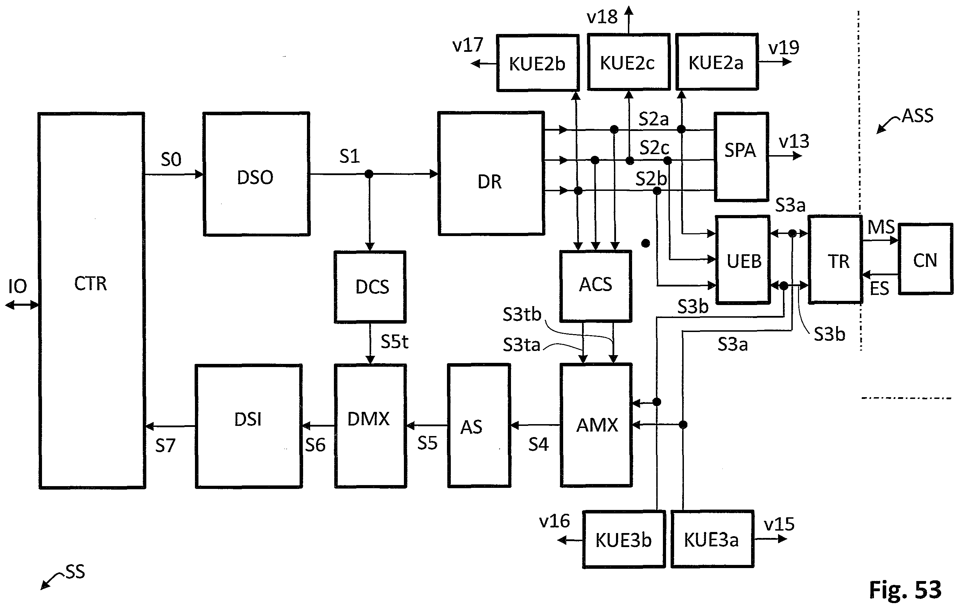

Die Fig. 52 stellt eine beispielhafte Struktur für die Realisierung der entsprechenden Koeffizientenüberwachungsteilvorrichtungen mit den Bezugszeichen KUE2a, KUE2b, KUE2c, KUE3a und KUE3b in der Fig. 53 dar. Andere Realisierungen, insbesondere teil- und ganz digitale Realisierungen z.B. als Programm in Signalprozessoren sind denkbar.

Natürlich ist es denkbar, mehr als zwei Analysesignale (A_a, A-b) zu verwenden und über dementsprechende mehr als zwei parallele Signalpfade mehr als zwei Koeffizientensignale zu erzeugen und dementsprechend mehr Vergleiche durzuführen, was zu wesentlich mehr Vergleichsergebnissignalen führt, die wieder von der Steuereinrichtung (CTR) und/oder dem digitalen Empfangsschaltkreis (DSI) ausgewertet werden können und für die Erzeugung von Fehlermeldungen genutzt werden können.

Fig. 53 entspricht der Fig. 8, wobei die Pegelüberwachungen nicht eingezeichnet sind. Stattdessen sind mögliche Koeffizientenüberwachungsteilvorrichtungen mit den Bezugszeichen KUE2a, KUE2b, KUE2c, KUE3a und KUE3b eingezeichnet. Je nach überwachtem Signal werden verschiedene Vergleichsergebnissignale (v15, v16, v17, v18, v19) erzeugt, die bevorzugt durch den digitalen Eingangsschaltkreis (DSI) und/oder die (System-)Steuereinrichtung (CTR) ausgewertet werden, die gegebenenfalls eine Fehlermeldung auslösen.

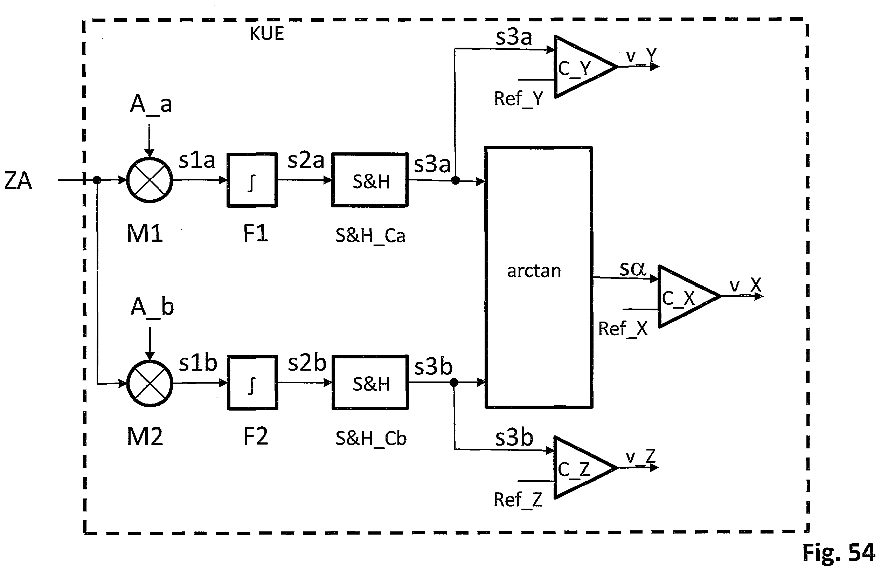

Fig. 54 entspricht der Fig. 52, wobei nun zwei Komparatoren zur zusätzlichen Überwachung der beiden internen Koeffizientensignale, für das erste interne Koeffizientensignal (s3a) und das zweite interne Koeffizientensignal (s3b) vorgesehen sind. Es werden nun drei Vergleichsergebnissignale (V_X, V_Y, V_Z) anstelle nur eines Vergleichsergebnissignals (V_X) erzeugt. Fig. 54 zeigt somit beispielhaft eine weitere mögliche innere Struktur einer analogen Koeffizientenüberwachungsteilvorrichtung (KUE).

Ein zweiter interner Komparator (C_Y) vergleicht das erste interne Koeffizientensignal (s3a) mit einem zweiten internen Referenzwert (R_Y). In Abhängigkeit vom dem Vergleichsergebnis erzeugt der zweite interne Komparator (C_Y) ein zweites internes Vergleichsergebnissignal (V_Y), das wie zuvor typischerweise durch die Steuereinrichtung (CTR) und/ oder den digitalen Eingangsschaltkreis (DSI) ausgewertet wird, um gegebenenfalls eine Fehlermeldung zu erzeugen.

Ein dritter interner Komparator (C_Z) vergleicht das zweite interne Koeffizientensignal (s3b) mit einem dritten internen Referenzwert (R_Z). In Abhängigkeit vom dem Vergleichsergebnis erzeugt der dritte interne Komparator (C_Z) ein drittes internes Vergleichsergebnissignal (V_Z), das wie zuvor typischerweise durch die Steuereinrichtung (CTR) und/ oder den digitalen Eingangsschaltkreis (DSI) ausgewertet wird, um gegebenenfalls eine Fehlermeldung zu erzeugen.

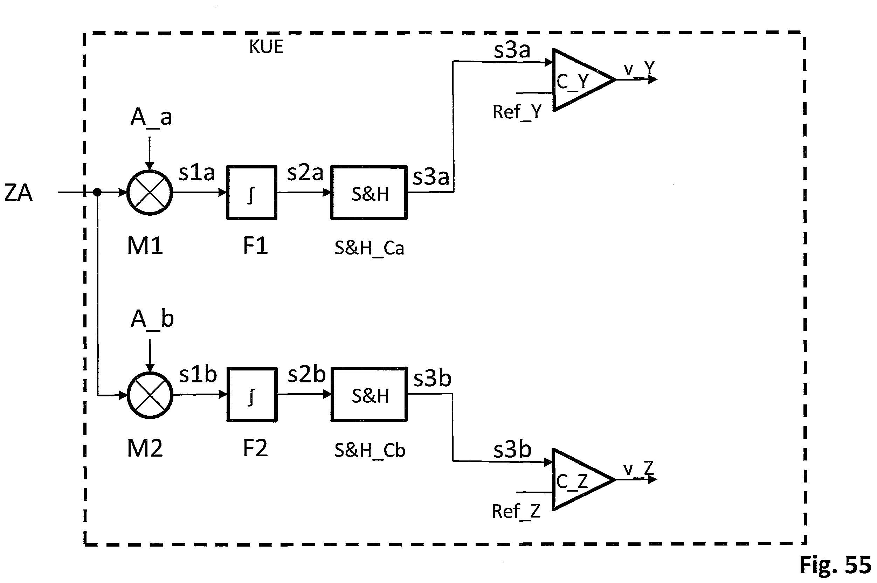

Fig. 55 entspricht der Fig. 54, wobei nun das Verhältnis der beiden internen Koeffizientensignale nicht überwacht wird. Es werden nun nur zwei Vergleichsergebnissignale (V_Y, V_Z) erzeugt. Fig. 55 zeigt somit beispielhaft eine weitere mögliche innere Struktur einer analogen Koeffizientenüberwachungsteilvorrichtung (KUE). Die Funktion der verbliebenen Schaltungsteile wurde in den Beschreibungen der Fign. 52 und 54 bereits beschrieben.

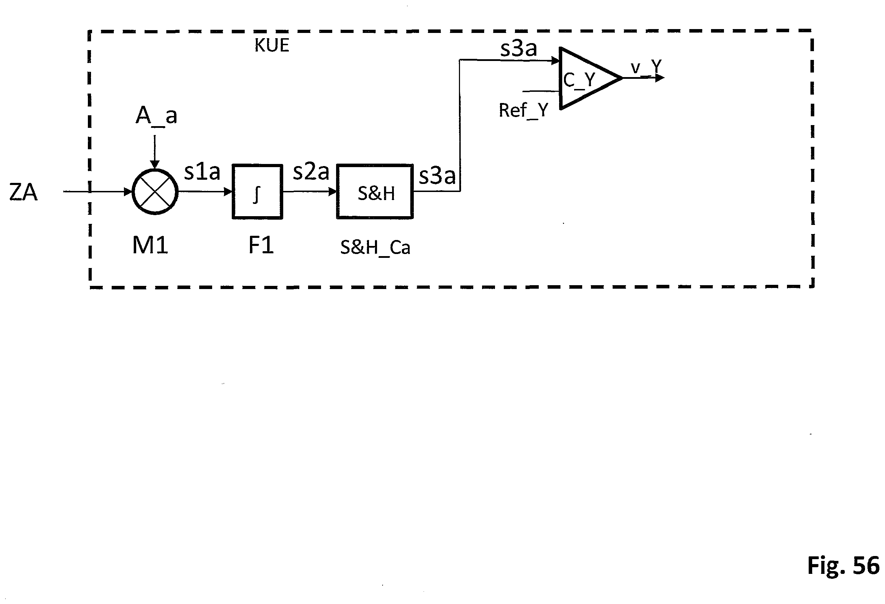

Fig. 56 entspricht der Fig. 55, wobei nun nur ein internes Koeffizientensignal (hier s3a) überwacht wird. Es wird nun nur ein Vergleichsergebnissignal (V_Y) erzeugt. Dieses zweite Vergleichsergebnissignal (V_Y) überwacht jedoch nur den absoluten Pegel des ersten internen Koeffizientensignals (s3a), was einer Überwachung der Grundwellen oder Oberwellenamplitude entspricht. In Fig. 52 wurde das Verhältnis zweier Koeffizientensignale überwacht. Fig. 56 zeigt somit beispielhaft eine weitere mögliche innere Struktur einer analogen Koeffizientenüberwachungsteilvorrichtung (KUE). Die Funktion der verbliebenen Schaltungsteile wurde in den Beschreibungen der Fign. 52 und 54 bereits beschrieben.

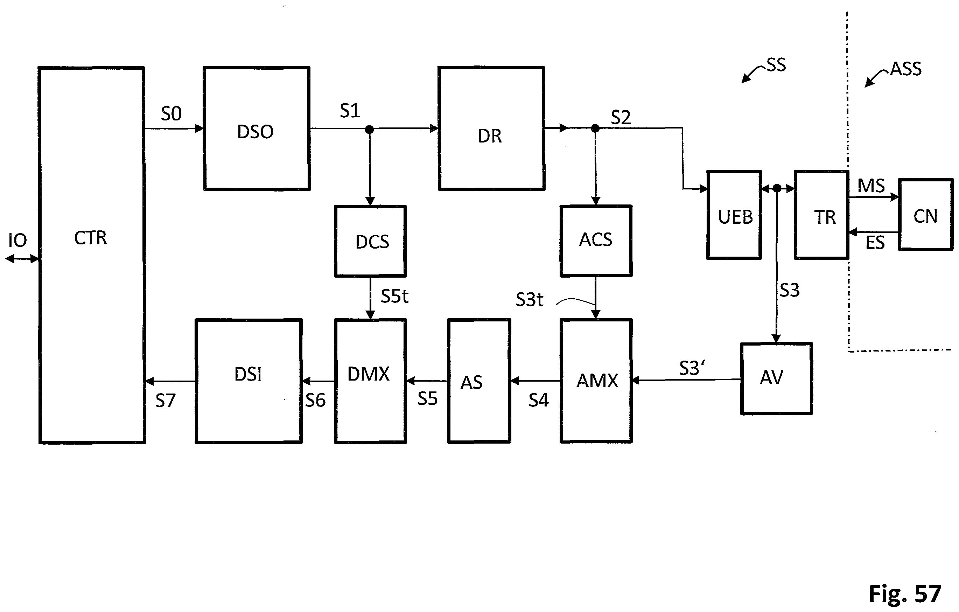

Die Fig. 57 entspricht der Fig. 2 mit dem Unterschied, dass das dritte analoge Signal (S3) vor dem analogen Multiplexer (AMX) durch ein analoges Filter oder einen analogen Verstärker (AV) in das dritte analoge Signal (S3) und das verstärkte dritte analoge Signal (S3') aufgespalten ist. Dies hat den Vorteil, dass eine Übersteuerung vermieden wird. Der Nachteil ist, dass im zweiten Testzustand das dritte analoge Testsignal (S3t) über den analogen Multiplexer (AMX) erst nach dem analogen Filter oder analogen Verstärker (AV) in den Signalpfad zurückgespeist wird. Dies hat zur Folge, dass das analoge Filter oder der analoge Verstärker (AV) nicht mitgetestet werden. Natürlich könnet man die Gesamtheit aus analogem Eingangsschaltkreis (AS), analogem Multiplexer (AMX) und analogem Filter oder analogem Verstärker (AV) auch als einen gemeinsamen analogen Eingangsschaltkreis mit zwei Eingängen auffassen, wie er zuvor bereits erwähnt wurde. Sollte die Amplitude des zweiten analogen Signals (S2) klein genug sein, sodass der Eingang des analogen Multiplexers (AMX) und der Eingang des analogen Eingangsschaltkreises (AS) durch direktes Anlegen des zweiten analogen Signals (S2) nicht übersteuert werden, kann gegebenenfalls in dieser Konfiguration auch auf die analoge Kanalsimulationseinheit (ACS verzichtet werden. Somit ergeben sich insgesamt mindestens drei Möglichkeiten, um eine Übersteuerung des analogen Signalpfads im zweiten Testzustand zu verhindern:

Umkonfiguration der Treiberstufe (DR) im zweiten Testzustand vorzugsweise durch die Steuereinrichtung (CTR) in der Art, dass die Ausgangsamplitude der Treiberstufe (DR) an die maximale Eingangsamplitude des analogen Multiplexers (AMX) und die maximale Eingangsamplitude des analogen Eingangsschaltkreises (AS) und angepasst wird. In dem Fall kann u.U. die analoge Kanalsimulationseinheit durch Drahtbrücken ersetzt werden.

Dämpfung des zweiten Analogen Signals (S2) zum dritten analogen Testsignal (S3t) in der analogen Kanalsimulationseinheit in der Art, dass die Ausgangsamplitude der Treiberstufe (DR) an die maximale Eingangsamplitude des analogen Multiplexers (AMX) und die maximale Eingangsamplitude des analogen Eingangsschaltkreises (AS) angepasst wird.

Aussparen einer Vorstufe des analogen Eingangsschaltkreises (AS) - im Beispiel der Fig. 57 eines analogen Filters oder analogen Verstärkers (AV) und Einspeisung des dritten analogen Testsignals (S3t) oder sogar Direkteinspeisung des zweiten analogen Signals (S2) über den analogen Multiplexer (AMX) in den anlogen Eingangsschaltkreis (AS). Hierbei ist wieder darauf zu achten, dass die Ausgangsamplitude der Treiberstufe (DR) an die maximale Eingangsamplitude des analogen Multiplexers (AMX) und die maximale Eingangsamplitude des analogen Eingangsschaltkreises (AS) und angepasst wird. In dem Fall kann u.U. die analoge Kanalsimulationseinheit durch Drahtbrücken ersetzt werden.

Die entsprechende Konfiguration des Messsystems (SS) wird vorzugsweise wieder durch die Steuereinrichtung (CTR) vorgenommen.

Zum Abschluss der Figurenbeschreibung sollte noch erwähnt werden, dass insbesondere die Maßnahmen der Fign. 6, 8, 9, 10, 48, 49, 50 und 53 miteinander kombiniert werden können. Auch wird der Fachmann aus diesen Maßnahmen im konkreten Anwendungsfall diejenigen auswählen, die dem beabsichtigten Anwendungszweck am nächsten kommen, um nicht alle Maßnahmen zur Fehlererkennung durchführen zu müssen.

### Glossar

### Frequenz-Sweep

Unter einem Frequenz-Sweep im Sinne dieser Offenlegung wird ein Vorgang verstanden, bei dem die Frequenz eines ersten digitalen Signals (S1) oder die Frequenz eines zweiten analogen Signals (S2) oder die Frequenz eines Ausgangssignals (MS) zu einem ersten Zeitpunkt eine Startfrequenz aufweist und zu einem zweiten Zeitpunkt eine Endfrequenz aufweist. Bevorzugt durchläuft die Frequenz zwischen dem ersten und dem zweiten Zeitpunkt alle zwischen der Startfrequenz und der Endfrequenz liegenden Frequenzen vorzugsweise streng monoton, zumindest aber monoton.

### Ultraschalltransducer

Ein Ultraschalltransducer im Sinne dieser Offenlegung setzt sich zusammen aus dem optionalen (bevorzugt aber vorhandenen) Transducer-Widerstand (R_{TR}), der optionalen (bevorzugt aber vorhandenen) Transducer-Kapazität (C_{TR}) und dem inneren Ultraschalltransducer (TRi), der das eigentliche Schwingelement, dessen Gehäuse und die Kontakte umfasst. Ein Ultraschalltransducer ist in der Lage, Ultraschallsignale vorzugsweise im Zeitmultiplex auszusenden und zu empfangen.

### Testfall / Prüffall

Unter einem Testfall bzw. Prüffall wird im Sinne dieser Offenlegung eine vorbestimmte Konfiguration des Signalpfades und aller seiner Komponenten verstanden. Die Konfiguration erfolgt bevorzugt durch die Steuereinrichtung (CTR). Die Stimulation dieses dermaßen vorbestimmten Signalpfades wird im Wesentlichen durch vorbestimmte Signale der Digitalsignal-Erzeugungseinheit (DSO) vorgenommen. Dabei werden vorbestimme Signale innerhalb des Signalpfads durch vorbestimmte Überwachungsvorrichtungen (z.B. Differenzverstärker und/oder Komparatoren) überwacht und die Antwort des Signalpfads auf einen solchen Stimulus testfallspezifisch bevorzugt durch den digitalen Empfangsschaltkreis (DSO) oder die (System-)Steuereinrichtung (CTR) ausgewertet.

### Testzustand

Unter einem Testzustand wird ein Zustand des Messsystems (SS) verstanden, der der Überprüfung des Messsystems (SS) dient und der nicht der Betriebszustand ist.

### Signalkette

Unter Signalkette wird die Weitergabe eines Signals innerhalb einer Kette von Vorrichtungsteilen des Messsystems (SS) entlang des Signalpfads verstanden. (siehe auch Fign. 3, 4 und 5)

### Digitaler Teil der Signalkette

Unter dem digitalen Teil der Signalkette werden die Schaltungsteile verstanden, die vorwiegend in digitaler Schaltungstechnik ausgeführt sind. Im vorgelegten Beispiel sind dies die Digitalsignal-Erzeugungseinheit (DSO), der digitale Multiplexer (DMX) und der digitale Eingangsschaltkreis (DSI). Die digitale Kanalsimulationseinheit (DCS) kann im dritten Testzustand als Teil der digitalen Signalkette aufgefasst werden.

### Analoger Teil der Signalkette

Unter dem analogen Teil der Signalkette werden die Schaltungsteile verstanden, die vorwiegend in analoger Schaltungstechnik ausgeführt sind. Im vorgelegten Beispiel sind dies die Treiberstufe (DR), der analoge Multiplexer (AMX) und der analoge Eingangsschaltkreis (AS). Die analoge Kanalsimulationseinheit (ACS) kann im zweiten Testzustand als Teil der analogen Signalkette aufgefasst werden.

### Fehlermeldungen

Im Sinne dieser Offenbarung sind Informationen über detektierte Fehler, die über entsprechende Vorrichtungsteile, z.B. Leitungen, übermittelt werden oder an vorbestimmten oder ermittelbaren Stellen in Vorrichtungsteilen bereitgestellt werden. Das Bereitstellen solcher Informationen ist ein Erzeugen im Sinne dieser Offenlegung.

### Dreieckssignal

Unter einem Dreieckssignal ist ein Signal mit einem zeitlichen Amplitudenverlauf zu verstehen, bei dem dieser zeitliche Amplitudenverlauf durch eine unmittelbare Aufeinanderfolge von dreiecksförmigen Spannungsverläufen des betreffenden Signals gekennzeichnet ist und wobei diese Dreiecke näherungsweise gleichschenklig sein sollten (siehe auch Signal A2c_b der Fig. 51).

### Sägezahnsignal

Unter einem Sägezahnsignal ist ein Signal mit einem zeitlichen Amplitudenverlauf zu verstehen, bei dem dieser zeitliche Amplitudenverlauf durch eine unmittelbare Aufeinanderfolge von dreiecksförmigen Spannungsverläufen des betreffenden Signals gekennzeichnet ist und wobei der eines Schenke eines solchen Dreiecks wesentlich steiler als der andere Schenkel ist (siehe auch Signal A2c_a der Fig. 51).

### BEZUGSZEICHENLISTE

- 1.TZ: erster Testzustand
- 2.TZ: zweiter Testzustand
- 3.TZ: dritter Testzustand
- A2a_a: erstes beispielhaftes Analysesignal für die Koeffizientenüberwachung in der Koeffizientenüberwachungsteilvorrichtung (KUE2a) für das erste Teilsignal (S2a) des zweiten analogen Signals (S2)
- A2a_b: zweites beispielhaftes Analysesignal für die Koeffizientenüberwachung in der Koeffizientenüberwachungsteilvorrichtung (KUE2a) für das erste Teilsignal (S2a) des zweiten analogen Signals (S2)
- A2b_a: erstes beispielhaftes Analysesignal für die Koeffizientenüberwachung in der Koeffizientenüberwachungsteilvorrichtung (KUE2b) für das zweite Teilsignal (S2b) des zweiten analogen Signals (S2)
- A2b_b: zweites beispielhaftes Analysesignal für die Koeffizientenüberwachung in der Koeffizientenüberwachungsteilvorrichtung (KUE2b) für das zweite Teilsignal (S2b) des zweiten analogen Signals (S2)
- A2c_a: erstes beispielhaftes Analysesignal für die Koeffizientenüberwachung in der Koeffizientenüberwachungsteilvorrichtung (KUE2c) für das dritte Teilsignal (S2c) des zweiten analogen Signals (S2)
- A2c_b: zweites beispielhaftes Analysesignal für die Koeffizientenüberwachung in der Koeffizientenüberwachungsteilvorrichtung (KUE2c) für das dritte Teilsignal (S2c) des zweiten analogen Signals (S2)
- A2c_a': erstes beispielhaftes Analysesignal für die Koeffizientenüberwachung in der Koeffizientenüberwachungsteilvorrichtung (KUE2c) für das dritte Teilsignal (S2c) des zweiten analogen Signals (S2), hier in einer alternativen beispielhaften Ausführung
- A2c_b': zweites beispielhaftes Analysesignal für die Koeffizientenüberwachung in der Koeffizientenüberwachungsteilvorrichtung (KUE2c) für das dritte Teilsignal (S2c) des zweiten analogen Signals (S2), hier in einer alternativen beispielhaften Ausführung
- A3a_a: erstes beispielhaftes Analysesignal für die Koeffizientenüberwachung in der Koeffizientenüberwachungsteilvorrichtung (KUE3a) für das erste Teilsignal (S3a) des dritten analogen Signals (S3)
- A3a_b: zweites beispielhaftes Analysesignal für die Koeffizientenüberwachung in der Koeffizientenüberwachungsteilvorrichtung (KUE3a) für das erste Teilsignal (S3a) des dritten analogen Signals (S3)
- A3b_a: erstes beispielhaftes Analysesignal für die Koeffizientenüberwachung in der Koeffizientenüberwachungsteilvorrichtung (KUE3b) für das zweite Teilsignal (S3b) des dritten analogen Signals (S3)
- A3b_b: zweites beispielhaftes Analysesignal für die Koeffizientenüberwachung in der Koeffizientenüberwachungsteilvorrichtung (KUE3b) für das zweite Teilsignal (S3b) des dritten analogen Signals (S3)
- A_a: erstes internes Analysesignal der betreffenden Koeffizientenüberwachungsteilvorrichtung (KUE). Dabei kann es sich beispielsweise um eines der folgenden Signale mit den folgenden Bezugszeichen handeln: A2a_a, A2b_a, A2c_a, A3a_a, A3b_a. Andere interne, symmetrische Signale können so auch überwacht werden. Das erste interne Analysesignal muss immer passend zur vorhandenen zeitlichen Symmetrie des zu analysierenden Signals (ZA) und mit gleicher Periodendauer T wie das zu analysierende Signal (ZA) gewählt werden. Soll beispielsweise das erste Teilsignal (S2a) des zweiten analogen Signals (S2) überwacht werden, so sollte das erste interne Analysesignal nicht, wie in Fig. 51 für das dritte Teilsignal (S2c) des zweiten analogen Signals (S2) für das entsprechende erste Analysesignal (A2c_a) dargestellt, in jeder Periode T Pulse aufweisen, sondern phasenrichtig nur in jeder zweiten Periode. Bevorzugt wird das erste interne Analysesignal digital durch die Digitalsignal-Erzeugungseinheit (DSO) erzeugt.
- A_b: zweites internes Analysesignal der betreffenden Koeffizientenüberwachungsteilvorrichtung (KUE). Dabei kann es sich beispielsweise um eines der folgenden Signale mit den folgenden Bezugszeichen handeln: A2a_b, A2b_b, A2c_b, A3a_b, A3b_b. Andere interne, symmetrische Signale können so auch überwacht werden. Das zweite interne Analysesignal muss immer passend zur vorhandenen zeitlichen Symmetrie des zu analysierenden Signals (ZA) und mit gleicher Periodendauer T wie das zu analysierende Signal (ZA) gewählt werden. Soll beispielsweise das erste Teilsignal (S2a) des zweiten analogen Signals (S2) überwacht werden, so sollte das zweite interne Analysesignal nicht, wie in Fig. 51 für das dritte Teilsignal (S2c) des zweiten analogen Signals (S2) für das entsprechende zweite Analysesignal (A2c_b) dargestellt, in jeder Periode T Pulse aufweisen, sondern phasenrichtig nur in jeder zweiten Periode. Bevorzugt wird das zweite interne Analysesignal digital durch die Digitalsignal-Erzeugungseinheit (DSO) erzeugt.
- ADC: Analog-zu-Digital-Wandler
- ACS: analoge Kanalsimulationseinheit
- AMX: analoger Multiplexer
- AP: Ausschwingphase
- arctan: Winkelberechnungseinheit. Bevorzugt weist jede Koeffizientenüberwachungsteilvorrichtung (KUE) eine Winkelberechnungseinheit auf, wenn die Koeffizientenüberwachungsteilvorrichtung (KUE) in der Form der Fig. 52 realisiert wird. Die Winkelberechnungseinheit erzeugt aus dem ersten internen Koeffizientensignal (s3a) und dem zweiten internen Koeffizientensignal (s3b) das Winkelsignal (sα). Bevorzugt stellt das Winkelsignal den arctan oder den arccot des Verhältnisses der Pegel des ersten internen Koeffizientensignals (s3a) und des zweiten internen Koeffizientensignals (s3b) dar. Näherungen und andere Auswertungen (z.B. einfache Division etc.) sind denkbar
- AS: analoger Eingangsschaltkreis (hat die Funktion eines Analog-zu-DigitalWandlers (ADC))
- ASS: Außenbereich außerhalb des Messsystems (SS)
- AV: analoges Filter oder analoger Verstärker
- C_X: interner Komparator. Bevorzugt weisen Koeffizientenüberwachungsteilvorrichtungen (KUE) einen internen Komparator (C_X) auf, wenn die Koeffizientenüberwachungsteilvorrichtung (KUE) in der Form der Fig. 52 realisiert wird. Insbesondere kann es sich bezogen auf die Fig. 53 um Komparatoren mit den Bezugszeichen C15, C16, C17, C18 und C19 handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen. Der interne Komparator vergleicht den Pegel des Winkelsignals (sα) mit dem internen Referenzwert (Ref_X). Bei dem internen Referenzwert (Ref_X) kann es sich bezogen auf die Fig. 53 insbesondere um Referenzwerte mit den Bezugszeichen Ref15, Ref16, Ref17, Ref18 und Ref19 handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen. In Abhängigkeit von dem Ergebnis dieses Vergleiches erzeugt der interne Komparator ein internes Vergleichsergebnissignal (v_X). Bei dem internen Vergleichsergebnissignal (v_X). kann es sich bezogen auf die Fig. 53 insbesondere um Vergleichsergebnissignale mit den Bezugszeichen v15, v16, v17, v18 und v19 handeln, die innerhalb der entsprechenden Koeffizientenüberwachungsteilvorrichtungen mit den Bezugszeichen KUE2a, KUE2b, KUE2c, KUE3a und KUE3b gebildet werden.
- C_Y: zweiter interner Komparator. Bevorzugt weisen in einer Implementationsform Koeffizientenüberwachungsteilvorrichtungen (KUE) einen zweiten internen Komparator (C_Y) auf, wenn die Koeffizientenüberwachungsteilvorrichtung (KUE) in der Form der Fig. 54 realisiert wird. Insbesondere kann es sich bezogen auf die Fig. 53 um Komparatoren handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. Der zweite interne Komparator vergleicht den Pegel ersten internen Koeffizientensignals (s3a) mit dem zweiten internen Referenzwert (Ref_Y). Bei dem zweiten internen Referenzwert (Ref_Y) kann es sich bezogen auf die Fig. 53 insbesondere um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. In Abhängigkeit von dem Ergebnis dieses Vergleiches erzeugt der zweite interne Komparator ein zweites internes Vergleichsergebnissignal (v_Y). Bei dem zweiten internen Vergleichsergebnissignal (v_Y) kann es sich bezogen auf die Fig. 53 insbesondere um Vergleichsergebnissignale handeln, die innerhalb der entsprechenden Koeffizientenüberwachungsteilvorrichtungen mit den Bezugszeichen KUE2a, KUE2b, KUE2c, KUE3a und KUE3b gebildet werden und zur Vereinfachung nicht in der Fig. 53 eingezeichnet sind.
- C_Z: dritter interner Komparator. Bevorzugt weisen in einer Implementationsform Koeffizientenüberwachungsteilvorrichtungen (KUE) einen dritten internen Komparator (C_Z) auf, wenn die Koeffizientenüberwachungsteilvorrichtung (KUE) in der Form der Fig. 54 realisiert wird. Insbesondere kann es sich bezogen auf die Fig. 53 um Komparatoren handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. Der dritte interne Komparator vergleicht den Pegel zweiten internen Koeffizientensignals (s3b) mit dem dritten internen Referenzwert (Ref_Z). Bei dem dritten internen Referenzwert (Ref_Z) kann es sich bezogen auf die Fig. 53 insbesondere um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. In Abhängigkeit von dem Ergebnis dieses Vergleiches erzeugt der dritte interne Komparator ein drittes internes Vergleichsergebnissignal (v_Z). Bei dem dritten internen Vergleichsergebnissignal (v_Z) kann es sich bezogen auf die Fig. 53 insbesondere um Vergleichsergebnissignale handeln, die innerhalb der entsprechenden Koeffizientenüberwachungsteilvorrichtungen mit den Bezugszeichen KUE2a, KUE2b, KUE2c, KUE3a und KUE3b gebildet werden und zur Vereinfachung nicht in der Fig. 53 eingezeichnet sind.
- C1: erster Komparator. Der erste Komparator vergleicht das erste Unterschiedssignal (d1) mit dem ersten Referenzwert (Ref1) und erzeugt das erste Vergleichsergebnissignal (v1)
- C2: zweiter Komparator. Der zweite Komparator vergleicht das erste Teilsignal (S3a) des dritten analogen Signals (S3) mit dem zweiten Referenzwert (Ref2) und erzeugt das zweite Vergleichsergebnissignal (v2)
- C3: dritter Komparator. Der dritte Komparator vergleicht das zweite Teilsignal (S3b) des dritten analogen Signals (S3) mit dem dritten Referenzwert (Ref3) und erzeugt das dritte Vergleichsergebnissignal (v3)
- C4: vierter Komparator. Der vierte Komparator vergleicht das zweite Teilsignal (S2b) des zweiten analogen Signals (S2) mit dem vierten Referenzwert (Ref4) und erzeugt das vierte Vergleichsergebnissignal (v4)
- C5: fünfter Komparator. Der fünfte Komparator vergleicht das dritte Teilsignal (S2c) des zweiten analogen Signals (S2) mit dem fünften Referenzwert (Ref5) und erzeugt das fünfte Vergleichsergebnissignal (v5)
- C6: sechster Komparator. Der sechste Komparator vergleicht das erste Teilsignal (S2a) des zweiten analogen Signals (S2) mit dem sechsten Referenzwert (Ref6) und erzeugt das sechste Vergleichsergebnissignal (v6)
- C10: zehnter Komparator. Der zehnte Komparator vergleicht das zweite Unterschiedssignal (d2) mit dem siebten Referenzwert (Ref7) und erzeugt das zehnte Vergleichsergebnissignal (v10)
- C11: elfter Komparator. Der elfte Komparator vergleicht das dritte Unterschiedssignal (d3) mit dem achten Referenzwert (Ref8) und erzeugt das elfte Vergleichsergebnissignal (v11)
- C12: zwölfter Komparator. Der zwölfte Komparator vergleicht das vierte Unterschiedssignal (d4) mit dem neunten Referenzwert (Ref9) und erzeugt das zwölfte Vergleichsergebnissignal (v12)
- C13: dreizehnter Komparator. Der dreizehnte Komparator vergleicht das integrierte fünfte Unterschiedssignal (d5i) mit dem dreizehnten Referenzwert (Ref13) und erzeugt das dreizehnte Vergleichsergebnissignal (v13)
- C14: vierzehnter Komparator. Der vierzehnte Komparator vergleicht das integrierte fünfte Unterschiedssignal (d5i) mit dem vierzehnten Referenzwert (Ref14) und erzeugt das vierzehnte Vergleichsergebnissignal (v14)
- C15: fünfzehnter Komparator. Der fünfzehnte Komparator vergleicht das Winkelsignal (sα) innerhalb der Koeffizientenüberwachungsteilvorrichtung (KUE3a) des ersten Teilsignals (S3a) des dritten analogen Signals (S3) mit dem fünfzehnten Referenzwert (Ref15) und erzeugt das fünfzehnte Vergleichsergebnissignal (v15). Der fünfzehnte Komparator (C15) befindet sich innerhalb der Koeffizientenüberwachungsteilvorrichtung (KUE3a) des ersten Teilsignals (S3a) des dritten analogen Signals (S3)
- C16: sechzehnter Komparator. Der sechzehnte Komparator vergleicht das Winkelsignal (sα) innerhalb der Koeffizientenüberwachungsteilvorrichtung (KUE3b) des zweiten Teilsignals (S3b) des dritten analogen Signals (S3) mit dem sechzehnten Referenzwert (Ref16) und erzeugt das sechzehnte Vergleichsergebnissignal (v16). Der sechzehnte Komparator (C16) befindet sich innerhalb der Koeffizientenüberwachungsteilvorrichtung (KUE3b) des zweiten Teilsignals (S3b) des dritten analogen Signals (S3)
- C17: siebzehnter Komparator. Der siebzehnte Komparator vergleicht das Winkelsignal (sα) innerhalb der Koeffizientenüberwachungsteilvorrichtung (KUE2b) des zweiten Teilsignals (S2b) des zweiten analogen Signals (S2) mit dem siebzehnten Referenzwert (Ref17) und erzeugt das siebzehnte Vergleichsergebnissignal (v17). Der siebzehnte Komparator (C17) befindet sich innerhalb der Koeffizientenüberwachungsteilvorrichtung (KUE2b) des zweiten Teilsignals (S2b) des zweiten analogen Signals (S2)
- C18: achtzehnter Komparator. Der achtzehnte Komparator vergleicht das Winkelsignal (sα) innerhalb der Koeffizientenüberwachungsteilvorrichtung (KUE2c) des dritten Teilsignals (S2c) des zweiten analogen Signals (S2) mit dem achtzehnten Referenzwert (Ref18) und erzeugt das achtzehnte Vergleichsergebnissignal (v18). Der achtzehnte Komparator (C18) befindet sich innerhalb der Koeffizientenüberwachungsteilvorrichtung (KUE2c) des dritten Teilsignals (S2c) des zweiten analogen Signals (S2)C19 neunzehnter Komparator. Der neunzehnte Komparator vergleicht das Winkelsignal (sα) innerhalb der Koeffizientenüberwachungsteilvorrichtung (KUE2a) des ersten Teilsignals (S2a) des zweiten analogen Signals (S2) mit dem neunzehnten Referenzwert (Ref19) und erzeugt das neunzehnte Vergleichsergebnissignal (v19). Der neunzehnte Komparator (C19) befindet sich innerhalb der Koeffizientenüberwachungsteilvorrichtung (KUE2a) des ersten Teilsignals (S2a) des zweiten analogen Signals (S2)
- CN: Messkanal, insbesondere ein Ultraschallmesskanal
- CTR: Steuereinrichtung
- CTR: Transducer-Kapazität
- d1: erstes Unterschiedssignal. Das erste Unterschiedssignal stellt in dem Beispiel der Fig. 3 die Differenz der Werte der Signalamplituden (als beispielhafte Parameterwerte) zwischen dem ersten Teilsignal (S3a) des dritten analogen Signals (S3) und dem zweiten Teilsignal (S3b) des dritten analogen Signals (S3) dar.
- d2: zweites Unterschiedssignal. Das zweite Unterschiedssignal stellt in dem Beispiel der Fig. 5 die Differenz der Werte der Signalamplituden (als beispielhafte Parameterwerte) zwischen dem zweiten Teilsignal (S2b) des zweiten analogen Signals (S2) und dem dritten Teilsignal (S2c) des zweiten analogen Signals (S2) dar.
- d3: drittes Unterschiedssignal. Das dritte Unterschiedssignal stellt in dem Beispiel der Fig. 5 die Differenz der Werte der Signalamplituden (als beispielhafte Parameterwerte) zwischen dem dritten Teilsignal (S2c) des zweiten analogen Signals (S2) und dem ersten Teilsignal (S2a) des zweiten analogen Signals (S2) dar.
- d4: viertes Unterschiedssignal. Das vierte Unterschiedssignal stellt in dem Beispiel der Fig. 5 die Differenz der Werte der Signalamplituden (als beispielhafte Parameterwerte) zwischen dem ersten Teilsignal (S2a) des zweiten analogen Signals (S2) des und dem zweiten Teilsignal (S2b) des zweiten analogen Signals (S2) dar.
- d5: fünftes Unterschiedssignal. Das fünfte Unterschiedssignal stellt in dem Beispiel der Fig. 49 die Differenz der Werte der Signalamplituden (als beispielhafte Parameterwerte) zwischen dem ersten Teilsignal (S3am) des dritten zwischengespeicherten Signals (S3m) und dem zweiten Teilsignal (S3bm) des dritten zwischengespeicherten Signals (S3m) dar.
- d5i: integriertes fünftes Unterschiedssignal. Das integrierte fünfte Unterschiedssignal stellt in dem Beispiel der Fig. 49 den Ausgang des zweiten Integrators (INT2) dar, der das fünfte Unterschiedssignal (d5) über m Taktperioden T integriert bevor er bevorzugt wieder zurückgesetzt wird. Hierbei ist m eine ganze positive Zahl. Am Ende der m Taktperioden stellt der Wert des integrierten fünften Unterschiedssignals ein Maß für die Asymmetrie der beiden Teilsignale des dritten analogen Signals (S3) dar.
- d6: sechstes Unterschiedssignal. Das sechste Unterschiedssignal stellt in dem Beispiel der Fig. 50 die Differenz der Werte der Signalamplituden (als beispielhafte Parameterwerte) zwischen dem ersten Teilsignal (S2am) des zweiten zwischengespeicherten Signals (S2m) und dem zweiten Teilsignal (S2bm) des zweiten zwischengespeicherten Signals (S2m) dar.
- d6i: integriertes sechstes Unterschiedssignal. Das integrierte sechste Unterschiedssignal stellt in dem Beispiel der Fig. 50 den Ausgang des ersten Integrators (INT1) dar, der das sechste Unterschiedssignal (d6) über m Taktperioden T integriert bevor er bevorzugt wieder zurückgesetzt wird. Hierbei ist m eine ganze positive Zahl. Am Ende der m Taktperioden stellt der Wert des integrierten sechsten Unterschiedssignals ein Maß für die Asymmetrie der beiden Teilsignale des zweiten analogen Signals (S3) dar.
- D1: erster Differenzverstärker. Der erste Differenzverstärker bildet beispielsweise durch Differenzbildung aus einem Parameterwert des ersten Teilsignals (S3a) des dritten analogen Signals (S3) und aus einem Parameterwert des zweiten Teilsignals (S3b) des dritten analogen Signals (S3) das erste Unterschiedssignal (d1).
- D2: zweiter Differenzverstärker. Der zweite Differenzverstärker bildet beispielsweise durch Differenzbildung aus einem Parameterwert des zweiten Teilsignals (S2b) des zweiten analogen Signals (S2) und aus einem Parameterwert des dritten Teilsignals (S2c) des zweiten analogen Signals (S2) das zweite Unterschiedssignal (d2).
- D3: dritter Differenzverstärker. Der dritte Differenzverstärker bildet beispielsweise durch Differenzbildung aus einem Parameterwert des dritten Teilsignals (S2c) des zweiten analogen Signals (S2) und aus einem Parameterwert des ersten Teilsignals (S2a) des zweiten analogen Signals (S2) das dritte Unterschiedssignal (d3).
- D4: vierter Differenzverstärker. Der vierte Differenzverstärker bildet beispielsweise durch Differenzbildung aus einem Parameterwert des ersten Teilsignals (S2a) des zweiten analogen Signals (S2) und aus einem Parameterwert des zweiten Teilsignals (S2b) des zweiten analogen Signals (S2) das vierte Unterschiedssignal (d4).
- D5: fünfter Differenzverstärker. Der fünfte Differenzverstärker bildet beispielsweise durch Differenzbildung aus einem Parameterwert des ersten Teilsignals (S3am) des dritten zwischengespeicherten Signals (S3m) und aus einem Parameterwert des zweiten Teilsignals (S3bm) des dritten zwischengespeicherten Signals (S3m) das fünfte Unterschiedssignal (d5).
- D6: sechster Differenzverstärker. Der sechste Differenzverstärker bildet beispielsweise durch Differenzbildung aus einem Parameterwert des ersten Teilsignals (S2am) des zweiten zwischengespeicherten Signals (S2m) und aus einem Parameterwert des zweiten Teilsignals (S2bm) des zweiten zwischengespeicherten Signals (S2m) das sechste Unterschiedssignal (d6).
- DCS: digitale Kanalsimulationseinheit
- DMX: digitaler Multiplexer
- DR: Treiberstufe
- DSI: digitaler Eingangsschaltkreis
- DSO: Digitalsignal-Erzeugungseinheit
- EP: Empfangsphase
- ES: Empfangssignal, insbesondere ein Ultraschallempfangssignal
- EZ: Einschaltzustand
- F1: erster Filter. Bevorzugt weist jede Koeffizientenüberwachungsteilvorrichtung (KUE) einen ersten Filter auf, wenn die Koeffizientenüberwachungsteilvorrichtung (KUE) in der Form der Fig. 52 realisiert wird. Der erste Filter filtert das erste interne Filtereingangssignal (s1a) zu einem ersten Filterausgangssignal (s2a). Der erste Filter ist bevorzugt ein Integrator oder zumindest ein Tiefpass. Dadurch bildet der erste Filter mit dem ersten Multiplizierer (M1) eine erste Skalar-Produkteinheit und bildet also zusammen mit dem ersten Multiplizierer (M1) ein Skalarprodukt aus dem zu analysierenden Signal (ZA) und dem ersten Analysesignal (A_a). Das erste Filterausgangssignal (s2a) repräsentiert also dieses so ermittelte Skalarprodukt. Allerdings sind die Grenzen dieses ersten Skalarprodukts noch unbestimmt. Daher ist die nachfolgende erste interne Sample-and-Hold-Einheit (S&H_Ca) notwendig um die erste Skalar-Produkteinheit zu vervollständigen.
- F2: zweiter Filter. Bevorzugt weist jede Koeffizientenüberwachungsteilvorrichtung (KUE) einen zweiten Filter auf, wenn die Koeffizientenüberwachungsteilvorrichtung (KUE) in der Form der Fig. 52 realisiert wird. Der zweite Filter filtert das zweite interne Filtereingangssignal (s1b) zu zweiten ersten Filterausgangssignal (s2b). Der zweite Filter ist bevorzugt ein Integrator oder zumindest ein Tiefpass. Dadurch bildet der zweite Filter mit dem zweiten Multiplizierer (M2) eine zweite Skalar-Produkteinheit und bildet also zusammen mit dem zweiten Multiplizierer (M2) ein Skalarprodukt aus dem zu analysierenden Signal (ZA) und dem zweiten Analysesignal (A_b). Das zweite Filterausgangssignal (s2b) repräsentiert also dieses so ermittelte Skalarprodukt. Allerdings sind die Grenzen dieses zweiten Skalarprodukts noch unbestimmt. Daher ist die nachfolgende zweite interne Sample-and-Hold-Einheit (S&H_Cb) notwendig um die Skalar-Produkteinheit zu vervollständigen.
- FZ: Fehlerzustand
- INT1: erster Integrator
- INT2: zweiter Integrator
- IO: Datenschnittstelle
- KUE: Koeffizientenüberwachungsteilvorrichtung
- KUE2a: Koeffizientenüberwachungsteilvorrichtung des ersten Teilsignals (S2a) des zweiten analogen Signals (S2)
- KUE2b: Koeffizientenüberwachungsteilvorrichtung des zweiten Teilsignals (S2b) des zweiten analogen Signals (S2)
- KUE2c: Koeffizientenüberwachungsteilvorrichtung des dritten Teilsignals (S2c) des zweiten analogen Signals (S2)
- KUE3a: Koeffizientenüberwachungsteilvorrichtung des ersten Teilsignals (S3a) des dritten analogen Signals (S3)
- KUE3b: Koeffizientenüberwachungsteilvorrichtung des zweiten Teilsignals (S3a) des dritten analogen Signals (S3)
- m: Anzahl der Taktperioden über die integriert wird
- M1: erster Multiplizierer. Bevorzugt weist jede Koeffizientenüberwachungsteilvorrichtung (KUE) einen ersten Multiplizierer auf, wenn die Koeffizientenüberwachungsteilvorrichtung (KUE) in der Form der Fig. 52 realisiert wird. Der erste Multiplizierer multipliziert innerhalb der betreffenden Koeffizientenüberwachungsteilvorrichtung (KUE) das für die betreffende Koeffizientenüberwachungsteilvorrichtung (KUE) zutreffende erste interne Analysesignal A_a mit dem für die betreffende Koeffizientenüberwachungsteilvorrichtung (KUE) zu analysierende Signal (ZA) um ein erstes internes Filtereingangssignal (s1a) zu erhalten.
- M2: zweiter Multiplizierer. Bevorzugt weist jede Koeffizientenüberwachungsteilvorrichtung (KUE) einen zweiten Multiplizierer auf, wenn die Koeffizientenüberwachungsteilvorrichtung (KUE) in der Form der Fig. 52 realisiert wird. Der zweite Multiplizierer multipliziert innerhalb der betreffenden Koeffizientenüberwachungsteilvorrichtung (KUE) das für die betreffende Koeffizientenüberwachungsteilvorrichtung (KUE) zutreffende zweite interne Analysesignal A_b mit dem für die betreffende Koeffizientenüberwachungsteilvorrichtung (KUE) zu analysierende Signal (ZA) um ein zweites internes Filtereingangssignal (s1b) zu erhalten.
- MS: Messsignal, insbesondere ein Ultraschallmesssignal
- Ref_X: interner Referenzwert. Bevorzugt nutzen Koeffizientenüberwachungsteilvorrichtung (KUE) einen internen Referenzwert, wenn sie in der Form der Fig. 52 realisiert werden. Bei dem internen Referenzwert (Ref_X) kann es sich bezogen auf die Fig. 53 insbesondere um Referenzwerte mit den Bezugszeichen Ref15, Ref16, Ref17, Ref18 und Ref19 handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen.
- Ref_Y: zweiter interner Referenzwert. Bevorzugt nutzen Koeffizientenüberwachungsteilvorrichtung (KUE) einen zweiten internen Referenzwert (Ref_Y), wenn sie in der Form der Fig. 54, 55 oder 56 realisiert werden. Bei dem zweiten internen Referenzwert (Ref_Y) kann es sich bezogen auf die Fig. 53 um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen.
- Ref_Z: dritter interner Referenzwert. Bevorzugt nutzen Koeffizientenüberwachungsteilvorrichtung (KUE) einen dritten internen Referenzwert (Ref_Z), wenn sie in der Form der Fig. 54, 55 oder 56 realisiert werden. Bei dem dritten internen Referenzwert (Ref_Z) kann es sich bezogen auf die Fig. 53 um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen.
- Ref1: erster Referenzwert. Der erste Referenzwert dient als Vergleichswert für das erste Unterschiedssignal (d1) zur Erzeugung des ersten Vergleichsergebnissignals (v1) durch den ersten Komparator (C1).
- Ref2: zweiter Referenzwert. Der zweite Referenzwert dient als Vergleichswert für das erste Teilsignal (S3a) des dritten analogen Signals (S3) zur Erzeugung des zweiten Vergleichsergebnissignals (v2) durch den zweiten Komparator (C2).
- Ref3: dritter Referenzwert. Der dritte Referenzwert dient als Vergleichswert für das zweite Teilsignal (S3b) des dritten analogen Signals (S3) zur Erzeugung des dritten Vergleichsergebnissignals (v3) durch den dritten Komparator (C3).
- Ref4: vierter Referenzwert. Der vierte Referenzwert dient als Vergleichswert für das zweite Teilsignal (S2b) des zweiten analogen Signals (S2) zur Erzeugung des vierten Vergleichsergebnissignals (v4) durch den vierten Komparator (C4).
- Ref5: fünfter Referenzwert. Der fünfte Referenzwert dient als Vergleichswert für das dritte Teilsignal (S2c) des zweiten analogen Signals (S2) zur Erzeugung des fünften Vergleichsergebnissignals (v5) durch den fünften Komparator (C5).
- Ref6: sechster Referenzwert. Der sechste Referenzwert dient als Vergleichswert für das erste Teilsignal (S2a) des zweiten analogen Signals (S2) zur Erzeugung des sechsten Vergleichsergebnissignals (v6) durch den sechsten Komparator (C6).
- Ref7: siebter Referenzwert. Der siebte Referenzwert dient als Vergleichswert für das zweite Unterschiedssignal (d2) zur Erzeugung des zehnten Vergleichsergebnissignals (v10) durch den zehnten Komparator (C10).
- Ref8: achter Referenzwert. Der achte Referenzwert dient als Vergleichswert für das dritte Unterschiedssignal (d3) zur Erzeugung des elften Vergleichsergebnissignals (v11) durch den elften Komparator (C11).
- Ref9: neunter Referenzwert. Der neunte Referenzwert dient als Vergleichswert für das vierte Unterschiedssignal (d4) zur Erzeugung des zwölften Vergleichsergebnissignals (v12) durch den zwölften Komparator (C12).
- Ref13: dreizehnter Referenzwert. Der dreizehnte Referenzwert dient als Vergleichswert für das integrierte sechste Unterschiedssignal (d6i) zur Erzeugung des dreizehnten Vergleichsergebnissignals (v13) durch den dreizehnten Komparator (C13).
- Ref14: vierzehnter Referenzwert. Der vierzehnte Referenzwert dient als Vergleichswert für das integrierte fünfte Unterschiedssignal (d5i) zur Erzeugung des vierzehnten Vergleichsergebnissignals (v14) durch den vierzehnten Komparator (C14).
- Ref15: fünfzehnter Referenzwert. Der fünfzehnte Referenzwert dient als Vergleichswert für das Winkelsignal (sα) innerhalb der Koeffizientenüberwachungsteilvorrichtung (KUE3a) des ersten Teilsignals (S3a) des dritten analogen Signals (S3) zur Erzeugung des fünfzehnten Vergleichsergebnissignals (v15) durch den fünfzehnten Komparator (C15) innerhalb der Koeffizientenüberwachungsteilvorrichtung (KUE3a) des ersten Teilsignals (S3a) des dritten analogen Signals (S3).
- Ref16: sechzehnter Referenzwert. Der sechzehnte Referenzwert dient als Vergleichswert für das Winkelsignal (sα) innerhalb der Koeffizientenüberwachungsteilvorrichtung (KUE3b) des zweiten Teilsignals (S3b) des dritten analogen Signals (S3) zur Erzeugung des sechzehnten Vergleichsergebnissignals (v16) durch den sechzehnten Komparator (C16) innerhalb der Koeffizientenüberwachungsteilvorrichtung (KUE3b) des zweiten Teilsignals (S3b) des dritten analogen Signals (S3).
- Ref17: siebzehnter Referenzwert. Der siebzehnte Referenzwert dient als Vergleichswert für das Winkelsignal (sα) innerhalb der Koeffizientenüberwachungsteilvorrichtung (KUE2b) des zweiten Teilsignals (S2b) des zweiten analogen Signals (S2) zur Erzeugung des siebzehnten Vergleichsergebnissignals (v17) durch den siebzehnten Komparator (C17) innerhalb der Koeffizientenüberwachungsteilvorrichtung (KUE2b) des zweiten Teilsignals (S2b) des zweiten analogen Signals (S2).
- Ref18: achtzehnter Referenzwert. Der achtzehnte Referenzwert dient als Vergleichswert für das Winkelsignal (sα) innerhalb der Koeffizientenüberwachungsteilvorrichtung (KUE2c) des dritten Teilsignals (S2c) des zweiten analogen Signals (S2) zur Erzeugung des achtzehnten Vergleichsergebnissignals (v18) durch den achtzehnten Komparator (C18) innerhalb der Koeffizientenüberwachungsteilvorrichtung (KUE2c) des dritten Teilsignals (S2c) des zweiten analogen Signals (S2).
- Ref19: neunzehnter Referenzwert. Der neunzehnte Referenzwert dient als Vergleichswert für das Winkelsignal (sα) innerhalb der Koeffizientenüberwachungsteilvorrichtung (KUE2a) des ersten Teilsignals (S2a) des zweiten analogen Signals (S2) zur Erzeugung des neunzehnten Vergleichsergebnissignals (v19) durch den neunzehnten Komparator (C19) innerhalb der Koeffizientenüberwachungsteilvorrichtung (KUE2a) des ersten Teilsignals (S2a) des zweiten analogen Signals (S2).
- R_{TR}: Transducer-Widerstand
- sα: Winkelsignal. Bevorzugt weist jede Koeffizientenüberwachungsteilvorrichtung (KUE) ein Winkelsignal auf, wenn die Koeffizientenüberwachungsteilvorrichtung (KUE) in der Form der Fig. 52 realisiert wird. Das Winkelsignal wird durch die Winkelberechnungseinheit der Koeffizientenüberwachungsteilvorrichtung (KUE) erzeugt. Bevorzugt stellt das Winkelsignal den arctan oder den arccot des Verhältnisses der Pegel des ersten internen Koeffizientensignals (s3a) und des zweiten internen Koeffizientensignals (s3b) dar. Näherungen und andere Auswertungen (z.B. einfache Division etc.) sind denkbar.
- S&H_Aa: erster Phasenschieber der ersten Symmetrieprüfvorrichtung (SPA)
- S&H_Ab: zweiter Phasenschieber der ersten Symmetrieprüfvorrichtung (SPA)
- S&H_Ba: erster Phasenschieber der zweiten Symmetrieprüfvorrichtung (SPB)
- S&H_Bb: zweiter Phasenschieber der zweiten Symmetrieprüfvorrichtung (SPB)
- S&H_Ca: erste interne Sample-and-Hold-Einheit. Bevorzugt weist jede Koeffizientenüberwachungsteilvorrichtung (KUE) eine erste interne Sample-and-Hold-Einheit auf, wenn die Koeffizientenüberwachungsteilvorrichtung (KUE) in der Form der Fig. 52 realisiert wird. Am zeitlichen Ende einer oder mehrerer vollständiger Perioden T des zu analysierenden Signals (ZA) tastet die erste interne Sample-and-Hold-Einheit das erste interne Filterausgangssignal (S2a) ab und bildet so das erste interne Koeffizientensignal (S3a). Die Abtastung erfolgt bevorzugt nur in der Sendephase (SP) oder zu ausgewählten Zeiträumen innerhalb der Sendephase (SP). Die Steuerung der ersten internen Sample-and-Hold-Einheit erfolgt bevorzugt durch die Digitalsignal-Erzeugungseinheit (DSO).
- S&H_Cb: zweite interne Sample-and-Hold-Einheit. Bevorzugt weist jede Koeffizientenüberwachungsteilvorrichtung (KUE) eine zweite interne Sample-and-Hold-Einheit auf, wenn die Koeffizientenüberwachungsteilvorrichtung (KUE) in der Form der Fig. 52 realisiert wird. Am zeitlichen Ende einer oder mehrerer vollständiger Perioden T des zu analysierenden Signals (ZA) tastet die zweite interne Sample-and-Hold-Einheit das zweite interne Filterausgangssignal (S2b) ab und bildet so das zweite interne Koeffizientensignal (S3b). Die Abtastung erfolgt bevorzugt nur in der Sendephase (SP) oder zu ausgewählten Zeiträumen innerhalb der Sendephase (SP). Die Steuerung der ersten internen Sample-and-Hold-Einheit erfolgt bevorzugt durch die Digitalsignal-Erzeugungseinheit (DSO).
- S0: Ansteuersignal
- S1: erstes digitales Signal
- s1a: erstes internes Filtereingangssignal. Bevorzugt weist jede Koeffizientenüberwachungsteilvorrichtung (KUE) ein erstes internes Filtereingangssignal auf, wenn die Koeffizientenüberwachungsteilvorrichtung (KUE) in der Form der Fig. 52 realisiert wird. Das erste Filtereingangssignal wird in dem Beispiel der Fig. 52 durch Multiplikation des zu analysierenden Signals (ZA) mit dem ersten internen Analysesignal (A_a) durch den ersten Multiplizierer (M1) erzeugt.
- s1b: zweites internes Filtereingangssignal. Bevorzugt weist jede Koeffizientenüberwachungsteilvorrichtung (KUE) ein zweites internes Filtereingangssignal auf, wenn die Koeffizientenüberwachungsteilvorrichtung (KUE) in der Form der Fig. 52 realisiert wird. Das zweite Filtereingangssignal wird in dem Beispiel der Fig. 52 durch Multiplikation des zu analysierenden Signals (ZA) mit dem zweiten internen Analysesignal (A_a) durch den zweiten Multiplizierer (M2) erzeugt.
- S2: zweites analoges Signal
- s2a: erstes internes Filterausgangssignal. Bevorzugt weist jede Koeffizientenüberwachungsteilvorrichtung (KUE) ein erstes internes Filterausgangssignal auf, wenn die Koeffizientenüberwachungsteilvorrichtung (KUE) in der Form der Fig. 52 realisiert wird. Das erste Filterausgangssignal wird in dem Beispiel der Fig. 52 durch Filterung des ersten Filtereingangssignals (s1a) in dem ersten internen Filter (F1) erzeugt.
- S2a: erstes Teilsignal des zweiten analogen Signals (S2)
- S2am: erstes Teilsignal des zweiten zwischengespeicherten Signals (S2m)
- s2b: zweites internes Filterausgangssignal. Bevorzugt weist jede Koeffizientenüberwachungsteilvorrichtung (KUE) ein zweites internes Filterausgangssignal auf, wenn die Koeffizientenüberwachungsteilvorrichtung (KUE) in der Form der Fig. 52 realisiert wird. Das zweite Filterausgangssignal wird in dem Beispiel der Fig. 52 durch Filterung des zweiten Filtereingangssignals (s1b) in dem zweiten internen Filter (F2) erzeugt.
- S2b: zweites Teilsignal des zweiten analogen Signals (S2)
- S2bm: zweites Teilsignal des zweiten zwischengespeicherten Signals (S2m)
- S2c: drittes Teilsignal des zweiten analogen Signals (S2)
- S2cLC: drittes Teilsignal des zweiten analogen Signals (S2) bei Abriss der Transducer-Kapazität (C_{TR}) (gestörtes drittes Teilsignal des zweiten analogen Signals (S2))
- S2m: zweites zwischengespeichertes Signal
- S3: drittes analoges Signal
- S3': verstärktes drittes analoges Signal
- s3a: erstes internes Koeffizientensignal. Bevorzugt weist jede Koeffizientenüberwachungsteilvorrichtung (KUE) erstes internes Koeffizientensignal auf, wenn die Koeffizientenüberwachungsteilvorrichtung (KUE) in der Form der Fig. 52 realisiert wird. Die erste interne Sample-and-Hold-Einheit (S&H_Ca) bildet das erste interne Koeffizientensignal durch Abtastung des ersten internen Filterausgangssignals (s2a) am zeitlichen Ende einer oder mehrerer vollständiger Perioden T des zu analysierenden Signals (ZA). Diese Abtastung erfolgt bevorzugt nur in der Sendephase (SP) oder zu ausgewählten Zeiträumen innerhalb der Sendephase (SP=. Die Steuerung der Abtastung erfolgt bevorzugt durch die Digitalsignal-Erzeugungseinheit (DSO).
- s3b: zweites internes Koeffizientensignal. Bevorzugt weist jede Koeffizientenüberwachungsteilvorrichtung (KUE) zweites internes Koeffizientensignal auf, wenn die Koeffizientenüberwachungsteilvorrichtung (KUE) in der Form der Fig. 52 realisiert wird. Die zweite interne Sample-and-Hold-Einheit (S&H_Cb) bildet das erste interne Koeffizientensignal durch Abtastung des zweiten internen Filterausgangssignals (s2b) am zeitlichen Ende einer oder mehrerer vollständiger Perioden T des zu analysierenden Signals (ZA). Diese Abtastung erfolgt bevorzugt nur in der Sendephase (SP) oder zu ausgewählten Zeiträumen innerhalb der Sendephase (SP). Die Steuerung der Abtastung erfolgt bevorzugt durch die Digitalsignal-Erzeugungseinheit (DSO).
- S3a: erstes Teilsignal des dritten analogen Signals (S3)
- S3am: erstes Teilsignal des dritten zwischengespeicherten Signals (S3m)
- S3b: zweites Teilsignal des dritten analogen Signals (S3)
- S3bm: zweites Teilsignal des dritten zwischengespeicherten Signals (S3m)
- S3m: drittes zwischengespeichertes Signal
- S3t: drittes analoges Testsignal
- S3ta: erstes Teilsignal des dritten analogen Testsignals
- S3tb: zweites Teilsignal des dritten analogen Testsignals
- S4: viertes analoges Signal
- S5: fünftes digitales Signal
- S5t: fünftes digitales Testsignal
- S6: sechstes digitales Signal
- S7: siebtes Antwortsignal
- SBA: erste Symmetrieprüfvorrichtung
- SPB: zweite Symmetrieprüfvorrichtung
- SP: Sendephase
- SS: Sensor System
- T: Taktperiode
- TR: Messeinheit, insbesondere ein Ultraschalltransducer
- TRi: innerer Ultraschalltransducer
- UEB: Übertrager; v_X internes Vergleichssignal. Bevorzugt weisen Koeffizientenüberwachungsteilvorrichtung (KUE) ein internes Vergleichssignal (v_X) auf, wenn die Koeffizientenüberwachungsteilvorrichtungen (KUE) in der Form der Fig. 52 realisiert werden. Insbesondere kann es sich bezogen auf die Fig. 53 um Vergleichssignale mit den Bezugszeichen v15, v16, v17, v18 und v19 handeln, die zur Vereinfachung in der Fig. 53 nicht Ausgangssignale der entsprechenden Koeffizientenüberwachungsteilvorrichtungen mit den Bezugszeichen KUE2a, KUE2b, KUE2c, KUE3a und KUE3b sind. Der jeweilige interne Komparator (C_X) der jeweiligen Koeffizientenüberwachungsteilvorrichtung (KUE) vergleicht den Pegel des betreffenden Winkelsignals (sα) mit dem internen Referenzwert (Ref_X) der entsprechenden Koeffizientenüberwachungsteilvorrichtung (KUE) (siehe auch Fig. 52). Bei dem internen Referenzwert (Ref_X) kann es sich bezogen auf die Fig. 53 insbesondere um Referenzwerte mit den Bezugszeichen Ref15, Ref16, Ref17, Ref18 und Ref19 handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden sollen. Sie stellen also den internen Referenzwert (Ref_X) der jeweilige Koeffizientenüberwachungsteilvorrichtung (KUE) dar. In Abhängigkeit von dem Ergebnis dieses Vergleiches erzeugt der interne Komparator (C_X) das interne Vergleichsergebnissignal (v_X). Bei dem internen Vergleichsergebnissignal (v_X). kann es sich bezogen auf die Fig. 53 insbesondere um Vergleichsergebnissignale mit den Bezugszeichen v15, v16, v17, v18 und v19 handeln, die innerhalb der entsprechenden Koeffizientenüberwachungsteilvorrichtungen mit den Bezugszeichen KUE2a, KUE2b, KUE2c, KUE3a und KUE3b gebildet werden. Vorzugsweise werten die Steuereinrichtung (CTR) und/oder der digitale Eingangsschaltkreis (DSI) das interne Vergleichsergebnissignal (v_X) aus und erzeugen gegebenenfalls eine Fehlermeldung.
- v_Y: zweites internes Vergleichssignal. Bevorzugt weisen Koeffizientenüberwachungsteilvorrichtung (KUE) ein zweites internes Vergleichssignal (v_Y) auf, wenn die Koeffizientenüberwachungsteilvorrichtungen (KUE) in der Form der Fign. 54, 55 oder 56 realisiert werden. Insbesondere kann es sich bezogen auf die Fig. 53 um Vergleichssignale handeln, die zur Vereinfachung in der Fig. 53 nicht Ausgangssignale der entsprechenden Koeffizientenüberwachungsteilvorrichtungen mit den Bezugszeichen KUE2a, KUE2b, KUE2c, KUE3a und KUE3b sind. Der jeweilige zweite interne Komparator (C_Y) der jeweiligen Koeffizientenüberwachungsteilvorrichtung (KUE) vergleicht den Pegel des ersten internen Koeffizientensignals (s3a) mit dem zweiten internen Referenzwert (Ref_Y) der entsprechenden Koeffizientenüberwachungsteilvorrichtung (KUE) (siehe auch Fign. 54, 55 oder 56). Bei dem zweiten internen Referenzwert (Ref_Y) kann es sich bezogen auf die Fig. 53 insbesondere um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. Sie stellen also den zweiten internen Referenzwert (Ref_Y) der jeweiligen Koeffizientenüberwachungsteilvorrichtung (KUE) dar. In Abhängigkeit von dem Ergebnis dieses Vergleiches erzeugt der zweite interne Komparator (C_Y) das zweite interne Vergleichsergebnissignal (v_Y). Bei den zweiten internen Vergleichsergebnissignalen (v_Y) kann es sich bezogen auf die Fig. 53 insbesondere um Vergleichsergebnissignale handeln, die zur Vereinfachung in der Fig. 53 nicht eingezeichnet sind und innerhalb der entsprechenden Koeffizientenüberwachungsteilvorrichtungen mit den Bezugszeichen KUE2a, KUE2b, KUE2c, KUE3a und KUE3b gebildet werden. Vorzugsweise werten die Steuereinrichtung (CTR) und/oder der digitale Eingangsschaltkreis (DSI) die zweiten internen Vergleichsergebnissignale (v_Y) aus und erzeugen gegebenenfalls entsprechende Fehlermeldungen.
- v_Z: drittes internes Vergleichssignal. Bevorzugt weisen Koeffizientenüberwachungsteilvorrichtung (KUE) ein drittes internes Vergleichssignal (v_Z) auf, wenn die Koeffizientenüberwachungsteilvorrichtungen (KUE) in der Form der Fign. 54, 55 oder 56 realisiert werden. Insbesondere kann es sich bezogen auf die Fig. 53 um Vergleichssignale handeln, die zur Vereinfachung in der Fig. 53 nicht Ausgangssignale der entsprechenden Koeffizientenüberwachungsteilvorrichtungen mit den Bezugszeichen KUE2a, KUE2b, KUE2c, KUE3a und KUE3b sind. Der jeweilige dritte interne Komparator (C_Z) der jeweiligen Koeffizientenüberwachungsteilvorrichtung (KUE) vergleicht den Pegel des zweiten internen Koeffizientensignals (s3b) mit dem dritten internen Referenzwert (Ref_Z) der entsprechenden Koeffizientenüberwachungsteilvorrichtung (KUE) (siehe auch Fign. 54, 55 oder 56). Bei dem dritten internen Referenzwert (Ref_Z) kann es sich bezogen auf die Fig. 53 insbesondere um Referenzwerte handeln, die zur Vereinfachung in der Fig. 53 nicht eingezeichnet sind und sich innerhalb der entsprechenden Koeffizientenüberwachungsteilvorrichtungen mit den Bezugszeichen KUE2a, KUE2b, KUE2c, KUE3a und KUE3b befinden können. Sie stellen also den dritten internen Referenzwert (Ref_Z) der jeweiligen Koeffizientenüberwachungsteilvorrichtung (KUE) dar. In Abhängigkeit von dem Ergebnis dieses Vergleiches erzeugt der dritte interne Komparator (C_Z) das dritte interne Vergleichsergebnissignal (v_Z). Bei den dritten internen Vergleichsergebnissignalen (v_Z) kann es sich bezogen auf die Fig. 53 insbesondere um Vergleichsergebnissignale handeln, die zur Vereinfachung in der Fig. 53 nicht eingezeichnet sind und innerhalb der entsprechenden Koeffizientenüberwachungsteilvorrichtungen mit den Bezugszeichen KUE2a, KUE2b, KUE2c, KUE3a und KUE3b gebildet werden. Vorzugsweise werten die Steuereinrichtung (CTR) und/oder der digitale Eingangsschaltkreis (DSI) die dritten internen Vergleichsergebnissignale (v_Z) aus und erzeugen gegebenenfalls entsprechende Fehlermeldungen.
- v1: erstes Vergleichsergebnissignal. In dem Beispiel der Fig. 3 stellt das erste Vergleichsergebnissignal das Ergebnis des Vergleichs zwischen dem Wert des ersten Unterschiedssignals (d1) und dem ersten Referenzwert (Ref1) dar. Der Vergleich kann ohne oder mit Berücksichtigung des Vorzeichens erfolgen. Bevorzugt ist ein rein betragsmäßiger Vergleich also ein Vergleich der Absolutwerte.
- v2: zweites Vergleichsergebnissignal. In dem Beispiel der Fig. 3 stellt das zweite Vergleichsergebnissignal das Ergebnis des Vergleichs zwischen dem Wert des ersten Teilsignals (S3a) des dritten analogen Signals (S3) und dem zweiten Referenzwert (Ref2) dar. Der Vergleich kann ohne oder mit Berücksichtigung des Vorzeichens erfolgen. Bevorzugt ist ein rein betragsmäßiger Vergleich also ein Vergleich der Absolutwerte.
- v3: drittes Vergleichsergebnissignal. In dem Beispiel der Fig. 3 stellt das dritte Vergleichsergebnissignal das Ergebnis des Vergleichs zwischen dem Wert des zweiten Teilsignals (S3b) des dritten analogen Signals (S3) und dem zweiten Referenzwert (Ref2) dar. Der Vergleich kann ohne oder mit Berücksichtigung des Vorzeichens erfolgen. Bevorzugt ist ein rein betragsmäßiger Vergleich also ein Vergleich der Absolutwerte.
- v4: viertes Vergleichsergebnissignal. In dem Beispiel der Fig. 4 stellt das vierte Vergleichsergebnissignal das Ergebnis des Vergleichs zwischen dem Wert des zweiten Teilsignals (S2b) des zweiten analogen Signals (S2) und dem vierten Referenzwert (Ref4) dar. Der Vergleich kann ohne oder mit Berücksichtigung des Vorzeichens erfolgen. Bevorzugt ist ein rein betragsmäßiger Vergleich also ein Vergleich der Absolutwerte.
- v5: fünftes Vergleichsergebnissignal. In dem Beispiel der Fig. 4 stellt das fünfte Vergleichsergebnissignal das Ergebnis des Vergleichs zwischen dem Wert des dritten Teilsignals (S2c) des zweiten analogen Signals (S2) und dem fünften Referenzwert (Ref5) dar. Der Vergleich kann ohne oder mit Berücksichtigung des Vorzeichens erfolgen. Bevorzugt ist ein rein betragsmäßiger Vergleich also ein Vergleich der Absolutwerte
- v6: sechstes Vergleichsergebnissignal. In dem Beispiel der Fig. 4 stellt das sechste Vergleichsergebnissignal das Ergebnis des Vergleichs zwischen dem Wert des ersten Teilsignals (S2a) des zweiten analogen Signals (S2) und dem sechsten Referenzwert (Ref6) dar. Der Vergleich kann ohne oder mit Berücksichtigung des Vorzeichens erfolgen. Bevorzugt ist ein rein betragsmäßiger Vergleich also ein Vergleich der Absolutwerte
- v10: zehntes Vergleichsergebnissignal. In dem Beispiel der Fig. 8 stellt das zehnte Vergleichsergebnissignal das Ergebnis des Vergleichs zwischen dem Wert des zweiten Unterschiedssignals (d2) und dem siebten Referenzwert (Ref7) durch den zehnten Komparator (C10) dar. Der Vergleich kann ohne oder mit Berücksichtigung des Vorzeichens erfolgen. Bevorzugt ist ein rein betragsmäßiger Vergleich also ein Vergleich der Absolutwerte.
- v11: elftes Vergleichsergebnissignal. In dem Beispiel der Fig. 8 stellt das elfte Vergleichsergebnissignal das Ergebnis des Vergleichs zwischen dem Wert des dritten Unterschiedssignals (d3) und dem achten Referenzwert (Ref8) durch den elften Komparator (C11) dar. Der Vergleich kann ohne oder mit Berücksichtigung des Vorzeichens erfolgen. Bevorzugt ist ein rein betragsmäßiger Vergleich also ein Vergleich der Absolutwerte.
- v12: zwölftes Vergleichsergebnissignal. In dem Beispiel der Fig. 8 stellt das zwölfte Vergleichsergebnissignal das Ergebnis des Vergleichs zwischen dem Wert des vierten Unterschiedssignals (d4) und dem neunten Referenzwert (Ref9) durch den zwölften Komparator (C12) dar. Der Vergleich kann ohne oder mit Berücksichtigung des Vorzeichens erfolgen. Bevorzugt ist ein rein betragsmäßiger Vergleich also ein Vergleich der Absolutwerte.
- v13: dreizehntes Vergleichsergebnissignal. In dem Beispiel der Fig. 50 stellt das dreizehnte Vergleichsergebnissignal das Ergebnis des Vergleichs zwischen dem Wert des integrierten sechsten Unterschiedssignals (d6i) und dem dreizehnten Referenzwert (Ref13) durch den dreizehnten Komparator (C13) dar. Der Vergleich kann ohne oder mit Berücksichtigung des Vorzeichens erfolgen. Bevorzugt ist ein rein betragsmäßiger Vergleich also ein Vergleich der Absolutwerte.
- v14: vierzehntes Vergleichsergebnissignal. In dem Beispiel der Fig. 49 stellt das vierzehnte Vergleichsergebnissignal das Ergebnis des Vergleichs zwischen dem Wert des integrierten fünften Unterschiedssignals (d5i) und dem vierzehnten Referenzwert (Ref14) durch den vierzehnten Komparator (C14) dar. Der Vergleich kann ohne oder mit Berücksichtigung des Vorzeichens erfolgen. Bevorzugt ist ein rein betragsmäßiger Vergleich also ein Vergleich der Absolutwerte.
- v15: fünfzehntes Vergleichsergebnissignal. In dem Beispiel der Fig. 53 stellt das fünfzehnte Vergleichsergebnissignal bevorzugt das Ergebnis des Vergleichs zwischen dem ermittelten Winkel (z.B. arctan(α)) der beiden Koeffizienten des ersten Teilsignals (S3a) des dritten analogen Signals (S3) und dem fünfzehnten Referenzwert (Ref15) durch den fünfzehnten Komparator (C15) dar, der sich bevorzugt innerhalb der Koeffizientenüberwachungsteilvorrichtung (KUE3a) für das erste Teilsignal (S3a) des dritten analogen Signals (S3) befindet. Der Vergleich kann ohne oder mit Berücksichtigung des Vorzeichens erfolgen. Bevorzugt ist ein rein betragsmäßiger Vergleich also ein Vergleich der Absolutwerte.
- v16: sechzehntes Vergleichsergebnissignal. In dem Beispiel der Fig. 53 stellt das sechzehnte Vergleichsergebnissignal bevorzugt das Ergebnis des Vergleichs zwischen dem ermittelten Winkel (z.B. arctan(α)) der beiden Koeffizienten des zweiten Teilsignals (S3b) des dritten analogen Signals (S3) und dem sechzehnten Referenzwert (Ref16) durch den sechzehnten Komparator (C16) dar, der sich bevorzugt innerhalb der Koeffizientenüberwachungsteilvorrichtung (KUE3b) für das zweite Teilsignal (S3b) des dritten analogen Signals (S3) befindet. Der Vergleich kann ohne oder mit Berücksichtigung des Vorzeichens erfolgen. Bevorzugt ist ein rein betragsmäßiger Vergleich also ein Vergleich der Absolutwerte.
- v17: siebzehntes Vergleichsergebnissignal. In dem Beispiel der Fig. 53 stellt das siebzehnte Vergleichsergebnissignal bevorzugt das Ergebnis des Vergleichs zwischen dem ermittelten Winkel (z.B. arctan(α)) der beiden Koeffizienten des ersten Teilsignals (S2a) des zweiten analogen Signals (S2) und dem siebzehnten Referenzwert (Ref17) durch den siebzehnten Komparator (C17) dar, der sich bevorzugt innerhalb der Koeffizientenüberwachungsteilvorrichtung (KUE2a) für das erste Teilsignal (S2a) des zweiten analogen Signals (S2) befindet. Der Vergleich kann ohne oder mit Berücksichtigung des Vorzeichens erfolgen. Bevorzugt ist ein rein betragsmäßiger Vergleich also ein Vergleich der Absolutwerte.
- v18: achtzehntes Vergleichsergebnissignal. In dem Beispiel der Fig. 53 stellt das achtzehnte Vergleichsergebnissignal bevorzugt das Ergebnis des Vergleichs zwischen dem ermittelten Winkel (z.B. arctan(α)) der beiden Koeffizienten des zweiten Teilsignals (S2b) des zweiten analogen Signals (S2) und dem achtzehnten Referenzwert (Ref18) durch den achtzehnten Komparator (C18) dar, der sich bevorzugt innerhalb der Koeffizientenüberwachungsteilvorrichtung (KUE2b) für das zweite Teilsignal (S2b) des zweiten analogen Signals (S2) befindet. Der Vergleich kann ohne oder mit Berücksichtigung des Vorzeichens erfolgen. Bevorzugt ist ein rein betragsmäßiger Vergleich also ein Vergleich der Absolutwerte.
- v19: neunzehntes Vergleichsergebnissignal. In dem Beispiel der Fig. 53 stellt das neunzehnte Vergleichsergebnissignal bevorzugt das Ergebnis des Vergleichs zwischen dem ermittelten Winkel (z.B. arctan(α)) der beiden Koeffizienten des dritten Teilsignals (S2c) des zweiten analogen Signals (S2) und dem neunzehnten Referenzwert (Ref19) durch den neunzehnten Komparator (C19) dar, der sich bevorzugt innerhalb der Koeffizientenüberwachungsteilvorrichtung (KUE2c) für das dritte Teilsignal (S2c) des zweiten analogen Signals (S2) befindet. Der Vergleich kann ohne oder mit Berücksichtigung des Vorzeichens erfolgen. Bevorzugt ist ein rein betragsmäßiger Vergleich also ein Vergleich der Absolutwerte
- Z1: erster Zeitpunkt
- Z2: zweiter Zeitpunkt
- z1: erster Zeitpunkt für das Abspeichern der ermittelten Koeffizienten
- z2: zweiter Zeitpunkt für das Abspeichern der ermittelten Koeffizienten
- z3: dritter Zeitpunkt für das Abspeichern der ermittelten Koeffizienten
- z4: vierter Zeitpunkt für das Abspeichern der ermittelten Koeffizienten
- ZA: durch die betreffende Koeffizientenüberwachungsteilvorrichtung (KUE) zu analysierendes Signal. Dabei kann es sich beispielsweise um eines der folgenden Signale mit den folgenden Bezugszeichen handeln: S2a, S2b, S2c, S3a, S3b. Andere interne, symmetrische Signale können so auch überwacht werden.
- zn: n-ter Zeitpunkt für das Abspeichern der ermittelten Koeffizienten

## Patentansprüche

1. Selbsttestfähiges Messsystem (SS), mit
- einer Digitalsignal-Erzeugungseinheit (DSO),
- einer Treiberstufe (DR),
- einer Messeinheit (TR), die ein analoges Ausgangssignal (MS) als Messsignal aussendet und in Reaktion darauf ein Empfangssignal (ES) empfängt,
- einem analogen Eingangsschaltkreis (AS),
- einem digitalen Eingangsschaltkreis (DSI),
- einer analogen Kanalsimulationseinheit (ACS),
- einer digitalen Kanalsimulationseinheit (DCS),
- einem analogen Multiplexer (AMX) und
- einem digitalen Multiplexer (DMX),
- wobei das Messsystem (SS)
- in einer Betriebsphase einen Betriebszustand und
- in einer Testphasel einen ersten Testzustand einnimmt,
- wobei in dem Betriebszustand
- die Digitalsignal-Erzeugungseinheit (DSO) ein erstes digitales Signal (S1) erzeugt,
- die Treiberstufe (DR) dieses erste digitale Signal (S1) der Digitalsignal-Erzeugungseinheit (DSO) in ein zweites analoges Signal (S2) umsetzt,
- dieses zweite analoge Signal (S2) die Messeinheit (TR) zum Aussenden des Ausgangssignals (MS) als Messsignal in einen Messkanal (CN) veranlasst,
- die Messeinheit (TR) aus dem Messkanal (CN) in Abhängigkeit von dem Ausgangssignal (MS) das Empfangssignal (ES) empfängt,
- die Messeinheit (TR) in Abhängigkeit von dem empfangenen Empfangssignal (ES) ein drittes analoges Signal (S3) erzeugt,
- der analoge Multiplexer (AMX) dieses dritte analoge Signal (S3) als viertes analoges Signal (S4) an den analogen Eingangsschaltkreis (AS) weiterleitet,
- der analoge Eingangsschaltkreis (AS) das vierte analoge Signal (S4) in ein fünftes digitales Signal (S5) wandelt,
- der digitale Multiplexer (DMX) das fünfte digitale Signal (S5) als sechstes digitales Signal (S6) an den digitalen Eingangsschaltkreis (DSI) weiterleitet,
- der digitale Eingangsschaltkreis (DSI) das sechste digitale Signal (S6) empfängt und ein siebtes Antwortsignal (S7) erzeugt und
- das siebte Antwortsignal (S7) als Messergebnis oder zur Bildung des Messergebnisses verwendbar ist,
- wobei in dem ersten Testzustand
- die Digitalsignal-Erzeugungseinheit (DSO) ein erstes digitales Signal (S1) erzeugt,
- die Treiberstufe (DR) dieses erste digitale Signal (S1) der Digitalsignal-Erzeugungseinheit (DSO) in ein zweites analoges Signal (S2) umsetzt,
- dieses zweite analoge Signal (S2) die Messeinheit (TR) zum Aussenden des Ausgangssignals (MS) als Messsignal in einen Messkanal (CN) veranlasst,
- die Messeinheit (TR) aus dem Messkanal (CN) in Abhängigkeit von dem Ausgangssignal (MS) das Empfangssignal (ES) empfängt,
- die Messeinheit (TR) in Abhängigkeit von dem empfangenen Empfangssignal (ES) ein drittes analoges Signal (S3) erzeugt,
- der analoge Multiplexer (AMX) dieses dritte analoge Signal (S3) als viertes analoges Signal (S4) an den analogen Eingangsschaltkreis (AS) weiterleitet,
- der analoge Eingangsschaltkreis (AS) das vierte analoge Signal (S4) in ein fünftes digitales Signal (S5) wandelt,
- der digitale Multiplexer (DMX) das fünfte digitale Signal als sechstes digitales Signal (S6) an den digitalen Eingangsschaltkreis (DSI) weiterleitet,
- der digitale Eingangsschaltkreis (DSI) das sechste digitale Signal (S6) empfängt und ein siebtes Antwortsignal (S7) erzeugt,
- das siebte Antwortsignal (S7) als Prüfergebnis oder zur Bildung des Ergebnisses
einer Überprüfung des Messsystems verwendet wird,
**dadurchgekennzeichnet**,
- dass das Messsystem (SS) in der Testphase auch einen dritten Testzustand einnimmt,
- wobei in dem dritten Testzustand
- die Digitalsignal-Erzeugungseinheit (DSO) ein erstes digitales Signal (S1) erzeugt,
- die digitale Kanalsimulationseinheit (DCS) dieses erste digitale Signal (S1) in ein fünftes digitales Testsignal (S5t) wandelt,
- der digitale Multiplexer (DMX) das fünfte digitale Testsignal (S5t) als sechstes digitales Signal (S6) an den digitalen Eingangsschaltkreis (DSI) weiterleitet,
- der digitale Eingangsschaltkreis (DSI) das sechste digitale Signal (S6) empfängt und ein siebtes Antwortsignal (S7) erzeugt und
- das siebte Antwortsignal (S7) als Prüfergebnis oder zur Bildung des Ergebnisses einer Überprüfung des Messsystems verwendet wird.

2. Messsystem (SS) nach Anspruch 1, **dadurch gekennzeichnet, dass** das Messsystem (SS) in der Testphase neben dem ersten Testzustand und dem dritten Testzustand auch einen zweiten Testzustand einnimmt, wobei in dem zweiten Testzustand
- die Digitalsignal-Erzeugungseinheit (DSO) ein erstes digitales Signal (S1) erzeugt,
- die Treiberstufe (DR) dieses erste digitale Signal (S1) der Digitalsignal-Erzeugungseinheit (DSO) in ein zweites analoges Signal (S2) umsetzt,
- die analoge Kanalsimulationseinheit (ACS) das zweite analoge Signal (S2) zu einem dritten analogen Testsignal (S3t) modifiziert,
- der analoge Multiplexer (AMX) dieses dritte analoge Testsignal (S3t) als viertes analoges Signal (S4) an den analogen Eingangsschaltkreis (AS) weiterleitet,
- der analoge Eingangsschaltkreis (AS) das vierte analoge Signal (S4) in ein fünftes analoges Signal (S5) wandelt,
- der digitale Multiplexer (DMX) das fünfte digitale Signal (S5) als sechstes digitales Signal an den digitalen Eingangsschaltkreis (DSI) weiterleitet,
- der digitale Eingangsschaltkreis (DSI) das sechste digitale Signal (S6) empfängt und ein siebtes Antwortsignal (S7) erzeugt und
- das siebte Antwortsignal (S7) als Prüfergebnis oder zur Bildung des Ergebnisses einer Überprüfung des Messsystems verwendbar ist.

3. Messsystem (SS) nach Anspruch 1 oder 2, **gekennzeichnet durch**
- einen Übertrager (UEB), der zwischen der Messeinheit (TR) einerseits und der Treiberstufe (DR) sowie dem analogen Multiplexer (AMX) andererseits angeordnet ist,
- wobei im Betriebszustand und im ersten Testzustand
- das zweite analoge Signal (S2) der Treiberstufe (DR) der Messeinheit (TR) durch den Übertrager (UEB) zuführbar ist und
- die Messeinheit (TR) das Empfangssignal dem Übertrager (UEB) zuführt und dieser es als drittes analoges Signal (S3) an den analogen Multiplexer (AMX) weiterleitet.

4. Messsystem (SS) nach Anspruch 3, **dadurch gekennzeichnet, dass** im Betriebszustand mindestens eine Vergleichsvorrichtung, insbesondere ein Komparator (C2, C3), einen Parameterwert des dritten analogen Signals (S3a, S3b) mit zumindest einem Referenzwert (Ref2, Ref3) vergleicht und in Abhängigkeit vom Vergleichsergebnis zumindest ein Vergleichsergebnissignal (v2, v3) erzeugt.

5. Messsystem (SS) nach Anspruch 3, **dadurch gekennzeichnet, dass** im Betriebszustand mindestens eine Vergleichsvorrichtung, insbesondere ein Differenzverstärker (D1), zwei Parameterwerte des dritten analogen Signals (S3a, S3b) miteinander, insbesondere durch Differenzbildung, vergleicht und ein Unterschiedssignal (d1) erzeugt und durch Vergleich des Unterschiedssignals (d1) mit zumindest einen Referenzwert (Ref1) ein Vergleichsergebnissignal (v1), insbesondere mittels eines von der Vergleichsvorrichtung separaten Komparators (C1), erzeugt.

6. Messsystem (SS) nach Anspruch 3, **dadurch gekennzeichnet, dass** im Betriebszustand mindestens eine Vergleichsvorrichtung, insbesondere ein Komparator (C4, C5, C6), einen Parameterwert des zweiten analogen Signals (S2a, S2b, S2c) mit einen Referenzwert (Ref4, Ref5 Ref6) vergleicht und in Abhängigkeit vom Vergleichsergebnis ein Vergleichsergebnissignal (v4, v5, v6) erzeugt.

7. Messsystem (SS) nach Anspruch 3, **dadurch gekennzeichnet, dass** im Betriebszustand mindestens eine Vergleichsvorrichtung, insbesondere ein Differenzverstärker (D7, D6, D8), zwei Parameterwerte des zweiten analogen Signals (S2a, S2b, S2c) miteinander, insbesondere durch Differenzbildung, vergleicht und ein Unterschiedssignal (d6, d7, d8) erzeugt und durch Vergleich des Unterschiedssignals (d6, d7, d8) mit einen Referenzwert (Ref6, Ref7, Ref8) ein Vergleichsergebnissignal (v10, v11, v12), insbesondere mittels eines von der Vergleichsvorrichtung separaten Komparators (C10, C11, C12), erzeugt.

8. Messsystem (SS) nach einem der Ansprüche 1 bis 7, **dadurch gekennzeichnet, dass** im Betriebszustand in Abhängigkeit von mindestens einem Vergleichsergebnissignal (v1, v2, v3, v4, v5, v6, v10, v11, v12, v13, v14, v15, v16, v17, v18, v19) eine Fehlermeldung erzeugt wird oder erzeugbar ist.

9. Messsystem (SS) nach Anspruch 8, **gekennzeichnet durch** eine Steuereinrichtung (CTR), die das Vergleichsergebnissignal (v1, v2, v3, v4, v5, v6, v10, v11, v12, v13, v14, v15, v16, v17, v18, v19) auswertet und die Fehlermeldung erzeugt.

10. Messsystem (SS) nach einem der Ansprüche 1 bis 8, **dadurch gekennzeichnet, dass** die Messeinheit (TR) ein Ultraschalltransducer ist, der als Ausgangssignal (MS) ein Ultraschallmesssignal als Messsignal in einen Ultraschallmesskanal als Messkanal (CN) aussendet und als Empfangssignal (ES) das an einem Objekt in dem Ultraschallmesskanal (CN) reflektierte Ultraschallempfangssignal empfängt.

11. Messsystem (SS) nach Anspruch 2 oder einem der Ansprüche 3-10 wenn abhängig von Anspruch 2, **gekennzeichnet durch** eine Steuereinrichtung (CTR) zur Ansteuerung der Digitalsignal-Erzeugungseinheit (DSO) und zum Empfang des siebten analogen Signals (S7) des digitalen Eingangsschaltkreises, wobei die Steuereinrichtung (CTR) im ersten oder zweiten oder dritten Testzustand das siebte Antwortsignal (S7) des digitalen Eingangsschaltkreises (DSI) mit einer vorgegebenen Antwort vergleicht und ein Vergleichsergebnis ermittelt.

12. Messsystem (SS) nach Anspruch 11, **dadurch gekennzeichnet, dass** die Steuereinrichtung (CTR) im ersten oder zweiten oder dritten Testzustand die Digitalsignal-Erzeugungseinheit (DSO) mit einem Testsignal (S0) ansteuert und dass die Steuereinrichtung (CTR) im ersten oder zweiten oder dritten Testzustand das siebte Antwortsignal (S7) des digitalen Eingangsschaltkreises (DSI) mit einer vorgegebenen Antwort vergleicht und ein Vergleichsergebnis ermittelt, wobei die vorgegebene Antwort von dem Testsignal (S0) abhängig ist.

13. Messsystem (SS) nach einem der Ansprüche 2 bis 12, **gekennzeichnet durch** eine Steuereinrichtung (CTR), wobei die Steuereinrichtung (CTR) im zweiten Testzustand über die Treiberstufe (DR) die analoge Kanalsimulationseinheit (ACS) ansteuert und von dieser Ansteuerung der analogen Kanalsimulationseinheit (ACS) die Entstehung des dritten analogen Testsignals (S3t) aus dem zweiten analogen Signal (S2) in der Kanalsimulationseinheit (ACS) abhängt, wobei die Steuereinrichtung (CTR) im zweiten Testzustand das siebte Antwortsignal (S7) des digitalen Eingangsschaltkreises (DSI) mit einer vorgegebenen Antwort vergleicht und ein Vergleichsergebnis ermittelt, wobei die vorgegebene Antwort und die Ansteuerung der analogen Kanalsimulationseinheit (ACS) voneinander abhängig sind.

14. Messsystem (SS) nach einem der Ansprüche 1 bis 13, **gekennzeichnet durch** eine Steuereinrichtung (CTR), wobei die Steuereinrichtung (CTR) im dritten Testzustand die digitale Kanalsimulationseinheit (DCS) ansteuert und von dieser Ansteuerung der digitalen Kanalsimulationseinheit (DCS) die Entstehung abhängt, wie die digitale Kanalsimulationseinheit (DCS) des fünften digitalen Signals (S5t) aus dem ersten digitalen Signal (S1) umsetzt und wobei die Steuereinrichtung (CTR) im dritten Testzustand das siebte Antwortsignal (S7) des digitalen Eingangsschaltkreises (DSI) mit einer vorgegebenen Antwort vergleicht und ein Vergleichsergebnis ermittelt, wobei die vorgegebene Antwort und die Ansteuerung der digitalen Kanalsimulationseinheit (DCS) voneinander abhängig sind.

15. Messsystem (SS) nach einem der Ansprüche 1 bis 14, **dadurch gekennzeichnet, dass** der analoge Multiplexer (AMX) Teil der analogen Kanalsimulationseinheit (ACS) oder des analogen Eingangsschaltkreises (AS) oder jeweils umgekehrt ist und/oder dass der digitale Multiplexer (DMX) Teil der digitalen Kanalsimulationseinheit (DCS) oder des digitalen Eingangsschaltkreises (DSI) oder jeweils umgekehrt ist.

16. Messsystem (SS) nach einem der vorhergehenden Ansprüche, **dadurch gekennzeichnet, dass** die Messeinheit (TR) einen Ultraschalltransducer oder ein Paar aus mindestens einem Ultraschallsender und einem Ultraschallempfänger aufweist, dass das zweite, dritte und vierte analoge Signal (S2, S3, S4) jeweils ein oszillierendes Signal ist, dass das erste, fünfte und sechste digitale Signal (S1, S5, S6) jeweils ein oszillierendes Signal repräsentiert und dass der digitale Eingangsschaltkreis (DSI) eine Vorrichtung zur Messung der Schwingfrequenz des sechsten digitalen Signals (S6) in der Aussendephase des Ausgangssignals (MS) der Messeinheit (TR) und/oder eine Vorrichtung zur Messung der Ausschwingzeit des sechsten digitalen Signals (S6) in der Ausschwingphase im Anschluss an eine Sendephase und/oder im Anschluss an den Empfang des Empfangssignals (ES) des Ultraschalltransducer oder des Ultraschallsenders des Paars aus mindestens eines Ultraschallsenders und Ultraschallempfängers aufweist.

17. Messsystem (SS) nach Anspruch 16, **dadurch gekennzeichnet, dass** der digitale Eingangsschaltkreis (DSI) oder eine Steuereinheit (CTR) die gemessene Schwingfrequenz mit einem Sollwert oder einem Sollwertbereich vergleicht und/oder dass der digitale Eingangsschaltkreis (DSI) oder eine Steuereinheit (CTR) die gemessene Ausschwingzeit mit einem Sollwert oder einem Sollwertbereich vergleicht und insbesondere auf einen Kurzschluss der Messeinheit (TR) oder einen fehlenden oder nicht funktionierenden Teil der Messeinheit (TR) oder einen sekundärseitig angeschlossenen Übertrager (UEB) oder auf einen anderen Fehler schließt, wenn die ermittelte Schwingfrequenz höher als der Sollwert der Schwingfrequenz oder wertemäßig oberhalb des Sollwertbereichs der Schwingfrequenz liegt und/oder wenn die ermittelte Ausschwingzeit kürzer als der Sollwert der Ausschwingzeit oder wertemäßig unterhalb des Sollwertbereichs der Ausschwingzeit liegt, wobei der digitale Eingangsschaltkreis (DSI) oder eine Steuereinheit (CTR) in diesem Fall oder diesen Fällen eine Fehlermeldung erzeugt.

18. Messsystem (SS) nach einem der Ansprüche 1 bis 9 oder 12 bis 15, **dadurch gekennzeichnet, dass** die Messeinheit (TR) mindestens ein aktives Element zur Erzeugung eines akustischen, optischen, elektrischen, induktiven, kapazitiven, elektromagnetischen IR- oder UV-Ausgangssignals (MS) als Messsignal und mindestens ein Sensorelement zum Erfassen eines Signals als Empfangssignal in Reaktion auf das Ausgangssignal des aktiven Elements aufweist.

19. Messsystem (SS) nach einem der Ansprüche 1 bis 9, 11-15 und 18, **dadurch gekennzeichnet, dass** die Messeinheit (TR) einen Ultraschalltransducer oder ein Paar aus mindestens einem Ultraschallsender und einem Ultraschallempfänger, eine TOF-Kamera, ein Paar aus Heizelement und Temperatursensor, ein Paar aus optischem Sender und optischem Empfänger, oder mindestens ein anderes Paar aus Aktor und Sensor, die in Wirkverbindung miteinander stehen, und/oder ein Micro-Electrical-Mechanical-System, ein Micro-Electrical-Optical-System oder ein Micro-Electrical-Mechanical-Optical-System aufweist.

20. Messsystem (SS) nach einem der vorhergehenden Ansprüche, **dadurch gekennzeichnet, dass** im Betriebszustand der Werteverlauf und/oder die Werte des siebten Antwortsignals (S7), insbesondere in Form von Messergebnissen und Messwerten, auf Plausibilität, insbesondere durch den Vergleich mit Sollwerten und Sollwertbereichen, durch den digitalen Empfangsschaltkreis (DSI) und/oder die Steuereinrichtung (CTR) überprüfbar sind.

21. Messsystem (SS) nach Anspruch 20, **dadurch gekennzeichnet, dass** eine Weitergabe des Werteverlaufs und/oder der Werte des siebten Antwortsignals (S7), die insbesondere in Form von Messergebnissen und Messwerten vorliegen, im Betriebszustand nur erfolgt, wenn die Plausibilitätsprüfung erfolgreich war und/oder dass eine Fehlermeldung erfolgt, wenn die Plausibilitätsprüfung nicht erfolgreich war.

22. Verfahren zum Betreiben eines selbsttestfähigen Messsystems (SS) nach Anspruch 1, mit
folgenden Schritten:
- Einnehmen des dritten Testzustands und Simulation mindestens eines Testfalls durch Erzeugung eines diesem Testfall entsprechenden Testsignals (S0) durch die Steuereinheit (CTR),
- Erfassen des siebten Antwortsignals (S7) durch die Steuereinheit (CTR),
- Vergleichen des siebten Antwortsignals (S7) mit einem vorgegebenen Muster für das siebte Antwortsignal (S7),
- Feststellen eines Fehlers, wenn das siebte Antwortsignal (S7) nicht exakt dem vorgegebenen Muster des siebten Antwortsignals (S7) entspricht,
- Verlassen des dritten Testzustands und
- Einnehmen des Betriebszustands.

23. Verfahren zum Betreiben eines selbsttestfähigen Messsystems (SS) nach Anspruch 2, mit
folgenden Schritten:
- Einnehmen des zweiten Testzustands und Simulation mindestens eines Testfalls durch Erzeugung eines diesem Testfall entsprechenden Testsignals (S0) durch die Steuereinheit (CTR),
- Erfassen des siebten Antwortsignals (S7) durch die Steuereinheit (CTR),
- Vergleichen des siebten Antwortsignals (S7) mit einem vorgegebenen Musterkorridor für das siebte Antwortsignal (S7),
- Feststellen eines Fehlers, wenn das siebte Antwortsignal (S7) nicht innerhalb eines vorgegeben Musterkorridors des siebten Antwortsignals (S7) liegt,
- Verlassen des zweiten Testzustands und
- Einnehmen des Betriebszustands.

24. Verfahren zum Betreiben eines selbsttestfähigen Messsystems (SS) nach Anspruch 1 oder 2, mit folgenden Schritten:
- Einnehmen des ersten Testzustands durch das Messsystem und Simulation mindestens eines Testfalls durch Erzeugung eines diesem Testfall entsprechenden Testsignals (S0) durch die Steuereinheit (CTR),
- Erfassen des siebten Antwortsignals (S7) durch die Steuereinheit (CTR),
- Vergleichen des siebten Antwortsignals (S7) mit einem vorgegebenen Musterkorridor für das siebte Antwortsignal (S7),
- Feststellen eines Fehlers, wenn das siebte Antwortsignal (S7) nicht innerhalb eines vorgegeben Musterkorridors des siebten Antwortsignals (S7) liegt,
- Verlassen des ersten Testzustands,
- Einnehmen des Betriebszustands.

25. Verfahren zum Betreiben eines selbsttestfähigen Messsystems (SS) nach Anspruch 1, mit folgenden Schritten:
- optionales Einnehmen eines Einschaltzustands (EZ) nach dem Einschalten oder Zurücksetzen des Messsystems (SS),
- Einnehmen des dritten Testzustands und Prüfung der Funktion der Digitalsignal-Erzeugungseinheit (DSO) und des digitalen Eingangsschaltkreises (DSI) mittels mindestens eines vorbestimmten Testmusters oder einer vorbestimmten Testsequenz und Anzeigen und/oder Wechsel in einen Fehlerzustand (FZ), wenn ein Fehler auftritt,
- Einnehmen des ersten Testzustands und parametrische Prüfung der Funktion der Messeinheit (TR) mittels mindestens eines vorbestimmten Testmusters oder einer vorbestimmten Testsequenz und Anzeigen und/oder Wechsel in einen Fehlerzustand (FZ), wenn ein Fehler auftritt, und
- Einnehmen des Betriebszustands.

26. Verfahren nach Anspruch 25, **dadurch gekennzeichnet, dass** im Einschaltzustand (EZ) nach dem Einschalten oder Zurücksetzen des Messsystems (SS) keine Messwerte, sondern nur Statusmeldungen über den Fortschritt des Einschaltvorgangs über eine Datenschnittstelle (IO) ausgegeben werden.

27. Verfahren nach einem der Ansprüche 22 bis 25, **dadurch gekennzeichnet, dass** der Betriebszustand eingenommen wird, wenn im betreffenden Testzustand kein Fehler aufgetreten ist, oder dass der Betriebszustand trotz des Auftretens eines Fehlers im betreffenden Testzustand eingenommen wird.

## Claims

1. A self-testing measuring system (SS), comprising
- a digital signal generating unit (DSO),
- a driver stage (DR),
- a measuring unit (TR), which transmits an analogue output signal (MS) as measuring signal and receives a receive signal (ES) in response thereto,
- an analogue input circuit (AS),
- a digital input circuit (DSI),
- an analogue channel simulation unit (ACS),
- a digital channel simulation unit (DCS),
- an analogue multiplexer (AMX), and
- a digital multiplexer (DMX),
- wherein the measuring system (SS) assumes
- in an operating phase, an operating mode, and
- in a test phase, a first test mode,
- wherein in the operating mode
- the digital signal generating unit (DSO) generates a first digital signal (S1),
- the driver stage (DR) converts this first digital signal (S1) of the digital signal generating unit (DSO) into a second analogue signal (S2),
- this second analogue signal (S2) prompts the measuring unit (TR) to transmit the output signal (MS) as measurement signal into a measuring channel (CN),
- the measuring unit (TR) receives the receive signal (ES) from the measuring channel (CN) depending on the output signal (MS),
- the measuring unit (TR) generates a third analogue signal (S3) depending on the received receive signal (ES),
- the analogue multiplexer (AMX) forwards this third analogue signal (S3) to the analogue input circuit (AS) as a fourth analogue signal (S4),
- the analogue input circuit (AS) converts the fourth analogue signal (S4) into a fifth digital signal (S5),
- the digital multiplexer (DMX) forwards the fifth digital signal (S5) to the digital input circuit (DSI) as a sixth digital signal (S6),
- the digital input circuit (DSI) receives the sixth digital signal (S6) and generates a seventh response signal (S7), and
- the seventh response signal (S7) may be used as measurement result or to form the measurement result,
- wherein in the first test mode
- the digital signal generating unit (DSO) generates a first digital signal (S1),
- the driver stage (DR) converts this first digital signal (S1) of the digital signal generating unit (DSO) into a second analogue signal (S2),
- this second analogue signal (S2) prompts the measuring unit (TR) to emit the output signal (MS) as measurement signal into a measuring channel (CN),
- the measuring unit (TR) receives the receive signal (ES) from the measuring channel (CN) depending on the output signal (MS),
- the measuring unit (TR) generates a third analogue signal (S3) depending on the received receive signal (ES),
- the analogue multiplexer (AMX) forwards this third analogue signal (S3) to the analogue input circuit (AS) as a fourth analogue signal S4),
- the analogue input circuit (AS) converts the fourth analogue signal (S4) into a fifth digital signal (S5),
- the digital multiplexer (DMX) forwards the fifth digital signal to the digital input circuit (DSI) as a sixth digital signal (S6),
- the digital input circuit (DSI) receives the sixth digital signal (S6) and generates a seventh response signal (S7),
- the seventh response signal (S7) is used as test result or to form the
result of a check performed by the measuring system, **characterized in that**
- in the test phase, the measuring system (SS) also assumes a third test mode,
- wherein in the third test mode
- the digital signal generating unit (DSO) generates a first digital signal (S1),
- the digital channel simulation unit (DCS) converts this first digital signal (S1) into a fifth digital test signal (S5t),
- the digital multiplexer (DMX) forwards the fifth digital test signal (S5t) to the digital input circuit (DSI) as a sixth digital signal (S6),
- the digital input circuit (DSI) receives the sixth digital signal (S6) and generates a seventh response signal (S7), and
- the seventh response signal (S7) is used as test result or to form the result of a check performed by the measuring system.

2. The measuring system (SS) according to claim 1, **characterized in that**, in the test phase, the measuring system (SS) also assumes a second test mode, besides the first test mode and the third test mode, wherein in the second test mode
- the digital signal generating unit (DSO) generates a first digital signal (S1),
- the driver stage (DR) converts this first digital signal (S1) of the digital signal generating unit (DSO) into a second analogue signal (S2)
- the analogue channel simulation unit (ACS) modifies the second analogue signal (S2) into a third analogue test signal (S3t),
- the analogue multiplexer (AMX) forwards this third analogue test signal (S3t) as fourth analogue signal (S4) to the analogue input circuit (AS),
- the analogue input circuit (AS) converts the fourth analogue signal (S4) into a fifth digital signal (S5),
- the digital multiplexer (DMX) forwards the fifth digital signal (S5) as sixth digital signal to the digital input circuit (DSI),
- the digital input circuit (DSI) receives the sixth digital signal (S6) and generates a seventh response signal (S7), and
- the seventh response signal (S7) may be used as test result or to form the result of a check performed by the measuring system.

3. The measuring system (SS) according to claim 1 or 2, **characterized by**
- a transmitter (UEB), which is arranged between the measuring unit (TR) on the one hand and the driver stage (DR) and the analogue multiplexer (AMX) on the other hand,
- wherein in the operating mode and in the first test mode
- the second analogue signal (S2) of the driver stage may be fed to the measuring unit (TR) by the transmitter (UEB), and
- the measuring unit (TR) feeds the receive signal to the transmitter (UEB), and this forwards it as a third analogue signal (S3) to the analogue multiplexer (AMX).

4. The measuring system (SS) according to claim 3, **characterized in that**, in the operating mode, at least one comparison apparatus, in particular a comparator (C2, C3), compares a parameter value of the third analogue signal (S3a, S3b) with at least one reference value (Ref3, Ref3) and generates at least one comparison result signal (v2, v3) depending on the comparison result.

5. The measuring system (SS) according to claim 3, **characterized in that**, in the operating mode, at least one comparison apparatus, in particular a differential amplifier (D1), compares two parameter values of the third analogue signal (S3a, S3b) with one another, in particular by establishing a difference, and generates a difference signal (d1), and by comparing the difference signal (d1) with at least one reference value (Ref1) generates a comparison result signal (v1), in particular by means of a comparator (C1) separate from the comparison apparatus.

6. The measuring system (SS) according to claim 3, **characterized in that**, in the operating mode, at least one comparison apparatus, in particular a comparator (C4, C5, C6), compares a parameter value of the second analogue signal (S2a, S2b, S2c) with a reference value (Ref4, Ref5, Ref6) and generates a comparison result signal (v4, v5, v6) depending on the comparison result.

7. The measuring system (SS) according to claim 3, **characterized in that**, in the operating mode, at least one comparison apparatus, in particular a differential amplifier (D7, D6, D8), compares two parameter values of the second analogue signal (S2a, S2b, S2c) with one another, in particular by establishing a difference, and generates a difference signal (d6, d7, d8), and by comparing the difference signal (d6, d7, d8) with a reference value (Ref6, Ref7, Ref8) generates a comparison result signal (v10, v11, v12), in particular by means of a comparator (C10, C11, C12) separate from the comparison apparatus.

8. The measuring system (SS) according to any one of claims 1 to 7, **characterized in that**, in the operating mode, an error message is generated or may be generated depending on at least one comparison result signal (v1, v2, v3, v4, v5, v6, v10, v11, v12, v13, v14, v15, v16, v17, v18, v19).

9. The measuring system (SS) according to claim 8, **characterized by** a control device (CTR) which assesses the comparison result signal (v1, v2, v3, v4, v5, v6, v10, v11, v12, v13, v14, v15, v16, v17, v18, v19) and generates the error message.

10. The measuring system (SS) according to any one of claims 1 to 8, **characterized in that** the measuring unit (TR) is an ultrasound transducer which, as output signal (MS), transmits an ultrasound measurement signal as measurement signal into an ultrasound measuring channel as measuring channel (CN) and, as receive signal (ES), receives the ultrasound receive signal reflected at an object in the ultrasound measuring channel (CN).

11. The measuring system (SS) according to claim 2 or any one of claims 3-10 if dependent on claim 2, **characterized by** a control device (CTR) for controlling the digital signal generating unit (DSO) and for receiving the seventh analogue signal (S7) of the digital input circuit, wherein the control device (CTR) in the first or second or third test mode compares the seventh response signal (S7) of the digital input circuit (DSI) with a predefined response and determines a comparison result.

12. The measuring system (SS) according to claim 11, **characterized in that** the control device (CTR), in the first or second or third test mode, controls the digital signal generating unit (DSO) with a test signal (S0), and **in that** the control device (CTR), in the first or second or third test mode, compares the seventh response signal (S7) of the digital input circuit (DSI) with a predefined response and determines a comparison result, wherein the predefined response is dependent on the test signal (S0).

13. The measuring system (SS) according to any one of claims 2 to 12, **characterized by** a control device (CTR), wherein the control device (CTR), in the second test mode, controls the analogue channel simulation unit (ACS) via the driver stage (DR), and the creation of the third analogue test signal (S3t) from the second analogue signal (S2) in the channel simulation unit (ACS) is dependent on this control of the analogue channel simulation unit (ACS), wherein the control device (CTR), in the second test mode, compares the seventh response signal (S7) of the digital input circuit (DSI) with a predefined response and determines a comparison result, wherein the predefined response and the control of the analogue channel simulation unit (ACS) are dependent on one another.

14. The measuring system (SS) according to any one of claims 1 to 13, **characterized by** a control device (CTR), wherein the control device (CTR), in the third test mode, controls the digital channel simulation unit (DCS) and the way in which the digital channel simulation unit (DCS) converts the fifth digital signal (S5t) from the first digital signal (S1) is dependent on this control of the digital channel simulation unit (DCS), and wherein the control device (CTR), in the third test mode, compares the seventh response signal (S7) of the digital input circuit (DSI) with a predefined response and determines a comparison result, wherein the predefined response and the control of the digital channel simulation unit (DCS) are dependent on one another.

15. The measuring system (SS) according to any one of claims 1 to 14, **characterized in that** the analogue multiplexer (AMX) is part of the analogue channel simulation unit (ACS) or of the analogue input circuit (AS), or vice versa, and/or **in that** the digital multiplexer (DMX) is part of the digital channel simulation unit (DCS) or of the digital input circuit (DSI), or vice versa.

16. The measuring system (SS) according to any one of the preceding claims, **characterized in that** the measuring unit (TR) comprises an ultrasound transducer or a pair formed of at least one ultrasound transmitter and one ultrasound receiver, **in that** the second, third and fourth analogue signal (S2, S3, S4) is in each case an oscillating signal, **in that** the first, fifth and sixth digital signal (S1, S5, S6) represents in each case an oscillating signal, and **in that** the digital input circuit (DSI) comprises an apparatus for measuring the vibration frequency of the sixth digital signal (S6) in the transmission phase of the output signal (MS) of the measuring unit (TR) and/or an apparatus for measuring the decay time of the sixth digital signal (S6) in the decay phase following a transmission phase and/or following the receipt of the receive signal (ES) of the ultrasound transducer or ultrasound transmitter of the pair formed of at least one ultrasound transmitter and one ultrasound receiver.

17. The measuring system (SS) according to claim 16, **characterized in that** the digital input circuit (DSI) or a control unit (CTR) compares the measured vibration frequency with a target value or a target value range, and/or **in that** the digital input circuit (DSI) or a control unit (CTR) compares the measured decay time with a target value or a target value range and in particular concludes that there is a short circuit of the measuring unit (TR), or an absent or non-functioning part of the measuring unit (TR), or a transmitter (UEB) connected on the secondary side , or another error, if the determined vibration frequency is higher than the target value of the vibration frequency or has a value above the target value range of the vibration frequency and/or if the determined decay time is shorter than the target value of the decay time or has a value below the target value range of the decay time, wherein the digital input circuit (DSI) or a control unit (CTR) generates an error message in this case or these cases.

18. The measuring system (SS) according to any one of claims 1 to 9 or 12 to 15, **characterized in that** the measuring unit (TR) comprises at least one active element for generating an acoustic, optical, electric, inductive, capacitive, electromagnetic IR or UV output signal (MS) as measurement signal and at least one sensor element for detecting a signal as receive signal in response to the output signal of the active element.

19. The measuring system (SS) according to any one of claims 1 to 9, 11 to 15 and 18, **characterized in that** the measuring unit (TR) comprises an ultrasound transducer or a pair formed of at least an ultrasound transmitter and an ultrasound receiver, a TOF camera, a pair formed of heating element and temperature sensor, a pair formed of optical transmitter and optical receiver, or at least one other pair formed of actuator and sensor, which are operatively connected to one another, and/or a micro-electrical-mechanical system, a micro-electrical-optical system or a micro-electrical-mechanical-optical system.

20. The measuring system (SS) according to any one of the preceding claims, **characterized in that**, in the operating mode, the value profile and/or the values of the seventh response signal (S7), in particular in the form of measurement results and measured values, may be checked for plausibility, in particular by the comparison with target values and target value ranges, by the digital input circuit (DSI) and/or the control device (CTR).

21. The measuring system (SS) according to claim 20, **characterized in that** the value profile and/or the values of the seventh response signal (S7), which in particular are present in the form of measurement results and measured values, are/is forwarded in the operating mode only if the plausibility check was successful, and/or **in that** an error message is generated if the plausibility check was not successful.

22. A method for operating a self-testing measuring system (SS) according to claim 1, the method comprising the following steps:
- assuming the third test mode and simulating at least one test case by generation of a test signal (S0) corresponding to this test case by the control unit (CTR),
- detecting the seventh response signal (S7) by the control unit (CTR),
- comparing the seventh response signal (S7) with a predefined pattern for the seventh response signal (S7),
- determining an error if the seventh response signal (S7) does not correspond exactly to the predefined pattern of the seventh response signal (S7),
- leaving the third test mode, and
- assuming the operating mode.

23. A method for operating a self-testing measuring system (SS) according to claim 2, the method comprising the following steps:
- assuming the second test mode and simulating at least one test case by generation of a test signal (S0) corresponding to this test case by the control unit (CTR),
- detecting the seventh response signal (S7) by the control unit (CTR),
- comparing the seventh response signal (S7) with a predefined pattern corridor for the seventh response signal (S7),
- determining an error if the seventh response signal (S7) does not lie within a predefined pattern corridor of the seventh response signal (S7),
- leaving the second test mode, and
- assuming the operating mode.

24. A method for operating a self-testing measuring system (SS) according to claim 1 or 2, the method comprising the following steps:
- assuming the first test mode by the measuring system and simulating at least one test case by generation of a test signal (S0) corresponding to this test case by the control unit (CTR),
- detecting the seventh response signal (S7) by the control unit (CTR),
- comparing the seventh response signal (S7) with a predefined pattern corridor for the seventh response signal (S7),
- determining an error if the seventh response signal (S7) does not lie within a predefined pattern corridor of the seventh response signal (S7),
- leaving the first test mode, and
- assuming the operating mode.

25. A method for operating a self-testing measuring system (SS) according to claim 1, the method comprising the following steps:
- optionally assuming a switched-on mode (EZ) once the measuring system (SS) has been switched on or reset,
- assuming the third test mode and checking the function of the digital signal generating unit (DSO) and of the digital input circuit (DSI) by means of at least one predetermined test pattern or a predetermined test sequence and displaying and/or changing into an error mode (FZ) if an error occurs,
- assuming the first test mode and performing parametric testing of the functioning of the measuring unit (TR) by means of at least one predetermined test pattern or a predetermined test sequence and displaying and/or changing into an error mode (FZ) if an error occurs, and
- assuming the operating mode.

26. The method according to claim 25, **characterized in that**, in the switched-on mode (EZ) once the measuring system (SS) has been switched on or reset, no measured values are output via a data interface (IO), but only status messages regarding the progress of the switch-on process.

27. The method according to any one of claims 22 to 25, **characterized in that** the operating mode is assumed if no error has occurred in the test mode in question, or **in that** the operating mode is assumed in spite of the occurrence of an error in the test mode in question.

## Revendications

1. Système de mesure à essai autonome (SS), doté
- d'une unité génératrice de signal numérique (DSO),
- d'un étage d'attaque (DR),
- d'une unité de mesure (TR), laquelle émet un signal de sortie analogique (MS) en tant que signal de mesure et reçoit un signal de réception (ES) en réaction à celui-ci,
- d'un circuit d'entrée analogique (AS),
- d'un circuit d'entrée numérique (DSI),
- d'une unité analogique de simulation de canal (ACS),
- d'une unité numérique de simulation de canal (DCS),
- d'un multiplexeur analogique (AMX) et
- d'un multiplexeur numérique (DMX),
- dans lequel le système de mesure (SS)
- occupe un état de fonctionnement dans une phase de fonctionnement et
- occupe un premier état d'essai dans une phase d'essai,
- dans lequel dans l'état de fonctionnement
- l'unité génératrice de signal numérique (DSO) génère un premier signal numérique (S1),
- l'étage d'attaque (DR) convertit ce premier signal numérique (S1) de l'unité génératrice de signal numérique (DSO) en un deuxième signal analogique (S2),
- ce deuxième signal analogique (S2) permet à l'unité de mesure (TR) d'émettre le signal de sortie (MS) comme signal de mesure dans un canal de mesure (CN),
- l'unité de mesure (TR) reçoit le signal de réception (ES) depuis le canal de mesure (CN) en fonction du signal de sortie (MS),
- l'unité de mesure (TR) génère un troisième signal analogique (S3) en fonction du signal de réception (ES) reçu,
- le multiplexeur analogique (AMX) communique ce troisième signal analogique (S3) au circuit d'entrée analogique (AS) comme quatrième signal analogique (S4),
- le circuit d'entrée analogique (AS) transforme le quatrième signal analogique (S4) en un cinquième signal numérique (S5),
- le multiplexeur numérique (DMX) communique le cinquième signal analogique (S5) au circuit d'entrée numérique (DSI) comme sixième signal numérique (S6),
- le circuit d'entrée numérique (DSI) reçoit le sixième signal numérique (S6) et génère un septième signal de réponse (S7) et
- le septième signal de réponse (S7) est utilisable comme résultat de mesure ou pour former le résultat de mesure,
- dans lequel dans le premier état d'essai
- l'unité génératrice de signal numérique (DSO) génère un premier signal numérique (S1),
- l'étage d'attaque (DR) convertit ce premier signal numérique (S1) de l'unité génératrice de signal numérique (DSO) en un deuxième signal analogique (S2),
- ce deuxième signal analogique (S2) permet à l'unité de mesure (TR) d'émettre le signal de sortie (MS) comme signal de mesure dans un canal de mesure (CN),
- l'unité de mesure (TR) reçoit le signal de réception (ES) depuis le canal de mesure (CN) en fonction du signal de sortie (MS),
- l'unité de mesure (TR) génère un troisième signal analogique (S3) en fonction du signal de réception (ES) reçu,
- le multiplexeur analogique (AMX) communique ce troisième signal analogique (S3) au circuit d'entrée analogique (AS) comme quatrième signal analogique (S4),
- le circuit d'entrée analogique (AS) transforme le quatrième signal analogique (S4) en un cinquième signal numérique (S5),
- le multiplexeur numérique (DMX) communique le cinquième signal numérique au circuit d'entrée numérique (DSI) comme sixième signal numérique (S6),
- le circuit d'entrée numérique (DSI) reçoit le sixième signal numérique (S6) et génère un septième signal de réponse (S7),
- le septième signal de réponse (S7) est utilisé comme résultat d'essai ou pour former le résultat d'un contrôle du système de mesure, **caractérisé**
- **en ce que** le système de mesure (SS) occupe également un troisième état d'essai dans la phase d'essai,
- dans lequel dans le troisième état d'essai
- l'unité génératrice de signal numérique (DSO) génère un premier signal numérique (S1),
- le circuit d'entrée numérique (DCS) transforme ce premier signal numérique (S1) en un cinquième signal d'essai numérique (S5t),
- le multiplexeur numérique (DMX) communique le cinquième signal d'essai numérique (S5t) au circuit d'entrée numérique (DSI) comme sixième signal numérique (S6),
- le circuit d'entrée numérique (DSI) reçoit le sixième signal numérique (S6) et génère un septième signal de réponse (S7) et
- le septième signal de réponse (S7) est utilisé comme résultat d'essai ou pour former le résultat d'un contrôle du système de mesure.

2. Système de mesure (SS) selon la revendication 1, **caractérisé en ce que** dans la phase d'essai, le système de mesure (SS) occupe également un deuxième état d'essai en plus du premier état d'essai et du troisième état d'essai, dans lequel dans le deuxième état d'essai
- l'unité génératrice de signal numérique (DSO) génère un premier signal numérique (S1),
- l'étage d'attaque (DR) convertit ce premier signal numérique (S1) de l'unité génératrice de signal numérique (DSO) en un deuxième signal analogique (S2),
- l'unité analogique de simulation de canal (ACS) modifie le deuxième signal analogique (S2) en un troisième signal d'essai analogique (S3t),
- le multiplexeur analogique (AMX) communique ce troisième signal d'essai analogique (S3t) au circuit d'entrée analogique (AS) comme quatrième signal analogique (S4),
- le circuit d'entrée analogique (AS) transforme le quatrième signal analogique (S4) en un cinquième signal analogique (S5),
- le multiplexeur numérique (DMX) communique le cinquième signal numérique (S5) au circuit d'entrée numérique (DSI) comme sixième signal numérique,
- le circuit d'entrée numérique (DSI) reçoit le sixième signal numérique (S6) et génère un septième signal de réponse (S7) et
- le septième signal de réponse (S7) est utilisable comme résultat d'essai ou pour former le résultat d'un contrôle du système de mesure.

3. Système de mesure (SS) selon la revendication 1 ou 2, **caractérisé par**
- un transmetteur (UEB), lequel est disposé entre l'unité de mesure (TR) d'un côté et l'étage d'attaque (DR) ainsi que le multiplexeur analogique (AMX) de l'autre côté,
- dans lequel dans l'état de fonctionnement et dans le premier état d'essai
- le deuxième signal analogique (S2) de l'étage d'attaque (DR) peut être amené à l'unité de mesure (TR) par le transmetteur (UEB) et
- l'unité de mesure (TR) transfère le signal de réception au transmetteur (UEB) et celui-ci le communique au multiplexeur analogique (AMX) comme troisième signal analogique (S3).

4. Système de mesure (SS) selon la revendication 3, **caractérisé en ce que** dans l'état de fonctionnement, au moins un dispositif de comparaison, en particulier un comparateur (C2, C3), compare une valeur de paramètre du troisième signal analogique (S3a, S3b) à au moins une valeur de référence (Ref2, Ref3) et génère au moins un signal de résultat de comparaison (v2, v3) en fonction du résultat de la comparaison.

5. Système de mesure (SS) selon la revendication 3, **caractérisé en ce que** dans l'état de fonctionnement, au moins un dispositif de comparaison, en particulier un amplificateur différentiel (D1), compare l'une à l'autre deux valeurs de paramètre du troisième signal analogique (S3a, S3b), en particulier par soustraction, et génère un signal de différence (d1) et génère un signal de résultat de comparaison (v1) par comparaison du signal de différence (d1) à au moins une valeur de référence (Ref1), en particulier au moyen d'un comparateur (C1) séparé du dispositif de comparaison.

6. Système de mesure (SS) selon la revendication 3, **caractérisé en ce que** dans l'état de fonctionnement, au moins un dispositif de comparaison, en particulier un comparateur (C4, C5, C6), compare une valeur de paramètre du deuxième signal analogique (S2a, S2b, S2c) à une valeur de référence (Ref4, Ref5, Ref6) et génère un signal de résultat de comparaison (v4, v5, v6) en fonction du résultat de la comparaison.

7. Système de mesure (SS) selon la revendication 3, **caractérisé en ce que** dans l'état de fonctionnement, au moins un dispositif de comparaison, en particulier un amplificateur différentiel (D7, D6, D8), compare l'une à l'autre deux valeurs de paramètre du deuxième signal analogique (S2a, S2b, S2c), en particulier par soustraction, et génère un signal de différence (d6, d7, d8) et génère un signal de résultat de comparaison (v10, v11, v12) par comparaison du signal de différence (d6, d7, d8) à une valeur de référence (Ref6, Ref7, Ref8), en particulier au moyen d'un comparateur (C10, C11, C12) séparé du dispositif de comparaison.

8. Système de mesure (SS) selon l'une des revendications 1 à 7, **caractérisé en ce que** dans l'état de fonctionnement, un message d'erreur est généré ou peut être généré en fonction d'au moins un signal de résultat de comparaison (v1, v2, v3, v4, v5, v6, v10, v11, v12, v13, v14, v15, v16, v17, v18, v19).

9. Système de mesure (SS) selon la revendication 8, **caractérisé par** un dispositif de commande (CTR), lequel analyse le signal de résultat de comparaison (v1, v2, v3, v4, v5, v6, v10, v11, v12, v13, v14, v15, v16, v17, v18, v19) et génère le message d'erreur.

10. Système de mesure (SS) selon l'une des revendications 1 à 8, **caractérisé en ce que** l'unité de mesure (TR) est un transducteur ultrasonore, lequel émet comme signal de sortie (MS) un signal de mesure ultrasonore comme signal de mesure dans un canal de mesure ultrasonore comme canal de mesure (CN) et reçoit comme signal de réception (ES) le signal de mesure ultrasonore réfléchi sur un objet dans le canal de mesure ultrasonore (CN).

11. Système de mesure (SS) selon la revendication 2 ou l'une des revendications 3-10 pour autant qu'elle dépende de la revendication 2, **caractérisé par** un dispositif de commande (CTR) destinée à la commande de l'unité génératrice de signal numérique (DSO) et à la réception du septième signal analogique (S7) du circuit d'entrée numérique, dans lequel le dispositif de commande (CTR) compare, dans le premier ou le deuxième ou le troisième état d'essai, le septième signal de réponse (S7) du circuit d'entrée numérique (DSI) à une réponse prédéfinie et détermine un résultat de comparaison.

12. Système de mesure (SS) selon la revendication 11, **caractérisé en ce que** le dispositif de commande (CTR) commande l'unité génératrice de signal numérique (DSO) avec un signal d'essai (SO) dans le premier ou le deuxième ou le troisième état d'essai et **en ce que** le dispositif de commande (CTR) compare le septième signal de réponse (S7) du circuit d'entrée numérique (DSI) à une réponse prédéfinie et détermine un résultat de comparaison dans le premier ou le deuxième ou le troisième état d'essai, dans lequel la réponse prédéfinie est fonction du signal d'essai (SO).

13. Système de mesure (SS) selon l'une des revendications 2 à 12, **caractérisé par** un dispositif de commande (CTR), dans lequel le dispositif de commande (CTR) commande, dans le deuxième état d'essai, l'unité analogique de simulation de canal (ACS) par le biais de l'étage d'attaque (DR) et l'apparition du troisième signal d'essai analogique (S3t) à partir du deuxième signal analogique (S2) dans l'unité de simulation de canal (ACS) est fonction de cette commande de l'unité analogique de simulation de canal (ACS), dans lequel le dispositif de commande (CTR) compare, dans le deuxième état d'essai, le septième signal de réponse (S7) du circuit d'entrée numérique (DSI) à une réponse prédéfinie et détermine un résultat de comparaison, dans lequel la réponse prédéfinie et la commande de l'unité analogique de simulation de canal (ACS) dépendent l'une de l'autre.

14. Système de mesure (SS) selon l'une des revendications 1 à 13, **caractérisé par** un dispositif de commande (CTR), dans lequel le dispositif de commande (CTR) commande, dans le troisième état d'essai, l'unité numérique de simulation de canal (DCS) et l'élaboration du cinquième signal numérique (S5t) par l'unité numérique de simulation de canal (DCS) par conversion du premier signal numérique (S1) est fonction de cette commande de l'unité numérique de simulation de canal (DCS) et dans lequel le dispositif de commande (CTR) compare, dans le troisième état d'essai, le septième signal de réponse (S7) du circuit d'entrée numérique (DSI) à une réponse prédéfinie et détermine un résultat de comparaison, dans lequel la réponse prédéfinie et la commande de l'unité numérique de simulation de canal (DCS) dépendent l'une de l'autre.

15. Système de mesure (SS) selon l'une des revendications 1 à 14, **caractérisé en ce que** le multiplexeur analogique (AMX) est une partie de l'unité analogique de simulation de canal (ACS) ou du circuit d'entrée analogique (AS) ou respectivement l'inverse et/ou **en ce que** le multiplexeur numérique (DMX) est une partie de l'unité numérique de simulation de canal (DCS) ou du circuit d'entrée numérique (DSI) ou respectivement l'inverse.

16. Système de mesure (SS) selon l'une des revendications précédentes, **caractérisé en ce que** l'unité de mesure (TR) comporte un transducteur ultrasonore ou un couple d'au moins un émetteur d'ultrasons et un récepteur d'ultrasons, **en ce que** le deuxième, troisième et quatrième signal analogique (S2, S3, S4) est respectivement un signal oscillant, **en ce que** le premier, cinquième et sixième signal numérique (S1, S5, S6) représente respectivement un signal oscillant et **en ce que** le circuit d'entrée numérique (DSI) comporte un dispositif destiné à la mesure de la fréquence d'oscillation du sixième signal numérique (S6) dans la phase d'émission du signal de sortie (MS) de l'unité de mesure (TR) et/ou un dispositif destiné à la mesure de la durée de relâchement du sixième signal numérique (S6) dans la phase de relâchement après une phase d'émission et/ou après la réception du signal de réception (ES) du transducteur ultrasonore ou de l'émetteur d'ultrasons du couple d'au moins un émetteur d'ultrasons et un récepteur d'ultrasons.

17. Système de mesure (SS) selon la revendication 16, **caractérisé en ce que** le circuit d'entrée numérique (DSI) ou une unité de commande (CTR) compare la fréquence d'oscillation mesurée à une valeur de consigne ou à un intervalle de valeurs de consigne et/ou **en ce que** le circuit d'entrée numérique (DSI) ou une unité de commande (CTR) compare la durée de relâchement mesurée à une valeur de consigne ou à un intervalle de valeurs de consigne et conclut en particulier à un court-circuit de l'unité de mesure (TR) ou une partie défectueuse ou non fonctionnelle de l'unité de mesure (TR) ou un transmetteur raccordé côté secondaire (UEB) ou à une autre défaillance lorsque la fréquence d'oscillation déterminée est supérieure à la valeur de consigne de la fréquence d'oscillation ou se trouve numériquement au-dessus de l'intervalle de valeurs de consigne de la fréquence d'oscillation et/ou lorsque la durée de relâchement déterminée est inférieure à la valeur de consigne de la durée de relâchement ou se trouve numériquement en-dessous de l'intervalle de valeurs de consigne de la durée de relâchement, dans lequel le circuit d'entrée numérique (DSI) ou une unité de commande (CTR) génère dans ce(s) cas un message d'erreur.

18. Système de mesure (SS) selon l'une des revendications 1 à 9 ou 12 à 15, **caractérisé en ce que** l'unité de mesure (TR) comporte au moins un élément actif destiné à générer un signal de sortie (MS) acoustique, optique, électrique, inductif, capacitif, électromagnétique, IR ou UV comme signal de mesure et au moins un élément de capteur destiné à détecter un signal comme signal de réception en réaction au signal de sortie de l'élément actif.

19. Système de mesure (SS) selon l'une des revendications 1 à 9, 11-15 et 18, **caractérisé en ce que** l'unité de mesure (TR) comporte un transducteur ultrasonore ou un couple d'au moins un émetteur d'ultrasons et un récepteur d'ultrasons, une caméra TOF, un couple d'un élément chauffant et d'un capteur de température, un couple d'un émetteur optique et d'un récepteur optique, ou au moins un autre couple d'un actionneur et d'un capteur raccordés l'un à l'autre de manière opérante, et/ou un système micro-électromécanique, un système micro-électrooptique ou un système micro-électromécanooptique.

20. Système de mesure (SS) selon l'une des revendications précédentes, **caractérisé en ce que** dans l'état de fonctionnement la courbe des valeurs et/ou les valeurs du septième signal de réponse (S7), en particulier sous la forme de résultats de mesure et de valeurs de mesure, peuvent voir leur vraisemblance contrôlée par le circuit numérique de réception (DSI) et/ou le dispositif de commande (CTR), en particulier par la comparaison avec des valeurs de consigne et des intervalles de valeurs de consigne.

21. Système de mesure (SS) selon la revendication 20, **caractérisé en ce qu'**une communication de la courbe des valeurs et/ou les valeurs du septième signal de réponse (S7), en particulier présentes sous la forme de résultats de mesure et de valeurs de mesure, s'effectue dans l'état de fonctionnement uniquement lorsque le contrôle de vraisemblance est réussi et/ou **en ce que** qu'un message d'erreur résulte lorsque le contrôle de vraisemblance n'est pas réussi.

22. Procédé de fonctionnement d'un système de mesure à essai autonome (SS) selon la revendication 1, avec les étapes suivantes :
- occupation du troisième état d'essai et simulation d'au moins un cas type par génération d'un signal d'essai (SO) correspondant à ce cas type par l'unité de commande (CTR),
- détection du septième signal de réponse (S7) par l'unité de commande (CTR),
- comparaison du septième signal de réponse (S7) à un modèle prédéfini pour le septième signal de réponse (S7),
- détermination d'une défaillance lorsque le septième signal de réponse (S7) ne correspond pas exactement au modèle prédéfini du septième signal de réponse (S7),
- abandon du troisième état d'essai et
- occupation de l'état de fonctionnement.

23. Procédé de fonctionnement d'un système de mesure à essai autonome (SS) selon la revendication 2, avec les étapes suivantes :
- occupation du deuxième état d'essai et simulation d'au moins un cas type par génération d'un signal d'essai (SO) correspondant à ce cas type par l'unité de commande (CTR),
- détection du septième signal de réponse (S7) par l'unité de commande (CTR),
- comparaison du septième signal de réponse (S7) à un couloir modèle prédéfini pour le septième signal de réponse (S7),
- détermination d'une défaillance lorsque le septième signal de réponse (S7) ne se trouve pas exactement à l'intérieur du couloir modèle prédéfini du septième signal de réponse (S7),
- abandon du deuxième état d'essai et
- occupation de l'état de fonctionnement.

24. Procédé de fonctionnement d'un système de mesure à essai autonome (SS) selon la revendication 1 ou 2, avec les étapes suivantes :
- occupation du premier état d'essai par le système de mesure et simulation d'au moins un cas type par génération d'un signal d'essai (SO) correspondant à ce cas type par l'unité de commande (CTR),
- détection du septième signal de réponse (S7) par l'unité de commande (CTR),
- comparaison du septième signal de réponse (S7) à un couloir modèle prédéfini pour le septième signal de réponse (S7),
- détermination d'une défaillance lorsque le septième signal de réponse (S7) ne se trouve pas exactement à l'intérieur du couloir modèle prédéfini du septième signal de réponse (S7),
- abandon du premier état d'essai,
- occupation de l'état de fonctionnement.

25. Procédé de fonctionnement d'un système de mesure à essai autonome (SS) selon la revendication 1, avec les étapes suivantes :
- occupation en option d'un état de démarrage (EZ) après le démarrage ou la réinitialisation du système de mesure (SS),
- occupation du troisième état d'essai et contrôle de la fonction de l'unité génératrice de signal numérique (DSO) et du circuit d'entrée numérique (DSI) au moyen d'au moins un modèle d'essai prédéterminé ou d'une séquence d'essai prédéterminée et indication et/ou changement vers un état de défaillance (FZ) lorsqu'une défaillance se produit,
- occupation du premier état d'essai et contrôle paramétrique de la fonction de l'unité de mesure (TR) au moyen d'au moins un modèle d'essai prédéterminé ou d'une séquence d'essai prédéterminée et indication et/ou changement vers un état de défaillance (FZ) lorsqu'une défaillance se produit, et
- occupation de l'état de fonctionnement.

26. Procédé selon la revendication 25, **caractérisé en ce que** dans l'état de démarrage (EZ) après le démarrage ou la réinitialisation du système de mesure (SS), aucune valeur de mesure n'est émise par le biais d'une interface de données (10), uniquement des messages d'état concernant l'avancement du processus de démarrage.

27. Procédé selon l'une des revendications 22 à 25, **caractérisé en ce que** l'état de fonctionnement est occupé lorsqu'aucune défaillance ne s'est produite dans l'état d'essai concerné, ou **en ce que** l'état de fonctionnement est occupé malgré qu'une défaillance s'est produite dans l'état d'essai concerné.
